(19) Europäisches Patentamt / European Patent Office / Office européen des brevets

(11) **EP 3 689 590 B1**

(12) **EUROPEAN PATENT SPECIFICATION**

(45) Date of publication and mention
of the grant of the patent:
**28.08.2024  Bulletin 2024/35**

(21) Application number: **18861736.9**

(22) Date of filing: **12.09.2018**

(51) International Patent Classification (IPC):
**B32B 1/08** *(2006.01)*    **F02M 37/00** *(2006.01)*
**F16L 11/04** *(2006.01)*    **B32B 27/08** *(2006.01)*
**B32B 27/30** *(2006.01)*    **B32B 27/34** *(2006.01)*

(52) Cooperative Patent Classification (CPC):
**B32B 27/34; B32B 1/08; B32B 27/08;**
**B32B 27/306; F02M 37/00; F16L 11/04;**
B32B 2307/30; B32B 2597/00

(86) International application number:
**PCT/JP2018/033771**

(87) International publication number:
**WO 2019/065231 (04.04.2019 Gazette 2019/14)**

(54) **LAYERED TUBE**

SCHICHTROHR

TUBE MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.09.2017   JP 2017189985**

(43) Date of publication of application:
**05.08.2020  Bulletin 2020/32**

(73) Proprietor: **UBE Corporation**
**Ube-shi, Yamaguchi 755-8633 (JP)**

(72) Inventors:
• **TSUBOI Kazutoshi**
**Ube-shi**
**Yamaguchi 755-8633 (JP)**
• **NAKAMURA Koji**
**Ube-shi**
**Yamaguchi 755-8633 (JP)**
• **SASAKI Ryousuke**
**Ube-shi**
**Yamaguchi 755-8633 (JP)**
• **MORIYAMA Toshio**
**Ube-shi**
**Yamaguchi 755-8633 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 042 758        WO-A1-2015/033982**
**WO-A1-2017/170985     JP-A- 2003 535 717**
**JP-A- 2009 234 259      JP-A- 2009 235 394**
**JP-A- 2014 240 147       US-A1- 2015 353 792**

• **DATABASE WPI Week 201224, Derwent World
Patents Index; AN 2012-D61866, XP002802866**
• **DATABASE WPI Week 201541, Derwent World
Patents Index; AN 2015-32611G, XP002802865**

**Description**

TECHNICAL FIELD

The present invention relates to a multilayer tube.

BACKGROUND ART

In a tube for automobile tubing, there is a problem of rust caused by deicing agents on roads, and in response to demand for preventing global warming and saving energy, its main material is now progressing replacement from a metal to a resin having excellent rust resistance and being lightweight. In general, the resin to be used as a tube for piping may be mentioned a polyamide resin, a saturated polyester-based resin, a polyolefin resin, a thermoplastic polyurethane-based resin, etc., and in the case of a single-layer tube using these, the applicable range is limited since heat resistance, chemical resistance, etc., are insufficient.

Also, into a tube for automobile tubing, from the viewpoints of consumption saving and high performance of gasoline, oxygen-containing gasoline to which alcohols having low boiling points such as methanol, ethanol, etc., or ethers such as ethyl-t-butyl ether (ETBE), etc., are blended, etc., are transferred. Further, from the viewpoint of preventing environmental pollution, strict exhaust gas regulations including prevention of leakage of volatile hydrocarbons, etc., into the atmosphere through piping tube partition walls are being implemented. Against such strict regulations, a polyamide-based resin which has been conventionally used, in particular, a single-layer tube using polyamide 11 or polyamide 12 alone excellent in strength, toughness, chemical resistance, flexibility, etc., is insufficient in barrier properties against the above-mentioned chemical solution, and, in particular, improvement in barrier properties to the alcohol-containing gasoline has been required.

As a method for solving the problem, a multilayer tube to which a resin having good barrier property to a chemical solution, for example, an ethylene/vinyl acetate copolymer saponified product (EVOH), polymetaxylylene adipamide (polyamide MXD6), polybutylene terephthalate (PBT), polyethylene naphthalate (PEN), polybutylene naphthalate (PBN), polyphenylene sulfide (PPS), polyvinylidene fluoride (PVDF), an ethylene/tetrafluoroethylene copolymer (ETFE), an ethylene/chlorotrifluoroethylene copolymer (ECTFE), a tetrafluoroethylenelhexafluoropropylene copolymer (TFE/HFP, FEP), a tetrafluoroethylene/hexafluoropropylene/vinylidene fluoride copolymer (TFE/HFP/VDF, THV), a tetrafluoroethylene/hexafluoropropylene/- vinylidene fluoride/perfluoro(alkyl vinyl ether) copolymer (TFE/HFP/VDF/PAVE), a tetrafluoroethylene/perfluoro(alkyl vinyl ether) copolymer (TFE/PAVE, PFA), a tetrafluoroethylene/hexafluoropropylene/perfluoro(alkyl vinyl ether) copolymer (TFE/HFP/PAVE) or a chlorotrifluoroethylene/perfluoro(alkyl vinyl ether)/tetrafluoroethylene copolymer (CTFE/PAVE/TFE, CPT) is provided has been proposed (for example, see Patent Document 1, etc.).

Among these, the ethylene/vinyl acetate copolymer saponified product (EVOH) is extremely excellent in chemical liquid-barrier property, in particular, in transmission preventive property to hydrocarbon. For example, it has been proposed a fuel piping which is constituted by an outermost layer comprising polyamide 12, an adhesive layer comprising a modified polyolefin, an outer layer comprising polyamide 6, an intermediate layer comprising an ethylene/vinyl acetate copolymer saponified product (EVOH), and an innermost layer comprising polyamide 6 (see Patent Document 2). In addition, it has been proposed a composite multilayer constituted by an outermost layer comprising polyamide 12, an adhesive layer comprising at least one kind selected from the group consisting of a polyamide 6/12 copolymer, a polyamide 1216 copolymer, polyamide 612, polyamide 610, polyamide 12 and a mixture of polyamide 6 and a compatibilizing agent, an intermediate layer comprising an ethylene/vinyl acetate copolymer saponified product (EVOH), and an innermost layer comprising polyamide 6 or polyamide 12 (see Patent Documents 3 and 4). Similarly, it has been also proposed a composite multilayer constituted by an outermost layer comprising polyamide 12, an adhesive layer comprising a mixture of polyamide 6, polyamide 12 and a polyamine/polyamide copolymer, an intermediate layer comprising an ethylene/vinyl acetate copolymer saponified product (EVOH), and an innermost layer comprising polyamide 6 or polyamide 12 (see Patent Document 5). Said techniques have been proposed that, as an adhesive layer interposing both the polyamide 12 and an ethylene/vinyl acetate copolymer saponified product, a polyamide copolymer having a specific compositional ratio or a mixture comprising polyamide 6, polyamide 12 and a compatibilizing agent has good interlayer adhesive strength.

On the other hand, in order to simplify the entire producing process of a multilayer tube and reduce costs and management, development of an adhesive layer-less product in which a polyamide which is an outer material and an ethylene/vinyl acetate copolymer saponified product (EVOH) are directly adhered is also progressing. For example, a multilayer structure constituted by an inner/outer layer comprising polyamide 12, polyamide 6 and a compatibilizing agent and an intermediate layer comprising an ethylene/vinyl acetate copolymer saponified product (EVOH) or a composite multilayer constituted by an outer layer comprising a polyether amide elastomer which comprises polyamide 12 and polyamide 6 as hard segments, an intermediate layer comprising an ethylene/vinyl acetate copolymer saponified product (EVOH), and an inner layer comprising polyamide 610, polyamide 612, or a mixture of polyamide 610 and polyamide 6 has been proposed (see Patent Documents 6 and 7). Further, a multilayer structure constituted by a layer comprising a specific polyamide copolymer which comprises hexamethylene diamine, terephthalic acid and an aliphatic dicarboxylic acid having 8 or more and 20 or less carbon atoms and a layer comprising an ethylene/vinyl acetate copolymer saponified product (EVOH), and having sufficient interlayer adhesiveness has been proposed (see Patent Documents 8 and 9).

Patent Document 10 describes a polyamide based film laminating two or more layers including a layer (a) consisting of an aliphatic polyamide and a layer (b) consisting of an aliphatic polyamide composition containing 70 mass% or more and 99.5 mass% or less of the same aliphatic polyamide as in layer (a) and 0.5 mass% or more and 30 mass% or less of a polyamide elastomer composition. The polyamide elastomer composition includes a polyamide elastomer and an electrolyte salt compound. The layer (b) is arranged in at least the outermost layer. The thickness ratio of the layer (a) to the whole thickness is 20% or more and 95% or less, and the thickness ratio of the layer (b) is 5% or more and 40% or less.

Patent Document 11 describes a laminate tube which comprises four or more layers including a layer comprising aliphatic polyamide such as polyamide 11, 12 or the like, a layer comprising an ethylene/vinyl acetate copolymer saponified product or aliphatic polyketone, a layer comprising semi-aromatic polyamide having a specific structure, and a layer comprising a polyamide 6/12 composition.

Patent Document 12 describes a multi-layer tube comprising at least two layers having a layer (a) and a layer (b). The layer (a) contains an aliphatic polyamide composition containing a specific amount of an aliphatic polyamide and a specific amount of an elastomer polymer containing an unsaturated compound having a carboxyl group and/or acid anhydride group, wherein the product of the terminal amino group concentration of the aliphatic polyamide per g of the aliphatic polyamide composition and the total concentration of the carboxyl group and acid anhydride group of the elastomer polymer per g of the aliphatic polyamide composition is a specific amount. The layer (b) contains a semi-aromatic polyamide composition containing a specific semi-aromatic polyamide.

Patent Document 13 describes a multilayer structure which includes at least two layers, i.e. an inner layer intended to be in contact with a fluid and constituted of a composition containing at least one of a polyamide and no copper; and an outer layer intended to be in contact with air and constituted of a composition containing at least one of a polyamide and at least one kind of a copper-based stabilizer. The multilayer structure is used for the transportation or the storage of the fluid.

Patent Document 14 describes a multi-layered structure for transporting and storing a fluid such as a fuel; and an adhesive for manufacturing the structure. This adhesive composition contains at least one kind of a polyamide having an average carbon number per one nitrogen atom of 4 to 8.5, at least one kind of a polyamide having a melting point of 180°C, and having an average carbon number per one nitrogen atom of 7 to 10, and at least one kind of a polyamide having an average carbon number per one nitrogen atom of 9 to 18. At least 50 wt.% of the composition comprises one kind or more of polyamides selected from the aforementioned polyamides.

Patent Document 15 describes a thermoplastic multilayer laminate comprising at least one intermediate layer between layers based on polyamide, an ancillary layer and an adhesion promoting layer arranged between the intermediate layer and the ancillary layer. The adhesion promoting layer is of a molding compound on the basis of a polyamide selected from the group consisting of copolyamide 6/12 having a polyamide 6 content of 60 to 80 wt.%, a block copolyamide, polyamide 612, polyamide 610, a mixture of polyamide 6, polyamide 12 and a compatibility agent, and a mixture of polyamide 6, polyamide 11 and a compatibility agent, wherein the polyamide 6 content is at least 60 wt.%. The intermediate layer is of a molding compound on the basis of ethylene/vinyl alcohol copolymers. The ancillary layer is of a molding compound on the basis of polyamide 12, polyamide 11, polyamide 1010, polyamide 1012 or polyamide 1212.

Patent Document 16 describes a laminated tube composed of at least three layers which comprise: a layer (a) composed of an aliphatic polyamide; a layer (b) composed of a saponified ethylene-vinyl acetate copolymer; and a layer (c) composed of a semi-aromatic polyamide. The semi-aromatic polyamide consists of a diamine unit and dicarboxylic acid unit. The diamine unit contains 60 mol% or more of a xylylene diamine unit consisting of an m-xylylene diamine unit or a mixture of a m-xylylene diamine unit and a p-xylylene diamine unit, in which the molar ratio between the m-xylylene diamine unit and the p-xylylene diamine unit is 50:50 mol% or more and 100:0 mol% or less, and the dicarboxylic acid unit contains 60 mol% or more of an aliphatic dicarboxylic acid unit having 8 or more and 13 or less carbon atoms.

Patent Document 17 describes an adhesive composition including predominantly one or two polyamide(s) having units chosen from: at least one unit having an average number of carbon atoms per nitrogen atom ranging from 4 to 8.5, advantageously from 4 to 7; at least one unit having an average number of carbon atoms per nitrogen atom ranging from 7 to 10, advantageously from 7.5 to 9.5; and at least one unit having an average number of carbon atoms per nitrogen atom ranging from 9 to 18, advantageously from 10 to 18, and to the use of the composition for making structures for transferring and/or storing gases and fluids.

Patent Document 18 describes a multilayer tube which includes a layer including a specific aliphatic polyamide composition and a layer including a semi-aromatic polyamide composition including a semi-aromatic polyamide with a specific structure, these layers being adjacent to each other, wherein the aliphatic polyamide composition includes an aliphatic polyamide having a specific ratio of the number of methylene groups to the number of amide groups, a polyamide having a specific difference in absolute value of solubility parameter SP from the aliphatic polyamide, and an elastomer polymer including a structural unit derived from an unsaturated compound having a carboxyl group and/or an acid anhydride group.

PRIOR ART DOCUMENTS

Patent Documents

Patent Document 1: US Patent No. 5,554,425
Patent Document 2: JPHei. 3-177683A
Patent Document 3: JP 2003-535717A
Patent Document 4: JP 2003-021276A
Patent Document 5: JP 2002-210904A
Patent Document 6: JP 2004-262244A
Patent Document 7: JP 2008-30483A
Patent Document 8: JP 2013-514212A
Patent Document 9: JP 2016-172447A
Patent Document 10: JP 2012 061851 A
Patent Document 11: JP 2015 104830 A
Patent Document 12: EP 3 042 758 A1
Patent Document 13: JP 2009 234259 A
Patent Document 14: JP 2009 235394 A
Patent Document 15: JP 2003 535717 A
Patent Document 16: JP 2014 240147 A
Patent Document 17: US 2015/353792 A1
Patent Document 18: WO 2017/170985 A1

SUMMARY OF THE INVENTION

Problems to be Solved by the Invention

In these multilayer tubes, initial interlayer adhesiveness is sufficient. However, after contacting with and dipping in fuel for a long time or after heat treatment, etc., there is still room for improvement in durability of interlayer adhesiveness. In Patent Document 6, 45% by mass of polyamide 6 and 45% by mass of polyamide 12, and as a compatibilizing agent, 10% by mass of an acid-modified ethylene/$\alpha$-olefin copolymer and stabilizers are disclosed as an inner/outer layer material in Example, and initial interlayer adhesiveness is sufficient. However, a tube using the same material as the inner and outer layers, and an ethylene/vinyl acetate copolymer saponified product (EVOH) as the intermediate layer is found to be poor in resistance to calcium chloride or zinc chloride (chemical resistance) as described later. In addition, in Patent Document 7, in order to improve elongation at break of an extruded product at a high extrusion speed, a composite multilayer in which a modified polyamide (PA) extrusion-molded material modified by a polyamide elastomer is used as an outer layer material to which an ethylene/vinyl acetate copolymer saponified product (EVOH) is directly adhered is disclosed, and whereas there is a description about resistance to interlayer peeling strength, there is no disclosure about specific technical data not only interlayer adhesiveness (durability of interlayer adhesiveness) after contacting with and dipping in fuel for a long time or after heat treatment, but also initial interlayer adhesiveness.

Means to Solve the Problems

The present inventors have intensively studied to solve the above-mentioned problems, and as a result, they have found that, in a multilayer tube having a layer containing a specific aliphatic polyamide composition and a layer containing an ethylene/vinyl acetate copolymer saponified product, and both layers are adjacent to each other, a multilayer tube excellent in chemical resistance, interlayer adhesiveness, and durability thereof while maintaining various characteristics such as chemical liquid-barrier property, low temperature impact resistance, and elution resistance of monomers and oligomers can be obtained by having the constitution that the aliphatic polyamide composition contains an aliphatic polyamide having the melting point of a specific value or less, and having a ratio of the number of the methylene groups to the number of the amide groups of a specific value or more and an aliphatic polyamide having an absolute value of a difference in solubility parameter SP values thereof and that of the aliphatic polyamide within a specific range, and an elastomer polymer containing a constitutional unit derived from an unsaturated compound having a carboxyl group(s) and/or an acid anhydride group(s).

That is, the present invention relates to a multilayer tube having two or more layers containing Layer (a) and Layer (b),

> wherein at least one pair of the Layer (a) and the Layer (b) are disposed adjacent to each other,
> the Layer (a) contains an aliphatic polyamide composition (A),
> the Layer (b) contains an ethylene/vinyl acetate copolymer saponified product composition (B),
> the aliphatic polyamide composition (A) contains a polyamide (A1), a polyamide (A2) and an elastomer polymer (A3),
> the polyamide (A1) is an aliphatic polyamide having a melting point measured in accordance with ISO 11357-3 of 210°C or lower, and a ratio of a number of methylene groups to a number of amide groups of 8.0 or more, and is contained in the aliphatic polyamide composition (A) in an amount of 40% by mass or more and 85% by mass or less,
> the polyamide (A2) is a polyamide other than the polyamide (A1), and is contained in the aliphatic polyamide composition (A) in an amount of 10% by mass or more and 30% by mass or less,
> the elastomer polymer (A3) contains a constitutional unit derived from an unsaturated compound having a carboxyl group and/or an acid anhydride group, and is contained in the aliphatic polyamide composition (A) in an amount of 5% by mass or more and 30% by mass or less, and
> an absolute value of a difference in solubility parameter SP values of the polyamide (A1) and the polyamide (A2) [|(SP value of polyamide (A1)) - (SP value of polyamide (A2))|] is 1.8 $(MPa)^{1/2}$ or more and 4.5 $(MPa)^{1/2}$ or less.

Effects of the Invention

According to the present invention, it can be provided a multilayer tube excellent in chemical resistance, interlayer adhesiveness, and durability thereof while maintaining various characteristics such as chemical liquid-barrier property, low temperature impact resistance, and elution resistance of monomers and oligomers.

EMBODIMENTS TO CARRY OUT THE INVENTION

The multilayer tube contains Layer (a) and Layer (b), and is two or more layers.

1. Layer (a)

Layer (a) of the multilayer tube contains an aliphatic polyamide composition (A).

[Aliphatic polyamide composition (A)]

The aliphatic polyamide composition (A) contains a polyamide (A1), a polyamide (A2) and an elastomer polymer (A3), the polyamide (A1) is an aliphatic polyamide having a melting point measured in accordance with ISO 11357-3 of 210°C or lower, a ratio of a number of methylene groups to a number of amide groups of 8.0 or more, and is contained in the aliphatic polyamide composition (A) in an amount of 40% by mass or more and 85% by mass or less, the polyamide (A2) is a polyamide other than the polyamide (A1), and is contained in the aliphatic polyamide composition (A) in an amount of 10% by mass or more and 30% by mass or less, and the elastomer polymer (A3) contains a constitutional unit derived from an unsaturated compound having a carboxyl group and/or an acid anhydride group, and is contained in the aliphatic polyamide composition (A) in an amount of 5% by mass or more and 30% by mass or less, and an absolute value of difference in solubility parameter SP values of the polyamide (A1) and the polyamide (A2) [|(SP value of polyamide (A1)) - (SP value of polyamide (A2))|] of 1.8 $(MPa)^{1/2}$ or more and 4.5 $(MPa)^{1/2}$ or less (hereinafter sometimes referred to as an aliphatic polyamide composition (A).).

Also, the aliphatic polyamide composition (A) preferably does not contain a plasticizer from the viewpoints of durability of interlayer adhesiveness after contacting and dipping in a fuel for a long time and/or after heat treatment for a short time.

[Polyamide (A1)]

The polyamide (A1) has a melting point measured in accordance with ISO 11357-3 (in the present specification, it sometimes simply refers to the "melting point".) of 210°C or lower, contains aliphatic groups alone in the constitutional repeating units, has an amide bond(s) (-CONH-) in the main chain, and a ratio of a number of methylene groups ($[CH_2]$)

to a number of amide groups ([NHCO]) [CH$_2$]/[NHCO] (hereinafter the ratio of the number of the methylene groups to the number of the amide groups is sometimes referred to as [CH$_2$]/[NHCO].) of 8.0 or more (hereinafter sometimes referred to as a polyamide (A1).).

The melting point measured in accordance with ISO 11357-3 of the polyamide (A1) is preferably 205°C or lower, more preferably 200°C or lower, and further preferably 195°C or lower. Also, the [CH$_2$]/[NHCO] of the polyamide (A1) is preferably 9.0 or more, more preferably 9.5 or more, and further preferably 10.0 or more.

Incidentally, in accordance with ISO 11357-3, the sample is heated to a temperature equal to or higher than the expected melting point using a differential scanning calorimeter, and then, the sample is cooled at a rate of 10°C per a minute, and after cooling to 30°C, it is allowing to stand as such for about 1 minutes and raising the temperature at a rate of 20°C per a minute whereby the temperature at the peak value of the measured melting curve is defined to be the melting point.

If the ratio of the number of the methylene groups ([CH$_2$]) to the number of the amide groups ([NHCO]) of the polyamide (A1) is of a value less than the above-mentioned the value, mechanical characteristics and chemical resistance of the obtainable multilayer tube are poor.

In addition, if the melting point measured in accordance with ISO 11357-3 of the polyamide (A1) exceeds the above-mentioned value, the amide exchange reaction with the polyamide (A2) mentioned later does not sufficiently proceed under a usual processing temperature, interlayer adhesiveness and durability thereof of the obtainable multilayer tube are poor.

The polyamide (A1) has the melting point measured in accordance with ISO 11357-3 of 210°C or lower and a ratio [CH$_2$]/[NHCO] of the number of the methylene groups ([CH2]) to the number of the amide groups ([NHCO]) (hereinafter the number of the methylene groups to the number of the amide groups is sometimes referred to as a ratio of [CH$_2$]/[NHCO].) of 8.0 or more.

Incidentally, the polyamide (A1) is preferably an aliphatic polyamide having a melting point measured in accordance with ISO 11357-3 of 210°C or lower, and a ratio of the number of the methylene groups to the number of the amide groups [CH$_2$]/[NHCO] of 8.0 or more; a polyamide copolymer using a raw material monomer (constitutional repeating unit) alone which forms an aliphatic polyamide having a melting point measured in accordance with ISO 11357-3 of 210°C or lower, and a ratio of the number of the methylene groups to the number of the amide groups [CH$_2$]/[NHCO] of 8.0 or more; a polyamide copolymer comprising a raw material monomer (constitutional repeating unit) which forms an aliphatic polyamide having a melting point measured in accordance with ISO 11357-3 of 210°C or lower and a ratio of the number of the methylene groups to the number of the amide groups [CH$_2$]/[NHCO] of 8.0 or more as at least one component, and using at least one component which forms an aliphatic polyamide having a ratio of the number of the methylene groups to the number of the amide groups [CH$_2$]/[NHCO] of less than 8.0; and a copolymer using at least one component of a raw material monomer (constitutional repeating unit) which forms an aliphatic polyamide having a melting point measured in accordance with ISO 11357-3 of exceeding 210°C and a ratio of the number of the methylene groups to the number of the amide groups [CH$_2$]/[NHCO] of 8.0 or more.

Examples of the preferable polyamide (A1) are explained by dividing into an aliphatic polyamide (A1X) (hereinafter sometimes referred to as a polyamide (A1X).) having a melting point measured in accordance with ISO 11357-3 of 210°C or lower and a ratio of the number of the methylene groups to the number of the amide groups [CH$_2$]/[NHCO] of 8.0 or more, a polyamide copolymer (A1XX) (hereinafter sometimes referred to as a polyamide (A1XX).) using a raw material monomer (constitutional repeating unit) alone which forms an aliphatic polyamide having a melting point measured in accordance with ISO 11357-3 of 210°C or lower and a ratio of the number of the methylene groups to the number of the amide groups [CH$_2$]/[NHCO] of 8.0 or more, a polyamide copolymer (A1Y) (hereinafter sometimes referred to as a polyamide (A1Y).) comprising a raw material monomer (constitutional repeating unit) which forms an aliphatic polyamide having a melting point measured in accordance with ISO 11357-3 of 210°C or lower and a ratio of the number of the methylene groups to the number of the amide groups [CH$_2$]/[NHCO] of 8.0 or more as at least one component, and using at least one component which forms an aliphatic polyamide having a ratio of the number of the methylene groups to the number of the amide groups [CH$_2$]/[NHCO] of less than 8.0, and a copolymer (A1Z) (hereinafter sometimes referred to as a polyamide (A1Z).) using a raw material monomer (constitutional repeating unit) which forms an aliphatic polyamide having a melting point measured in accordance with ISO 11357-3 of exceeding 210°C and a ratio of the number of the methylene groups to the number of the amide groups [CH$_2$]/[NHCO] of 8.0 or more.

As the polyamide (A1X) having a melting point measured in accordance with ISO 11357-3 of 210°C or lower and a ratio of the number of the methylene groups to the number of the amide groups [CH$_2$]/[NHCO] of 8.0 or more, there may be mentioned polyundecanamide (polyamide 11): [CH$_2$]/[NHCO] =10.0, polydodecanamide (polyamide 12): [CH$_2$]/[NHCO] =11.0, polyhexamethylene hexadecamide (polyamide 616): [CH$_2$]/[NHCO] =10.0, polyhexamethylene octadecamide (polyamide 618): [CH$_2$]/[NHCO] =11.0, polynonamethylene azelamide (polyamide 99): [CH$_2$]/[NHCO] =8.0, polynonamethylene decamide (polyamide 910): [CH$_2$]/[NHCO] =8.5, polynonamethylene dodecamide (polyamide 912): [CH$_2$]/[NHCO] =9.5, polydecamethylene suberamide (polyamide 108): [CH$_2$]/[NHCO] =8.0, polydecamethylene azelamide (polyamide 109): [CH$_2$]/[NHCO] =8.5, polydecamethylene sebacamide (polyamide 1010): [CH$_2$]/[NHCO] =9.0,

polydecamethylene dodecamide (polyamide 1012): $[CH_2]/[NHCO]$ =10.0, polydodecamethylene azelamide (polyamide 129): $[CH_2]/[NHCO]$ =9.5, polydodecamethylene sebacamide (polyamide 1210): $[CH_2]/[NHCO]$ =10.0, polydodecamethylene dodecamide (polyamide 1212): $[CH_2]/[NHCO]$ =11.0, etc. These may be used one kind or two or more kinds.

Also, as the polyamide copolymer (A1XX) using a raw material monomer (constitutional repeating unit) alone which forms an aliphatic polyamide having a melting point measured in accordance with ISO 11357-3 of 210°C or lower and a ratio of the number of the methylene groups to the number of the amide groups $[CH_2]/[NHCO]$ of 8.0 or more, there may be mentioned at least one kind of a copolymer which uses several kinds of raw material monomers which form at least one kind of a homopolymer of the polyamide (A1X). These may be used one kind or two or more kinds.

When the polyamide (A1) is a copolymer, the ratio of the number of the methylene groups to the number of the amide groups $[CH_2]/[NHCO]$ can be obtained by summing for all constitutional repeating units the value obtained by multiplying the ratio of the number of the methylene groups to the number of the amide groups [CH2]/[NHCO] of homopolymer of a monomer constituting the constitutional repeating units of the copolymer to the molar ratio of the constitutional repeating units.

Also, when the polyamide (A1) is a copolymer, the melting point can be obtained as an actually measured value of the melting point measured in accordance with ISO 11357-3 of the copolymer.

As the polyamide copolymer (A1XX) using a raw material monomer (constitutional repeating unit) alone which forms an aliphatic polyamide having a melting point measured in accordance with ISO 11357-3 of 210°C or lower and a ratio of the number of the methylene groups to the number of the amide groups $[CH_2]/[NHCO]$ of 8.0 or more, for example, the ratio of the number of the methylene groups to the number of the amide groups $[CH_2]/[NHCO]$ of the poly(dodecanamide/- dodecamethylene dodecamide) copolymer (polyamide 12/1212) is, since the ratio of the number of the methylene groups to the number of the amide groups $[CH_2]/[NHCO]$ of the polydodecanamide (polyamide 12) and the polydodecamethylene dodecamide (polyamide 1212) are 11.0, the ratio of the number of the methylene groups to the number of the amide groups $[CH_2]/[NHCO]$ thereof becomes 11.0 irrespective of a molar ratio of the constitutional repeating units.

Also, the melting point of the polydodecanamide (polyamide 12) is 178°C and the melting point of the polydodecamethylene dodecamide (polyamide 1212) is 185°C, so that the melting point measured in accordance with ISO 11357-3 of the poly(dodecanamide/dodecamethylene dodecamide) copolymer (polyamide 12/1212) becomes 210°C or lower irrespective of a molar ratio of the constitutional repeating units.

Further, the melting point and the ratio of the number of the methylene groups to the number of the amide groups $[CH_2]/[NHCO]$ of the poly(dodecanamide/undecanamide) copolymer (polyamide 12/11) changes by a molar ratio of the constitutional repeating units. The ratio of the number of the methylene group to the number of the amide group $[CH_2]/[NHCO]$ of the polydodecanamide (polyamide 12) is 11.0, and the ratio of the number of the methylene groups to the number of the amide groups $[CH_2]/[NHCO]$ of the polyundecanamide (polyamide 11) is 10.0, so that it can be calculated if the molar ratio of the constitutional repeating units is known, and when the dodecanamide unit/undecanamide unit of the poly(dodecanamide/undecanamide) copolymer (polyamide 12/11) is 80 : 20 (molar ratio), the ratio of the number of the methylene groups to the number of the amide groups $[CH_2]/[NHCO]$ is $11.0 \times 0.80 + 10.0 \times 0.20 = 10.8$. If the molar ratio of the undecanamide unit increases, the ratio of the number of the methylene groups to the number of the amide groups $[CH_2]/[NHCO]$ decreases, and at least the ratio of the number of the methylene groups to the number of the amide groups $[CH_2]/[NHCO]$ does not lower 10.0.

Also, the melting point of the polydodecanamide (polyamide 12) is 178°C and the melting point of the polyundecanamide (polyamide 11) is 188°C, so that the melting point is 210°C or lower irrespective of the molar ratio of the constitutional repeating units of the poly(dodecanamide/undecanamide) copolymer (polyamide 12/11).

Thus, like the poly(dodecanamide/dodecamethylene dodecamide) copolymer (polyamide 12/1212) and the poly(dodecanamide/undecanamide) copolymer (polyamide 12/11), the polyamide copolymer (A1XX) using a raw material monomer (constitutional repeating unit) alone which forms an aliphatic polyamide having the melting point measured in accordance with ISO 11357-3 of 210°C or lower and the ratio of the number of the methylene groups to the number of the amide groups $[CH_2]/[NHCO]$ of 8.0 or more becomes the ratio of the number of the methylene groups to the number of the amide groups $[CH_2]/[NHCO]$ of 8.0 or more, and the melting point measured in accordance with ISO 11357-3 of 210°C or lower irrespective of the molar ratio of the constitutional repeating units, and is included in the polyamide (A1) of the present application.

On the other hand, it is possible to produce the polyamide (A1) by copolymerizing a raw material monomer (constitutional repeating unit) which forms an aliphatic polyamide having the melting point measured in accordance with ISO 11357-3 of 210°C or lower and the ratio of the number of the methylene groups to the number of the amide groups $[CH_2]/[NHCO]$ of 8.0 or more as at least one component, and as mentioned later, using at least one component of a raw material monomer (constitutional repeating unit) which forms an aliphatic polyamide having the ratio of the number of the methylene groups to the number of the amide groups $[CH_2]/[NHCO]$ of less than 8.0, and the obtainable polyamide copolymer (A1Y) is included in the polyamide (A1) of the present application as long as it has the melting point measured in accordance with ISO 11357-3 of 210°C or lower and the ratio of the number of the methylene groups to the number of the amide groups [CH$_2$]/[NHCO] of 8.0 or more.

The aliphatic polyamide having the ratio of the number of the methylene groups to the number of the amide groups [CH$_2$]/[NHCO] of less than 8.0 may be mentioned polycaproamide (polyamide 6): [CH$_2$]/[NHCO] = 5.0, polyethylene adipamide (polyamide 26): [CH$_2$]/[NHCO] = 3.0, polytetramethylene succinamide (polyamide 44): [CH$_2$]/[NHCO] = 3.0, polytetramethylene glutamide (polyamide 45): [CH$_2$]/[NHCO] = 3.5, polytetramethylene adipamide (polyamide 46): [CH$_2$]/[NHCO] = 4.0, polytetramethylene suberamide (polyamide 48) : [CH$_2$]/[NHCO] = 5.0, polytetramethylene azelamide (polyamide 49): [CH$_2$]/[NHCO] = 5.5, polytetramethylene sebacamide (polyamide 410): [CH$_2$]/[NHCO] = 6.0, polytetramethylene dodecamide (polyamide 412): [CH$_2$]/[NHCO] = 7.0, polypentamethylene succinamide (polyamide 54): [CH$_2$]/[NHCO] = 3.5, polypentamethylene glutamide (polyamide 55): [CH$_2$]/[NHCO] = 4.0, polypentamethylene adipamide (polyamide 56): [CH$_2$]/[NHCO] = 4.5, polypentamethylene suberamide (polyamide 58): [CH$_2$]/[NHCO] = 5.5, polypentamethylene azelamide (polyamide 59): [CH$_2$]/[NHCO] = 6.0, polypentamethylene sebacamide (polyamide 510): [CH$_2$]/[NHCO] = 6.5, polypentamethylene dodecamide (polyamide 512): [CH$_2$]/[NHCO] = 7.5, polyhexamethylene succinamide (polyamide 64): [CH$_2$]/[NHCO] = 4.0, polyhexamethylene glutamide (polyamide 65): [CH$_2$]/[NHCO] = 4.5, polyhexamethylene adipamide (polyamide 66): [CH$_2$]/[NHCO] = 5.5, polyhexamethylene suberamide (polyamide 68): [CH$_2$]/[NHCO] = 6.0, polyhexamethylene azelamide (polyamide 69): [CH$_2$]/[NHCO] = 6.5, polyhexamethylene sebacamide (polyamide 610): [CH$_2$]/[NHCO] = 7.0, polynonamethylene adipamide (polyamide 96): [CH$_2$]/[NHCO] = 6.5, polynonamethylene suberamide (polyamide 98): [CH$_2$]/[NHCO] = 7.5, polydecamethylene glutamide (polyamide 105): [CH$_2$]/[NHCO] = 6.5, polydecamethylene adipamide (polyamide 106): [CH$_2$]/[NHCO] = 7.0 and polydodecamethylene glutamide (polyamide 125): [CH$_2$]/[NHCO] = 7.5, etc. Also, as the aliphatic polyamide having the ratio of the number of the methylene groups to the number of the amide groups [CH$_2$]/[NHCO] of less than 8.0, there may be mentioned at least one kind of a copolymer using several kinds of the raw material monomers which form at least one kind of the homopolymer. These may be used one kind or two or more kinds.

As the polyamide copolymer (A1Y) using a raw material monomer (constitutional repeating unit) which forms an aliphatic polyamide having the melting point measured in accordance with ISO 11357-3 of 210°C or lower and the ratio of the number of the methylene groups to the number of the amide groups [CH$_2$]/[NHCO] of 8.0 or more as at least one component, and using at least one component of a raw material monomer (constitutional repeating unit) which forms an aliphatic polyamide having the ratio of the number of the methylene groups to the number of the amide groups [CH$_2$]/[NHCO] of less than 8.0, for example, the melting point and the ratio of the number of the methylene groups to the number of the amide groups [CH$_2$]/[NHCO] of the poly(dodecanamide/caproamide) copolymer (polyamide 12/6) changes by the molar ratio of the constitutional repeating units. The ratio of the number of the methylene groups to the number of the amide groups [CH$_2$]/[NHCO] of the polydodecanamide (polyamide 12) is 11.0, and the ratio of the number of the methylene groups to the number of the amide groups [CH$_2$]/[NHCO] of the polycaproamide (polyamide 6) is 5.0, so that it can be calculated if the molar ratio of the constitutional repeating units is known, the polyamide copolymer in which the dodecanamide unit/caproamide unit of the poly(dodecanamide/caproamide) copolymer (polyamide 12/6) is 50.0 : 50.0 to 99.5 : 0.5 (molar ratio) becomes the ratio of the number of the methylene groups to the number of the amide groups [CH$_2$]/[NHCO] of 8.0 or more. Provided that, in order to differentiate the poly(dodecanamide/caproamide) copolymer (polyamide 12/6) and the polydodecanamide (polyamide 12), when the ratio of the dodecanamide unit of the poly(dodecanamide/caproamide) copolymer (polyamide 12/6) is higher than the dodecanamide unit/caproamide unit of 99.5 : 0.5 (molar ratio), it is treated to as the polydodecanamide (polyamide 12). In the following, the homopolymer and the copolymer are similarly handled.

Also, the melting point of the polydodecanamide (polyamide 12) is 178°C and the melting point of the polycaproamide (polyamide 6) is 220°C, so that the melting point measured in accordance with ISO 11357-3 of the polyamide copolymer in which the dodecanamide unit/caproamide unit of the poly(dodecanamide/caproamide) copolymer (polyamide 12/6) is 4.0 : 96.0 to 99.5 : 0.5 (molar ratio) is 210°C or lower.

That is, the polyamide copolymer in which the dodecanamide unit/caproamide unit of the poly(dodecanamide/caproamide) copolymer (polyamide 12/6) is 50.0 : 50.0 to 99.5 : 0.5 (molar ratio) becomes the ratio of the number of the methylene groups to the number of the amide groups [CH$_2$]/[NHCO] of 8.0 or more and the melting point measured in accordance with ISO 11357-3 of 210°C or lower, and is included in the polyamide {A1} of the present application.

Thus, the ratio of the number of the methylene groups to the number of the amide groups [CH$_2$]/[NHCO] in the polyamide copolymer (A1Y) using a raw material monomer (constitutional repeating unit) which forms an aliphatic polyamide having the melting point measured in accordance with ISO 11357-3 of 210°C or lower and the ratio of the number of the methylene groups to the number of the amide groups

[CH$_2$]/[NHCO] of 8.0 or more as at least one component, and using at least one component of a raw material monomer (constitutional repeating unit) which forms an aliphatic polyamide having the ratio of the number of the methylene groups to the number of the amide groups [CH$_2$]/[NHCO] of less than 8.0 can be calculated by the molar ratio of the constitutional repeating units and the ratio of the number of the methylene groups to the number of the amide groups [CH$_2$]/[NHCO] of the respective constitutional repeating units, and is included in the polyamide (A1) of the present application as long as it has the ratio of the number of the methylene groups to the number of the amide groups

$[CH_2]/[NHCO]$ of 8.0 or more and the melting point measured in accordance with ISO 11357-3 of 210°C or lower.

Also, the polyamide (A1) can be obtained by copolymerizing at least one component of a raw material monomer (constitutional repeating unit) which forms an aliphatic polyamide having the melting point measured in accordance with ISO 11357-3 of exceeding 210°C and the ratio of the number of the methylene groups to the number of the amide groups $[CH_2]/[NHCO]$ of 8.0 or more, and the obtainable polyamide copolymer (A1Z) is included in the polyamide (A1) of the present application as long as it has the melting point measured in accordance with ISO 11357-3 of 210°C or lower and the ratio of the number of the methylene groups to the number of the amide groups $[CH_2]/[NHCO]$ of 8.0 or more.

As the polyamide having the melting point measured in accordance with ISO 11357-3 of exceeding 210°C and the ratio of the number of the methylene groups to the number of the amide groups $[CH_2]/[NHCO]$ of 8.0 or more, there may be mentioned polyhexamethylene dodecamide (polyamide 612): $[CH_2]/[NHCO] = 8.0$ and the melting point: 218°C, and polyhexamethylene tetradecamide (polyamide 614): $[CH_2]/[NHCO] = 9.0$ and the melting point: 212°C, etc. These may be used one kind or two or more kinds.

As the copolymer (A1Z) using at least one component of a raw material monomer (constitutional repeating unit) which forms an aliphatic polyamide having the melting point measured in accordance with ISO 11357-3 of exceeding 210°C and the ratio of the number of the methylene groups to the number of the amide groups $[CH_2]/[NHCO]$ of 8.0 or more, for example, the melting point and the ratio of the number of the methylene groups to the number of the amide groups $[CH_2]/[NHCO]$ of the poly(hexamethylene hexadecamide/hexamethylene tetradecamide) copolymer (polyamide 616/614) changes depending on the molar ratio of the constitutional repeating units. The ratio of the number of the methylene groups to the number of the amide groups $[CH_2]/[NHCO]$ of the polyhexamethylene hexadecamide (polyamide 616)is 10.0 and the ratio of the number of the methylene groups to the number of the amide groups $[CH_2]/[NHCO]$ of the polyhexamethylene tetradecamide (polyamide 614) is 9.0, so that it can be calculated if the molar ratio of the constitutional repeating units is known, and when the hexamethylene hexadecamide unit/hexamethylene tetradecamide unit of the poly(hexamethylene hexadecamide/hexamethylene tetradecamide) copolymer (polyamide 616/614) is 30 : 70 (molar ratio), the ratio of the number of the methylene groups to the number of the amide groups $[CH_2]/[NHCO]$ is $10.0 \times 0.30 + 9.0 \times 0.70 = 93$. If the molar ratio of the hexamethylene tetradecamide unit increases, the ratio of the number of the methylene groups to the number of the amide groups $[CH_2]/[NHCO]$ decreases, and at least the ratio of the number of the methylene groups to the number of the amide groups $[CH_2]/[NHCO]$ does not lower than 9.0.

Also, the melting point of the polyhexamethylene hexadecamide (polyamide 616) is 207°C and the melting point of the polyhexamethylene tetradecamide (polyamide 614) is 212°C, so that the melting point measured in accordance with ISO 11357-3 of the polyamide copolymer of the poly(hexamethylene hexadecamide/hexamethylene tetradecamide) copolymer (polyamide 616/614) in which the hexamethylene hexadecamide unit/hexamethylene tetradecamide unit is 14.0: 86.0 to 99.5: 0.5 (molar ratio) is 210°C or lower.

That is, the polyamide copolymer in which the hexamethylene hexadecamide unit/hexamethylene tetradecamide unit of the poly(hexamethylene hexadecamide/- hexamethylene tetradecamide) copolymer (polyamide 616/614) is 14.0 : 86.0 to 99.5 : 0.5 (molar ratio), the ratio of the number of the methylene groups to the number of the amide groups $[CH_2]/[NHCO]$ thereof becomes 8.0 or more and the melting point measured in accordance with ISO 11357-3 is 210°C or lower, and is included in the polyamide (A1) of the present application.

Further, as the copolymer (A1Z) using at least one component of a raw material monomer (constitutional repeating unit) which forms an aliphatic polyamide having the melting point measured in accordance with ISO 11357-3 of exceeding 210°C and the ratio of the number of the methylene groups to the number of the amide groups $[CH_2]/[NHCO]$ of 8.0 or more, for example, the melting point and the ratio of the number of the methylene groups to the number of the amide groups $[CH_2]/[NHCO]$ of the poly(hexamethylene dodecamide/hexamethylene tetradecamide) copolymer (polyamide 612/614) changes depending on the molar ratio of the constitutional repeating units. The ratio of the number of the methylene groups to the number of the amide groups $[CH_2]/[NHCO]$ of the polyhexamethylene dodecamide (polyamide 612) is 8.0, the ratio of the number of the methylene groups to the number of the amide groups $[CH_2]/[NHCO]$ of the polyhexamethylene tetradecamide (polyamide 614) is 9.0, so that it can be calculated if the molar ratio of the constitutional repeating units is known, and when the polyamide copolymer in which the hexamethylene dodecamide unit/hexamethylene tetradecamide unit of the poly(hexamethylene dodecamide/hexamethylene tetradecamide) copolymer (polyamide 612/614) is 70.0 : 30.0 (molar ratio), the ratio of the number of the methylene groups to the number of the amide groups $[CH_2]/[NHCO]$ is $8.0 \times 0.70 + 9.0 \times 0.30 = 8.3$. If the molar ratio of the hexamethylene dodecamide unit increases, the ratio of the number of the methylene groups to the number of the amide groups $[CH_2]/[NHCO]$ decreases, and at least the ratio of the number of the methylene groups to the number of the amide groups $[CH_2]/[NHCO]$ does not lower 8.0.

Further, the melting point of the polyhexamethylene dodecamide (polyamide 612) is 218°C, the melting point of the polyhexamethylene tetradecamide (polyamide 614) is 212°C, and the melting point measured in accordance with ISO 11357-3 of the polyamide copolymer in which the hexamethylene dodecamide unit/hexamethylene tetradecamide unit of the poly(hexamethylene dodecamide/hexamethylene tetradecamide) copolymer (polyamide 612/614) is 70.0 : 30.0 (molar ratio) is 206°C. And the melting point measured in accordance with ISO 11357-3 of the polyamide copolymer in which the hexamethylene dodecamide unit/hexamethylene tetradecamide unit of the poly(hexamethylene dodecamide/hexamethylene tetradecamide) copolymer (polyamide 612/614) is 80.0 : 20.0(molar ratio) is 209°C.

Thus, the polyamide copolymer (A1Z) using at least one component of a raw material monomer (constitutional repeating unit) which forms an aliphatic polyamide having the melting point measured in accordance with ISO 11357-3 of exceeding 210°C and the ratio of the number of the methylene groups to the number of the amide groups [CH$_2$]/[NHCO] of 8.0 or more is included in the polyamide (A1) of the present application irrespective of the molar ratio of the constitutional repeating units, as long as it has the ratio of the number of the methylene groups to the number of the amide groups [CH$_2$]/[NHCO] of 8.0 or more and the melting point measured in accordance with ISO 11357-3 of 210°C or lower.

Among these, from the viewpoints of sufficiently ensuring various characteristics such as mechanical characteristics, heat resistance, chemical resistance, etc., of the obtainable multilayer tube, and economic efficiency and availability, the polyamide (A1) is more preferably at least one kind of a homopolymer selected from the group consisting of polyundecanamide (polyamide 11), polydodecanamide (polyamide 12), polynonamethylene azelamide (polyamide 99), polynonamethylene decamide (polyamide 910), polynonamethylene dodecamide (polyamide 912), polydecamethylene sebacamide (polyamide 1010), polydecamethylene dodecamide (polyamide 1012) and polydodecamethylene dodecamide (polyamide 1212), and/or at least one kind of a copolymer using several kinds of the raw materials forming these, and further preferably at least one kind of a homopolymer selected from the group consisting of polyundecanamide (polyamide 11), polydodecanamide (polyamide 12), polynonamethylene dodecamide (polyamide 912), polydecamethylene sebacamide (polyamide 1010), polydecamethylene dodecamide (polyamide 1012), and polydodecamethylene dodecamide (polyamide 1212), and/or at least one kind of a copolymer using several kinds of the raw materials forming these.

Also, from the viewpoint of elution resistance of the monomer and the oligomer, it is particularly preferably a homopolymer such as polydecamethylene decamide (polyamide 1010) and/or polydecamethylene dodecamide (polyamide 1012), and/or a copolymer using raw material monomers forming these.

[Polyamide (A2)]

The polyamide (A2) is a polyamide other than the polyamide (A1), has an amide bond (-CONH-) in the main chain, and can be obtained by polymerizing or copolymerizing an aliphatic lactam, an aliphatic aminocarboxylic acid, or an aliphatic diamine and an aliphatic dicarboxylic acid which are raw material monomers (constitutional repeating unit) forming the polyamide (hereinafter sometimes referred to as a polyamide (A2).).

The absolute value [[(SP value of polyamide (A1)) - (SP value of polyamide (A2))]] of a difference in solubility parameter SP values of the polyamide (A1) and the polyamide (A2) is 1.8 (MPa)$^{1/2}$ or more and 4.5 (MPa)$^{1/2}$ or less, preferably 2.0 (MPa)$^{1/2}$ or more and 4.3 (MPa)$^{1/2}$ or less, and more preferably 2.2 (MPa)$^{1/2}$ or more and 4.1 (MPa)$^{1/2}$ or less. If the absolute value of a difference in solubility parameter SP values of the polyamide (A1) and the polyamide (A2) is less than the above-mentioned value, interlayer adhesiveness and durability thereof of the obtainable multilayer tube are poor, on the other hand, if it exceeds the above-mentioned value, mechanical characteristics and chemical resistance of the obtainable multilayer tube are poor.

Incidentally, the solubility parameter SP value is a value obtained by the formula of Fedors shown below, which is a value expressed as square root of molecular cohesion energy density, and is a value with the unit of (MPa)$^{1/2}$ and measured at 25°C (hereinafter the solubility parameter is sometimes referred to as a SP value.).

$$\delta = [\Delta Ev/\Delta V]^{1/2} = [\Sigma \Delta e_i/\Sigma \Delta v_i]^{1/2}$$

$\delta$: Solubility parameter SP value
$\Delta Ev$: cohesion energy
$\Delta V$: mol molecular volume
$\Delta e_i$: mol cohesion energy of atom or atomic group of i component
$\Delta v_i$: mol molecular volume of atom or atomic group of i component

Here, $\Delta Ev$ and $\Delta V$ are each represented by $\Delta Ev=\Sigma \Delta e_i$ and $\Delta V=\Sigma \Delta v_i$, and $e_i$ and $v_i$ are values obtained from POLYMER ENGINEERING AND SCIENCE (published in 1974, vol. 14, No. 2, pp. 147 to 154). In the following, the SP value described in the present specification is a value using the unit of (MPa)$^{1/2}$.

The solubility parameter SP values of the respective polyamides (A1) mentioned as preferred examples are polyundecanamide (polyamide 11, SP value: 22.9 (MPa)$^{1/2}$), polydodecanamide (polyamide 12, SP value: 22.5 (MPa)$^{1/2}$), polynonamethylene azelamide (polyamide 99, SP value: 24.1 (MPa)$^{1/2}$), polynonamethylene decamide (polyamide 910, SP value: 23.8 (MPa)$^{1/2}$), polynonamethylene dodecamide (polyamide 912, SP value: 23.2 (MPa)$^{1/2}$), polydecamethylene sebacamide (polyamide 1010, SP value: 23.5 (MPa)$^{1/2}$), polydecamethylene dodecamide (polyamide 1012, SP value:

22.9 (MPa)$^{1/2}$) and polydodecamethylene dodecamide (polyamide 1212, SP value: 22.5 (MPa)$^{1/2}$).

The polyamide (A2) is a polyamide other than the polyamide (A1), may be any material as long as the absolute value of the difference in solubility parameter SP value from the polyamide (A1) is 1.8 (MPa)$^{1/2}$ or more and 4.5 (MPa)$^{1/2}$ or less, and appropriately selected so as to satisfy the value.

Incidentally, the polyamide (A2) is preferably an aliphatic polyamide having the melting point measured in accordance with ISO 11357-3 of exceeding 210°C and the ratio of the number of the methylene groups to the number of the amide groups [CH$_2$]/[NHCO] of 8.0 or more; an aliphatic polyamide having the melting point measured in accordance with ISO 11357-3 of exceeding 210°C and the ratio of the number of the methylene groups to the number of the amide groups [CH$_2$]/[NHCO] of less than 8.0; and an aliphatic polyamide having the melting point measured in accordance with ISO 11357-3 of 210°C or lower and the ratio of the number of the methylene groups to the number of the amide groups [CH$_2$]/[NHCO] of less than 8.0. Examples of the preferable polyamides (A2) are explained by dividing into an aliphatic polyamide (A2X) (hereinafter sometimes referred to as a polyamide (A2X).) having the ratio of the number of the methylene groups to the number of the amide groups [CH$_2$]/[NHCO] of less than 8.0 irrespective of the melting point measured in accordance with ISO 11357-3, and an aliphatic polyamide (A2Y) (hereinafter sometimes referred to as a polyamide (A2Y).) having the melting point measured in accordance with ISO 11357-3 of exceeding 210°C and the ratio of the number of the methylene groups to the number of the amide groups [CH$_2$]/[NHCO] of 8.0 or more.

As the aliphatic polyamide (A2X) having the ratio of the number of the methylene groups to the number of the amide groups [CH$_2$]/[NHCO] of less than 8.0 irrespective of the melting point measured in accordance with ISO 11357-3, there may be mentioned polycaproamide (polyamide 6, SP: 26.9 (MPa)$^{1/2}$), polytetramethylene glutamide (polyamide 45, SP: 29.2 (MPa)$^{1/2}$), polytetramethylene adipamide (polyamide 46, SP: 28.3 (MPa)$^{1/2}$), polytetramethylene suberamide (polyamide 48, SP: 26.9 (MPa)$^{1/2}$ ), polytetramethylene azelamide (polyamide 49, SP: 26.3 (MPa)$^{1/2}$), polytetramethylene sebacamide (polyamide 410, SP: 25.7 (MPa)$^{1/2}$ ), polytetramethylene dodecamide (polyamide 412, SP: 24.9 (MPa)$^{1/2}$ ), polypentamethylene succinamide (polyamide 54, SP: 29.2 (MPa)$^{1/2}$), polypentamethylene glutamide (polyamide 55, SP: 28.3 (MPa)$^{1/2}$), polypentamethylene adipamide (polyamide 56, SP: 27.5 (MPa)$^{1/2}$), polypentamethylene suberamide (polyamide 58, SP: 26.3 (MPa)$^{1/2}$), polypentamethylene azelamide (polyamide 59, SP: 25.7 (MPa)$^{1/2}$), polypentamethylene sebacamide (polyamide 510, SP: 25.3 (MPa)$^{1/2}$), polyhexamethylene succinamide (polyamide 64, SP: 28.3 (MPa)$^{1/2}$), polyhexamethylene glutamide (polyamide 65, SP: 27.5 (MPa)$^{1/2}$), polyhexamethylene adipamide (polyamide 66, SP: 26.9 (MPa)$^{1/2}$), polyhexamethylene suberamide (polyamide 68, SP: 25.7 (MPa)$^{1/2}$), polyhexamethylene azelamide (polyamide 69, SP: 25.3 (MPa)$^{1/2}$), polyhexamethylene sebacamide (polyamide 610, SP: 24.9 (MPa)$^{1/2}$), polynonamethylene adipamide (polyamide 96, SP: 25.3 (MPa)$^{1/2}$), polydecamethylene glutamide (polyamide 105, SP: 25.3 (MPa)$^{1/2}$), polydecamethylene adipamide (polyamide 106, SP: 24.9 (MPa)$^{1/2}$), polypentamethylene dodecamide (polyamide 512, SP value: 24.5 (MPa)$^{1/2}$), polydodecamethylene glutamide (polyamide 125, SP value: 24.5 (MPa)$^{1/2}$), etc. The polyamide (A2X) may be also mentioned at least one kind of a copolymer using several kinds of raw material monomers which forms at least one kind of a homopolymer. Also, as long as the ratio of the number of the methylene groups to the number of the amide groups [CH$_2$]/[NHCO] is less than 8.0, there may be also mentioned at least one kind of a copolymer using several kinds of raw material monomers which form at least one kind of a homopolymer of the polyamide (A1), and/or several kinds of raw material monomers which form at least one kind of a homopolymer of a polyamide (A2Y) mentioned later. These may be used singly, or two or more may be used in combination.

When the polydodecanamide (polyamide 12, SP value: 22.5 (MPa)$^{1/2}$) and/or the polydodecamethylene dodecamide (polyamide 1212, SP value: 22.5 (MPa)$^{1/2}$) having the lowest solubility parameter SP value(s) among the polyamides (A1) is/are selected, the absolute value of the difference in the solubility parameter SP values to the polypentamethylene dodecamide (polyamide 512, SP value: 24.5 (MPa)$^{1/2}$) and the polydodecamethylene glutamide (polyamide 125, SP value: 24.5 (MPa)$^{1/2}$) having the lowest solubility parameter SP value(s) among the polyamides (A2X) becomes 2.0 (MPa)$^{1/2}$, which is within the regulated range of the present application. Accordingly, the combination of the polydodecanamide (polyamide 12, SP value: 22.5 (MPa)$^{1/2}$) and/or the polydodecamethylene dodecamide (polyamide 1212, SP value: 22.5 (MPa)$^{1/2}$) as the polyamide (A1), and the polypentamethylene dodecamide (polyamide 512, SP value: 24.5 (MPa)$^{1/2}$) and/or the polydodecamethylene glutamide (polyamide 125, SP value: 24.5) as the polyamide (A2X) is within the regulated range of the present application.

On the other hand, when the polynonamethylene azelamide (polyamide 99, SP value: 24.1 (MPa)$^{1/2}$) having the highest solubility parameter SP value among the polyamides (A1) is selected, the absolute value of the difference in the solubility parameter SP values to the polypentamethylene dodecamide (polyamide 512, SP value: 24.5 (MPa)$^{1/2}$) and the polydodecamethylene glutamide (polyamide 125, SP value: 24.5 (MPa)$^{1/2}$) having the lowest solubility parameter SP value(s) among the polyamides (A2X) becomes 0.4 (MPa)$^{1/2}$, which is out of the regulated range of the present application. Accordingly, the combination of the polynonamethylene azelamide (polyamide 99, SP value: 24.1 (MPa)$^{1/2}$) as the polyamide (A1), and the polypentamethylene dodecamide (polyamide 512, SP value: 24.5 (MPa)$^{1/2}$) and/or the polydodecamethylene glutamide (polyamide 125, SP value: 24.5 (MPa)$^{1/2}$) as the polyamide (A2X) is out of the regulated range of the present application, so that when the polynonamethylene azelamide (polyamide 99, SP value: 24.1 (MPa)$^{1/2}$) is selected as the polyamide (A1), the absolute value of the difference in the solubility parameter SP values is to be 1.8

$(MPa)^{1/2}$ or more, it is necessary to select the polyamide (A2X) having the solubility parameter SP value of 25.9 $(MPa)^{1/2}$ or more.

Further, the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value(s) among the polyamides (A1) is/are selected, the absolute value of the difference in the solubility parameter SP values to the polytetramethylene adipamide (polyamide 46, SP value: 28.3 $(MPa)^{1/2}$) and the polyhexamethylene succinamide (polyamide 64, SP value: 28.3 $(MPa)^{1/2}$) having the highest solubility parameter SP value(s) among the polyamides (A2X) becomes 5.8 $(MPa)^{1/2}$, which is out of the regulated range of the present application. Accordingly, the combination of the polydodecanamide (polyamide 12, SP value: 22.5 $(MPa)^{1/2}$) and/or the polydodecamethylene dodecamide (polyamide 1212, SP value: 22.5 $(MPa)^{1/2}$) as the polyamide (A1), and the polytetramethylene adipamide (polyamide 46, SP value: 28.3 $(MPa)^{1/2}$) and/or the polyhexamethylene succinamide (polyamide 64, SP value: 28.3 $(MPa)^{1/2}$) as the polyamide (A2X) is out of the regulated range of the present application, so that when the polydodecanamide (polyamide 12, SP value: 22.5 $(MPa)^{1/2}$) and/or the polydodecamethylene dodecamide (polyamide 1212, SP value: 22.5 $(MPa)^{1/2}$) is/are selected as the polyamide (A1), the absolute value of the difference in the solubility parameter SP values is to be 4.5 $(MPa)^{1/2}$ or less, it is necessary to select the polyamide (A2X) having the solubility parameter SP value of 27.0 $(MPa)^{1/2}$ or less.

On the other hand, when the polynonamethylene azelamide (polyamide 99, SP value: 24.1 $(MPa)^{1/2}$) having the highest solubility parameter SP value among the polyamides (A1) is selected, the absolute value of the difference in the solubility parameter SP values to the polytetramethylene adipamide (polyamide 46, SP value: 28.3 $(MPa)^{1/2}$) and the polyhexamethylene succinamide (polyamide 64, SP value: 28.3 $(MPa)^{1/2}$) having the highest solubility parameter SP value among the polyamides (A2X) becomes 4.2 $(MPa)^{1/2}$, which is within the regulated range of the present application. Accordingly, the combination of the polynonamethylene azelamide (polyamide 99, SP value: 24.1 $(MPa)^{1/2}$) as the polyamide (A1), and the polytetramethylene adipamide (polyamide 46, SP value: 28.3 $(MPa)^{1/2}$) and/or the polyhexamethylene succinamide (polyamide 64, SP value: 28.3 $(MPa)^{1/2}$) as the polyamide (A2X) is within the regulated range of the present application.

As the polyamide (A2Y) having the melting point measured in accordance with ISO 11357-3 exceeding 210°C and the ratio of the number of the methylene groups to the number of the amide groups [CH$_2$]/[NHCO] of 8.0 or more, there may be mentioned polyhexamethylene dodecamide (polyamide 612, SP value: 24.1 $(MPa)^{1/2}$), polyhexamethylene tetradecamide (polyamide 614, SP value: 23.5 $(MPa)^{1/2}$), polyoctamethylene dodecamide (polyamide 812, SP value: 23.5 $(MPa)^{1/2}$), polydodecamethylene adipamide (polyamide 126, SP value: 24.1 $(MPa)^{1/2}$), polydodecamethylene suberamide (polyamide 128, SP value: 23.5 $(MPa)^{1/2}$), polytetradecamethylene adipamide (polyamide 146, SP value: 23.5 $(MPa)^{1/2}$), etc. The polyamide (A2Y) may be mentioned at least one kind of a copolymer produced by using several kinds of a raw material monomer(s) which forms at least one kind of a homopolymer of the polyamide (A2Y), and/or a raw material monomer(s) which forms at least one kind of a homopolymer of the polyamide (A2X) as long as the melting point measured in accordance with ISO 11357-3 exceeds 210°C. These may be used one kind or two or more kinds.

When the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is/are selected, the absolute value of the difference in the solubility parameter SP values to the polyhexamethylene tetradecamide (polyamide 614, SP value: 23.5 $(MPa)^{1/2}$), the polyoctamethylene dodecamide (polyamide 812, SP value: 23.5 $(MPa)^{1/2}$), the polydodecamethylene suberamide (polyamide 128, SP value: 23.5 $(MPa)^{1/2}$), and the polytetradecamethylene adipamide (polyamide 146, SP value: 23.5 $(MPa)^{1/2}$) having the lowest solubility parameter SP value among the polyamides (A2Y) becomes 1.0 $(MPa)^{1/2}$, which is out of the regulated range of the present application.

On the other hand, when the polynonamethylene azelamide (polyamide 99, SP value: 24.1 $(MPa)^{1/2}$) having the highest solubility parameter SP value among the polyamides (A1) is selected, the absolute value of the difference in the solubility parameter SP values to the polyhexamethylene tetradecamide (polyamide 614, SP value: 23.5 $(MPa)^{1/2}$), the polyoctamethylene dodecamide (polyamide 812, SP value: 23.5 $(MPa)^{1/2}$), the polydodecamethylene suberamide (polyamide 128, SP value: 23.5 $(MPa)^{1/2}$), and the polytetradecamethylene adipamide (polyamide 146, SP value: 23.5 $(MPa)^{1/2}$) having the lowest solubility parameter SP value among the polyamides (A2Y) becomes 0.8 $(MPa)^{1/2}$, which is out of the regulated range of the present application.

Also, when the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is/are selected, the absolute value of the difference in the solubility parameter SP values to the polyhexamethylene dodecamide (polyamide 612, SP value: 24.1 $(MPa)^{1/2}$) and the polydodecamethylene adipamide (polyamide 126, SP value: 24.1 $(MPa)^{1/2}$) having the highest solubility parameter SP value among the polyamides (A2Y) becomes 1.6 $(MPa)^{1/2}$, which is out of the regulated range of the present application.

On the other hand, when the polynonamethylene azelamide (polyamide 99, SP value: 24.1 $(MPa)^{1/2}$) having the highest solubility parameter SP value among the polyamides (A1) is selected, the absolute value of the difference in the solubility parameter SP values to the polyhexamethylene dodecamide (polyamide 612, SP value: 24.1 $(MPa)^{1/2}$) and the polydodecamethylene adipamide (polyamide 126, SP value: 24.1 $(MPa)^{1/2}$) having the highest solubility parameter SP value among the polyamides (A2Y) becomes 0 (MPa)$^{1/2}$, which is out of the regulated range of the present application.

From the viewpoints of availability, economic efficiency, compatibility with the polyamide (A1), and sufficiently ensuring various properties such as mechanical characteristics, chemical resistance, flexibility, etc., of the obtainable multilayer tube, and sufficiently obtaining interlayer adhesiveness to the ethylene/vinyl acetate copolymer saponified product composition (B) mentioned later and durability thereof, the polyamide (A2) is preferably appropriately selected from at least one kind selected from the group consisting of an aliphatic polyamide (A2X) having the ratio of the number of the methylene groups to the number of the amide groups [CH$_2$]/[NHCO] of less than 8.0 and an aliphatic polyamide (A2Y) having the melting point measured in accordance with ISO 11357-3 of exceeding 210°C or the ratio of the number of the methylene groups to the number of the amide groups [CH$_2$]/[NHCO] of 8.0 or more so as to satisfy the absolute value of the difference in the solubility parameter SP values with the polyamide (A1) of 1.8 (MPa)$^{1/2}$ or more and 4.5 (MPa)$^{1/2}$ or less. Specifically, it is preferably at least one kind of a homopolymer selected from the group consisting of polycaproamide (polyamide 6), polyhexamethylene adipamide (polyamide 66), polyhexamethylene azelamide (polyamide 69), polyhexamethylene sebacamide (polyamide 610) and polyhexamethylene dodecamide (polyamide 612), and/or at least one kind of a copolymer using several kinds of raw material monomers forming these, or at least one kind of a copolymer produced by using a raw material monomer which forms at least one kind selected from the group consisting of polycaproamide (polyamide 6), polyhexamethylene adipamide (polyamide 66), polyhexamethylene azelamide (polyamide 69), polyhexamethylene sebacamide (polyamide 610) and polyhexamethylene dodecamide (polyamide 612) as a main component, and using several kinds of raw material monomers which form at least one kind selected from the group consisting of polynonamethylene dodecamide (polyamide 912), polydecamethylene sebacamide (polyamide 1010), polydecamethylene dodecamide (polyamide 1012), polydodecamethylene dodecamide (polyamide 1212), polyundecanamide (polyamide 11) and polydodecanamide (polyamide 12).

Among these, it is more preferably polycaproamide (polyamide 6), polyhexamethylene adipamide (polyamide 66), polyhexamethylene azelamide (polyamide 69), polyhexamethylene sebacamide (polyamide 610), polyhexamethylene dodecamide (polyamide 612), a poly(caproamide/hexamethylene adipamide) copolymer (polyamide 6/66), a poly(caproamide/hexamethylene azelamide) copolymer (polyamide 6/69), a poly(caproamide/hexamethylene sebacamide) copolymer (polyamide 6/610), a poly(caproamide/hexamethylene dodecamide) copolymer (polyamide 6/612), a poly(caproamide/dodecanamide) copolymer (polyamide 6/12), a poly(caproamide/- hexamethylene adipamide/hexamethylene sebacamide) copolymer (polyamide 6/66/610), a poly(caproamide/hexamethylene adipamide/hexamethylene dodecamide) copolymer (polyamide 6/66/612), a poly(caproamide/hexamethylene adipamide/- dodecanamide) copolymer (polyamide 6/66/12), a poly(caproamide/hexamethylene sebacamide/dodecanamide) copolymer (polyamide 6/610/12), a poly(caproamide/- hexamethylene dodecamide/dodecanamide) copolymer (polyamide 6/612/12), and a mixture of these materials, and it is particularly preferably an aliphatic polyamide having the ratio of the number of the methylene groups to the number of the amide groups [CH$_2$]/[NHCO] of less than 8.0, and is polycaproamide (polyamide 6), polyhexamethylene sebacamide (polyamide 610), a poly(caproamide/hexamethylene adipamide) copolymer (polyamide 6/66), a poly(caproamide/hexamethylene sebacamide) copolymer (polyamide 6/610), a poly(caproamide/hexamethylene dodecamide) copolymer (polyamide 6/612), a poly(caproamide/dodecanamide) copolymer (polyamide 6/12), a poly(caproamide/hexamethylene adipamide/hexamethylene sebacamide) copolymer (polyamide 6/66/610), a poly(caproamide/hexamethylene adipamide/hexamethylene dodecamide) copolymer (polyamide 6/66/612), a poly(caproamide/hexamethylene adipamide/dodecanamide) copolymer (polyamide 6/66/12), and a mixture of these materials.

For example, the solubility parameter SP value of the poly(caproamide/- hexamethylene adipamide) copolymer (polyamide 6/66) is, since the solubility parameter SP values of the polycaproamide (polyamide 6) and the polyhexamethylene adipamide (polyamide 66) are 26.9 (MPa)$^{1/2}$, so that the solubility parameter SP value is 26.9 (MPa)$^{1/2}$ irrespective of the molar ratio of the constitutional repeating units. When the polynonamethylene azelamide (polyamide 99, SP value: 24.1 (MPa)$^{1/2}$) having the highest solubility parameter SP value among the polyamides (A1) is selected, irrespective of the molar ratio of the constitutional repeating units of the poly(caproamide/hexamethylene adipamide) copolymer (polyamide 6/66), its SP value is 26.9 (MPa)$^{1/2}$, the absolute value of the difference in the solubility parameter SP values is 2.8 (MPa)$^{1/2}$, which is within the regulated range of the present application. Accordingly, the combination of the polynonamethylene azelamide (polyamide 99, SP value: 24.1 (MPa)$^{1/2}$) as the polyamide (A1) and the poly(caproamide/hexamethylene adipamide) copolymer (polyamide 6/66, SP value: 26.9 (MPa)$^{1/2}$) as the polyamide (A2) is within the regulated range of the present application.

On the other hand, when the polydodecanamide (polyamide 12, SP value: 22.5 (MPa)$^{1/2}$) and/or the polydodecamethylene dodecamide (polyamide 1212, SP value: 22.5 (MPa)$^{1/2}$) having the lowest solubility parameter SP value among the polyamide (A1) is/are selected, since the SP value of the poly(caproamide/hexamethylene adipamide) copolymer (polyamide 6/66) is 26.9 (MPa)$^{1/2}$ irrespective of the molar ratio of the constitutional repeating units, the absolute value of the difference in the solubility parameter SP value is 4.4 (MPa)$^{1/2}$, which is within the regulated range of the present application. Accordingly, the combination of the polydodecanamide (polyamide 12, SP value: 22.5 (MPa)$^{1/2}$) and/or the polydodecamethylene dodecamide (polyamide 1212, SP value: 22.5 (MPa)$^{1/2}$) as the polyamide (A1), and the poly(caproamide/hexamethylene adipamide) copolymer (polyamide 6166, SP value: 26.9 $(MPa)^{1/2}$) as the polyamide (A2) is within the regulated range of the present application.

Incidentally, the ratio of the number of the methylene groups to the number of the amide groups $[CH_2]/[NHCO]$ of the poly(caproamide/hexamethylene adipamide) copolymer (polyamide 6/66) is, since the ratios of the number of the methylene groups to the number of the amide groups $[CH_2]/[NHCO]$ of the polycaproamide (polyamide 6) and the polyhexamethylene adipamide (polyamide 66) are 5.0, the ratio of the number of the methylene groups to the number of the amide groups $[CH_2]/[NHCO]$ is 5.0 irrespective of the molar ratio of the constitutional repeating units. That is, the polyamide copolymer produced by using a raw material monomer (constitutional repeating unit) alone which forms an aliphatic polyamide having the ratio of the number of the methylene groups to the number of the amide groups $[CH_2]/[NHCO]$ of less than 8.0 like a poly(caproamide/hexamethylene adipamide) copolymer (polyamide 6/66) has the ratio of the number of the methylene groups to the number of the amide groups $[CH_2]/[NHCO]$ of less than 8.0 irrespective of the molar ratio of the constitutional repeating units.

For example, the solubility parameter SP value of the poly(caproamide/- hexamethylene sebacamide) copolymer (polyamide 6/610) changes depending on the molar ratio of the constitutional repeating units. The solubility parameter SP value of the polycaproamide (polyamide 6) is 26.9 $(MPa)^{1/2}$, and the solubility parameter SP value of the polyhexamethylene sebacamide (polyamide 610) is 24.9 $(MPa)^{1/2}$, so that it can be calculated if the molar ratio of the constitutional repeating units is known, whereby the solubility parameter SP value of the polyamide copolymer wherein the caproamide unit/hexamethylene sebacamide unit of the poly(caproamide/hexamethylene sebacamide) copolymer (polyamide 6/610) is 0.5 : 99.5 to 99.5 : 0.5 (molar ratio) becomes 24.9 $(MPa)^{1/2}$ or more and 26.9 $(MPa)^{1/2}$ or less. When the polynonamethylene azelamide (polyamid 99, SP value: 24.1 $(MPa)^{1/2}$) having the highest solubility parameter SP value among the polyamides (A1) is selected to the poly(caproamide/hexamethylene sebacamide) copolymer (polyamide 6/610), the absolute value of the difference in the solubility parameter SP values becomes 0.8 $(MPa)^{1/2}$ or more and 2.8 $(MPa)^{1/2}$ or less. In order to satisfy the absolute value of the difference in the solubility parameter SP values of 1.8 $(MPa)^{1/2}$ or more and 4.5 $(MPa)^{1/2}$ or less, the polyamide copolymer in which the caproamide unit/hexamethylene sebacamide unit of the poly(caproamide/hexamethylene sebacamide) copolymer (polyamide 6/610) is 50.0 : 50.0 to 99.5 : 0.5 (molar ratio) is selected. Accordingly, the combination of the polynonamethylene azelamide (polyamide 99, SP value: 24.1 $(MPa)^{1/2}$) as the polyamide (A1) and the polyamide copolymer in which the caproamide unit/hexamethylene sebacamide unit of the poly(caproamide/hexamethylene sebacamide) copolymer (polyamide 6/610) is 50.0 : 50.0 to 99.5 : 0.5 (molar ratio) as the polyamide (A2) is within the regulated range of the present application.

On the other hand, when the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is/are selected to the poly(caproamide/hexamethylene sebacamide) copolymer (polyamide 6/610), the absolute value of the difference in the solubility parameter SP values becomes 2.4 $(MPa)^{1/2}$ or more and 4.4 $(MPa)^{1/2}$ or less, the absolute value of the difference in the solubility parameter SP values satisfies 1.8 $(MPa)^{1/2}$ or more and 4.5 $(MPa)^{1/2}$ or less within all the range of the poly(caproamide/hexamethylene sebacamide) copolymer (polyamide 6/610) in which the caproamide unit/hexamethylene sebacamide unit is 0.5 : 99.5 to 99.5 : 0.5 (molar ratio). Accordingly, the combination of the polydodecanamide (polyamide 12, SP value: 22.5 $(MPa)^{1/2}$) and/or the polydodecamethylene dodecamide (polyamide 1212, SP value: 22.5 $(MPa)^{1/2}$) as the polyamide (A1), and the polyamide copolymer in which the caproamide unit/hexamethylene sebacamide unit of the poly(caproamide/hexamethylene sebacamide) copolymer (polyamide 6/610) is 0.5 : 99.5 to 99.5 : 0.5 (molar ratio) as the polyamide (A2) is within the regulated range of the present application.

Incidentally, the ratio of the number of the methylene groups to the number of the amide groups $[CH_2]/[NHCO]$ of the poly(caproamide/hexamethylene sebacamide) copolymer (polyamide 6/610) changes depending on the molar ratio of the constitutional repeating units. The ratio of the number of the methylene groups to the number of the amide groups $[CH_2]/[NHCO]$ of the polycaproamide (polyamide 6) is 5.0, and the ratio of the number of the methylene groups to the number of the amide groups $[CH_2]/[NHCO]$ of the polyhexamethylene sebacamide (polyamide 610) is 7.0, so that it can be calculated if the molar ratio of the constitutional repeating units is known, and when the caproamide unit/hexamethylene sebacamide unit of the poly(caproamide/- hexamethylene sebacamide) copolymer (polyamide 6/610) is 80 : 20 (molar ratio), the ratio of the number of the methylene groups to the number of the amide groups $[CH_2]/[NHCO]$ becomes $5.0 \times 0.80 + 7.0 \times 0.20 = 5.4$. If the molar ratio of the hexamethylene sebacamide unit increases, the ratio of the number of the methylene groups to the number of the amide groups $[CH_2]/[NHCO]$ also increases, and at least the ratio of the number of the methylene groups to the number of the amide groups $[CH_2]/[NHCO]$ does not become 8.0 or more. That is, in the polyamide copolymer produced by using a raw material monomer (constitutional repeating unit) alone which forms an aliphatic polyamide having the ratio of the number of the methylene groups to the number of the amide groups $[CH_2]/[NHCO]$ of less than 8.0 like a poly(caproamide/hexamethylene sebacamide) copolymer (polyamide 6/610), the ratio of the number of the methylene groups to the number of the amide groups $[CH_2]/[NHCO]$ becomes less than 8.0 irrespective of the molar ratio of the constitutional repeating units.

The solubility parameter SP value of the poly(caproamide/dodecanamide) copolymer (polyamide 6/12) changes depending on the molar ratio of the constitutional repeating units. The solubility parameter SP value of the polycaproamide (polyamide 6) is 26.9 $(MPa)^{1/2}$, and the solubility parameter SP value of the polydodecanamide (polyamide 12) is 22.5 $(MPa)^{1/2}$, so that it can be calculated if the molar ratio of the constitutional repeating units is known, and the solubility parameter SP value of the polyamide copolymer in which the caproamide unit/dodecanamide unit of the poly(caproamide/dodecanamide) copolymer (polyamide 6/12) is 0.5 : 99.5 to 99.5 : 0.5 (molar ratio) becomes 22.5 $(MPa)^{1/2}$ or more and 26.9 $(MPa)^{1/2}$ or less.

When the polynonamethylene azelamide (polyamide 99, SP value: 24.1 $(MPa)^{1/2}$) having the highest solubility parameter SP value among the polyamides (A1) is selected to the poly(caproamide/dodecanamide) copolymer (polyamide 6/12), the absolute value of the difference in the solubility parameter SP values becomes 0 $(MPa)^{1/2}$ or more and 2.8 $(MPa)^{1/2}$ or less. In order to satisfy the absolute value of the difference in the solubility parameter SP values of 1.8 $(MPa)^{1/2}$ or more and 4.5 $(MPa)^{1/2}$ or less, the polyamide copolymer in which the caproamide unit/dodecanamide unit of the poly(caproamide/dodecanamide) copolymer (polyamide 6/12) is 77.28 : 22.72 to 99.5 : 0.5 (molar ratio) is selected. Accordingly, the combination of the polynonamethylene azelamide (polyamide 99, SP value: 24.1 $(MPa)^{1/2}$) as the polyamide (A1) and the polyamide copolymer in which the caproamide unit/dodecanamide unit of the poly(caproamide/dodecanamide) copolymer (polyamide 6/12) is 77.28: 22.72 to 99.5: 0.5 (molar ratio) as the polyamide (A2) is within the regulated range of the present application.

On the other hand, when the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is selected to the poly(caproamide/dodecanamide) copolymer (polyamide 6/12), the absolute value of the difference in the solubility parameter SP values becomes 0 $(MPa)^{1/2}$ or more and 4.4 $(MPa)^{1/2}$ or less. In order to satisfy the absolute value of the difference in the solubility parameter SP values of 1.8 $(MPa)^{1/2}$ or more and 4.5 $(MPa)^{1/2}$ or less, the polyamide copolymer in which the caproamide unit/dodecanamide unit of the poly(caproamide/dodecanamide) copolymer (polyamide 6/12) is 40.9 : 50.1 to 99.5 : 0.5 (molar ratio) is selected. Accordingly, the combination of the polydodecanamide (polyamide 12, SP value: 22.5 $(MPa)^{1/2}$) and/or the polydodecamethylene dodecamide (polyamide 1212, SP value: 22.5 $(MPa)^{1/2}$) as the polyamide (A1), and the polyamide copolymer in which the caproamide unitldodecanamide unit of the poly(caproamide/- dodecanamide) copolymer (polyamide 6/12) is 40.9 : 50.1 to 99.5 : 0.5 (molar ratio) as the polyamide (A2) is within the regulated range of the present application.

Incidentally, the ratio of the number of the methylene groups to the number of the amide groups $[CH_2]/[NHCO]$ of the poly(caproamide/dodecanamide) copolymer (polyamide 6/12) changes depending on the molar ratio of the constitutional repeating units. The ratio of the number of the methylene groups to the number of the amide groups $[CH_2]/[NHCO]$ of the polycaproamide (polyamide 6) is 5.0, and the ratio of the number of the methylene groups to the number of the amide groups $[CH_2]/[NHCO]$ of the polydodecanamide (polyamide 12) is 11.0, so that it can be calculated if the molar ratio of the constitutional repeating units is known, and the polyamide copolymer in which the caproamide unit/dodecanamide unit of the poly(caproamide/dodecanamide) copolymer (polyamide 6/12) is 50.1 : 49.9 to 99.5 : 0.5 (molar ratio) has the ratio of the number of the methylene groups to the number of the amide groups $[CH_2]/[NHCO]$ of less than 8.0, so that when the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is selected, the polyamide copolymer in which the caproamide unit/dodecanamide unit of the poly(caproamide/dodecanamide) copolymer (polyamide 6/12) is 50.1: 49.9 to 99.5: 0.5 (molar ratio) is preferable as the polyamide (A2).

Incidentally, when the polyamide (A2) is a mixture of two or more kinds, the SP value can be calculated by multiplying the SP value of each polyamide (A2) by the mixing mass ratio and adding the both. The same applies to the polyamide (A1).

As the polyamide (A2), when it is a mixture comprising 75 parts by mass of the polycaproamide (polyamide 6, SP value: 26.9 $(MPa)^{1/2}$) among the (A2X) and 25 parts by mass of the polyhexamethylene dodecamide (polyamide 612, SP value: 24.1 $(MPa)^{1/2}$) among the (A2Y), the SP value of the mixture became $26.9 \times 0.75 + 24.1 \times 0.25 = 26.2$ $(MPa)^{1/2}$.

When the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is selected, the absolute value of the difference in the solubility parameter SP values with the above mixture becomes 3.7 $(MPa)^{1/2}$, which is within the regulated range of the present application.

On the other hand, when the polynonamethylene azelamide (polyamide 99, SP value: 24.1 $(MPa)^{1/2}$) having the highest solubility parameter SP value among the polyamides (A1) is selected, the absolute value of the difference in the solubility parameter SP values with the above mixture becomes 1.9 $(MPa)^{1/2}$, which is within the regulated range of the present application.

As the polyamide (A2), when it is a mixture comprising 25 parts by mass of the polycaproamide (polyamide 6, SP value: 26.9 $(MPa)^{1/2}$) among the (A2X), and 75 parts by mass of the polyhexamethylene dodecamide (polyamide 612, SP value: 24.1 $(MPa)^{1/2}$) among the (A2Y), the SP value of the mixture becomes $26.9 \times 0.25 + 24.1 \times 0.75 = 24.8$ $(MPa)^{1/2}$.

When the polydodecanamide (polyamide 12, SP value: 22.5 $(MPa)^{1/2}$) and/or the polydodecamethylene dodecamide (polyamide 1212, SP value: 22.5 $(MPa)^{1/2}$) having the lowest solubility parameter SP value among the polyamides (A1) is/are selected, the absolute value of the difference in the solubility parameter SP values with the above mixture becomes 3.7 $(MPa)^{1/2}$, which is within the regulated range of the present application.

On the other hand, when the polynonamethylene azelamide (polyamide 99, SP value: 24.1 $(MPa)^{1/2}$) having the highest solubility parameter SP value among the polyamides (A1) is selected, the absolute value of the difference in the solubility parameter SP values with the above mixture becomes 0.9 $(MPa)^{1/2}$, which is out of the regulated range of the present application.

Accordingly, in consideration with the respective SP values of the polyamide (A1) and the polyamide (A2), by appropriately determining the respective mixing mass ratio, the absolute value of the difference in the solubility parameter SP values of the polyamide (A1) and the polyamide (A2) can be selected so as to satisfy 1.8 $(MPa)^{1/2}$ or more and 4.5 $(MPa)^{1/2}$ or less.

The polyamide (A1) and the polyamide (A2) may be produced using a known polyamide production apparatus such as a batch reaction vessel, a one-tank or multi-tank continuous reaction apparatus, a tubular continuous reaction apparatus, or a kneading reaction extruder such as a single-screw kneading extruder or a twin-screw kneading extruder. The polymerization may be performed by a known method such as melt polymerization, solution polymerization or solid phase polymerization at atmospheric pressure or while repeating pressure decreasing and increasing operations. These polymerization methods may be used singly or may be combined appropriately.

A relative viscosity of the polyamide (A1) and the polyamide (A2) measured in accordance with JIS K-6920 under the conditions of 96% sulfuric acid, a polymer concentration of 1%, and at 25°C is preferably 1.5 or more and 5.0 or less, and more preferably 1.8 or more and 4.5 or less from the viewpoints of ensuring mechanical property of the obtainable multilayer tube, and ensuring desirable moldability of the multilayer tube by making the viscosity at the time of melting to an appropriate range.

When the terminal amino group concentration per 1 g of the aliphatic polyamide composition (A) is made [A] ($\mu$eq/g), and the terminal carboxyl group concentration of the same is made [B] ($\mu$eq/g), it is preferably [A] > [B] + 10, more preferably [A] > [B] +15, and further preferably [A] > [B] +20 from the viewpoints of sufficiently obtaining interlayer adhesiveness and durability thereof with the ethylene/vinyl acetate copolymer saponified product composition (B) mentioned later. Further, from the viewpoints of melt stability of the polyamide and suppression of formation of a gel-like substance, it is preferably [A] > 30, and more preferably 30 < [A] < 140.

Here, the terminal amino group concentration per 1 g of the aliphatic polyamide composition (A) is made [A] ($\mu$eq/g), and the terminal carboxyl group concentration of the same is made [B] ($\mu$eq/g), and these were made values by multiplying the respective terminal amino group concentrations ($\mu$eq/g) and terminal carboxyl group concentrations ($\mu$eq/g) of the polyamide (A1) and the polyamide (A2) by the respective mixing mass ratios and adding the both.

Incidentally, the terminal amino group concentration ($\mu$eq/g) can be measured by dissolving the polyamide in a phenol/methanol mixed solution and titrating with 0.05N hydrochloric acid. The terminal carboxyl group concentration ($\mu$eq/g) can be measured by dissolving the polyamide in benzyl alcohol and titrating with a 0.05N sodium hydroxide solution.

The polyamide (A1) and the polyamide (A2) can be produced by polymerizing or copolymerizing the polyamide raw material(s) in the presence of an amine by a conventionally known method such as melt polymerization, solution polymerization, solid phase polymerization, etc. Or else, after the polymerization, it is produced by melt-kneading in the presence of an amine. Thus, the amine can be added at any stage during the polymerization, or at any stage after the polymerization, or at the time of melt-kneading, but in consideration of interlayer adhesiveness of the obtainable multilayer tube, it is preferably added at the stage of the polymerization.

The amine may be mentioned a monoamine, a diamine, a triamine, a tetraamine and a polyamine. In addition, other than the amines, a carboxylic acid such as a monocarboxylic acid, a dicarboxylic acid, a tricarboxylic acid, etc., may be added, if necessary, as long as the product does not deviate from the range of the terminal group concentration conditions as mentioned above. These amines and carboxylic acids may be added simultaneously or may be added separately. The amines and the carboxylic acids exemplified later may be used one kind or two or more kinds.

Specific examples of the monoamines which may be added include aliphatic monoamines such as methylamine, ethylamine, propylamine, butylamine, pentylamine, hexylamine, heptylamine, octylamine,2-ethylhexylamine, nonylamine, decylamine, undecylamine, dodecylamine, tridecylamine, tetradecylamine, pentadecylamine, hexadecylamine, octadecylamine, octadecyleneamine, eicosylamine and docosylamine; alicyclic monoamines such as cyclohexylamine and methylcyclohexylamine; aromatic monoamines such as benzylamine and $\beta$-phenylmethylamine; symmetric secondary amines such as N,N-dimethylamine, N,N-diethylamine, N,N-dipropylamine, N,N-dibutylamine, N,N-dihexylamine and N,N-dioctylamine; and mixed secondary amines such as N-methyl-N-ethylamine, N-methyl-N-butylamine, N-methyl-N-dodecylamine, N-methyl-N-octadecylamine, N-ethyl-N-hexadecylamine, N-ethyl-N-octadecylamine, N-propyl-N-hexadecyl amine and N-propyl-N-benzylamine. These may be used singly, or two or more may be used in combination.

Specific examples of the diamines which may be added include aliphatic diamines such as 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 2-methyl-1,5-pentanediamine, 3-methyl-1,5-pentanediamine, 2-methyl-1,8-octanediamine, 2,2,4-trimethyl-1,6-hexanediamine, 2,4,4-trimethyl-1,6-hexan ediamine and 5-methyl-1,9-nonanediamine; alicyclic diamines such as 1,3-bis(aminomethyl)cyclohexane, 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propan e, 5 -amino-2, 2,4-trimethyl-1-cyclopentanemethyl amine, 5-amino-1, 3,3 -trimethylcycl ohe xanemethylamine, bis(aminopropyl)piperazine, bis(aminoethyl)piperazine, 2,5-bis(aminomethyl)norbomane, 2,6-bis(aminomethyl)norbo mane, 3,8-bis(aminomethyl)tricyclodecane and 4,9-bis(aminomethyl)tricyclodecane; and aromatic diamines such as m-xylylenediamine and p-xylylenediamine. These may be used singly, or two or more may be used in combination.

Specific examples of the triamines and tetramines which may be added include 1,2,3-triaminopropane, 1,2,3-triamino-2-methylpropane, 1,2,4-triaminobutane, 1,2,3,4-tetraminobutane, 1,3,5-triaminocyclohexane, 1,2,4-triaminocyclohexane, 1,2,3-triaminocyclohexane, 1,2,4,5-tetraminocyclohexane, 1,3,5-triaminobenzene, 1,2,4-triaminobenzene, 1,2,3-triaminobenzene, 1,2,4,5-tetraminobenzene, 1,2,4-triaminonaphthalene, 2,5,7-triaminonaphthalene, 2,4,6-triaminopyridine, 1,2,7,8-tetraminonaphthalene and 1,4,5,8-tetraminonaphthalene. These may be used singly, or two or more may be used in combination.

The polyamines which may be added may be a compound having a plurality of a primary amino group(s) ($-NH_2$) and/or a secondary amino group(s) (-NH-) and, for example, may be mentioned a polyalkyleneimine, a polyalkylenepolyamine, a polyvinylamine, a polyallylamine, etc. These may be used singly, or two or more may be used in combination. An amino group having an active hydrogen is a reaction site of the polyamine.

The polyalkyleneimines are produced by, for example, ionic polymerization of an alkyleneimine such as ethyleneimine and/or propyleneimine, or by polymerization of an alkyloxazoline followed by partial or complete hydrolysis of the polymer. Examples of the polyalkylenepolyamines include diethylenetriamine, triethylenetetramine, pentaethylenehexamine, and reaction products of ethylenediamine with polyfunctional compounds. The polyvinylamines are obtained by, for example, polymerizing N-vinylformamide into poly(N-vinylformamide) followed by partial or complete hydrolysis of the polymer with an acid such as hydrochloric acid. The polyallylamines are generally obtained by polymerizing a hydrochloride salt of an allylamine monomer followed by the removal of hydrochloric acid. These may be used singly, or two or more may be used in combination. In particular, polyalkyleneimines are preferable.

The polyalkyleneimine may be mentioned a homopolymer and/or a copolymer obtained by polymerizing one kind or two or more kinds of alkyleneimine(s) having 2 or more and 8 or less carbon atoms such as ethyleneimine, propyleneimine, 1,2-butyleneimine, 2,3-butyleneimine, 1,1-dimethylethyleneimine, etc., according to the conventional method. These may be used singly, or two or more may be used in combination. Among these, the polyethyleneimine is more preferable. The polyalkyleneimine may be a branched type polyalkyleneimine including a primary amine, a secondary amine and a tertiary amine obtained by using an alkyleneimine as a raw material and subjecting it to ring-opening polymerization, or a linear type polyalkyleneimine including only a primary amine and a secondary amine obtained by using an alkyloxazoline as a raw material obtained by polymerizing the same, or a material having a structure cross-linked three-dimensionally. Further, it may be a material obtained by copolymerizing monomers such as ethylenediamine, propylenediamine, diethylenetriamine, triethylenetetramine, tetraethylenepentamine, dipropylenetriamine, tripropylenetetramine, dihexamethylene triamine, aminopropyl-ethylenediamine, bisaminopropylethylenediamine, etc. The polyalkyleneimine generally has a primary amino group and/or a secondary amino group (imino group) having an active hydrogen atom in addition to a tertiary amino group derived from reactivity of the active hydrogen atom on the contained nitrogen atom.

A number of the nitrogen atoms in the polyalkyleneimine is not particularly limited, and is preferably 4 or more to 3,000 or less, more preferably 8 or more and 1,500 or less, and further preferably 11 or more and 500 or less. Also, a number average molecular weight of the polyalkyleneimine is preferably 100 or more and 20,000 or less, more preferably 200 or more and 10, 000 or less, and further preferably 500 or more and 8, 000 or less.

Examples of the carboxylic acids which may be added include aliphatic monocarboxylic acids such as acetic acid, propionic acid, butyric acid, valeric acid, caproic acid, enanthic acid, caprylic acid, capric acid, pelargonic acid, undecanoic acid, lauric acid, tridecanoic acid, myristic acid, myristoleic acid, palmitic acid, stearic acid, oleic acid, linoleic acid, arachidic acid, behenic acid and erucic acid; alicyclic monocarboxylic acids such as cyclohexanecarboxylic acid and methylcyclohexanecarboxylic acid; aromatic monocarboxylic acids such as benzoic acid, toluic acid, ethylbenzoic acid and phenylacetic acid; aliphatic dicarboxylic acids such as malonic acid, succinic acid, glutaric acid, adipic acid, pimelic acid, suberic acid, azelaic acid, sebacic acid, undecanedioic acid, dodecanedioic acid, hexadecanedioic acid, hexadecenedioic acid, octadecanedioic acid, octadecenedioic acid, eicosanedioic acid, eicosenedioic acid, docosanedioic acid, diglycolic acid, 2,2,4-trimethyladipic acid and 2,4,4-trimethyladipic acid; alicyclic dicarboxylic acids such as 1,3-cyclohexanedicarboxylic acid, 1,4-cyclohexanedicarboxylic acid and norbomanedicarboxylic acid; aromatic dicarboxylic acids such as terephthalic acid, isophthalic acid, phthalic acid, m-xylylenedicarboxylic acid, p-xylylenedicarboxylic acid, 1,4-naphthalenedicarboxylic acid,2,6-naphthalenedicarboxylic acid and 2,7-naphthalenedicarboxylic acid; and tricarboxylic acids such as 1,2,4-butanetricarboxylic acid, 1,3,5-pentanetricarboxylic acid, 1,2,6-hexanetricarboxylic acid, 1,3,6-hexanetricarboxylic acid, 1,3,5-cyclohexanetricarboxylic acid and trimesic acid. These may be used singly, or two or more may be used in combination.

A used amount of the amines to be added can be appropriately determined by the conventionally known method in consideration with the terminal amino group concentration, the terminal carboxyl group concentration and a relative viscosity of the polyamide (A1) and the polyamide (A2) to be produced. In general, an amount of the amines to be added is preferably 0.5 meq/mol or more and 20 meq/mol or less, and more preferably 1 meq/mol or more and 10 meq/mol or less (the equivalent (eq) of the amino group is an amount of an amino group which reacts with a carboxyl group with 1 : 1 (molar ratio) to form an amide group is defined to be 1 equivalent.) per 1 mol of the polyamide raw material (1 mol of a monomer or a monomer unit constituting the repeating unit), from the viewpoints of obtaining sufficient reactivity and making production of a polyamide having a desired viscosity easy.

In the polyamide (A1) and the polyamide (A2), among the amines exemplified above, it is preferable to add a diamine and/or a polyamine at the time of polymerization to satisfy the condition of the terminal group concentration, and from the viewpoint of suppressing generating a gel, it is more preferable to add at least one selected from the group consisting of an aliphatic diamine, an alicyclic diamine and a polyalkyleneimine at the time of polymerization.

[Elastomer polymer (A3)]

The aliphatic polyamide composition (A) contains an elastomer polymer (A3) which contains a constitutional unit derived from an unsaturated compound having a carboxyl group and/or an acid anhydride group (hereinafter sometimes referred to as an elastomer polymer (A3).).

As the elastomer polymer (A3), there may be mentioned an (ethylene and/or propylene)/$\alpha$-olefin-based copolymer, an (ethylene and/or propylene)/($\alpha$,$\beta$-unsaturated carboxylic acid ester)-based copolymer, and an aromatic vinyl compound/conjugated diene compound-based block copolymer, each containing a constitutional unit derived from an unsaturated compound having a carboxyl group and/or an acid anhydride group, and these may be used one kind or two or more kinds.

The (ethylene and/or propylene)/$\alpha$-olefin copolymers are polymers obtained by copolymerizing ethylene and/or propylene with an $\alpha$-olefin having 3 or more carbon atoms. Examples of the $\alpha$-olefins having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1 -eicosene,3-methyl-1 -butene,3-methyl-1 -pentene,3-ethyl-1 -pentene,4-methyl-1 -penten e,4-methyl-1-hexene,4,4-dimethyl-1-hexene,4,4-dimethyl-1-pentene,4-ethyl-1-hexene,3 -ethyl-1-hexene, 9-methyl-1-decene, 11-methyl-1-dodecene and 12-ethyl-1-tetradecene. These may be used singly, or two or more may be used in combination. Further, the copolymerization may involve polyenes of nonconjugated dienes such as 1,4-pentadiene, 1,4-hexadiene, 1,5-hexadiene, 1,4-octadiene, 1,5-octadiene, 1,6-octadiene, 1,7-octadiene,2-methyl-1,5-hexadiene,6-methyl-1,5-heptadiene,7-methyl-1,6-octadiene, 4-ethylidene-8-methyl-1,7-nonadiene,4,8-dimethyl-1,4,8-decatriene (DMDT), dicyclopentadiene, cyclohexadiene, cyclooctadiene,5-vinylnorbornene,5-ethylidene-2-norbornene,5-methylene-2-norbornen e,5-isopropylidene-2-norbomene,6-chloromethyl-5-isopropenyl-2-norbomene,2,3-diiso propylidene-5-norbornene,2-ethylidene-3-isopropylidene-5-norbornene and 2-propenyl-2,5-norbomadiene. These may be used singly, or two or more may be used in combination.

The (ethylene and/or propylene)/($\alpha$,$\beta$-unsaturated carboxylic acid ester) based copolymers are polymers obtained by copolymerizing ethylene and/or propylene with an $\alpha$,$\beta$-unsaturated carboxylate ester monomer. Examples of the $\alpha$,$\beta$-unsaturated carboxylate ester monomers include methyl acrylate, methyl methacrylate, ethyl acrylate, ethyl methacrylate, propyl acrylate, propyl methacrylate, butyl acrylate, butyl methacrylate, pentyl acrylate, pentyl methacrylate, hexyl acrylate, hexyl methacrylate, heptyl acrylate, heptyl methacrylate, octyl acrylate, octyl methacrylate, nonyl acrylate, nonyl methacrylate, decyl acrylate, decyl methacrylate,2-ethylhexyl acrylate,2-ethylhexyl methacrylate, hydroxyethyl acrylate, hydroxyethyl methacrylate, monomethyl maleate, monomethyl itaconate, dimethyl maleate and dimethyl itaconate. These may be used singly, or two or more may be used in combination.

The aromatic vinyl compound/conjugated diene compound block copolymers are block copolymers composed of an aromatic vinyl compound polymer block and a conjugated diene compound polymer block. Those block copolymers having at least one aromatic vinyl compound polymer block and at least one conjugated diene compound polymer block are used. In the block copolymers, an unsaturated bond in the conjugated diene compound polymer block may be hydrogenated.

The aromatic vinyl compound polymer block is a polymer block principally composed of units derived from an aromatic vinyl compound. Examples of the aromatic vinyl compounds include styrene, o-methylstyrene, m-methylstyrene, p-methylstyrene, 1,5-dimethylstyrene,2,4-dimethylstyrene, vinylnaphthalene, vinylanthracene,4-propylstyrene,4-cyclohexylstyrene,4-dodecylstyrene,2-ethyl-4-benzyl styrene and 4-(phenylbutyl)styrene. These may be used singly, or two or more may be used in combination. In some cases, the aromatic vinyl compound polymer block may have a small amount of units derived from other unsaturated monomer.

The conjugated diene compound polymer block is a polymer block that is formed from one, or two or more conjugated diene compounds such as 1,3-butadiene, chloroprene, isoprene,2,3-dimethyl-1,3-butadiene, 1,3-pentadiene,4-methyl-1,3-pentadiene and 1,3-hexadiene. In the case of a hydrogenated form of the aromatic vinyl compound/conjugated diene compound block copolymer, the unsaturated bonds in the conjugated diene compound polymer block have been partially or totally hydrogenated and are in the form of saturated bonds.

The molecular structures of the aromatic vinyl compound/conjugated diene compound block copolymers and hydrogenated products thereof may be any of linear, branched and radial structures and combinations of such structures. Of these structures, the aromatic vinyl compound/conjugated diene compound block copolymer and/or the hydrogenated product thereof is preferably one, or two or more of diblock copolymers in which one aromatic vinyl compound polymer block and one conjugated diene compound polymer block are bonded linearly to each other, triblock copolymers in which three polymer blocks are bonded linearly in the order of aromatic vinyl compound polymer block-conjugated diene compound polymer block-aromatic vinyl compound polymer block, and hydrogenated products of these polymers, with examples including unhydrogenated or hydrogenated styrene/butadiene block copolymer, unhydrogenated or hydrogenated styrene/isoprene block copolymer, unhydrogenated or hydrogenated styrene/butadiene/styrene block copolymer, unhydrogenated or hydrogenated styrene/isoprene/styrene block copolymer, unhydrogenated or hydrogenated styrene/(ethylene/butadiene)/styrene block copolymer, and unhydrogenated or hydrogenated styrene/(isoprene/butadiene)/styrene block copolymer. These may be used singly, or two or more may be used in combination.

The unsaturated compound having a carboxyl group which forms a constitutional unit of the elastomer polymer (A3) may be mentioned an $\alpha,\beta$-unsaturated carboxylic acid such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endo-bicyclo-[2.2.1]-5-heptene-2,3-dicarboxylic acid, and a metal salt of these carboxylic acids, etc. These may be used singly, or two or more may be used in combination. As the unsaturated compound having an acid anhydride group which forms a constitutional unit of the elastomer polymer (A3), there may be mentioned a dicarboxylic anhydride having an $\alpha,\beta$-unsaturated bond such as maleic anhydride, itaconic anhydride, citraconic anhydride, endo-bicyclo-[2.2.1]-5-heptene-2,3-dicarboxylic anhydride, etc. These may be used singly, or two or more may be used in combination. Among these, a dicarboxylic anhydride having an $\alpha,\beta$-unsaturated bond is preferable, and maleic anhydride and itaconic anhydride are more preferable.

The carboxyl group and/or the acid anhydride group concentration in the elastomer polymer (A3) is preferably 25 $\mu$eq/g or more and 200 $\mu$eq/g or less, and more preferably 50 $\mu$eq/g or more and 150 $\mu$eq/g or less from the viewpoints of sufficiently obtaining an improved effect of low temperature impact resistance, interlayer adhesiveness with the ethylene/vinyl acetate copolymer saponified product composition (B) mentioned later and durability thereof, and fluidity of the obtainable aliphatic polyamide composition (A).

Incidentally, the carboxyl group and/or the acid anhydride group concentration in the elastomer polymer (A3) can be measured by using a sample solution prepared by dissolving the elastomer polymer in a toluene solution and further adjusted by adding ethanol, and titrating with 0.1N KOH ethanol solution using phenolphthalein as an indicator.

A content of the polyamide (A1) in the aliphatic polyamide composition (A) is 40% by mass or more and 85% by mass or less based on 100% by mass of the aliphatic polyamide composition (A), preferably 47% by mass or more and 80% by mass or less, and more preferably 55% by mass or more and 75% by mass or less. Also, a lower limit of the content of the polyamide (A1) in the aliphatic polyamide composition (A) may be 50% by mass or more, or may be 52% by mass or more. If the content of the polyamide (A1) is less than the above-mentioned value, mechanical characteristics and low temperature impact resistance of the obtainable multilayer tube may sometimes be poor, on the other hand, if it exceeds the above-mentioned value, interlayer adhesiveness and durability thereof of the obtainable multilayer tube may sometimes be poor.

A content of the polyamide (A2) in the aliphatic polyamide composition (A) is 10% by mass or more and 30% by mass or less based on 100% by mass of the aliphatic polyamide composition (A), preferably 12% by mass or more and 28% by mass or less, and more preferably 15% by mass or more and 25% by mass or less. If the content of the polyamide (A2) is less than the above-mentioned value, interlayer adhesiveness and durability thereof of the obtainable multilayer tube may sometimes be poor, on the other hand, if it exceeds the above-mentioned value, mechanical characteristics and chemical resistance of the obtainable multilayer tube may sometimes be poor.

A content of the elastomer polymer (A3) in the aliphatic polyamide composition (A) is 5% by mass or more and 30% by mass or less based on 100% by mass of the aliphatic polyamide composition (A), preferably 8% by mass or more and 25% by mass or less, and more preferably 10% by mass or more and 20% by mass or less. If the content of the elastomer polymer (A3) is less than the above-mentioned value, low temperature impact resistance, interlayer adhesiveness, and durability thereof of the obtainable multilayer tube may sometimes be poor, on the other hand, if it exceeds the above-mentioned value, mechanical characteristics of the obtainable multilayer tube and fluidity of the obtainable aliphatic polyamide composition (A) may sometimes be poor.

A method of mixing the polyamide (A1) and the polyamide (A2) with the elastomer polymer (A3) is not particularly limited, and employed various kinds of methods which have conventionally known, by adding various kinds of additives, if necessary. For example, it can be produced by a method in which pellets of the polyamide (A1), the polyamide (A2), and the elastomer polymer (A3) are uniformly dry blending with each other so as to have the above-mentioned mixing ratio using a tumbler and/or a mixer, and a method in which the all are previously dry blending with the concentrations to be used at the time of molding with other components added depending on necessity, and then, melt-kneaded, etc. Melt-kneading can be carried out using a kneading machine such as a single screw extruder, a twin screw extruder, a kneader, a Banbury mixer, etc.

The aliphatic polyamide composition (A) may be a mixture with another thermoplastic resin. A total content of the polyamide (A1), the polyamide (A2) and the elastomer polymer (A3) is preferably 80% by mass or more, and more preferably 85% by mass or more based on 100% by mass of the aliphatic polyamide composition (A).

Examples of the additional thermoplastic resins which may be mixed include polyolefin resins such as high density polyethylene (HDPE), medium density polyethylene (MDPE), low density polyethylene (LDPE), linear low density polyethylene (LLDPE), ultrahigh molecular weight polyethylene (UHMWPE), polypropylene (PP), polybutene (PB), polymethylpentene (TPX); polystyrene resins such as polystyrene (PS), syndiotactic polystyrene (SPS), methyl methacrylate/styrene copolymer (MS), methyl methacrylate/styrene/butadiene copolymer (MBS); the polyolefin resins and the polystyrene resins described above which are modified by the introduction of functional groups such as carboxyl groups and salts thereof, acid anhydride groups and epoxy groups; polyester resins such as polybutylene terephthalate (PBT), polyethylene terephthalate (PET), polyethylene isophthalate (PEI), poly(ethylene terephthalate/ethylene isophthalate) copolymer (PET/PEI), polytrimethylene terephthalate (PTT), polycyclohexanedimethylene terephthalate (PCT), polyethylene naphthalate (PEN), polybutylene naphthalate (PBN), polyarylate (PAR), liquid crystal polyester (LCP), polylactic acid (PLA) and polyglycolic acid (PGA); polyether resins such as polyacetal (POM) and polyphenylene ether (PPO); polysulfone resins such as polysulfone (PSU), polyethersulfone (PESU) and polyphenylsulfone (PPSU); polythioether resins such as polyphenylene sulfide (PPS) and polythioether sulfone (PTES); polyketone resins such as polyketone (PK), polyetherketone (PEK), polyetheretherketone (PEEK), polyetherketoneketone (PEKK), polyetheretheretherketone (PEEEK), polyetheretherketoneketone (PEEKK), polyetherketoneketoneketone (PEKKK) and polyetherketoneetherketoneketone (PEKEKK); polynitrile resins such as polyacrylonitrile (PAN), polymethacrylonitrile, acrylonitrile/styrene copolymer (AS), methacrylonitrile/styrene copolymer, acrylonitrile/butadiene/styrene copolymer (ABS) and acrylonitrile/butadiene copolymer (NBR); polymethacrylate resins such as polymethyl methacrylate (PMMA) and polyethyl methacrylate (PEMA); polyvinyl resins such as polyvinyl alcohol (PVA), polyvinylidene chloride (PVDC), polyvinyl chloride (PVC), vinyl chloride/vinylidene chloride copolymer and vinylidene chloride/methyl acrylate copolymer; cellulose resins such as cellulose acetate and cellulose butyrate; polycarbonate resins such as polycarbonate (PC); polyimide resins such as thermoplastic polyimide (TPI), polyetherimide, polyesterimide, polyamide-imide (PAI) and polyesteramide-imide; thermoplastic polyurethane resins; and polyamide elastomers, polyurethane elastomers and polyester elastomers. In some cases, examples further include fluororesins such as polyvinylidene fluoride (PVDF), polyvinyl fluoride (PVF), polytetrafluoroethylene (PTFE), polychlorofluoroethylene (PCTFE), tetrafluoroethylene/ethylene copolymer (ETFE), ethylene/chlorotrifluoroethylene copolymer (ECTFE), tetrafluoroethylene/hexafluoropropylene copolymer (FEP), tetrafluoroethylene/hexafluoropropylene/vinylidene fluoride copolymer (THV), tetrafluoroethylene/hexafluoropropylene/vinylidene fluoride/perfluoro(alkyl vinyl ether) copolymer, tetrafluoroethylene/perfluoro(alkyl vinyl ether) copolymer (PFA), tetrafluoroethylene/hexafluoropropylene/perfluoro(alkyl vinyl ether) copolymer and chlorotrifluoroethylene/perfluoro(alkyl vinyl ether)/tetrafluoroethylene copolymer (CPT). These may be used singly, or two or more may be used in combination.

Further, the the aliphatic polyamide composition (A) may contain additives as required, such as antioxidants, thermal stabilizers, ultraviolet absorbers, light stabilizers, lubricants, inorganic fillers, antistatic agents, flame retardants, crystallization accelerators and colorants.

2. Layer (b)

Layer (b) of the multilayer tube contains an ethylene/vinyl acetate copolymer saponified product composition (B). The ethylene/vinyl acetate copolymer saponified product composition (B) contains an ethylene/vinyl acetate copolymer saponified product (B1).

[Ethylene/vinyl acetate copolymer saponified product (B1)]

The ethylene/vinyl acetate copolymer saponified product (B1) can be obtained by saponifying a copolymer (ethylene/vinyl acetate copolymer) comprising an ethylene monomer and vinyl acetate monomer (hereinafter sometimes referred to as an EVOH (B1).).

Further, from the viewpoints of sufficiently ensure melt moldability, flexibility, impact resistance and chemical liquid-barrier property, a content of the ethylene unit in EVOH (B1) is preferably 15 mol% or more and 60 mol% or less based on the total amount of the ethylene unit and the vinyl acetate unit as 100 mol%, more preferably 20 mol% or more and 55 mol% or less, and further preferably 25 mol% or more and 45 mol% or less.

Also, it is possible to copolymerize other monomer(s) within the range that does not impair various properties of the obtainable multilayer tube. The other monomer(s) may include vinyl esters such as vinyl formate, vinyl propionate, vinyl valerate, vinyl butyrate, vinyl isobutyrate, vinyl pivalate, vinyl itaconate, vinyl caproate, vinyl caprylate, vinyl caprate, vinyl 2-ethylhexanoate, vinyl neononanate, vinyl neodecanoate, vinyl versatate, vinyl laurate, vinyl myristate, vinyl palmitate, vinyl stearate, vinyl oleate, isopropenyl acetate, 1-butenyl acetate, chlorovinyl acetate, trifluorovinyl acetate, vinyl methacrylate, vinyl crotonate, vinyl adipate, vinyl sorbate, vinyl cyclohexanecarboxylate, vinyl benzoate, vinyl p-t-butylbenzoate, vinyl acetylsalicylate, vinyl cinnamate, etc.; $\alpha$-olefins such as propylene, 1-butene, isobutene,4-methyl-1-pentene, 1-hexene, 1-octene or 1-dodecene, unsaturated acids such as acrylic acid, methacrylic acid, crotonic acid, phthalic acid, maleic acid (anhydride) or itaconic acid (anhydride), salts thereof or mono- or dialkyl esters thereof having 1 to 18 carbon atoms, acrylamides such as acrylamide, N-alkylacrylamides having 1 to 18 carbon atoms, N,N-dimethylacrylamide,2-acrylamidopropanesulfonic acid or salts thereof, and dimethylamidopropyl acrylamide, acid salts thereof or quaternary salts thereof, methacrylamides such as methacrylamide, N-alkylmethacrylamides having 1 to 18 carbon atoms, N,N-dimethylmethacrylamide,2-methacrylamidopropanesulfonic acid or salts thereof, or dimethylamidopropyl methacrylamide, acid salts thereof or quaternary salts thereof, N-vinylamides such as N-vinylpyrrolidone, N-vinylformamide or N-vinylacetoamide, vinyl cyanides such as acrylonitrile or methacrylonitrile, vinyl ethers such as alkyl vinyl ethers, hydroxyalkyl vinyl ethers or alkoxyalkyl vinyl ethers having 1 to 18 carbon atoms, vinyl halides such as vinyl chloride, vinylidene chloride, vinyl fluoride, vinylidene fluoride or vinyl bromide, vinylsilanes such as vinyltrimethoxysilane, vinylmethyldimethoxysilane, vinyldimethylmethoxysilane, vinyl triethoxysilane, vinylmethyldiethoxysilane, vinyldimethylethoxysilane or $\gamma$-methacryloxypropylmethoxysilane, allyl acetate, allyl chloride, allyl alcohol, dimethylallyl alcohol, trimethyl-(3-acrylamido-3-dimethylpropyl)-ammonium chloride, acrylamido-2-methylpropanesulfonic acid and vinyl ethylene carbonate. These may be used singly, or two or more may be used in combination. A content of these other monomer(s) is preferably 5 mol% or less based on 100 mol% of the whole polymer unit in EVOH (B1), more preferably 3 mol% or less, and further preferably 2 mol% or less.

Polymerization of the ethylene/vinyl acetate copolymer can be carried out by the conventionally known optional polymerization system, for example, batchwise polymerization, semi-batchwise polymerization, continuous polymerization, semi-continuous polymerization, etc. As a polymerization method, conventionally known methods such as the conventionally known optional polymerization, the bulk polymerization method, the solution polymerization method, the suspension polymerization method, the emulsion polymerization method, etc., can be employed. The bulk polymerization method or the solution polymerization method which are to proceed the polymerization without solvent or in a solvent such as an alcohol, etc., is generally employed.

The ethylene/vinyl acetate copolymer is to copolymerize ethylene and a vinyl acetate monomer under a pressure of an ethylene gas according to the above-mentioned method. The solvent to be used in the solution polymerization method is not particularly limited, and an alcohol is preferably, for example, a lower alcohol such as methanol, ethanol, propanol, etc., is more preferable. An amount of the solvent to be used in the polymerization reaction liquid may be selected in consideration with a polymerization degree of the objective ethylene/vinyl acetate copolymer and chain transfer of the solvent.

The polymerization initiator to be used when the ethylene/vinyl acetate copolymer are polymerized may be mentioned the conventionally known polymerization initiators, for example, an azo-based initiator, a peroxide-based initiator, a redox-based initiator, etc. The polymerization initiator can be selected depending on the polymerization method. As the azo-based initiators, there may be mentioned, for example, 2,2'-azobisisobutyronitrile, 2,2'-azobis(2,4-dimethylvaleronitrile), 2,2'-azobis(4-methoxy-2,4-dimethylvaleronitrile), etc., and as the peroxide-based initiator, there may be mentioned, for example, percarbonate compounds such as diisopropylperoxy dicarbonate, di-n-propylperoxy dicarbonate, di-2-ethylhexylperoxy dicarbonate, diethoxyethylperoxy dicarbonate, bis-(4-t-butylcyclohexyl)peroxy-di-carbonate, etc.; perester compounds such as t-butylperoxyneodecanate, t-butylperoxypivalate, t-hexylperoxypivalate, $\alpha$-cumylperoxyneodecanate, etc.; peroxide compounds such as isobutyrylperoxide, acetylperoxide, di-lauroylperoxide, di-decanoylperoxide, di-octanoylperoxide, di-propylperoxide, benzoyl peroxide, etc.; acetylcyclohexylsulfonylperoxy, 2,4,4-trimethylpentyl-2-peroxyphenoxyacetate, etc. These may be used singly, or two or more may be used in combination. Also, potassium persulfate, ammonium persulfate, hydrogen peroxide, etc., may be used in combination with the above-mentioned initiators. The redox-based initiator is a polymerization initiator in which, for example, the above-mentioned peroxide-based initiator and a reducing agent such as sodium hydrogen sulfite, sodium hydrogen carbonate, tartaric acid, L-ascorbic acid, rongalit, etc., are combined. These may be used singly, or two or more may be used in combination.

An amount of the polymerization initiator to be used cannot be determined unconditionally since it varies depending on the polymerization catalyst, and is adjusted according to the polymerization rate, and the amount to be used is preferably 0.01 mol% or more and 0.2 mol% or less based on the vinyl acetate monomer, and more preferably 0.02 mol% or more and 0.15 mol% or less. A polymerization temperature is not particularly limited, preferably room temperature or higher to 150°C or lower, and more preferably 30°C or higher to a boiling point or lower of the used solvent.

For polymerizing the ethylene/vinyl acetate copolymer, copolymerization may be carried out in the presence of a chain transfer agent within the range which does not inhibit the effects of the present invention. The chain transfer agent may be mentioned, for example, aldehydes such as acetaldehyde, propionaldehyde, etc.; ketones such as acetone, methyl ethyl ketone, etc.; mercaptans such as 2-hydroxyethanethiol, etc.; and phosphinates such as sodium phosphinate monohydrate, etc. These may be used singly, or two or more may be used in combination. Among these, aldehydes and/or ketones are preferable. An amount of the chain transfer agent to be added to the polymerization reaction liquid is determined depending on a chain transfer coefficient of the chain transfer agent and a polymerization degree of the objective EVOH (B1), and is generally preferably 0.1 part by mass or more and 10 parts by mass or less based on 100 parts by mass of the vinyl acetate monomer.

With regard to saponification of the obtained ethylene/vinyl acetate copolymer, the conventionally known saponification method can be employed. The saponification reaction is generally carried out in a solvent of an alcohol or a hydrous alcohol. The alcohol to be used at this time is preferably a lower alcohol such as methanol, ethanol, etc., and more preferably methanol. The alcohol or the hydrous alcohol to be used in the saponification reaction may contain other solvent(s) such as acetone, methyl acetate, ethyl acetate, benzene, etc., as long as the amount thereof is 40% by mass or less based on the mass of the alcohols. As a catalyst to be used for saponification, there may be mentioned, for example, an alkali catalyst including a hydroxide and an alcoholate, etc., of an alkali metal such as potassium hydroxide, sodium hydroxide, sodium methylate, sodium ethylate, potassium methylate, lithium methylate, etc.; an acid catalyst such as sulfuric acid, hydrochloric acid, nitric acid, mineral acid, methanesulfonic acid, zeolite, cation exchange resin, etc. These may be used singly, or two or more may be used in combination. When the alkali catalyst is to be used, a temperature for carrying out the saponification is not particularly limited, and is preferably 20°C or higher and 120°C or lower.

Also, the saponification degree of the vinyl acetate unit in EVOH (B1) is preferably 90 mol% or more from the viewpoint of obtaining good chemical liquid-barrier property, more preferably 95 mol% or more, further preferably 98%mol or more, and particularly preferably 99 mol% or more. Here, the saponification degree of EVOH (B1) (a content of a material which became a vinyl alcohol unit by saponification among the vinyl acetate unit in EVOH (B1)) is measured based on JIS K 6726 (provided that EVOH (B1) is in a solution uniformly dissolved in water/methanol solvent).

A melt flow rate (MFR) (210°C, 2, 160 under g load) of EVOH (B1) is preferably 0.1 g/10 minutes or more and 100 g/10 minutes or less from the viewpoints of making the viscosity at the time of melting within a suitable range to ensure desirable moldability, and without lowering melting tension excessively to prevent from occurrence of the problem such as drawdown, etc., at the time of molding, more preferably 0.3 g/10 minutes or more and 50 g/10 minutes or less, and further preferably 0.5 g/10 minutes or more and 20 g/10 minutes or less.

EVOH (B1) may be used not only one kind alone, but also two or more kinds of EVOHs (B1) such as EVOH (B1) having different saponification degree, EVOH (B1) having different molecular weight, EVOH (B1) having different in a kind of other copolymerizing monomer, etc., in combination.

EVOH (B1) may be used in combination with those having a different content of the ethylene unit. When those having a different content of the ethylene unit is used in combination, the other units may be the same or different, and the difference in the content of the ethylene unit is preferably 1 mol% or more, more preferably 2 mol% or more, and further preferably 2 mol% or more and 20 mol% or less.

When two or more different EVOHs (B1) are used by blending, a method of producing the blended product is not particularly limited. For example, there may be mentioned a method in which each paste of an ethylene/vinyl acetate copolymer before saponification is mixed and then saponified, a method in which solutions of each EVOH (B1) after saponification dissolved in an alcohol or a mixed solvent of water and an alcohol are mixed, a method in which pellets or powders of each EVOH (B1) are mixed and then melt-kneaded, etc.

In the ethylene/vinyl acetate copolymer saponified product composition (B), various kinds of additives may be contained, if necessary. Examples of such an additive may be mentioned an antioxidant, a plasticizer, a stabilizer, an ultraviolet absorber, an antistatic agent, a lubricant, a coloring agent, a filler, an oxygen absorber, other thermoplastic resin(s), etc., and these additives can be contained within the range which does not impair the excellent various characteristics of the obtainable multilayer tube. Specific examples of additives include antioxidants such as 2,5-di-t-butylhydroquinone,2,6-di-t-butyl-p-cresol,4,4'-thiobis(6-t-butyl-m-cresol),4,4'-t hiobis(6-t-butylphenol),4,4'-thiobis(3-methyl-6-t-butylphenol),2,2'-methylene-bis(4-met hyl-6-t-butylphenol),2,2'-methylene-bis(4-ethyl-6-t-butylphenol), n-octadecyl-$\beta$-(3',5'-di-t-butyl-4'-hydroxyphenyl)propionate, N,N'-hexamethylenebis(3,5-di-t-butyl-4-hydroxyhydrocinnamate), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis [methylene-3 -(3',5'-di-t-butyl-4'-hydroxyphenyl)propionate], benzeneerythrityl tetrakis[3-(3,5-di-t-butyl-4-hydroxyphenyl)propionate], tris(2,4-di-t-butylphenyl) or di(2,4-di-t-butylphenyl)pentaerythritol diphosphite, ultraviolet absorbers such as ethylene-2-cyano-3,3'-diphenylacrylate,2-(2'-hydroxy-5'-methylphenyl)benzotriazole,2-(2'-hydroxy-3'-t-butyl-5'-methylphenyl)-5-chlorobenzotriazole,2-hydroxy-4-methoxybe nzophenone,2,2'-dihydroxy-4-methoxybenzophenone or 2-hydroxy-4-octoxybenzophenone; plasticizers such as dimethyl phthalate, diethyl phthalate, dioctyl phthalate; antistatic agents such as aliphatic polyvalent alcohols in the manner of pentaerythritol monostearate, sorbitan monopalmitate, sulfated polyolefins, ethylene glycol, glycerin or hexanediol; lubricants such as saturated aliphatic amides in the manner of stearic acid amide, unsaturated fatty acid amides in the manner of oleic acid amide, bis fatty acid amides in the manner of ethylenebis stearic acid amide, fatty acid metal salts in the manner of calcium stearate, magnesium stearate, zinc stearate or aluminum stearate, wax, liquid paraffin or low molecular weight polyolefins; stabilizers such as organic acids in the manner of acetic acid, propionic acid or stearic acid, or metal salts of hydrotalcites, oxygen absorbers such as reducing iron powder, potassium sulfite, ascorbic acid, hydroquinone or gallic acid, colorants such as carbon black, phthalocyanine, quinacridone, indoline, azo-based pigments or red iron oxide, and fillers such as glass fibers, asbestos, ballastonite, mica, sericite, talc, silica, kaolin, calcium silicate or montmorillonite. These may be used singly, or two or more may be used in combination.

Further, in ethylene/vinyl acetate copolymer saponified product composition (B), a boron atom-containing compound is preferably contained. By containing the boron atom-containing compound, it is effective from the viewpoints of improving melt stability and obtaining a multilayer tube having a uniform thickness. Examples of boron atom-containing compounds include boric acids, boric acid esters, borates and boron hydrides. Examples of boric acids include orthoboric acid, metaboric acid and tetraboric acid, examples of boric acid esters include triethyl borate and trimethyl borate, and examples of borates include borax, alkaline metal salts and alkaline earth metal salts of each of the aforementioned boric acids. These may be used singly, or two or more may be used in combination. Among these, orthoboric acid is preferable.

A content of the boron atom-containing compound in the ethylene/vinyl acetate copolymer saponified product composition (B) is preferably 0.002 part by mass or more and 0.5 part by mass or less in terms of the boron atom concentration, more preferably 0.005 part by mass or more and 0.2 part by mass or less based on 100 parts by mass of EVOH (B1) from the viewpoints of ensuring the contained effect sufficiently and obtaining a multilayer tube having good appearance.

In the ethylene/vinyl acetate copolymer saponified product composition (B), a phosphoric acid compound may be contained. By containing the phosphoric acid compound, it is possible to achieve both of long-run property, coloration resistance, and interlayer adhesiveness at the time of melt molding. The phosphoric acid compound is not particularly limited, and various kinds of acids such as phosphoric acid, phosphorous acid, etc., and a salt thereof, etc., can be used. The phosphate may be mentioned a primary phosphate, a secondary phosphate, and a tertiary phosphate, etc. These may be used singly, or two or more may be used in combination. A kind of a cation of the phosphate is also not particularly limited, and alkali metal salts are preferable, among these, sodium phosphate, lithium phosphate, sodium dihydrogen phosphate, potassium dihydrogen phosphate, disodium hydrogen phosphate and dipotassium hydrogen phosphate are preferable.

A content of the phosphoric acid compound in the ethylene/vinyl acetate copolymer saponified product composition (B) is preferably 0.02 part by mass or less in terms of the concentration of phosphate group based on 100 parts by mass of EVOH (B1) from the viewpoints of sufficiently ensuring the contained effect and obtaining a multilayer tube having good appearance, more preferably 0.0005 part by mass or more and 0.01 part by mass or less, and further preferably 0.001 part by mass or more and 0.007 part by mass or less.

Also, it is preferable to contain an alkali metal salt and/or an alkaline earth metal salt in the ethylene/vinyl acetate copolymer saponified product composition (B) from the viewpoints of melt stability and long-run property. Incidentally, the alkali metal salt and/or the alkaline earth metal salt refers to a compound other than the phosphoric acid compound. There are no limitations on the anionic species of the alkaline metal and alkaline earth metal salt, and examples thereof include carboxylates, hydroxides, carbonates and bicarbonates. There are also no limitations on the cationic species of the alkaline metal salt, examples thereof include lithium salts, sodium salts and potassium salts, there also no limitations on the cationic species of the alkaline earth metal salt, and examples thereof include magnesium salts, calcium salts, barium salts, beryllium salts and strontium salts. Specific examples include sodium acetate, lithium acetate, potassium acetate, calcium palmitate, magnesium palmitate, calcium myristate, magnesium myristate, calcium stearate, magnesium stearate, calcium oleate, magnesium oleate, calcium linoleate, magnesium linoleate, calcium linolenate, and magnesium linolenate. These may be used singly, or two or more may be used in combination.

A content of the alkali metal salt and/or the alkaline earth metal salt in the ethylene/vinyl acetate copolymer saponified product composition (B) is preferably 0.0005 part by mass or more and 0.2 part by mass or less, in terms of a metal atom concentration based on 100 parts by mass of EVOH (B1) from the viewpoints of sufficiently ensuring the contained effects and obtaining a multilayer tube having good appearance, more preferably 0.001 part by mass or more and 0.1 part by mass or less, and further preferably 0.002 part by mass or more and 0.05 part by mass or less.

In addition, in order to improve melt stability, etc., to the ethylene/vinyl acetate copolymer saponified product composition (B), among the additives mentioned above, one kind or two or more kinds of a stabilizer(s) which is a metal salt of hydrotalcites, a hindered phenol-based antioxidant(s) is/are preferably added within the range which does not impair excellent various characteristics of the obtainable multilayer tube, and a content of the stabilizer and/or the antioxidant is/are preferably added in an amount(s) of 0.01 part by mass or more and 1 part by mass or less based on 100 parts by mass of EVOH (B1).

Further, in order to improve low temperature impact resistance of EVOH (B1), an impact improver is preferably added to the ethylene/vinyl acetate copolymer saponified product composition (B), and it is more preferable to add an elastomer polymer (B2) containing a constitutional unit derived from an unsaturated compound having a carboxyl group and/or an acid anhydride group. The elastomer polymer (B2) may be mentioned those exemplified as the elastomer polymer (A3) contained in the aliphatic polyamide composition (A). As the elastomer polymer (B2), the same material as the elastomer polymer (A3) may be used or a different material may be used. These may be used singly, or two or more may be used in combination. When the elastomer polymer (B2) contains a constitutional unit derived from an unsaturated compound having a carboxyl group and/or an acid anhydride group, the impact improvement effect is sufficient.

A content of the impact improver is preferably 1 part by mass or more and 30 parts by mass or less based on 100 parts by mass of EVOH (B1) of the main component from the viewpoints of sufficiently ensuring mechanical strength, flexibility and low temperature impact resistance of the obtainable multilayer tube, and more preferably 3 parts by mass or more and 25 parts by mass or less.

The ethylene/vinyl acetate copolymer saponified product composition (B) may contain other thermoplastic resin(s). The other thermoplastic resin(s) may be mentioned the same resins as the other thermoplastic resin described in the explanation of the aliphatic polyamide composition (A). These may be used singly, or two or more may be used in combination. Further, from the viewpoints of sufficiently ensuring flexibility and elongation of the obtainable multilayer tube, it is preferably a mixture with a polyamide as described in the explanation of the polyamide (A1) and/or the polyamide (A2) contained in the aliphatic polyamide composition (A). In addition, it is preferable to contain a polyamide-based elastomer and/or a polyester-based elastomer such as a polyether ester amide elastomer, a polyether amide elastomer, etc. A content of EVOH (B1) in the ethylene/vinyl acetate copolymer saponified product composition (B) is preferably 60% by mass or more, and more preferably 70% by mass or more.

3. Layer (c)

The multilayer tube preferably further has Layer (c).

Layer (c) of the multilayer tube contains a polyamide composition (C).

The polyamide composition (C) contains a polyamide (C1) and an elastomer polymer (C2), the polyamide (C1) is a polyamide other than the "aliphatic polyamide having the melting point measured in accordance with ISO 11357-3 of 210°C or lower and the ratio of the number of the methylene groups to the number of the amide groups of 8.0 or more", and contained in an amount of 70% by mass or more and 95% by mass or less based on the total of the polyamide (C1) and the elastomer polymer (C2) as 100% by mass, and the elastomer polymer (C2) contains a constitutional unit derived from an unsaturated compound having a carboxyl group and/or an acid anhydride group, and contained in an amount of 5% by mass or more and 30% by mass or less based on the total of the polyamide (C1) and the elastomer polymer (C2) as 100% by mass (hereinafter sometimes referred to as a polyamide composition (C).).

Also, the polyamide composition (C) preferably does not contain a plasticizer from the viewpoint of durability of interlayer adhesiveness after contacting with and dipping in fuel for a long time and/or after heat treatment for a short time.

As the polyamide (C1), there may be mentioned those exemplified as the polyamide (A2) contained in the aliphatic polyamide composition (A). As the polyamide (C1), the same material as the polyamide (A2) may be used or a different material may be used. These may be used singly, or two or more may be used in combination.

A content of the polyamide (C1) in the polyamide composition (C) is preferably 70% by mass or more and 95% by mass or less based on the total of the polyamide (C1) and the elastomer polymer (C2) as 100% by mass, more preferably 75% by mass or more and 93% by mass or less, and particularly preferably 80% by mass or more and 90% by mass or less. If the content of the polyamide (C1) is the above-mentioned value or more based on the total of the polyamide (C1) and the elastomer polymer (C2) as 100% by mass, it is advantageous in terms of mechanical properties of the obtainable multilayer tube, on the other hand, if it is the above-mentioned value or less, it is advantageous in terms of low temperature impact resistance and chemical resistance of the obtainable multilayer tube.

As the elastomer polymer (C2), there may be mentioned those exemplified as the elastomer polymer (A3) contained in the aliphatic polyamide composition (A). As the elastomer polymer (C2), the same material as the elastomer polymer (A3) may be used or a different material may be used. These may be used singly, or two or more may be used in combination.

A content of the elastomer polymer (C2) in the polyamide composition (C) is preferably 5% by mass or more and 30% by mass or less based on the total of the polyamide (C1) and the elastomer polymer (C2) as 100% by mass, more preferably 7% by mass or more and 25% by mass or less, and particularly preferably 10% by mass or more and 20% by mass or less. If the content of the elastomer polymer (C2) is the above-mentioned value or more based on the total of the polyamide (C1) and the elastomer polymer (C2) as 100% by mass, it is advantageous in terms of low temperature impact resistance, interlayer adhesiveness, and durability thereof of the obtainable multilayer tube, on the other hand, if it is the above-mentioned value or less, it is advantageous in terms of mechanical characteristics of the obtainable multilayer tube and fluidity of the obtainable polyamide composition (C).

A method of mixing the polyamide (C1) and the elastomer polymer (C2) may be mentioned the conventionally known method described in the explanation of the aliphatic polyamide composition (A).

The polyamide composition (C) may contain other thermoplastic resin(s). As the other thermoplastic resin(s), there may be mentioned the same resins as the other thermoplastic resins described in the explanation of the aliphatic polyamide composition (A). These may be used singly, or two or more may be used in combination. A total content of the polyamide (C1) and elastomer polymer (C2) in the polyamide composition (C) is preferably 80% by mass or more, and more preferably 90% by mass or more.

Further, the polyamide composition (C) may contain, if necessary, an antioxidant, a heat stabilizer, an ultraviolet absorber, a light stabilizer, a lubricant, an inorganic filler, an antistatic agent, a flame retardant, a crystallization accelerator, a coloring agent, a lubricant, etc.

4. Layer (d)

The multilayer tube preferably further contains Layer (d).

Layer (d) of the multilayer tube contains a semi-aromatic polyamide composition (D).

[Semi-aromatic polyamide composition (D)]

The semi-aromatic polyamide composition (D) contains a semi-aromatic polyamide {D1} and/or a semi-aromatic polyamide (D2), the semi-aromatic polyamide (D1) and/or the semi-aromatic polyamide (D2) is/are contained in the semi-aromatic polyamide composition (D) in the amount of 60% by mass or more, the semi-aromatic polyamide (D1) contains 50 mol% or more of an aliphatic diamine unit having 4 or more and 12 or less carbon atoms based on the whole diamine units of the semi-aromatic polyamide (D1), and contains 50 mol% or more of a dicarboxylic acid unit which contains at least one kind selected from the group consisting of a terephthalic acid unit, an isophthalic acid unit and a naphthalenedicarboxylic acid unit based on the whole dicarboxylic acid units of the semi-aromatic polyamide (D1), the semi-aromatic polyamide (D2) contains 50 mol% or more of a xylylene diamine unit and/or a bis(aminomethyl)naphthalene unit based on the whole diamine units of the semi-aromatic polyamide (D2), and contains 50 mol% or more of an aliphatic dicarboxylic acid unit having 4 or more and 12 or less carbon atoms based on the whole dicarboxylic acid units of the semi-aromatic polyamide (D2) (hereinafter sometimes referred to as a semi-aromatic polyamide composition (D).).

[Semi-aromatic polyamide (D1)]

The semi-aromatic polyamide composition (D) includes an embodiment containing a semi-aromatic polyamide (D1) (hereinafter sometimes referred to as a semi-aromatic polyamide (D1).), and the semi-aromatic polyamide (D1) contains a diamine unit containing 50 mol% or more of an aliphatic diamine unit having 4 or more and 12 or less carbon atoms based on the whole diamine units of the semi-aromatic polyamide (D1), and a dicarboxylic acid unit containing 50 mol% or more of a dicarboxylic acid unit which contains at least one kind selected from the group consisting of a terephthalic acid unit, an isophthalic acid unit and a naphthalenedicarboxylic acid unit based on the whole dicarboxylic acid units of the semi-aromatic polyamide (D1).

A content of the aliphatic diamine unit having 4 or more and 12 or less carbon atoms in the semi-aromatic polyamide (D1) is 50 mol% or more based on the whole diamine units of the semi-aromatic polyamide (D1) from the viewpoints of sufficiently ensuring various properties such as heat resistance, chemical resistance, impact resistance, chemical liquid-barrier property, etc., of the obtainable multilayer tube, and preferably 55 mol% or more, and more preferably 60 mol% or more.

As the aliphatic diamine unit having 4 or more and 12 or less carbon atoms, there may be mentioned a unit derived from 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, etc. As long as the number of the carbon atoms satisfies the above-mentioned range, it may contain a unit derived from a branched chain aliphatic diamine such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2,4-diethyl-1,6-hexanediamine, 2,2-dimethyl-heptanediamine, 2,3-dimethyl-heptanediamine, 2,4-dimethyl-heptanediamine, 2,5-dimethyl-heptanediamine, 2-methyl-1,8-octanediamine, 3-methyl-1,8-octanediamine, 4-methyl-1,8-octanediamine, 1,3 -dimethyl-1,8 -octanediamine, 1,4-dimethyl-1,8-octanediamine, 2,2-dimethyl-1,8-octanediamine, 2,4-dimethyl-1,8-octanediamine, 3,3-dimethyl-1,8-octanediamine, 3,4-dimethyl-1,8-octanediamine, 4,4-dimethyl-1,8-octanediamine, 4,5-dimethyl-1,8-octanediamine, 5-methyl-1,9-nonanediamine, etc. These may be used singly, or two or more may be used in combination.

Among the above-mentioned aliphatic diamine units having 4 or more and 12 or less carbon atoms, from the viewpoints of availability and economic efficiency, a unit derived from 1,4-butanediamine, 1,5-pentanediamine, 1,6-hexanediamine, 2-methyl-1,5-pentanediamine, 1,9-nonanediamine, 2-methyl-1,8-octanediamine, 1,10-decanediamine or 1,12-dodecanediamine is preferable. Further, when 1,6-hexanediamine and 2-methyl-1,5-pentanediamine are used in combination, a molar ratio of the 1,6-hexanediamine unit and the 2-methyl-1,5-pentanediamine unit is preferably 30 : 70 to 98 : 2 (molar ratio) from the viewpoints of a balance between moldability and impact resistance, and more preferably 40 : 60 to 95 : 5(molar ratio), and when 1,9-nonanediamine and 2-methyl-1,8-octanediamine are used in combination, a molar ratio of the 1,9-nonanediamine unit and the 2-methyl-1,8-octanediamine unit is preferably 30 : 70 to 98 : 2 (molar ratio) from the viewpoints of a balance between moldability and impact resistance, and more preferably 40 : 60 to 95 : 5 (molar ratio).

The diamine unit in the semi-aromatic polyamide (D1) may contain a diamine unit(s) other than the aliphatic diamine unit having 4 or more and 12 or less carbon atoms within the range which does not impair excellent various characteristics of the obtainable multilayer tube. Examples of the additional diamine units include units derived from aliphatic diamines such as 1,2-ethanediamine, 1,3-propanediamine and 1,13-tridecanediamine,; units derived from alicyclic diamines such as 1,3-cyclohexanediamine, 1,4-cyclohexanediamine, 1,3-bis(aminomethyl)cyclohexane, 1,4-bis(aminomethyl)cyclohexane, bis(4-aminocyclohexyl)methane,2,2-bis(4-aminocyclohexyl)propane, bis(3-methyl-4-aminocyclohexyl)methane,2,2-bis(3-methyl-4-aminocyclohexyl)propan e,5-amino-2,2,4-trimethyl-1-cyclopentanemethylamine,5-amino-1,3,3-trimethylcyclohe xanemethylamine, bis(aminopropyl)piperazine, bis(aminoethyl)piperazine,2,5-bis(aminomethyl)norbomane,2,6-bis(aminomethyl)norbo mane,3,8-bis(aminomethyl)tricyclodecane and 4,9-bis(aminomethyl)tricyclodecane; and units derived from aromatic diamines such as m-phenylenediamine, p-phenylenediamine, m-xylylenediamine, p-xylylenediamine, 1,4-bis(aminomethyl)naphthalene, 1,5-bis(aminomethyl)naphthalene,2,6-bis(aminomethyl)naphthalene,2,7-bis(aminometh yl)naphthalene,4,4'-diaminodiphenylmethane,2,2-bis(4-aminophenyl)propane,4,4'-diam inodiphenylsulfone and 4,4'-diaminodiphenyl ether. These may be used singly, or two or more may be used in combination. The content of these additional diamine units is less than 50 mol% of all the diamine units in the semi-aromatic polyamide (D1), and is preferably 45 mol% or less, and more preferably 40 mol% or less.

Also, a content of the dicarboxylic acid unit containing at least one kind selected from the group consisting of a terephthalic acid unit, an isophthalic acid unit and a naphthalenedicarboxylic acid unit in the semi-aromatic polyamide (D1) is 50 mol% or more based on the whole dicarboxylic acid units of the semi-aromatic polyamide (D1), preferably 55 mol% or more, and more preferably 60 mol% or more from the viewpoints of sufficiently ensuring various properties such as heat resistance, chemical resistance, chemical liquid-barrier property, etc., of the obtainable multilayer tube.

Examples of the naphthalenedicarboxylic acid units include those units derived from 2,6-naphthalenedicarboxylic acid,2,7-naphthalenedicarboxylic acid, 1,4-naphthalenedicarboxylic acid and 1,5-naphthalenedicarboxylic acid. These may be used singly, or two or more may be used in combination. Of the naphthalenedicarboxylic acid units, units derived from 2,6-naphthalenedicarboxylic acid and 2,7-naphthalenedicarboxylic acid are preferable in light of economic efficiency and availability.

The dicarboxylic acid unit in the semi-aromatic polyamide (D1) may contain other dicarboxylic acid unit than the terephthalic acid unit, isophthalic acid unit and naphthalenedicarboxylic acid unit as long as within the range which does not impair excellent various characteristics of the obtainable multilayer tube. Examples of the additional dicarboxylic acid units include units derived from aliphatic dicarboxylic acids such as oxalic acid, malonic acid, dimethylmalonic acid, succinic acid, glutaric acid, adipic acid,2-methyladipic acid, pimelic acid,2,2-dimethylglutaric acid,2,2-diethylsuccinic acid, suberic acid, azelaic acid,2,2,4-trimethyladipic acid,2,4,4-trimethyladipic acid, sebacic acid, undecanedioic acid, dodecanedioic acid, tridecanedioic acid, tetradecanedioic acid, pentadecanedioic acid, hexadecanedioic acid, octadecanedioic acid and eicosanedioic acid; units derived from alicyclic dicarboxylic acids such as 1,3-cyclopentanedicarboxylic acid, 1,3-cyclohexanedicarboxylic acid and 1,4-cyclohexanedicarboxylic acid; and units derived from aromatic dicarboxylic acids such as phthalic acid, 1,3-phenylenedioxydiacetic acid, 1,4-phenylenedioxydiacetic acid,4,4'-oxydibenzoic acid, diphenylmethane-4,4'-dicarboxylic acid, diphenylethane-4,4'-dicarboxylic acid, diphenylpropane-4,4'-dicarboxylic acid, diphenyl ether-4,4'-dicarboxylic acid, diphenylsulfone-4,4'-dicarboxylic acid,4,4'-biphenyldicarboxylic acid and 4,4'-triphenyldicarboxylic acid. These may be used singly, or two or more may be used in combination. Of these, units derived from aromatic dicarboxylic acids are preferable. The content of these additional dicarboxylic acid units is less than 50 mol% of all the dicarboxylic acid units in the semi-aromatic polyamide (D1), and is preferably 45 mol% or less, and more preferably 40 mol% or less. Further, polyvalent carboxylic acids such as trimellitic acid, trimesic acid and pyromellitic acid may be used as long as melt forming is feasible.

As long as the superior characteristics of the multilayer tube that is obtained are not impaired, the semi-aromatic polyamide (D1) may include additional units other than the dicarboxylic acid units and the diamine units. Examples of such additional units include units derived from lactams such as caprolactam, enantholactam, undecanelactam, dodecanelactam, α-pyrrolidone and α-piperidone; aliphatic aminocarboxylic acids such as 6-aminocaproic acid,7-aminoheptanoic acid, 9-aminononanoic acid, 11-aminoundecanoic acid and 12-aminododecanoic acid; and units derived from aminocarboxylic acids of aromatic aminocarboxylic acids such as p-aminomethylbenzoic acid. These may be used singly, or two or more may be used in combination. A content of the other units is preferably 45 mol% or less based on the whole polymerization unit of the semi-aromatic polyamide (D1), more preferably 40 mol% or less, and further preferably 35 mol% or less.

Specific examples of the semi-aromatic polyamide (D1) may be mentioned a homopolymer of polytetramethylene terephthalamide (polyamide 4T), polytetramethylene isophthalamide (polyamide 4I), polytetramethylene naphthalamide (polyamide 4N), polypentamethylene terephthalamide (polyamide 5T), polypentamethylene isophthalamide (polyamide 5I), polypentamethylene naphthalamide (polyamide 5N), polyhexamethylene terephthalamide (polyamide 6T), polyhexamethylene isophthalamide (polyamide 6I), polyhexamethylene naphthalamide (polyamide 6N), poly(2-methylpentamethylene terephthalamide) (polyamide M5T), poly(2-methylpentamethylene isophthalamide) (polyamide M5I), poly(2-methylpentamethylene naphthalamide (polyamide M5N), polynonamethylene terephthalamide (polyamide 9T), polynonamethylene isophthalamide (polyamide 9I), polynonamethylene naphthalamide (polyamide 9N), poly(2-methyloctamethylene terephthalamide) (polyamide M8T), poly(2-methyloctamethylene isophthalamide) (polyamide M8T), poly(2-methylocta-methylene naphthalamide) (polyamide M8N), polytrimethylhexamethylene terephthalamide (polyamide TMHT), polytrimethylhexamethylene isophthalamide (polyamide TMHI), polytrimethylhexamethylene naphthalamide (polyamide TMHN), polydecamethylene terephthalamide (polyamide 10T), polydecamethylene isophthalamide (polyamide 10I), polydecamethylene naphthalamide (polyamide 10N), polyundecamethylene terephthalamide (polyamide 11T), polyundecamethylene isophthalamide (polyamide 11I), polyundecamethylene naphthalamide (polyamide 11N), polydodecamethylene terephthalamide (polyamide 12T), polydodecamethylene isophthalamide (polyamide 12I), polydodecamethylene naphthalamide (polyamide 12N), and/or a copolymer which uses several kinds of a raw material monomers of these polyamides, and/or raw material monomers of the polyamide (A1) and the polyamide (A2), etc. These may be used singly, or two or more may be used in combination.

Among these, from the viewpoints of availability, and sufficiently ensure various properties such as heat resistance, chemical resistance, impact resistance, chemical liquid-barrier property, etc., of the obtainable multilayer tube, the semi-aromatic polyamide (D1) is preferably a poly(hexamethylene terephthalamide/- hexamethylene isophthalamide) copolymer (polyamide 6T/6I), a poly(hexamethylene terephthalamide/2-methylpentamethylene terephthalamide) copolymer (polyamide 6T/M5T), a poly(hexamethylene terephthalamide/caproamide) copolymer (polyamide 6T/6), a poly(hexamethylene terephthalamide/hexamethylene adipamide) copolymer (polyamide 6T166), a poly(hexamethylene terephthalamide/hexamethylene sebacamide) copolymer (polyamide 6T/610), a poly(hexamethylene terephthalamide/hexamethylene dodecamide) copolymer (polyamide 6T/612), a poly(hexamethylene terephthalamide/- hexamethylene isophthalamide/hexamethylene adipamide) copolymer (polyamide 6T/6I/66), a poly(hexamethylene terephthalamide/hexamethylene isophthalamide/- hexamethylene sebacamide) copolymer (polyamide 6T/6I/610), a poly(hexamethylene terephthalamide/hexamethylene isophthalamide/hexamethylene dodecamide) copolymer (polyamide 6T/6I/612), a polynonamethylene terephthalamide (polyamide 9T), a poly(nonamethylene terephthalamide/2-methyloctamethylene terephthalamide) copolymer (polyamide 9T/M8T), a poly(nonamethylene terephthalamide/2-methyl-octamethylene terephthalamide/undecanamide) copolymer (polyamide 9TIM8TI11), a poly(nonamethylene terephthalamide/2-methyl-octamethylene terephthalamide/dodecan-amide) copolymer (polyamide 9T/M8T/12), a poly(nonamethylene terephthalamide/2-methyloctamethylene terephthalamide/nonamethylene isophthalamide/2-methyloctamethylene isophthalamide) copolymer (polyamide 9T/M8T/9I/M8I), a polynonamethylene naphthalamide (polyamide 9N), a poly(nonamethylene naphthalamide/2-methyloctamethylene naphthalamide) copolymer (polyamide 9N/M8N), a poly(nonamethylene naphthalamide/2-methyloctamethylene naphthalamide/undecanamide) copolymer (polyamide 9N/M8N/11), a poly(nonamethylene naphthalamide/2-methyloctamethylene naphthalamide/dodecanamide) copolymer (polyamide 9N/M8N/12), a polydecamethylene terephthalamide (polyamide 10T), poly(decamethylene terephthalamide/undecanamide) copolymer (polyamide 10T/11), a poly(decamethylene terephthalamide/- dodecanamide) copolymer (polyamide 10T/12), a poly(decamethylene terephthalamide/decamethylene sebacamide) copolymer (polyamide 10T/1010), a poly(decamethylene terephthalamide/decamethylene dodecamide) copolymer (polyamide 10T/1012), a poly(decamethylene terephthalamide/decamethylene isophthalamide/- undecanamide) copolymer (polyamide 10T/10I/11), a poly(decamethylene terephthalamide/decamethylene isophthalamide/dodecanamide) copolymer (polyamide 10T/10I/12), a poly(decamethylene terephthalamide/decamethylene isophthalamide/- decamethylene sebacamide) copolymer (polyamide 10T/10I/1010), a poly(decamethylene terephthalamide/decamethylene isophthalamide/decamethylene dodecamide) copolymer (polyamide 1017101/1012), a polydecamethylene naphthalamide (polyamide 10N), a poly(decamethylene naphthalamide/undecanamide) copolymer (polyamide 10N/11), a poly(decamethylene naphthalamide/dodecanamide) copolymer (polyamide 10N/12), a poly(decamethylene naphthalamide/decamethylene sebacamide) copolymer (polyamide 10N/1010), a poly(decamethylene naphthalamide/decamethylene dodecamide) copolymer (polyamide 10N/1012), a poly(decamethylene terephthalamide/decamethylene naphthalamide/undecanamide) copolymer (polyamide 10T/10N/11), a poly(decamethylene terephthalamide/decamethylene naphthalamide/- dodecanamide) copolymer (polyamide 10T/10N/12), a poly(decamethylene terephthalamide/decamethylene naphthalamide/decamethylene sebacamide) copolymer (polyamide 10T/10N/1010), a poly(decamethylene terephthalamide/decamethylene naphthalamide/decamethylene dodecamide) copolymer (polyamide 10T/10N/1012), a polydodecamethylene terephthalamide (polyamide 12T), a poly(dodecamethylene terephthalamide/undecanamide) copolymer (polyamide 12T/11), a poly(dodecamethylene terephthalamide/dodecanamide) copolymer (polyamide 12T/12), a poly(dodecamethylene terephthalamide/dodecamethylene sebacamide) copolymer (polyamide 12T/1210), a poly(dodecamethylene terephthalamide/dodecamethylene dodecamide) copolymer (polyamide 12171212), a poly(dodecamethylene terephthalamide/- dodecamethylene isophthalamide/undecanamide) copolymer (polyamide 12T/12I/11), a poly(dodecamethylene terephthalamide/dodecamethylene isophthalamide/dodecan-amide) copolymer (polyamide 12T/12I/12), a poly(dodecamethylene terephthalamide/- dodecamethylene isophthalamide/dodecamethylene sebacamide) copolymer (polyamide 12T/12I/1210), a poly(dodecamethylene terephthalamide/dodecamethylene isophthalamide/dodecamethylene dodecamide) copolymer (polyamide 12T/12I/1212), a polydodecamethylene naphthalamide (polyamide 12N), a poly(dodecamethylene naphthalamide/undecanamide) copolymer (polyamide 12N/11), a poly(dodecamethylene naphthalamide/dodecanamide) copolymer (polyamide 12N/12), a poly(dodecamethylene naphthalamide/dodecamethylene sebacamide) copolymer (polyamide 12N/1210), a poly(dodecamethylene naphthalamide/dodecamethylene dodecamide) copolymer (polyamide 12N/1212), a poly(dodecamethylene terephthalamide/dodecamethylene naphthalamide/undecanamide) copolymer (polyamide 12T/12N/11), a poly(dodecamethylene terephthalamide/dodecamethylene naphthalamide/dodecanamide) copolymer (polyamide 12T/12N/12), a poly(dodecamethylene terephthalamide/dodecamethylene naphthalamide/dodecamethylene sebacamide) copolymer (polyamide 12T/12N/1210), a poly(dodecamethylene terephthalamide/- dodecamethylene naphthalamide/dodecamethylene dodecamide) copolymer (polyamide 12T/12N/1212), and a mixture of these materials, and

more preferably a poly(hexamethylene terephthalamide/hexamethylene isophthalamide) copolymer (polyamide 6T/6I), a poly(hexamethylene terephthalamide/2-methylpentamethylene terephthalamide) copolymer (polyamide 6T/M5T), a poly(hexamethylene terephthalamide/caproamide) copolymer (polyamide 6T/6), a poly(hexamethylene terephthalamide/hexamethylene dodecamide) copolymer (polyamide 6T/610), a poly(hexamethylene terephthalamide/hexamethylene dodecamide) copolymer (polyamide 6TI612), a poly(hexamethylene terephthalamide/- hexamethylene sebacamide) copolymer (polyamide 6T/610), a poly(hexamethylene terephthalamide/hexamethylene dodecamide) copolymer (polyamide 6T/612), a poly(hexamethylene terephthalamide/hexamethylene isophthalamide/hexamethylene adipamide) copolymer (polyamide 6T/6I/66), a poly(hexamethylene terephthalamide/- hexamethylene isophthalamide/hexamethylene sebacamide) copolymer (polyamide 6T/6I/610), a poly(hexamethylene terephthalamide/hexamethylene isophthalamide/- hexamethylene dodecamide) copolymer (polyamide 6T/6I/612), a polynonamethylene terephthalamide (polyamide 9T), a poly(nonamethylene terephthalamide/2-methyl-octamethylene terephthalamide) copolymer (polyamide 9T/M8T), a polynonamethylene naphthalamide (polyamide 9N), a poly(nonamethylene naphthalamide/2-methyloctamethylene naphthalamide) copolymer (polyamide 9N/M8N), a polydecamethylene terephthalamide (polyamide 10T), a poly(decamethylene terephthalamide/- undecanamide) copolymer (polyamide 10T/11), a poly(decamethylene terephthalamide/dodecanamide) copolymer (polyamide 101712), a poly(decamethylene terephthalamide/decamethylene sebacamide) copolymer (polyamide 10T/1010), a poly(decamethylene terephthalamide/decamethylene dodecamide) copolymer (polyamide 10T/1012), a poly(decamethylene terephthalamide/decamethylene isophthalamide/undecanamide) copolymer (polyamide 10T/10I/11), a poly(decamethylene terephthalamide/decamethylene isophthalamide/dodecanamide) copolymer (polyamide 10T/10I/12), a poly(decamethylene terephthalamide/decamethylene isophthalamide/decamethylene sebacamide) copolymer (polyamide 10T/10I/1010), a poly(decamethylene terephthalamide/decamethylene isophthalamide/decamethylene dodecamide) copolymer (polyamide 10T/10I/1012), a polydecamethylene naphthalamide (polyamide 10N), a poly(decamethylene naphthalamide/undecanamide) copolymer (polyamide 10N/11), a poly(decamethylene naphthalamide/dodecanamide) copolymer (polyamide 10N/12), a poly(decamethylene naphthalamide/decamethylene sebacamide) copolymer (polyamide 10N/1010), a poly(decamethylene naphthalamide/- decamethylene dodecamide) copolymer (polyamide 10N/1012), a poly(decamethylene terephthalamide/decamethylene naphthalamide/undecanamide) copolymer (polyamide 10T/10N/11), a poly(decamethylene terephthalamide/decamethylene naphthalamide/- dodecanamide) copolymer (polyamide 10T/10N/12), a poly(decamethylene terephthalamide/decamethylene naphthalamide/decamethylene sebacamide) copolymer (polyamide 10T/10N/1010), a poly(decamethylene terephthalamide/decamethylene naphthalamide/decamethylene dodecamide) copolymer (polyamide 10T/10N/1012), a polydodecamethylene terephthalamide (polyamide 12T), a poly(dodecamethylene terephthalamide/undecanamide) copolymer (polyamide 12T/11), a poly(dodecamethylene terephthalamide/dodecanamide) copolymer (polyamide 12T/12), a poly(dodecamethylene terephthalamide/dodecamethylene dodecamide) copolymer (polyamide 12T/1212), a polydodecamethylene naphthalamide (polyamide 12N), a poly(dodecamethylene naphthalamide/undecanamide) copolymer (polyamide 12N/11), a poly(dodecamethylene naphthalamide/dodecanamide) copolymer (polyamide 12N/12), a poly(dodecamethylene naphthalamide/dodecamethylene dodecamide) copolymer (polyamide 12N/1212), and a mixture of these materials.

The semi-aromatic polyamide (D1) may be produced using a known polyamide production apparatus such as a batch reaction vessel, a one-tank or multi-tank continuous reaction apparatus, a tubular continuous reaction apparatus, or a kneading reaction extruder such as a single-screw kneading extruder or a twin-screw kneading extruder. The polymerization may be performed by a known method such as melt polymerization, solution polymerization or solid phase polymerization at atmospheric pressure or while repeating pressure decreasing and increasing operations. These polymerization methods may be used singly or may be combined appropriately.

During the production of the semi-aromatic polyamide (D1), a catalyst such as phosphoric acid, phosphorous acid, hypophosphorous acid, or a salt or ester of any of these acids may be added. Examples of the salts or esters of phosphoric acid, phosphorous acid and hypophosphorous acid include salts of phosphoric acid, phosphorous acid or hypophosphorous acid with metals such as potassium, sodium, magnesium, vanadium, calcium, zinc, cobalt, manganese, tin, tungsten, germanium, titanium and antimony, ammonium salts of phosphoric acid, phosphorous acid or hypophosphorous acid, and esters of phosphoric acid, phosphorous acid or hypophosphorous acid such as ethyl esters, isopropyl esters, butyl esters, hexyl esters, isodecyl esters, decyl esters, stearyl esters and phenyl esters. These may be used singly, or two or more may be used in combination.

[Semi-aromatic polyamide (D2)]

The semi-aromatic polyamide composition (D) includes an embodiment containing a semi-aromatic polyamide (D2) (hereinafter sometimes referred to as a semi-aromatic polyamide (D2).), and the semi-aromatic polyamide (D2) contains a diamine unit containing 50 mol% or more of a xylylene diamine unit and/or a bis(aminomethyl)naphthalene unit based on the whole diamine units of the semi-aromatic polyamide (D2), and a dicarboxylic acid unit containing 50 mol% or more of an aliphatic dicarboxylic acid unit having 4 or more and 12 or less carbon atoms based on the whole dicarboxylic acid units of the semi-aromatic polyamide (D2).

To ensure that the multilayer tube that is obtained will attain sufficient properties such as heat resistance, chemical resistance, impact resistance and barrier properties to chemical medias, the content of the xylylenediamine units and/or the bis(aminomethyl)naphthalene units in the semi-aromatic polyamide (D2) is 50 mol% or more based on all the diamine units in the semi-aromatic polyamide (D2), and is preferably 55 mol% or more, and more preferably 60 mol% or more.

As the xylylene diamine unit, a unit derived from o-xylylene diamine, m-xylylenediamine or p-xylylenediamine may be mentioned. These may be used singly, or two or more may be used in combination. Among the xylylene diamine units, from the viewpoints of economic efficiency and availability, a unit derived from m-xylylenediamine or p-xylylenediamine is preferable.

When m-xylylenediamine and p-xylylenediamine are used in combination, a molar ratio of the m-xylylenediamine unit and the p-xylylenediamine unit is preferably 10: 90 to 99: 1(molar ratio) from the viewpoints of a balance between moldability and impact resistance, more preferably 50 : 50 to 99 : 1 (molar ratio), and further preferably 65 : 35 to 99 : 1 (molar ratio).

As the bis(aminomethyl)naphthalene unit, a unit derived from 1,4-bis-(aminomethyl)naphthalene, 1,5-bis(aminomethyl)naphthalene, 2,6-bis(aminomethyl)-naphthalene or 2,7-bis(aminomethyl)naphthalene, etc., may be mentioned. These may be used singly, or two or more may be used in combination. Among the bis(aminomethyl)naphthalene units, a unit derived from 1,5-bis(aminomethyl)naphthalene or 2,6-bis(aminomethyl)naphthalene is preferable from the viewpoints of economic efficiency and availability.

As long as the superior characteristics of the multilayer tube that is obtained are not impaired, the diamine units in the semi-aromatic polyamide (D2) may include additional diamine units other than the xylylenediamine units and/or the bis(aminomethyl)naphthalene units. Examples of the additional diamine units include units derived from aliphatic diamines such as 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine,2-methyl-1,5-pentanediamine,3-methyl-1,5-pentanediamine,2-methyl-1,8-octanediamine,2,2,4-trimethyl-1,6-hexanediamine,2,4,4-trimethyl-1,6-hexanedi amine and 5-methyl-1,9-nonanediamine; units derived from alicyclic diamines such as 1,3-cyclohexanediamine, 1,4-cyclohexanediamine, 1,3-bis(aminomethyl)cyclohexane, 1,4-bis(aminomethyl)cyclohexane, bis(4-aminocyclohexyl)methane,2,2-bis(4-aminocyclohexyl)propane, bis(3-methyl-4-aminocyclohexyl)methane,2,2-bis(3-methyl-4-aminocyclohexyl)propan e,5-amino-2,2,4-trimethyl-1-cyclopentanemethylamine,5-amino-1,3,3-trimethylcyclohe xanemethylamine, bis(aminopropyl)piperazine, bis(aminoethyl)piperazine,2,5-bis(aminomethyl)norbornane,2,6-bis(aminomethyl)norbo mane, 3,8-bis(aminomethyl)tricyclodecane and 4,9-bis(aminomethyl)tricyclodecane; and units derived from aromatic diamines such as m-phenylenediamine, p-phenylenediamine,4,4'-diaminodiphenylmethane,2,2-bis(4-aminophenyl)propane,4,4'-diaminodiphenylsulfone and 4,4'-diaminodiphenyl ether. These may be used singly, or two or more may be used in combination. Of these, those units derived from aromatic diamines are preferable. The content of these additional diamine units is less than 50 mol% of all the diamine units in the semi-aromatic polyamide (D2), and is preferably 45 mol% or less, and more preferably 40 mol% or less.

As the aliphatic dicarboxylic acid unit having 4 or more and 12 or less carbon atoms, a unit derived from succinic acid, glutaric acid, adipic acid, pimelic acid, suberic acid, azelaic acid, sebacic acid, undecanedioic acid, dodecanedioic acid, etc., may be mentioned. As long as the number of carbon atoms satisfies the above, it may contain a unit derived from a branched aliphatic dicarboxylic acid such as methylmalonic acid, dimethylmalonic acid, ethylmalonic acid, dimethylmalonic acid, methylsuccinic acid, methylethylmalonic acid, 2,2-dimethylsuccinic acid, 2,3-dimethylsuccinic acid,2-methylglutaric acid, 3-methylglutaric acid, 2-methyladipic acid, 2,2-dimethylglutaric acid, 2,2-diethylsuccinic acid, 2,2,4-trimethyladipic acid, 2,4,4-trimethyladipic acid, 2-butylsuberic acid, etc. These may be used singly, or two or more may be used in combination. Among the above-mentioned aliphatic dicarboxylic acid units having 4 or more and 12 or less carbon atoms, a unit derived from adipic acid, suberic acid, azelaic acid, sebacic acid, undecanedioic acid, dodecanedioic acid is preferable from the viewpoints of availability and economic efficiency, a unit derived from adipic acid, sebacic acid or dodecanedioic acid is more preferable, and a unit derived from adipic acid or sebacic acid is further preferable.

When adipic acid and sebacic acid are used in combination, a molar ratio of the adipic acid unit and the sebacic acid unit is preferably 60 : 40 to 90 : 10 (molar ratio) from the viewpoints of a balance between moldability and impact resistance, more preferably 65 : 30 to 85 : 15 (molar ratio), and further preferably 70 : 30 to 85 : 15 (molar ratio).

Also, a content of the aliphatic dicarboxylic acid unit having 4 or more and 12 or less carbon atoms in the semi-aromatic polyamide (D2) is 50 mol% or more based on the whole dicarboxylic acid units of the semi-aromatic polyamide (D2) from the viewpoints of sufficiently ensuring various properties such as heat resistance, chemical resistance, chemical liquid-barrier property, etc., of the obtainable multilayer tube, preferably 55 mol% or more, and more preferably 60 mol% or more.

The dicarboxylic acid unit in the semi-aromatic polyamide (D2) may contain other dicarboxylic acid unit(s) than the aliphatic dicarboxylic acid unit having 4 or more and 12 or less carbon atoms within the range which does not impair excellent various characteristics of the obtainable multilayer tube. The other dicarboxylic acid units may be mentioned a unit derived from an aliphatic dicarboxylic acid such as oxalic acid, malonic acid, tridecanedioic acid, tetradecanedioic acid, pentadecanedioic acid, hexadecanedioic acid, octadecanedioic acid, eicosanedioic acid, etc.; a unit derived from an alicyclic dicarboxylic acid such as 1,3-cyclopentanedicarboxylic acid, 1,3-cyclohexanedicarboxylic acid, 1,4-cyclohexanedicarboxylic acid, etc.; a unit derived from an aromatic dicarboxylic acid such as terephthalic acid, isophthalic acid, 1,4-naphthalene dicarboxylic acid, 1,5-naphthalene dicarboxylic acid, 2,6-naphthalene dicarboxylic acid, 2,7-naphthalene dicarboxylic acid, 1,3-phenylenedioxydiacetic acid, 1,4-phenylenedioxydiacetic acid, 4,4'-oxydibenzoic acid, diphenylmethane-4,4'-dicarboxylic acid, diphenylethane-4,4'-dicarboxylic acid, diphenylpropane-4,4'-dicarboxylic acid, diphenyl ether-4,4'-dicarboxylic acid, diphenylsulfone-4,4'-dicarboxylic acid, 4,4'-biphenyldicarboxylic acid, 4,4'-triphenyldicarboxylic acid, etc., and these may be used singly, or two or more may be used in combination. A content of these other dicarboxylic acid unit(s) is less than 50 mol% based on the whole dicarboxylic acid units of the semi-aromatic polyamide (D2), preferably 45 mol% or less, and more preferably 40 mol% or less. Further, a polyvalent carboxylic acid such as trimellitic acid, trimesic acid, pyromellitic acid, etc., can be used within the range that can be melt-molded.

In the semi-aromatic polyamide (D2), other unit(s) than the dicarboxylic acid unit and the diamine unit may be contained within the range which does not impair the excellent various characteristics of the obtainable multilayer tube. The other unit(s) may be mentioned the unit derived from the lactam and/or the unit derived from the aminocarboxylic acid described in the explanation of the semi-aromatic polyamide (D1). These may be used singly, or two or more may be used in combination. A content of the other unit(s) is preferably 45 mol% or less based on the while polymerization units of the semi-aromatic polyamide (D2), more preferably 40 mol% or less, and further preferably 35 mol% or less.

Specific examples of the semi-aromatic polyamide (D2) may be mentioned a homopolymer of polymetaxylylene succinamide (polyamide MXD4), polymetaxylylene glutamide (polyamide MXD5), polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polyparaxylylene succinamide (polyamide PXD4), polyparaxylylene glutamide (polyamide PXD5), polyparaxylylene adipamide (polyamide PXD6), polyparaxylylene suberamide (polyamide PXD8), polyparaxylylene azelamide (polyamide PXD9), polyparaxylylene sebacamide (polyamide PXD10), polyparaxylylene dodecamide (polyamide PXD12), poly(2,6-naphthalenedimethylene succinamide) (polyamide 2,6-BAN4), poly(2,6-naphthalenedimethylene glutamide) (polyamide 2,6-BAN5), poly(2,6-naphthalenedimethylene adipamide) (polyamide 2,6-BAN6), poly(2,6-naphthalenedimethylene suberamide) (polyamide 2,6-BAN8), poly(2,6-naphthalenedimethylene azelamide) (polyamide 2,6-BAN9), poly(2,6-naphthalenedimethylene sebacamide) (polyamide 2,6-BAN10), poly(2,6-naphthalenedimethylene dodecamide) (polyamide 2,6-BAN12), and/or a copolymer produced by using several kinds of raw material monomers of the above polyamides, and/or a copolymer produced by using several kinds of raw material monomers which form polymetaxylylene terephthalamide (polyamide MXDT), polymetaxylylene isophthalamide (polyamide MXDI), polymetaxylylene naphthalamide (polyamide MXDN), polyparaxylylene terephthalamide (polyamide PXDT), polyparaxylylene isophthalamide (polyamide PXDI), polyparaxylylene naphthalamide (polyamide PXDN), poly(2,6-naphthalenedimethylene terephthalamide) (polyamide 2,6-BANT), poly(2,6-naphthalenedimethylene isophthalamide) (polyamide 2,6-BANI), poly(2,6-naphthalenedimethylene naphthalamide) (polyamide 2,6-BANN), etc., and the like. These may be used singly, or two or more may be used in combination.

Among these, from the viewpoints of sufficiently ensuring various properties such as availability, heat resistance, chemical resistance, impact resistance, chemical liquid-barrier property, etc., of the obtainable multilayer tube, the semi-aromatic polyamide (D2) is preferably polymetaxylylene adipamide (polyamide MXD6), polyparaxylylene adipamide (polyamide PXD6), poly(metaxylylene adipamide/metaxylylene terephthalamide) copolymer (polyamide MXD6/MXDT), poly(metaxylylene adipamide/metaxylylene isophthalamide) copolymer (polyamide MXD61MXDI), poly(metaxylylene adipamide/metaxylylene terephthalamide/- metaxylylene isophthalamide) copolymer (polyamide MXD61MXDTIMXDI), poly(paraxylylene adipamide/paraxylylene terephthalamide) copolymer (polyamide PXD6/PXDT), poly(paraxylylene adipamide/paraxylylene isophthalamide) copolymer (polyamide PXD6/PXDI), poly(paraxylylene adipamide/paraxylylene terephthalamide/- paraxylylene isophthalamide) copolymer (polyamide PXD6/PXDT/PXDI), poly(meta-xylylene adipamide/paraxylylene adipamide) copolymer (polyamide MXD6/PXD6), poly(metaxylylene adipamide/paraxylylene adipamide/metaxylylene terephthalamide/- paraxylylene terephthalamide) copolymer (polyamide MXD6/PXD6/MXDT/PXDT), poly(metaxylylene adipamide/paraxylylene adipamide/metaxylylene isophthalamide/- paraxylylene isophthalamide) copolymer (polyamide MXD6/PXD6/MXDI/PXDI), poly(metaxylylene adipamide/paraxylylene adipamide/metaxylylene terephthalamide/- paraxylylene terephthalamide/metaxylylene isophthalamide/paraxylylene isophthalamide) copolymer (polyamide MXD6/PXD6/MXDT/PXDT/MXDI/PXDI), polymetaxylylene sebacamide (polyamide MXD10), polyparaxylylene sebacamide (polyamide PXD10), poly(metaxylylene sebacamide/metaxylylene terephthalamide) copolymer (polyamide MXD10/MXDT), poly(metaxylylene sebacamide/metaxylylene isophthalamide) copolymer (polyamide MXD101MXDI), poly(metaxylylene sebacamide/metaxylylene terephthalamide/metaxylylene isophthalamide) copolymer (polyamide MXD10/MXDT/MXDI), poly(paraxylylene sebacamide/paraxylylene terephthalamide) copolymer (polyamide PXD10/PXDT), poly(paraxylylene sebacamide/paraxylylene isophthalamide) copolymer (polyamide PXD101PXDI), poly(paraxylylene sebacamide/paraxylylene terephthalamide/paraxylylene isophthalamide) copolymer (polyamide PXD10/PXDT/PXDI), poly(metaxylylene sebacamide/paraxylylene sebacamide) copolymer (polyamide MXD10/PXD10), poly(metaxylylene sebacamide/paraxylylene sebacamide/metaxylylene terephthalamide/paraxylylene terephthalamide) copolymer (polyamide MXD10/PXD10/MXDT/- PXDT), poly(metaxylylene sebacamide/paraxylylene sebacamide/metaxylylene isophthalamide/paraxylylene isophthalamide) copolymer (polyamide MXD10/PXD10/- MXDI/PXDI), poly(metaxylylene sebacamide/paraxylylene sebacamide/metaxylylene terephthalamide/paraxylylene terephthalamide/metaxylylene isophthalamide/para-xylylene isophthalamide) copolymer (polyamide MXD10/PXD10/MXDT/PXDT/- MXDI/PXDI), and a mixture of these materials,

more preferably polymetaxylylene adipamide (polyamide MXD6), polyparaxylylene adipamide (polyamide PXD6), poly(metaxylylene adipamide/- metaxylylene isophthalamide) copolymer (polyamide MXD61MXDI), poly(para-xylylene adipamide/paraxylylene isophthalamide) copolymer (polyamide PXD6/PXD1), poly(metaxylylene adipamide/paraxylylene adipamide) copolymer (polyamide MXD6/PXD6), poly(metaxylylene adipamide/paraxylylene adipamide/metaxylylene isophthalamide/paraxylylene isophthalamide) copolymer (polyamide MXD6/PXD6/- MXDI/PXDI), polymetaxylylene sebacamide (polyamide MXD10), polyparaxylylene sebacamide (polyamide PXD10), poly(metaxylylene sebacamide/metaxylylene isophthalamide) copolymer (polyamide MXD10/MXDI), poly(paraxylylene sebacamide/paraxylylene isophthalamide) copolymer (polyamide PXD10/PXDI), poly(metaxylylene sebacamide/paraxylylene sebacamide) copolymer (polyamide MXD10/PXD10), poly(metaxylylene sebacamide/paraxylylene sebacamide/meta-xylylene isophthalamide/paraxylylene isophthalamide) copolymer (polyamide MXD10/PXD10/MXDI/PXDI), and a mixture of these materials, and further preferably polymetaxylylene adipamide (polyamide MXD6), poly(metaxylylene adipamide/paraxylylene adipamide) copolymer (polyamide MXD6/PXD6), polymetaxylylene sebacamide (polyamide MXD10), poly(metaxylylene sebacamide/paraxylylene sebacamide) copolymer (polyamide MXD10/PXD10), and a mixture of these materials.

When it is a mixture of polymetaxylylene adipamide (polyamide MXD6) and/or a poly(metaxylylene adipamide/paraxylylene adipamide) copolymer (polyamide MXD6/PXD6) and polymetaxylylene sebacamide (polyamide MXD10) and/or a poly(metaxylylene sebacamide/paraxylylene sebacamide) copolymer (polyamide MXD10/PXD10), a mass ratio of the polymetaxylylene adipamide (polyamide MXD6) and/or the poly(metaxylylene adipamide/paraxylylene adipamide) copolymer (polyamide MXD6/PXD6) and the polymetaxylylene sebacamide (polyamide MXD10) and/or the poly(metaxylylene sebacamide/paraxylylene sebacamide) copolymer (polyamide MXD10/PXD10) is preferably 55 : 45 to 85 : 15 (mass ratio), more preferably 60 : 40 to 80 : 20 (mass ratio), and further preferably 65 : 35 to 75 : 25 (mass ratio).

As the production apparatus of the semi-aromatic polyamide (D2), there may be mentioned conventionally known polyamide producing apparatuses such as a batch type reaction vessel, a single- or multi-tank type continuous reaction apparatus, a tubular continuous reaction apparatus, a kneading reaction extruder including a single-screw kneading extruder, and a twin-screw kneading extruder, etc. As the method for producing the semi-aromatic polyamide (D2), there are conventionally known methods such as melt polymerization, solution polymerization, solid-state polymerization, etc., and by using these methods, the semi-aromatic polyamide (D2) can be produced by repeating normal pressure, reduced pressure and pressuring operations. These producing method can be used alone or in an appropriate combination, and among these, the melt polymerization method is preferable. For example, it is produced by the method in which a nylon salt comprising xylylene diamine and/or bis(aminoethyl)naphthalene and an aliphatic dicarboxylic acid having 4 or more and 12 or less carbon atoms is pressurized and heated in the presence of water, and polymerizing in a molten state while removing added water and condensed water. Also, it is produced by the method in which xylylene diamine and/or bis(aminomethyl)naphthalene is/are directly added to an aliphatic dicarboxylic acid having 4 or more and 12 or less carbon atoms in a molten state, and subjecting to polycondensation under normal pressure. In this case, in order to keep the reaction system in a uniform liquid state, xylylene diamine and/or bis(aminomethyl)naphthalene is/are continuously added to the aliphatic dicarboxylic acid having 4 or more and 12 or less carbon atoms, during which, polymerization proceeds while raising the temperature so that the temperature of the reaction system is higher than the melting points of the forming oligoamide and polyamide. The semi-aromatic polyamide (D2) may be subjected to solid-state polymerization after being produced by a melt polymerization method.

To the semi-aromatic polyamide (D2), a phosphorus atom-containing compound may be added to sufficiently ensure catalytic effect and coloring preventing effect at the time of polymerization. Examples of the phosphorus atom-containing compounds include hypophosphorous acid, phosphorous acid, phosphoric acid, pyrophosphoric acid, metaphosphoric acid, phosphonous acid, derivatives of these acids, that is alkaline earth metal salts of hypophosphorous acid, alkali metal salts of phosphorous acid, alkaline earth metal salts of phosphorous acid, alkali metal salts of phosphoric acid, alkaline earth metal salts of phosphoric acid, alkali metal salts of pyrophosphoric acid, alkaline earth metal salts of pyrophosphoric acid, alkali metal salts of metaphosphoric acid, alkaline earth metal salts of metaphosphoric acid, alkali metal salts of phosphonous acid, alkaline earth metal salts of phosphonous acid, alkali metal salts of phosphonic acid, and alkaline earth metal salts of phosphonic acid. These may be used singly, or two or more may be used in combination.

Examples of the phosphorus atom-containing compounds include phosphinic acid (hypophosphorous acid), ethyl hypophosphite, dimethylphosphinic acid, phenylmethylphosphinic acid, sodium hypophosphite, potassium hypophosphite, lithium hypophosphite, calcium hypophosphite, magnesium hypophosphite, phosphorous acid, triethyl phosphite, triphenyl phosphite, sodium phosphite, sodium hydrogen phosphite, potassium phosphite, potassium hydrogen phosphite, lithium phosphite, lithium hydrogen phosphite, magnesium phosphite, magnesium hydrogen phosphite, calcium phosphite, calcium hydrogen phosphite, pyrophosphorous acid, phosphoric acid, sodium phosphate, disodium hydrogen phosphate, sodium dihydrogen phosphate, potassium phosphate, dipotassium hydrogen phosphate, potassium dihydrogen phosphate, magnesium phosphate, dimagnesium hydrogen phosphate, magnesium dihydrogen phosphate, calcium phosphate, dicalcium hydrogen phosphate, calcium dihydrogen phosphate, lithium phosphate, dilithium hydrogen phosphate, lithium dihydrogen phosphate, sodium pyrophosphate, potassium pyrophosphate, magnesium pyrophosphate, calcium pyrophosphate, lithium pyrophosphate, sodium metaphosphate, potassium metaphosphate, magnesium metaphosphate, calcium metaphosphate, lithium metaphosphate, phosphonous acid, sodium phosphonite, lithium phosphonite, potassium phosphonite, magnesium phosphonite, calcium phosphonite, ethyl phenylphosphonite, sodium phenylphosphonite, potassium phenylphosphonite, lithium phenylphosphonite, phosphonic acid, sodium phosphonate, potassium phosphonate, lithium phosphonate, potassium phosphonate, magnesium phosphonate, calcium phosphonate, phenylphosphonic acid, ethylphosphonic acid, sodium phenylphosphonate, potassium phenylphosphonate, lithium phenylphosphonate, diethyl phenylphosphonate, sodium ethylphosphonate and potassium ethylphosphonate. These may be used singly, or two or more may be used in combination. Of these, sodium hypophosphite, potassium hypophosphite, lithium hypophosphite, calcium hypophosphite, magnesium hypophosphite, calcium phosphite, calcium hydrogen phosphite, calcium dihydrogen phosphate, sodium phosphite, sodium phosphite, sodium hydrogen phosphite, potassium phosphite, potassium hydrogen phosphite, lithium phosphite, lithium hydrogen phosphite, magnesium phosphite, magnesium hydrogen phosphite, calcium phosphite and calcium hydrogen phosphite are preferable, and sodium hypophosphite, potassium hypophosphite, lithium hypophosphite, calcium hypophosphite and magnesium hypophosphite are more preferable. These phosphorus atom-containing compounds may be hydrates.

To ensure sufficient catalytic effect and sufficient prevention of coloration during polymerization and also to suppress the occurrence of gelation, the content of the phosphorus atom-containing compound is preferably 0.03 parts by mass or more and 0.3 parts by mass or less in terms of phosphorus atom concentration per 100 parts by mass of the semi-aromatic polyamide (D2), and is more preferably 0.05 parts by mass or more and 0.2 part by mass or less, and still more preferably 0.07 parts by mass or more and 0.15 parts by mass or less.

The phosphorus atom-containing compound may be added to a raw material for the semi-aromatic polyamide (D2), that is, an aqueous nylon salt solution, a diamine or a dicarboxylic acid, may be added to a dicarboxylic acid in the molten state, or may be added during the melt polymerization. The method of the addition is not limited to those described above, and the addition may be accomplished by any method as long as the compound can be dispersed uniformly in the semi-aromatic polyamide (D2).

To the semi-aromatic polyamide (D2), an alkali metal compound and/or an alkaline earth metal compound can be added in combination with the phosphorus atom-containing compound. Incidentally, the alkali metal salt and/or the alkaline earth metal salt refer to the compound other than the above-mentioned phosphorus atom-containing compound. In order to prevent coloring of the polyamide during the polycondensation, it is necessary to make a sufficient amount of the phosphorus atom-containing compound be present, but in some cases, there is a fear of causing gellation of the polyamide, so that it is preferable to coexist the alkali metal compound and/or the alkaline earth metal compound in order for adjusting an amidation reaction rate. The alkali metal compound and the alkaline earth metal compound may be mentioned an alkali metal hydroxide, an alkaline earth metal hydroxide, an alkali metal acetate, an alkaline earth metal acetate, an alkali metal carbonate, an alkaline earth metal carbonate, an alkali metal alkoxide, an alkaline earth metal alkoxide, etc. These may be used singly, or two or more may be used in combination. Among these, the alkali metal hydroxide and/or an alkali metal acetate is/are more preferable.

Examples of the alkali metal compounds and alkaline earth metal include alkali metal/alkaline earth metal hydroxides such as lithium hydroxide, sodium hydroxide, potassium hydroxide, rubidium hydroxide, cesium hydroxide, magnesium hydroxide, calcium hydroxide, strontium hydroxide and barium hydroxide; alkali metal/alkaline earth metal acetate salts such as lithium acetate, sodium acetate, potassium acetate, rubidium acetate, cesium acetate, magnesium acetate, calcium acetate, strontium acetate and barium acetate; alkali metal/alkaline earth metal carbonate salts such as lithium carbonate, sodium carbonate, potassium carbonate, rubidium carbonate, cesium carbonate, magnesium carbonate, calcium carbonate, strontium carbonate and barium carbonate; and alkali metal/alkaline earth metal alkoxides such as sodium methoxide, sodium ethoxide, sodium propoxide, sodium butoxide, potassium methoxide, lithium methoxide, magnesium methoxide and calcium methoxide. These may be used singly, or two or more may be used in combination. Of these, from the point of view of economic efficiency, sodium hydroxide, potassium hydroxide, magnesium hydroxide, calcium hydroxide, sodium acetate and potassium acetate are preferable.

When the alkali metal compound or the alkaline earth metal compound is added to the polycondensation system for the synthesis of the semi-aromatic polyamide (D2), the quotient of the number of moles of the compound divided by the number of moles of the phosphorus atoms of the phosphorus atom-containing compound is preferably 0.3 or more and 2.0 or less from the point of view of the balance between acceleration and restraining of the amide-forming reaction, and is more preferably 0.4 or more and 1.9 or less, and still more preferably 0.5 or more and 1.8 or less.

The alkali metal compound or the alkaline earth metal compound may be added to a raw material for the semi-aromatic polyamide (D2), that is, an aqueous nylon salt solution, a diamine or a dicarboxylic acid, may be added to a dicarboxylic acid in the molten state, or may be added during the melt polymerization. The method of the addition is not limited to those described above, and the addition may be accomplished by any method as long as the compound can be dispersed uniformly in the semi-aromatic polyamide (D2).

The relative viscosities of the semi-aromatic polyamide (D1) and the semi-aromatic polyamide (D2) measured in accordance with JIS K-6920 under the conditions of 96% sulfuric acid, polymer concentration 1% and at 25°C are preferably 1.5 or more and 4.0 or less from the viewpoints of ensuring mechanical property of the obtainable multilayer tube, and ensuring desired moldability of the multilayer tube by making the viscosity at the time of melting within an appropriate range, more preferably 1.6 or more and 3.5 or less, and further preferably 1.8 or more and 3.0 or less.

Incidentally, there are no particular limitations on the types of terminal groups, concentrations of terminal groups and molecular weight distributions of the semi-aromatic polyamide (D1) and the semi-aromatic polyamide (D2). For the purpose of adjusting the molecular weight and stabilizing melt during molding processing, one kind or two or more kinds among monoamine, diamine, polyamine, monocarboxylic acid and dicarboxylic acid can be added thereto in combination appropriately. For example, there may be mentioned an aliphatic monoamine such as methylamine, ethylamine, propylamine, butylamine, hexylamine, octylamine, decylamine, stearylamine, dimethylamine, diethylamine, dipropylamine, dibutylamine, etc.; an alicyclic monoamine such as cyclohexylamine, dicyclohexylamine, etc.; an aromatic monoamine such as aniline, toluidine, diphenylamine, naphthylamine, etc.; an aliphatic diamine such as 1,2-ethanediamine, 1,3-propanediamine, 1,13-tridecanediamine, etc.; an alicyclic diamine such as cyclohexanediamine, bis(aminomethyl)cyclohexane,5-amino-1,3,3-trimethylcyclohexanemethylamine, etc.; an aromatic diamine such as m-phenylene diamine, p-phenylene diamine, etc.; a polyamine such as polyalkyleneimine, polyalkylenepolyamine, polyvinylamine, polyallylamine, etc.; an aliphatic monocarboxylic acid such as acetic acid, propionic acid, butyric acid, valeric acid, caproic acid, caprylic acid, lauric acid, tridecylic acid, myristic acid, palmitic acid, stearic acid, pivalic acid, isobutyric acid, etc.; an alicyclic monocarboxylic acid such as cyclohexanecarboxylic acid, etc.; an aromatic monocarboxylic acid such as benzoic acid, toluic acid, $\alpha$-naphthalene carboxylic acid, $\beta$-naphthalene carboxylic acid, methylnaphthalene carboxylic acid, phenylacetic acid, etc.; an aliphatic dicarboxylic acid such as oxalic acid, malonic acid, tridecanedioic acid, tetradecanedioic acid, etc.; an alicyclic dicarboxylic acid such as 1,3-cyclopentanedicarboxylic acid, 1,3-cyclohexanedicarboxylic acid, 1,4-cyclohexanedicarboxylic acid, etc.; and an aromatic dicarboxylic acid such as phthalic acid, isophthalic acid, etc. These may be used singly, or two or more may be used in combination. An amount of these molecular weight modifiers may vary depending on the reactivity of the molecular weight modifier and the polymerization conditions, and is appropriately determined so that the relative viscosity of the polyamide finally obtained falls within the above-mentioned range.

In consideration of melt stability, it is preferable that ends of molecular chains of the semi-aromatic polyamide (D1) and the semi-aromatic polyamide (D2) be capped with endcapping agents. It is more preferable that 10% or more terminal groups be endcapped, and it is still more preferable that 20% or more terminal groups be endcapped. The endcapping agents are not particularly limited as long as they are monofunctional compounds and have reactivity with the amino group or the carboxyl group at a terminal of the polyamide. From points of view such as reactivity and endcap stability, monocarboxylic acids and monoamines are preferable. From points of view such as easy handling, monocarboxylic acids are more preferable. Other compounds such as acid anhydrides such as phthalic anhydride, monoisocyanates, monoacid halides, monoesters and monoalcohols may be used.

The monocarboxylic acids used as the endcapping agents are not particularly limited as long as having reactivity with the amino groups. Examples thereof include the aliphatic monocarboxylic acids, alicyclic monocarboxylic acids and aromatic monocarboxylic acids described hereinabove. These may be used singly, or two or more may be used in combination. Of these, from points of view such as reactivity, endcap stability and price, acetic acid, propionic acid, butyric acid, valeric acid, caproic acid, caprylic acid, lauric acid, tridecylic acid, myristic acid, palmitic acid, stearic acid and benzoic acid are preferable. The monoamines used as the endcapping agents are not particularly limited as long as having reactivity with the carboxyl groups. Examples thereof include the aliphatic monoamines, alicyclic monoamines and aromatic monoamines described hereinabove. These may be used singly, or two or more may be used in combination. Of these, from points of view such as reactivity, boiling point, endcap stability and price, butylamine, hexylamine, octylamine, decylamine, stearylamine, cyclohexylamine and aniline are preferable.

The amount in which the endcapping agent is used may be determined appropriately in light of factors such as the reactivity and boiling point of the endcapping agent used, the reaction apparatus and the reaction conditions. From the point of view of the controlling of polymerization degree, it is preferable that the amount be 0.1 mol% or more and 15 mol% or less relative to the total number of moles of the dicarboxylic acid and the diamine that are raw material components.

To the semi-aromatic polyamide composition (D), an impact improver is preferably added to improve low temperature impact resistance of the semi-aromatic polyamide {D1} and the semi-aromatic polyamide (D2), and an elastomer polymer (D3) containing a constitutional unit derived from an unsaturated compound having a carboxyl group and/or an acid anhydride group is more preferably added. The elastomer polymer (D3) may be mentioned those exemplified as the elastomer polymer (A3) contained in the aliphatic polyamide composition (A). As the elastomer polymer (D3), the same material as the elastomer polymer (A3) may be used or a different material may be used. These may be used singly, or two or more may be used in combination. If the elastomer polymer (D3) does not contain a constitutional unit derived from an unsaturated compound having a carboxyl group and/or an acid anhydride group, the impact improving effect may sometimes be insufficient.

A content of the impact improver is preferably 1 part by mass or more and 30 parts by mass or less based on 100 parts by mass of the semi-aromatic polyamide (D1) and/or the semi-aromatic polyamide (D2) which are the main component from the viewpoints of sufficiently ensuring mechanical strength and low temperature impact resistance of the obtainable multilayer tube, and more preferably 3 parts by mass or more and 25 parts by mass or less.

In the semi-aromatic polyamide composition (D), other thermoplastic resin(s) may be contained in addition to the semi-aromatic polyamide (D1) and/or the semi-aromatic polyamide (D2). The other thermoplastic resin(s) may be mentioned the same resins as the other thermoplastic resin(s) described in the explanation of the aliphatic polyamide composition (A). These may be used singly, or two or more may be used in combination. Further, it is also preferable to be a mixture with the polyamide described in the explanation of the polyamide (A1) and/or the polyamide (A2) contained in the aliphatic polyamide composition (A) from the viewpoints of interlayer adhesiveness, flexibility, and melt processing stability of the obtainable multilayer tube. A content(s) of the semi-aromatic polyamide (D1) and/or the semi-aromatic polyamide (D2) in the semi-aromatic polyamide composition (D) is 60% by mass or more, and preferably 70% by mass or more.

Further, the semi-aromatic polyamide composition (D) may contain, if necessary, a conductive filler, an antioxidant, a heat stabilizer, an ultraviolet absorber, a light stabilizer, a lubricant, an inorganic filler, an antistatic agent, a flame retardant, a crystallization accelerator, a coloring agent, a lubricant, etc.

5. Layer (e)

The multilayer tube preferably further includes a layer (e).

The layer (e) in the multilayer tube includes a fluorine-containing polymer (E) having, in its molecular chain, a functional group reactive to an amino group. (Hereinafter, this component will be sometimes written as the fluorine-containing polymer (E).)

[Fluorine-containing polymer (E)]

The fluorine-containing polymer (E) has, in its molecular chain, a functional group reactive to an amino group.

The fluorine-containing polymer (E) is a polymer (a homopolymer or a copolymer) which has repeating units derived from at least one fluorine-containing monomer. The fluorine-containing polymer is not particularly limited as long as it is melt processable.

Examples of the fluorine-containing monomers include tetrafluoroethylene (TFE), trifluoroethylene, vinylidene fluoride (VDF), vinyl fluoride (VF), chlorotrifluoroethylene (CTFE), trichlorofluoroethylene, hexafluoropropylene (HFP), $CF_2=CFOR^{f1}$ (wherein $R^{f1}$ is a perfluoroalkyl group with 1 to 10 carbon atoms which may contain an etheric oxygen atom), $CF_2=CF-OCH_2-R^{f2}$ (wherein $R^{f2}$ is a perfluoroalkylene group with 1 to 10 carbon atoms which may contain an etheric oxygen atom), $CF_2=CF(CF_2)_pOCF=CF_2$ (wherein p is 1 or 2), and $CH_2=CX^1(CF_2)_nX^2$ (wherein $X^1$ and $X^2$ are each independently a hydrogen atom or a fluorine atom, and n is an integer of 2 to 10). These may be used singly, or two or more may be used in combination.

Specific examples of the general formula $CF_2=CFOR^{f1}$ include perfluoro(alkyl vinyl ethers) (hereinafter, also referred to as PAVE) such as $CF_2=CFOCF_2$ (perfluoro(methyl vinyl ether): PMVE), $CF_2=CFOCF_2CF_3$ (perfluoro(ethyl vinyl ether): PEVE), $CF_2=CFOCF_2CF_2CF_3$ (perfluoro(propyl vinyl ether): PPVE), $CF_2=CFOCF_2CF_2CF_2CF_3$ (perfluoro(butyl vinyl ether): PBVE) and $CF_2=CFO(CF_2)_8F$ (perfluoro(octyl vinyl ether): POVE). These may be used singly, or two or more may be used in combination. Of these, $CF_2=CFOCF_2$ and $CF_2=CFOCF_2CF_2CF_3$ are preferable.

In the compounds represented by the general formula $CH_2=CX^1(CF_2)_nX^2$ (wherein $X^1$ and $X^2$ are each independently a hydrogen atom or a fluorine atom, and n is an integer of 2 to 10), n is an integer of 2 to 10 to ensure a modification effect for the fluorine-containing polymer (for example, prevention of cracks during forming of the copolymer or cracks in formed articles) and to obtain sufficient polymerization reactivity. Specific examples include $CH_2=CF(CF_2)_2F$, $CH_2=CF(CF_2)_3F$, $CH_2=CF(CF_2)_4F$, $CH_2=CF(CF_2)_5F$, $CH_2=CF(CF_2)_8F$, $CH_2=CF(CF_2)_2H$, $CH_2=CF(CF_2)_3H$, $CH_2=CF(CF_2)_4H$, $CH_2=CF(CF_2)_5H$, $CH_2=CF(CF_2)_8H$, $CH_2=CH(CF_2)_2F$, $CH_2=CH(CF_2)_3F$, $CH_2=CH(CF_2)_4F$, $CH_2=CH(CF_2)_5F$, $CH_2=CH(CF_2)_8F$, $CH_2=CH(CF_2)_2H$, $CH_2=CH(CF_2)_3H$, $CH_2=CH(CF_2)_4H$, $CH_2=CH(CF_2)_5H$ and $CH_2=CH(CF_2)_8H$. These may be used singly, or two or more may be used in combination.

Of the compounds described above, those represented by $CH_2=CH(CF_2)_nF$ or $CH_2=CF(CF_2)_nH$ are preferable from the point of view of the balance between barrier properties to chemical medias and environmental stress crack resistance of the fluorine-containing polymer (E). More preferably, n in the formula is 2 to 4.

In addition to the units from the fluorine-containing monomer, the fluorine-containing polymer (E) may further contain polymer units based on a fluorine-free monomer. Examples of the fluorine-free monomers include olefins with 2 to 4 carbon atoms such as ethylene, propylene and isobutene; vinyl esters such as vinyl chloride, vinylidene chloride, vinyl acetate, vinyl chloroacetate, vinyl lactate, vinyl butyrate, vinyl pivalate, vinyl benzoate, vinyl crotonate, methyl (meth)acrylate, ethyl (meth)acrylate, n-butyl (meth)acrylate and methyl crotonate; and vinyl ethers such as methyl vinyl ether (MVE), ethyl vinyl ether (EVE), butyl vinyl ether (BVE), isobutyl vinyl ether (IBVE), cyclohexyl vinyl ether (CHVE) and glycidyl vinyl ether. These may be used singly, or two or more may be used in combination. Of these, ethylene, propylene and vinyl acetate are preferable, and ethylene is more preferable.

From the points of view of heat resistance, chemical resistance and barrier properties to chemical medias, preferred fluorine-containing polymers (E) are polymers (E1) including at least vinylidene fluoride units (VDF units), copolymers (E2) including at least tetrafluoroethylene units (TFE units) and ethylene units (E units), copolymers (E3) including at least tetrafluoroethylene units (TFE units) and hexafluoropropylene units (HFP units) and/or PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom), copolymers (E4) including at least chlorotrifluoroethylene units (CTFE units), and copolymers (E5) including at least chlorotrifluoroethylene units (CTFE units) and tetrafluoroethylene units (TFE units).

Examples of the polymers (E1) including at least vinylidene fluoride units (VDF units) (hereinafter, also written as the VDF copolymers {E1}) include vinylidene fluoride homopolymer (polyvinylidene fluoride (PVDF)) (E1-1),

copolymers (E1-2) including VDF units and TFE units wherein the content of the VDF units is 30 mol% or more and 99 mol% or less and the content of the TFE units is 1 mol% or more and 70 mol% or less relative to all the monomers except functional group-containing monomers described later,

copolymers (E1-3) including VDF units, TFE units and trichlorofluoroethylene units wherein the content of the VDF units is 10 mol% or more and 90 mol% or less, the content of the TFE units is 0 mol% or more and 90 mol% or less and the content of the trichlorofluoroethylene units is 0 mol% or more and 30 mol% or less relative to all the monomers except functional group-containing monomers described later, and

copolymers (E1-4) including VDF units, TFE units and HFP units wherein the content of the VDF units is 10 mol% or more and 90 mol% or less, the content of the TFE units is 0 mol% or more and 90 mol% or less and the content of the HFP units is 0 mol% or more and 30 mol% or less relative to all the monomers except functional group-containing monomers described later.

In the copolymers (E1-4), it is preferable that the content of the VDF units be 15 mol% or more and 84 mol% or less, the content of the TFE units be 15 mol% or more and 84 mol% or less and the content of the HFP units be 0 mol% or more and 30 mol% or less relative to all the monomers except functional group-containing monomers described later.

Examples of the copolymers (E2) including at least tetrafluoroethylene units (TFE units) and ethylene units (E units) (hereinafter, also written as the TFE copolymers (E2)) include polymers wherein the content of the TFE units is 20 mol% or more relative to all the monomers except functional group-containing monomers described later, and copolymers wherein the content of the TFE units is 20 mol% or more and 80 mol% or less, the content of the E units is 20 mol% or more and 80 mol% or less and the content of units derived from a monomer copolymerizable with the above monomers is 0 mol% or more and 60 mol% or less relative to all the monomers except functional group-containing monomers described later.

Examples of the copolymerizable monomers include hexafluoropropylene (HFP), $CF_2=CFOR^{f1}$ (wherein $R^{f1}$ is a perfluoroalkyl group with 1 to 10 carbon atoms which may contain an etheric oxygen atom) and $CH_2=CX^1(CF_2)_nX^2$ (wherein $X^1$ and $X^2$ are each independently a hydrogen atom or a fluorine atom, and n is an integer of 2 to 10). These may be used singly, or two or more may be used in combination.

Examples of the TFE copolymers (E2) include:

copolymers (E2-1) including TFE units, E units and fluoroolefin units derived from a fluoroolefin represented by the aforementioned general formula $CH_2=CX^1(CF_2)_nX^2$ (wherein $X^1$ and $X^2$ are each independently a hydrogen atom or a fluorine atom, and n is an integer of 2 to 10) wherein the content of the TFE units is 30 mol% or more and 70 mol% or less, the content of the E units is 20 mol% or more and 55 mol% or less and the content of the fluoroolefin units derived from a fluoroolefin represented by the aforementioned general formula $CH_2=CX^1(CF_2)_nX^2$ (wherein $X^1$ and $X^2$ are each independently a hydrogen atom or a fluorine atom, and n is an integer of 2 to 10) is 0 mol% or more and 10 mol% or less relative to all the monomers except functional group-containing monomers described later,
copolymers (E2-2) including TFE units, E units, HFP units and units derived from a monomer copolymerizable with the above monomers wherein the content of the TFE units is 30 mol% or more and 70 mol% or less, the content of the E units is 20 mol% or more and 55 mol% or less, the content of the HFP units is 1 mol% or more and 30 mol% or less, and the content of the units derived from a monomer copolymerizable with the above monomers is 0 mol% or more and 10 mol% or less relative to all the monomers except functional group-containing monomers described later, and
copolymers (E2-3) including TFE units, E units and PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) wherein the content of the TFE units is 30 mol% or more and 70 mol% or less, the content of the E units is 20 mol% or more and 55 mol% or less, and the content of the PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) is 0 mol% or more and 10 mol% or less relative to all the monomers except functional group-containing monomers described later.

Examples of the copolymers (E3) including at least tetrafluoroethylene units (TFE units) and hexafluoropropylene units (HFP units) and/or PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) (hereinafter, also written as the TFE copolymers (E3)) include:

copolymers (E3-1) including TFE units and HFP units wherein the content of the TFE units is 70 mol% or more and 95 mol% or less, preferably 85 mol% or more and 93 mol% or less, and the content of the HFP units is 5 mol% or more and 30 mol% or less, preferably 7 mol% or more and 15 mol% or less, relative to all the monomers except functional group-containing monomers described later,
copolymers (E3-2) including TFE units and one, or two or more kinds of PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) wherein the content of the TFE units is 70 mol% or more and 95 mol% or less and the content of one, or two or more kinds of PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) is 5 mol% or more and 30 mol% or less relative to all the monomers except functional group-containing monomers described later, and
copolymers (E3-3) including TFE units, HFP units and one, or two or more kinds of PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) wherein the content of the TFE units is 70 mol% or more and 95 mol% or less, and the total content of the HFP units and one, or two or more kinds of PAVE units derived from PAVE represented by the aforementioned general formula $CF_2=CFOR^{f1}$ (wherein $R^{f1}$ is a perfluoroalkyl group with 1 to 10 carbon atoms which may contain an etheric oxygen atom) is 5 mol% or more and 30 mol% or less relative to all the monomers except functional group-containing monomers described later

The copolymers including at least chlorotrifluoroethylene units (CTFE units) further are chlorotrifluoroethylene copolymers (E4) which have CTFE units $[-CFCl-CF_2-]$ and are composed of ethylene units (E units) and/or fluorine-containing monomer units (hereinafter, also written as the CTFE copolymers (E4)).

The fluorine-containing monomers in the CTFE copolymers (E4) are not particularly limited and may be any such monomers except CTFE. Examples thereof include vinylidene fluoride (VDF), hexafluoropropylene (HFP), PAVE represented by the aforementioned general formula $CF_2=CFOR^{f1}$ (wherein $R^{f1}$ is a perfluoroalkyl group with 1 to 10 carbon atoms which may contain an etheric oxygen atom) and fluoroolefins represented by the aforementioned general formula $CH_2=CX^1(CF_2)_nX^2$ (wherein $X^1$ and $X^2$ are each independently a hydrogen atom or a fluorine atom, and n is an integer of 2 to 10). These may be used singly, or two or more may be used in combination.

The CTFE copolymers (E4) are not particularly limited, and examples thereof include CTFE/PAVE copolymer, CTFE/VDF copolymer, CTFE/HFP copolymer, CTFE/E copolymer, CTFE/PAVE/E copolymer, CTFE/VDF/E copolymer and CTFE/HFP/E copolymer. These may be used singly, or two or more may be used in combination.

The content of the CTFE units in the CTFE copolymer (E4) is preferably 15 mol% or more and 70 mol% or less, and more preferably 18 mol% or more and 65 mol% or less relative to all the monomers except functional group-containing monomers described later. The content of the E units and/or the fluorine-containing monomer units is preferably 30 mol% or more and 85 mol% or less, and more preferably 35 mol% or more and 82 mol% or less.

The copolymers (E5) including at least chlorotrifluoroethylene units (CTFE units) and tetrafluoroethylene units (TFE units) are chlorotrifluoroethylene copolymers composed of CTFE units $[-CFCl-CF_2-]$, TFE units $[-CF_2-CF_2-]$ and units from a monomer copolymerizable with CTFE and TFE (hereinafter, also written as the CTFE/TFE copolymers (E5)).

The copolymerizable monomers in the CTFE/TFE copolymers (E5) are not particularly limited and may be any such monomers except CTFE and TFE. Examples thereof include fluorine-containing monomers such as vinylidene fluoride (VDF), hexafluoropropylene (HFP), PAVE represented by the aforementioned general formula $CF_2=CFOR^{f1}$ (wherein $R^{f1}$ is a perfluoroalkyl group with 1 to 10 carbon atoms which may contain an etheric oxygen atom) and fluoroolefins represented by the aforementioned general formula $CH_2=CX^1(CF_2)nX^2$ (wherein $X^1$ and $X^2$ are each independently a hydrogen atom or a fluorine atom, and n is an integer of 2 to 10); and fluorine-free monomers, for example, olefins with 2 to 4 carbon atoms such as ethylene, propylene and isobutene; vinyl esters such as vinyl acetate, methyl (meth)acrylate and ethyl (meth)acrylate; and vinyl ethers such as methyl vinyl ether (MVE), ethyl vinyl ether (EVE) and butyl vinyl ether (BVE). These may be used singly, or two or more may be used in combination. Of these, PAVE represented by the aforementioned general formula $CF_2=CFOR^{f1}$ (wherein $R^{f1}$ is a perfluoroalkyl group with 1 to 10 carbon atoms which may contain an etheric oxygen atom) are preferable. Perfluoro(methyl vinyl ether) (PMVE) and perfluoro(propyl vinyl ether) (PPVE) are more preferable. From the point of view of heat resistance, PPVE is still more preferable.

The CTFE/TFE copolymers (E5) are not particularly limited, and examples thereof include CTFE/TFE copolymer, CTFE/TFE/HFP copolymer, CTFE/TFE/VDF copolymer, CTFE/TFE/PAVE copolymer, CTFE/TFE/E copolymer, CTFE/TFE/HFP/PAVE copolymer and CTFE/TFE/VDF/PAVE copolymer. These may be used singly, or two or more may be used in combination. Of these, CTFE/TFE/PAVE copolymer and CTFE/TFE/HFP/PAVE copolymer are preferable.

To ensure good formability, environmental stress crack resistance, barrier properties to chemical medias, heat resistance and mechanical characteristics, the total content of the CTFE units and the TFE units in the CTFE/TFE copolymer (E5) is preferably 90 mol% or more and 99.9 mol% or less and the content of the units from the monomer copolymerizable with CTFE and TFE is preferably 0.1 mol% or more and 10 mol% or less, relative to all the monomers except functional group-containing monomers described later.

To ensure good formability, environmental stress crack resistance and barrier properties to chemical medias, the content of the CTFE units in the CTFE/TFE copolymer (E5) is preferably 15 mol% or more and 80 mol% or less relative to the total content of the CTFE units and the TFE units taken as 100 mol%, and is more preferably 17 mol% or more and 70 mol% or less, and still more preferably 19 mol% or more and 65 mol% or less.

When the monomer copolymerizable with CTFE and TFE is PAVE, the content of the PAVE units in the CTFE/TFE copolymer (E5) is preferably 0.5 mol% or more and 7 mol% or less and more preferably 1 mol% or more and 5 mol% or less relative to all the monomers except functional group-containing monomers described later.

When HFP and PAVE are the monomers copolymerizable with CTFE and TFE, the total content of the HFP units and the PAVE units in the CTFE/TFE copolymer (E5) is preferably 0.5 mol% or more and 7 mol% or less, and more preferably 1 mol% or more and 5 mol% or less relative to all the monomers except functional group-containing monomers described later.

The TFE copolymers (E3), the CTFE copolymers (E4) and the CTFE/TFE copolymers (E5) have superior barrier properties to chemical medias, in particular, barrier properties to alcohol-containing gasoline. The coefficient of permeability for alcohol-containing gasoline is a value calculated in such a manner that a sheet obtained from a resin of interest is placed into a permeability coefficient measurement cup containing isooctane/toluene/ethanol mixed solvent prepared by mixing isooctane, toluene and ethanol in a volume ratio of 45:45:10, and a change in mass is measured at 60°C. The coefficient of permeability for alcohol-containing gasoline of the TFE copolymers (E3), the CTFE copolymers (E4) and the CTFE/TFE copolymers (E5) is preferably 1.5 g·mm/(m$^2$·day) or less, more preferably 0.01 g·mm/(m$^2$·day) or more and 1 g·mm/(m$^2$·day) or less, and still more preferably 0.02 g·mm/(m$^2$·day) or more and 0.8 g·mm/(m$^2$·day) or less.

The fluorine-containing polymer (E) may be obtained by (co)polymerizing a monomer(s) for constituting the polymer by a conventional polymerization method. Radical polymerization is mainly used. The polymerization may be initiated in any manner without limitation as long as radicals are formed. For example, the polymerization is initiated with an organic or inorganic radical polymerization initiator, heat, light, ionizing radiation, or the like.

The fluorine-containing polymer (E) may be produced by any method without limitation, and general polymerization method using a radical polymerization initiator is adopted. The polymerization method may be conventional, with examples including bulk polymerization, solution polymerization using an organic solvent such as fluorinated hydrocarbon, chlorinated hydrocarbon, fluorinated chlorinated hydrocarbon, alcohol or hydrocarbon, suspension polymerization using an aqueous medium and optionally an appropriate organic solvent, and emulsion polymerization using an aqueous medium and an emulsifier.

The polymerization may be performed batchwise or continuously using a one-tank or multi-tank stirring polymerization apparatus or a tubular polymerization apparatus etc.

The radical polymerization initiators preferably have a 10-hour half-life decomposition temperature of 0°C or higher and 100°C or lower, and more preferably 20°C or higher and 90°C or lower. Specific examples include azo compounds such as 2,2'-azobisisobutyronitrile,2,2'-azobis(2,4-dimethylvaleronitrile),2,2'-azobis(2-methylv aleronitrile),2,2'-azobis(2-cyclopropylpropionitrile), dimethyl 2,2'-azobisisobutyrate,2,2'-azobis[2-(hydroxymethyl)propionitrile] and 4,4'-azobis(4-cyanopentenoic acid); hydroperoxides such as hydrogen peroxide, t-butyl hydroperoxide and cumene hydroperoxide; dialkyl peroxides such as di-t-butyl peroxide and dicumyl peroxide; fluorine-free diacyl peroxides such as acetyl peroxide, isobutyryl peroxide, octanoyl peroxide, benzoyl peroxide and lauroyl peroxide; ketone peroxides such as methyl ethyl ketone peroxide and cyclohexanone peroxide; peroxydicarbonates such as diisopropyl peroxydicarbonate; peroxy esters such as t-butyl peroxypivalate, t-butyl peroxyisobutyrate and t-butyl peroxyacetate; fluorine-containing diacyl peroxides such as compounds represented by $(Z(CF_2)_pCOO)_2$ (wherein Z is a hydrogen atom, a fluorine atom or a chlorine atom, and p is an integer of 1 to 10); and inorganic peroxides such as potassium persulfate, sodium persulfate and ammonium persulfate. These may be used singly, or two or more may be used in combination.

The production of the fluorine-containing polymer (E) preferably involves a common chain transfer agent for the purpose of controlling the molecular weight. Examples of the chain transfer agents include alcohols such as methanol and ethanol; chlorofluorohydrocarbons such as 1,3-dichloro-1,1,2,2,3-pentafluoropropane, 1,1-dichloro-1-fluoroethane, 1,2-dichloro-1,1,2,2-tetrafluoroethane, 1,1-dichloro-1-fluoroethane and 1, 1,2-trichloro- 1,2,2-trifluoroethane; hydrocarbons such as pentane, hexane and cyclohexane; and chlorohydrocarbons such as carbon tetrachloride, chloroform, methylene chloride and methyl chloride. These may be used singly, or two or more may be used in combination.

The polymerization conditions are not particularly limited. The polymerization temperature is preferably 0°C or higher and 100°C or lower, and more preferably 20°C or higher and 90°C or lower. To avoid a decrease in heat resistance due to the formation of ethylene-ethylene sequences in the polymer, a lower temperature is generally preferable. The polymerization pressure may be determined appropriately in accordance with other polymerization conditions such as the type, amount and vapor pressure of the solvent that is used, and polymerization temperature, but is preferably 0.1 MPa or more and 10 MPa or less, and more preferably 0.5 MPa or more and 3 MPa or less. The polymerization time is preferably 1 hour or more and 30 hours or less.

The molecular weight of the fluorine-containing polymer (E) is not particularly limited but is preferably such that the polymer is solid at room temperature and the polymer itself is usable as a thermoplastic resin, an elastomer or the like. The molecular weight is controllable by controlling the concentration of the monomers in the polymerization, the concentration of the polymerization initiator, the concentration of the chain transfer agent, and the temperature.

When the fluorine-containing polymer (E) is coextruded with the aliphatic polyamide composition (A), the ethylene/vinyl acetate copolymer saponified product composition (B), the polyamide composition (C), the semi-aromatic polyamide composition (D), etc., for ensuring sufficient melting fluidity in the kneading temperature and the molding temperature range at which remarkable deterioration of these materials are not accompanied, a melt flow rate at a temperature 50°C higher than the melting point of the fluorine-containing polymer (E) and at a load of 5 kg is preferably 0.5 g/10 minutes or more and 200 g/10 minutes or less, and more preferably 1 g/10 minutes or more and 100 g/10 minutes or less.

Also, in the fluorine-containing polymer (E), the melting point, glass transition point, etc., of the polymer can be adjusted by selecting the type, the compositional ratio, etc., of the fluorine-containing monomer and the other monomer(s).

The melting point of the fluorine-containing polymer (E) is appropriately selected by the purpose, use, method of use, etc., and when it is co-extruded with the aliphatic polyamide composition (A), the ethylene/vinyl acetate copolymer saponified product composition (B), the polyamide composition (C), the semi-aromatic polyamide composition (D), etc., it is preferably close to the molding temperature of the resin. Therefore, it is preferable to optimize the melting point of the fluorine-containing polymer (E) by appropriately adjusting the ratio of the fluorine-containing monomer, the other monomer(s), and the functional group-containing monomer mentioned later.

Here, the melting point means that using a differential scanning calorimeter, sample is heated to a temperature of the expected melting point or higher, and then, the sample is cooled at a rate of 10°C per a minute and cooled to 30°C, and after allowing to stand as such for about 1 minutes, and a temperature of the peak value of the melting curve measured by raising the temperature at a rate of 20°C per a minute is defined to be a melting point.

In the fluorine-containing polymer (E), a functional group(s) having a reactivity to an amino group is/are introduced into the molecular structure, and the functional group(s) may be introduced into any of the molecular terminal, the side chain or the main chain of the fluorine-containing polymer (E). Also, the functional group(s) may be used alone or two or more kinds in combination in the fluorine-containing polymer (E). The kind and the content of the functional group are appropriately determined depending on the kind, shape, use, required interlayer adhesiveness, adhesive method, introducing method of the functional group, etc., of the mating material to be layered onto the fluorine-containing polymer (E).

The functional group that is reactive to an amino group may be at least one selected from the group consisting of carboxyl group, acid anhydride group, carboxylate salt, sulfo group, sulfonate salt, epoxy group, cyano group, carbonate group and haloformyl group, and is preferably at least one selected from the group consisting of carboxyl group, acid anhydride group, carboxylate salt, epoxy group, carbonate group and haloformyl group.

The reactive functional groups to an amino group may be introduced into the fluorine-containing polymer (E) by a method (i) in which the monomers for the fluorine-containing polymer (E) are copolymerized with a copolymerizable monomer having the functional group, a method (ii) in which the functional groups are introduced to molecular terminals of the fluorine-containing polymer (E) during polymerization with use of, for example, a polymerization initiator or a chain transfer agent, and a method (iii) in which a compound having the reactive functional group and a grafting functional group (a grafting compound) is grafted to the fluorine-containing polymer. These introduction methods may be used singly or in appropriate combination. In consideration of interlayer adhesion in the multilayer tube, the fluorine-containing polymer (E) is preferably one produced by the method (i) or (ii). For details of the method (iii), reference may be made to Japanese Patent Application Kokai Publication No. H7-18035, Japanese Patent Application Kokai Publication No. H7-25952, Japanese Patent Application Kokai Publication No. H7-25954, Japanese Patent Application Kokai Publication No. H7-173230, Japanese Patent Application Kokai Publication No. H7-173446, Japanese Patent Application Kokai Publication No. H7-173447 and Japanese Patent Kohyo Publication No. H10-503236. Hereinbelow, there will be described the method (i) in which the monomers for the fluorine-containing polymer are copolymerized with a copolymerizable monomer having the functional group, and the method (ii) in which the functional groups are introduced to molecular terminals of the fluorine-containing polymer with use of a polymerization initiator or the like.

In the method (i) in which the monomers for the fluorine-containing polymer (E) are copolymerized with a copolymerizable monomer having the functional group (hereinafter, sometimes written simply as the functional group-containing monomer), use is made of a monomer containing at least one functional groups selected from the group consisting of carboxyl group, acid anhydride group, carboxylate salt, hydroxyl group, sulfo group, sulfonate salt, epoxy group and cyano group. Examples of the functional group-containing monomers include functional group-containing fluorine-free monomers and functional group-containing fluorine-containing monomers.

Examples of the functional group-containing fluorine-free monomers include unsaturated carboxylic acids and derivatives such as esters thereof, such as acrylic acid, halogenated (except fluorinated) acrylic acid, methacrylic acid, halogenated (except fluorinated) methacrylic acid, maleic acid, halogenated (except fluorinated) maleic acid, fumaric acid, halogenated (except fluorinated) fumaric acid, itaconic acid, citraconic acid, crotonic acid and endobicyclo-[2.2.1]-5-heptene-2,3-dicarboxylic acid; carboxyl group-containing monomers such as maleic anhydride, itaconic anhydride, succinic anhydride, citraconic anhydride and endobicyclo-[2.2.1]-5-heptene-2,3-dicarboxylic anhydride; and epoxy group-containing monomers such as glycidyl acrylate, glycidyl methacrylate and glycidyl ether. These may be used singly, or two or more may be used in combination. The functional group-containing fluorine-free monomer is selected in consideration of the copolymerizability with the fluorine-containing monomer that is used. By selecting an appropriate functional group-containing fluorine-free monomer, the polymerization is allowed to take place satisfactorily and the functional group-containing fluorine-free monomer is easily introduced into the main chain uniformly, with the result that less monomer remains unreacted and the amount of impurities can be reduced.

Examples of the functional group-containing fluorine-containing monomers include unsaturated compounds represented by the general formula $CX^3X^4=CX^5-(R^7)_n-Y$ (wherein Y is a functional group selected from the group consisting of -COOM (M is a hydrogen atom or an alkali metal), a carboxyl-derived group, -SO$_3$M (M is a hydrogen atom or an alkali metal), a sulfonic acid-derived group, an epoxy group and -CN, X$^3$, X$^4$ and X$^5$ are the same as or different from one another and are each a hydrogen atom or a fluorine atom (with the proviso that when X$^3$, X$^4$ and X$^5$ are all hydrogen atoms, n = 1 and R$^7$ includes a fluorine atom), R$^7$ is a C$_{1-40}$ alkylene group, a C$_{1-40}$ fluorine-containing oxyalkylene group, a C$_{1-40}$ fluorine-containing alkylene group having an ether bond, or a C$_{1-40}$ fluorine-containing oxyalkylene group having an ether bond, and n is 0 or 1). These may be used singly, or two or more may be used in combination.

Examples of the carboxyl-derived groups represented by Y in the above general formula include those functional groups represented by the general formula -C(=O)Q$^1$ (wherein Q$^1$ is -OR$^8$, -NH$_2$, F, Cl, Br or I, and R$^8$ is a C$_{1-20}$ alkyl group or a C$_{6-22}$ aryl group). These may be used singly, or two or more may be used in combination.

Examples of the sulfonic acid-derived groups represented by Y in the above general formula include those functional groups represented by the general formula -SO$_2$Q$^2$ (wherein Q$^2$ is -OR$^9$, -NH$_2$, F, Cl, Br or I, and R$^9$ is a C$_{1-20}$ alkyl group or a C$_{6-22}$ aryl group.

Preferably, Y is -COOH, -SO$_3$H, -SO$_3$Na, -SO$_2$F or -CN.

Examples of the functional group-containing fluorine-containing monomers wherein the functional group has a carbonyl group include perfluoroacryloyl fluoride, 1-fluoroacryloyl fluoride, acryloyl fluoride, 1-trifluoromethacryloyl fluoride and perfluorobutenoic acid. These may be used singly, or two or more may be used in combination.

To ensure sufficient interlayer adhesion and to make sure that the interlayer adhesion will not be decreased under any use environmental conditions and sufficient heat resistance will be attained, and thereby to prevent the occurrence of problems such as bonding failure, coloration and foaming during processing at high temperatures, as well as separation, coloration, foaming and leaching due to decomposition during use at high temperatures, the content of the functional group-containing monomer in the fluorine-containing polymer (E) is preferably 0.01 mol% or more and 5 mol% or less of all the units that are polymerized, and is more preferably 0.015 mol% or more and 4 mol% or less, and still more preferably 0.02 mol% or more and 3 mol% or less. When the content of the functional group-containing monomer in the fluorine-containing polymer (E) is in the above range, the fluorine-containing polymer (E) can be produced without a decrease in polymerization rate and also attains excellent adhesion with respect to a mating material that is stacked therewith. The functional group-containing monomer may be added in any manner without limitation, and may be added at once at the start of the polymerization or may be added continuously during the polymerization. The manner of the addition is selected appropriately in accordance with the decomposition reactivity of the polymerization initiator and the polymerization temperature. Preferably, the consumption of the functional group-containing monomer by the polymerization is compensated for by continuous or intermittent addition of the corresponding amount of the monomer to the polymerization vessel so that the concentration of the functional group-containing monomer will be kept in the aforementioned range.

Incidentally, 0.01 mol% of the functional group-containing monomer in the fluorine-containing polymer (E) relative to all the units that are polymerized corresponds to 100 functional group residues in the fluorine-containing polymer (E) per $1 \times 10^6$ carbon atoms in the main chain of the fluorine-containing polymer (E). 5 mol% of the functional group-containing monomer relative to all the units in the fluorine-containing polymer (E) corresponds to 50,000 functional group residues in the fluorine-containing polymer (E) per $1 \times 10^6$ carbon atoms in the main chain of the fluorine-containing polymer (E). As long as the content described above is satisfied, the polymer may be a mixture of the fluorine-containing polymer having the functional groups, and the fluorine-containing polymer having no functional groups.

In the method (ii) in which the functional groups are introduced to molecular terminals of the fluorine-containing polymer with use of a polymerization initiator or the like, the functional groups are introduced to one or both ends of the molecular chain of the fluorine-containing polymer. The functional groups that are introduced to terminals are preferably carbonate groups and/or haloformyl groups.

The carbonate groups introduced as terminal groups in the fluorine-containing polymer (E) are generally groups having an -OC(=O)O- bond, and specifically have a structure represented by -OC(=O)O-R$^{10}$ group [R$^{10}$ is a hydrogen atom, an organic group (for example, a C$_{1-20}$ alkyl group, or a C$_{2-20}$ alkyl group having an ether bond) or a Group I, II or VII element], such as -OC(=O)OCH$_3$, -OC(=O)OC$_3$H$_7$, -OC(=O)OC$_8$H$_{17}$ and -OC(=O)OCH$_2$CH$_2$OCH$_2$CH$_3$. The haloformyl groups specifically have a structure represented by -COZ [Z is a halogen element], such as -COF and -COCl. These may be used singly, or two or more may be used in combination.

The carbonate groups may be introduced to the molecular terminals of the polymer by various methods using a polymerization initiator and/or a chain transfer agent. From the point of view of performances such as economic efficiency, heat resistance and chemical resistance, a method using a peroxide, in particular, a peroxycarbonate and/or a peroxyester as a polymerization initiator may be preferably adopted. By this method, the groups that are introduced to the polymer terminals are the carbonyl groups derived from the peroxide, for example, carbonate groups derived from the peroxycarbonate, ester groups derived from the peroxyester, haloformyl groups or the like converted from these functional groups. Of the polymerization initiators, peroxycarbonates are more preferably used for the reasons that the polymerization temperature can be decreased and the initiation reaction does not involve side reactions.

The haloformyl groups may be introduced to the molecular terminals of the polymer by various methods. For example, the fluorine-containing polymer described above which has the carbonate groups at the terminals may be heated to thermally decompose (decarboxylate) the carbonate groups.

Examples of the peroxycarbonates include diisopropyl peroxycarbonate, di-n-propyl peroxycarbonate, t-butyl peroxyisopropyl carbonate, t-butyl peroxymethacryloyloxyethyl carbonate, bis(4-t-butylcyclohexyl) peroxydicarbonate and di-2-ethylhexyl peroxydicarbonate. These may be used singly, or two or more may be used in combination.

The amount in which the peroxycarbonate is used is variable depending on the type (such as the composition) and molecular weight of the target polymer, polymerization conditions and the type of the initiator that is used. To control the polymerization rate appropriately and to ensure sufficient polymerization rate, the amount is preferably 0.05 parts by mass or more and 20 parts by mass or less per 100 parts by mass of the whole polymer obtained by the polymerization, and is more preferably 0.1 part by mass or more and 10 parts by mass or less. The content of the carbonate groups at the molecular terminals of the polymer may be controlled by controlling the polymerization conditions. The polymerization initiator may be added in any manner without limitation, and may be added at once at the start of the polymerization or may be added continuously during the polymerization. The manner of the addition is selected appropriately in accordance with the decomposition reactivity of the polymerization initiator and the polymerization temperature.

To ensure sufficient interlayer adhesion and to make sure that the interlayer adhesion will not be decreased under any use environmental conditions and sufficient heat resistance will be attained, and thereby to prevent the occurrence of problems such as bonding failure, coloration and foaming during processing at high temperatures, as well as separation, coloration, foaming and leaching due to decomposition during use at high temperatures, the number of the terminal functional groups per $10^6$ carbon atoms in the main chain of the fluorine-containing polymer (E) is preferably 150 or more and 3,000 or less, more preferably 200 or more and 2,000 or less, and still more preferably 300 or more and 1,000 or less. As long as the number of the functional groups described above is satisfied, the polymer may be a mixture of the fluorine-containing polymer having the functional groups, and the fluorine-containing polymer having no functional groups.

As described above, the fluorine-containing polymer (E) is a fluorine-containing polymer in which a functional group reactive to an amino group is introduced. As described earlier, the fluorine-containing polymer (E) having such functional groups still exhibits the superior characteristics inherent to fluorine-containing polymers such as heat resistance, water resistance, low frictional properties, chemical resistance, weather resistance, antifouling properties and barrier properties to chemical medias, and is advantageous in terms of productivity and cost.

By virtue of the functional groups reactive to amino groups being introduced in the molecular chains, the polymer used in a multilayer tube can attain direct and superior interlayer adhesion with respect to various materials which are bondable therewith with no or only insufficient interlayer adhesion, without special treatments such as surface treatment and/or application of adhesive resins.

The fluorine-containing polymer (E) may contain various fillers such as inorganic powders, glass fibers, carbon fibers, metal oxides and carbon in accordance with purpose or use application as long as its performance is not deteriorated. Besides fillers, other additives such as pigments and ultraviolet absorbers may be added appropriately. Besides such additives, other resins such as fluororesins and thermoplastic resins, synthetic rubbers and the like can also be added. The addition of these components makes it possible, for example, to improve mechanical characteristics and weather resistance, to impart design, to prevent static generation, and to improve formability.

[Multilayer tube]

The first embodiment of the multilayer tube includes at least two layers of Layer (a) and Layer (b), and at least one pair of Layer (a) and Layer (b) is disposed adjacent to each other.

In the multilayer tube of the first embodiment, it is essential to contain Layer (b), whereby chemical liquid-barrier property, in particular, hydrocarbon barrier property of the multilayer tube become good. Further, since Layer (a) and Layer (b) are being disposed adjacent to each other, it is possible to obtain a multilayer tube excellent in interlayer adhesiveness and durability thereof.

As the preferred embodiment, in at least one pair of the above-mentioned adjacent Layer (a) and Layer (b), Layer (b) is disposed inside Layer (a). For example, in the case of a three-layer structure in which one layer of an intermediate layer Layer (b) is contained between the outermost layer Layer (a) and the innermost layer Layer (a), as the adjacent Layer (a) and Layer (b), there are a combination of the outermost layer Layer (a) and the intermediate layer Layer (b), and a combination of the innermost layer Layer (a) and the intermediate layer Layer (b), and in the two combinations, Layer (b) is disposed inside Layer (a) in at least one of them so that it satisfies the above-mentioned requirement.

As the more preferred embodiment, Layer (a) is disposed at the outermost layer of the multilayer tube. By being disposed Layer (a) at the outermost layer, it is possible to obtain a multilayer tube excellent in chemical resistance and flexibility.

As the further preferred embodiment, Layer (a) is disposed at the innermost layer of the multilayer tube. By being disposed Layer (a) at the innermost layer, it is possible to obtain a multilayer tube excellent in deteriorated fuel resistant property. That is, it is further preferable that a multilayer tube in which Layer (a) is disposed at the outermost layer and the innermost layer.

Also, in the multilayer tube of the first embodiment, when a conductive layer containing the aliphatic polyamide composition (A) to which a conductive filler is further contained is disposed at the innermost layer of the multilayer tube, it is excellent in deteriorated fuel resistant property, and when it is used as a fuel piping tube, it is possible to prevent sparks generated by internal friction of the fuel circulating in the pipe or friction with the pipe wall of the same from igniting the fuel. In such a case, the layer containing the aliphatic polyamide composition (A) having no conductivity is disposed outside the conductive layer, whereby it is possible to achieve both low temperature impact resistance and conductivity, and it is also economically advantageous.

Conductivity refers, for example, when a flammable fluid such as gasoline continuously contacts with an insulating material such as a resin, there is a possibility of catching fire by accumulating static electricity, to a state to have electric characteristics of such an extent that this static electricity does not accumulate. According to the above, it is possible to prevent from explosion due to static electricity generated at the time of conveying a fluid such as a fuel, etc.

The conductive filler includes all fillers added for imparting conductive property to the resin, and may be mentioned granular, flake, and fibrous filler, etc.

The granular filler may be mentioned carbon black, graphite, etc. The flake filler may be mentioned aluminum flake, nickel flake, nickel-coated mica, etc. Also, the fibrous filler may be mentioned carbon fiber, carbon-coated ceramic fiber, carbon whisker, carbon nanotube, and metal fiber such as aluminum fiber, copper fiber, brass fiber, stainless fiber, etc. These may be used singly, or two or more may be used in combination. Among these, carbon nanotube and carbon black are preferable.

Carbon nanotubes are referred to as hollow carbon fibrils, the fibrils have an outer region comprising an essentially continuous multi-layer of regularly arranged carbon atoms, and an inner hollow region, and are essentially cylindrical fibrils in which each layer and the hollow region are disposed substantially concentrically about the cylindrical axis of the fibrils. Further, it is preferable that the regularly arranged carbon atoms in the outer region is a graphite state, and a diameter of the hollow region is 2 nm or more and 20 nm or less. An outer diameter of the carbon nanotube is preferably 3.5 nm or more and 70 nm or less from the viewpoints of imparting sufficient dispersibility into the resin and good conductivity of the obtainable resin molded product, and more preferably 4 nm or more and 60 nm or less. An aspect ratio (ratio of length/outer diameter) of the carbon nanotube is preferably 5 or more, more preferably 100 or more, and further preferably 500 or more. By satisfying the aspect ratio, a conductive network can be easily formed, and excellent conductivity can be exhibited by adding a small amount.

The carbon black includes all carbon blacks generally used for imparting conductivity, and the preferable carbon black may be mentioned acetylene black obtained by incomplete combustion of an acetylene gas, furnace black such as Ketjenblack, etc., obtained by furnace type incomplete combustion of crude oil as a raw material, oil black, naphthalene black, thermal black, lamp black, channel black, roll black, disc black, etc., but are not limited thereto. These may be used singly, or two or more may be used in combination. Among these, acetylene black and furnace black are more preferable.

Also, as the carbon black, various carbon powders having different characteristics such as its particle size, surface area, DBP oil absorption, ash content, etc., are produced. There is no limitation in the characteristics of the carbon black, and a material having good chain-state structure and large aggregation density is preferable. Formulation of the carbon black with a large amount is not preferable in the viewpoint of impact resistance, and from the viewpoints of obtaining excellent electric conductivity with a smaller amount, an average particle diameter is preferably 500 nm or less, more preferably 5 nm or more and 100 nm or less, further preferably 10 nm or more and 70 nm or less, a surface area (BET method) is preferably 10 $m^2/g$ or more, more preferably 30 $m^2/g$ or more, further preferably 50 $m^2/g$ or more, further, DBP (dibutyl phthalate) oil absorption is preferably 50 ml/100 g or more, more preferably 100 ml/100 g or more, and further preferably 150 ml/100 g or more. Also, the ash content is preferably 0.5% by mass or less, and more preferably 0.3% by mass or less. The DBP oil absorption herein mentioned is a value measured by the method determined in ASTM D-2414. Also, a content of volatile matter of the carbon black is preferably less than 1% by mass.

These conductive fillers may be subjected to surface treatment with a surface treatment agent such as a titanate-based, aluminum-based, silane-based, etc. Further, it is also possible to use those granulated for improving workability of melt-kneading.

A content of the conductive filler varies depending on the kind of the conductive filler to be used, so that it cannot be unconditionally specified, but from the viewpoints of a balance with conductivity, fluidity, mechanical strength, etc., it is generally preferably 3 parts by mass or more and 30 parts by mass or less based on 100 parts by mass of the aliphatic polyamide composition (A).

Also, such a conductive filler preferably has a surface specific resistance value of the melt extrudate of $10^8$ $\Omega$/square or less from the viewpoint of obtaining sufficient antistatic performance, and more preferably $10^6$ $\Omega$/square or less. However, addition of the conductive filler tends to cause deterioration of strength and fluidity. Therefore, it is desirable that the content of the conductive filler be as small as possible if a target conductivity level is obtained.

In the multilayer tube of the first embodiment, a thickness of each layer is not particularly limited, and can be adjusted according to the kind of the polymer constituting each layer, the total number of whole layers in the multilayer tube, use, etc., and the thicknesses of the respective layers are determined in consideration of characteristics such as chemical liquid-barrier property, low temperature impact resistance, flexibility, etc., of the multilayer tube. In general, thicknesses of Layer (a) and Layer (b) are each preferably 3% or more and 90% or less based on the thickness of the whole multilayer tube. In consideration of the balance between low temperature impact resistance and chemical liquid-barrier property, the thickness of Layer (b) is more preferably 5% or more and 30% or less based on the thickness of the whole multilayer tube, and further preferably 7% or more and 20% or less.

Also, the total number of layers in the multilayer tube of the first embodiment is not particularly limited as long as it is at least two layers having Layer (a) and Layer (b). Further, the multilayer tube of the first embodiment may further comprise one layer or two or more layers of a layer(s) containing other thermoplastic resin(s) other than the two layers of Layer (a) and Layer (b) in order to obtain a multilayer tube to which a further function(s) is/are provided or which is economically advantageous. The number of the layers of the multilayer tube of the first embodiment is two or more layers, and is preferably eight layers or less judging from the mechanism of the tube producing apparatus, and more preferably three layers or more and seven layers or less.

The second embodiment of the multilayer tube contains at least three layers in which Layer (c) is further contained in the first embodiment, and at least one pair of Layer (b) and Layer (c) are disposed adjacent to each other.

In the multilayer tube of the second embodiment, it is essential to contain Layer (b), whereby chemical liquid-barrier property, in particular, hydrocarbon barrier property of the multilayer tube become good. In addition, it is also essential to contain Layer (c), whereby mechanical properties become good. Further, by being disposed Layer (a) and Layer (b), and Layer (b) and Layer (c) adjacent to each other, it is possible to obtain a multilayer tube excellent in interlayer adhesiveness and durability thereof.

As the preferred embodiment, Layer (c) is disposed inside Layer (b). Also, Layer (b) is disposed between Layer (a) and Layer (c). In this case, other layer(s) may be disposed between Layer (a) and Layer (b), and Layer (b) and Layer (c) as long as at least one pair of Layer (a) and Layer (b) are adjacent to each other, and Layer (b) and Layer (c) are adjacent to each other.

As the more preferred embodiment, Layer (a) is disposed at the outermost layer of the multilayer tube. By disposing Layer (a) at the outermost layer, it is possible to obtain a multilayer tube having excellent chemical resistance and flexibility.

As the further preferred embodiment, Layer (c) is disposed at the innermost layer of the multilayer tube. By disposing Layer (c) at the innermost layer, it is possible to suppress elution of a low molecular weight component(s) such as the monomer and the oligomer, etc., due to contact with alcohol-containing gasoline. That is, a multilayer tube in which Layer (a) is disposed at the outermost layer, Layer (b) is disposed at the intermediate layer, and Layer (c) is disposed at the innermost layer is further preferable.

Also, in the multilayer tube of the second embodiment, when a conductive layer containing the polyamide composition (C) to which a conductive filler is further contained is disposed at the innermost layer of the multilayer tube, it is excellent in elution resistance of the monomer and the oligomer, and when it is used as a fuel piping tube, it is possible to prevent sparks generated by internal friction of the fuel circulating in the pipe or friction with the pipe wall of the same from igniting the fuel. In such a case, the layer containing the polyamide composition (C) having no conductivity is disposed outside the conductive layer, whereby it is possible to achieve both low temperature impact resistance and conductivity, and it is also economically advantageous.

Details of conductivity and the conductive filler are the same as those of the multilayer tube of the first embodiment.

A content of the conductive filler varies depending on the kind of the conductive filler to be used, so that it cannot be unconditionally specified, but from the viewpoints of a balance with conductivity, fluidity, mechanical strength, etc., it is generally preferably 3 parts by mass or more and 30 parts by mass or less based on 100 parts by mass of the aliphatic polyamide composition (C).

Also, such a conductive filler preferably has a surface specific resistance value of the melt extrudate of $10^8$ $\Omega$/square or less from the viewpoint of obtaining sufficient antistatic performance, and more preferably $10^6$ $\Omega$/square or less. However, addition of the conductive filler tends to cause deterioration of strength and fluidity. Therefore, it is desirable that the content of the conductive filler be as small as possible if a target conductivity level is obtained.

In the multilayer tube of the second embodiment, a thickness of each layer is not particularly limited, and can be adjusted according to the kind of the polymer constituting each layer, the total number of whole layers in the multilayer tube, use, etc., and the thicknesses of the respective layers are determined in consideration of characteristics such as chemical liquid-barrier property, low temperature impact resistance, flexibility, etc., of the multilayer tube. In general, the thicknesses of Layer (a), Layer (b) and Layer (c) are each preferably 3% or more and 90% or less based on the whole thickness of the multilayer tube. In consideration of the balance between low temperature impact resistance and chemical liquid-barrier property, the thickness of Layer (b) is each more preferably 5% or more and 30% or less based on the whole thickness of the multilayer tube, and further preferably 7% or more and 20% or less.

Also, the total number of layers in the multilayer tube of the second embodiment is not particularly limited as long as it is at least three layers having Layer (a), Layer (b) and Layer (c). Further, the multilayer tube of the second embodiment may further comprise one layer or two or more layers of a layer(s) containing other thermoplastic resin(s) other than the three layers of Layer (a), Layer (b) and Layer (c) in order to obtain a multilayer tube to which a further function(s) is/are provided or which is economically advantageous. The number of the layers of the multilayer tube of the second embodiment is three or more layers, and is preferably eight layers or less judging from the mechanism of the tube producing apparatus, and more preferably four layers or more and seven layers or less.

The third embodiment of the multilayer tube contains at least three layers (when Layer (c) is provided, then at least four layers) in which Layer (d) is further contained in the first embodiment or the second embodiment.

In the multilayer tube of the third embodiment, it is essential to contain Layer (b) and Layer (d), whereby chemical liquid-barrier property, in particular, hydrocarbon barrier property of the multilayer tube become good. Further, by disposing Layer (a) and Layer (b) adjacent to each other, it is possible to obtain a multilayer tube excellent in interlayer adhesiveness and durability thereof.

As the preferred embodiment, Layer (d) is disposed inside Layer (a). Also, Layer (b) is disposed between Layer (a) and Layer (d). In this case, Layer (b) may be disposed so as to adjacent to Layer (d), and other layer(s) may be disposed between Layer (a) and Layer (b), and between Layer (b) and Layer (d) as long as at least one pair of Layer (a) and Layer (b) are adjacent to each other.

As the more preferred embodiment, Layer (a) and/or Layer (c) is/are disposed between Layer (b) and Layer (d). In this case, Layer (a) and/or Layer (c) may be disposed so as to adjacent to Layer (d), and other layer(s) than Layer (a) and/or Layer (c) may be disposed between Layer (b) and Layer (d) as long as at least one pair of Layer (a) and Layer (b) are adjacent to each other, and Layer (b) and Layer (c) are adjacent to each other.

As the further preferred embodiment, Layer (a) is disposed at the outermost layer of the multilayer tube. By disposing Layer (a) at the outermost layer, it is possible to obtain a multilayer tube having excellent chemical resistance and flexibility. Also, Layer (d) is disposed at the innermost layer of the multilayer tube. By disposing Layer (d) at the innermost layer, a multilayer tube excellent in deteriorated fuel resistant property can be obtained, and it is also possible to suppress elution of a low molecular weight component(s) such as the monomer and the oligomer, etc., due to contact with alcohol-containing gasoline. That is, a multilayer tube in which Layer (a) is disposed at the outermost layer, Layer (b) is disposed at the intermediate layer, Layer (a) is disposed at the inner layer, and Layer (d) is disposed at the innermost layer, or a multilayer tube in which Layer (a) is disposed at the outermost layer, Layer (b) is disposed at the intermediate layer, Layer (c) is disposed at the inner layer, and Layer (d) is disposed at the innermost layer is further preferable.

Also, in the multilayer tube of the third embodiment, when the conductive layer containing the semi-aromatic polyamide composition (D) to which a conductive filler is further contained is disposed at the innermost layer of the multilayer tube, it is excellent in chemical liquid-barrier property, deteriorated fuel resistant property, and elution resistance of the monomer and the oligomer, and when it is used as a fuel piping tube, it is possible to prevent sparks generated by internal friction of the fuel circulating in the pipe or friction with the pipe wall of the same from igniting the fuel. In such a case, the layer containing the semi-aromatic polyamide composition (D) having no conductivity is disposed outside the conductive layer, whereby it is possible to achieve both low temperature impact resistance and conductivity, and it is also economically advantageous.

Details of conductivity and conductive filler are the same as those of the multilayer tube of the first embodiment.

A content of the conductive filler varies depending on the kind of the conductive filler to be used, so that it cannot be unconditionally specified, but from the viewpoints of a balance with conductivity, fluidity, mechanical strength, etc., it is generally preferably 3 parts by mass or more and 30 parts by mass or less based on 100 parts by mass of the semi-aromatic polyamide composition (D).

Also, such a conductive filler preferably has a surface specific resistance value of the melt extrudate of $10^8$ $\Omega$/square or less from the viewpoint of obtaining sufficient antistatic performance, and more preferably $10^6$ $\Omega$/square or less. However, addition of the conductive filler tends to cause deterioration of strength and fluidity. Therefore, it is desirable that the content of the conductive filler be as small as possible if a target conductivity level is obtained.

In the multilayer tube of the third embodiment, a thickness of each layer is not particularly limited, and can be adjusted according to the kind of the polymer constituting each layer, the total number of whole layers in the multilayer tube, use, etc., and the thicknesses of the respective layers are determined in consideration of characteristics such as chemical liquid-barrier property, low temperature impact resistance, flexibility, etc., of the multilayer tube. In general, the thicknesses of Layer (a), Layer (b) and Layer (d) or Layer (a), Layer (b), Layer (c) and Layer (d) are each preferably 3% or more and 90% or less based on the whole thickness of the multilayer tube. In consideration of the balance between low temperature impact resistance and chemical liquid-barrier property, the thicknesses of Layer (b) and Layer (d) are each more preferably 5% or more and 50% or less based on the whole thickness of the multilayer tube, and further preferably 7% or more and 30% or less.

Also, the total number of layers in the multilayer tube of the third embodiment is not particularly limited as long as it is at least three layers (when Layer (c) is provided, then at least four layers) having Layer (a), Layer (b) and Layer (d) or Layer (a), Layer (b), Layer (c) and Layer (d). Further, the multilayer tube of the third embodiment may further comprise one layer or two or more layers of a layer(s) containing other thermoplastic resin(s) other than the three layers of Layer (a), Layer (b) and Layer (d), or other than the four layers of Layer (a), Layer (b), Layer (c) and Layer (d) in order to obtain a multilayer tube to which a further function(s) is/are provided or which is economically advantageous. The number of the layers of the multilayer tube of the third embodiment is three or more layers (when Layer (c) is provided, four or more layers), and is preferably eight layers or less judging from the mechanism of the tube producing apparatus, and more preferably four layers or more and seven layers or less.

The fourth embodiment of the multilayer tube contains at least three layers (when Layer (c) is provided, then at least four layers) in which Layer (e) is further contained in the first embodiment or the second embodiment.

In the multilayer tube of the fourth embodiment, it is essential to contain Layer (b), whereby chemical liquid-barrier property, in particular, hydrocarbon barrier property of the multilayer tube become good. In addition, it is also essential to contain Layer (e), whereby chemical liquid-barrier property, in particular, alcohol barrier property and barrier property to high concentration alcohol-containing gasoline of the multilayer tube become good. Further, by disposing Layer (a) and Layer (b) adjacent to each other, it is possible to obtain a multilayer tube excellent in interlayer adhesiveness and durability thereof.

As the preferred embodiment, Layer (e) is disposed inside Layer (a). Also, Layer (b) is disposed between Layer (a) and Layer (e). In this case, Layer (b) may be disposed so as to adjacent to Layer (e), and other layer(s) may be disposed between Layer (a) and Layer (b), and between Layer (b) and Layer (e) as long as at least one pair of Layer (a) and Layer (b) are adjacent to each other.

As the more preferred embodiment, Layer (a) and/or Layer (c) is/are disposed between Layer (b) and Layer (e). In this case, Layer (a) and/or Layer (c) may be disposed so as to adjacent to Layer (e), and other layer(s) than Layer (a) and/or Layer (c) may be disposed between Layers (b) and (e) as long as at least one pair of Layer (a) and Layer (b) are adjacent to each other and Layer (b) and Layer (c) are adjacent to each other.

As the further preferred embodiment, Layer (a) is disposed at the outermost layer of the multilayer tube. By disposing Layer (a) at the outermost layer, it is possible to obtain a multilayer tube having excellent chemical resistance and flexibility. Also, Layer (e) is disposed at the innermost layer of the multilayer tube. By disposing Layer (e) at the innermost layer, a multilayer tube excellent in deteriorated fuel resistant property can be obtained, and it is also possible to suppress elution of a low molecular weight component(s) such as the monomer and the oligomer, etc., due to contact with alcohol-containing gasoline. That is, a multilayer tube in which Layer (a) is disposed at the outermost layer, Layer (b) is disposed at the intermediate layer, Layer (a) is disposed at the inner layer, and Layer (e) is disposed at the innermost layer, or a multilayer tube in which Layer (a) is disposed at the outermost layer, Layer (b) is disposed at the intermediate layer, Layer (c) is disposed at the inner layer, and Layer (e) is disposed at the innermost layer is further preferable.

Also, in the multilayer tube of the fourth embodiment, when a conductive layer containing a fluorine-containing polymer composition to which a conductive filler is contained is further disposed at the innermost layer of the multilayer tube, chemical liquid-barrier property, deteriorated fuel resistant property, and it is excellent in elution resistance of the monomer and the oligomer, and when it is used as a fuel piping tube, it is possible to prevent sparks generated by internal friction of the fuel circulating in the pipe or friction with the pipe wall of the same from igniting the fuel. In such a case, the layer containing the fluorine-containing polymer having no conductivity is disposed outside the conductive layer, whereby it is possible to achieve both low temperature impact resistance and conductivity, and it is also economically advantageous. Further, the fluorine-containing polymer herein mentioned includes a fluorine-containing polymer (E) in which a functional group having reactivity to an amino group is introduced into the molecular chain, and also includes a fluorine-containing polymer having no functional group which has reactivity to an amino group mentioned later.

Details of conductivity and conductive filler are the same as those of the multilayer tube of the first embodiment.

A content of the conductive filler varies depending on the kind of the conductive filler to be used, so that it cannot be unconditionally specified, but from the viewpoints of a balance with conductivity, fluidity, mechanical strength, etc., it is generally preferably 3 parts by mass or more and 30 parts by mass or less based on 100 parts by mass of the fluorine-containing polymer.

Also, such a conductive filler preferably has a surface specific resistance value of the melt extrudate of $10^8$ $\Omega$/square or less from the viewpoint of obtaining sufficient antistatic performance, and more preferably $10^6$ $\Omega$/square or less. However, addition of the conductive filler tends to cause deterioration of strength and fluidity. Therefore, it is desirable that the content of the conductive filler be as small as possible if a target conductivity level is obtained.

In the multilayer tube of the fourth embodiment, a thickness of each layer is not particularly limited, and can be adjusted according to the kind of the polymer constituting each layer, the total number of whole layers in the multilayer tube, use, etc., and the thicknesses of the respective layers are determined in consideration of characteristics such as chemical liquid-barrier property, low temperature impact resistance, flexibility, etc., of the multilayer tube. In general, the thicknesses of Layer (a), Layer (b) and Layer (e) or Layer (a), Layer (b), Layer (c) and Layer (e) are each preferably 3% or more and 90% or less based on the whole thickness of the multilayer tube. In consideration of the balance between low temperature impact resistance and chemical liquid-barrier property, the thicknesses of Layer (b) and Layer (e) are each more preferably 5% or more and 50% or less based on the whole thickness of the multilayer tube, and further preferably 7% or more and 30% or less.

Also, the total number of layers in the multilayer tube of the fourth embodiment is not particularly limited as long as it is at least three layers (when Layer (c) is provided, then at least four layers) having Layer (a), Layer (b) and Layer (e), or Layer (a), Layer (b), Layer (c) and Layer (e). Further, the multilayer tube of the fifth embodiment may further comprise one layer or two or more layers of a layer(s) containing other thermoplastic resin(s) other than the three layers of Layer (a), Layer (b) and Layer (e), or the four layers of Layer (a), Layer (b), Layer (c) and Layer (e) in order to obtain a multilayer tube to which a further function(s) is/are provided or which is economically advantageous. The number of the layers of the multilayer tube of the fourth embodiment is three or more layers (when Layer (c) is provided, then four layer or more), and is preferably eight layers or less judging from the mechanism of the tube producing apparatus, and more preferably four layers or more and seven layers or less.

The fifth embodiment of the multilayer tube contains at least four layers (when Layer (c) is provided, then at least five layers) in which Layer (e) is further contained in the third embodiment, and at least one pair of Layer (d) and Layer (e) are disposed adjacent to each other.

In the multilayer tube of the fifth embodiment, it is essential to contain Layer (b) and Layer (d), whereby chemical liquid-barrier property, in particular, hydrocarbon barrier property of the multilayer tube become good. It is also essential to contain Layer (e), whereby chemical liquid-barrier property, in particular, alcohol barrier property and barrier property to high-concentration alcohol-containing gasoline of the multilayer tube become good. Further, by disposing Layer (a) and Layer (b), and Layer (d) and Layer (e) adjacent to each other, it is possible to obtain a multilayer tube excellent in interlayer adhesiveness and durability thereof.

As the preferred embodiment, in the at least one pair of the above-mentioned Layer (d) and Layer (e) adjacent to each other, Layer (e) is disposed inside Layer (d). Also, Layer (b) is disposed between Layer (a) and Layer (d). In this case, Layer (b) may be disposed so as to adjacent to Layer (d), and other layer(s) may be disposed between Layer (a) and Layer (b), and between Layer (b) and Layer (d) as long as at least one pair of Layer (a) and Layer (b) are adjacent to each other, and Layer (d) and Layer (e) are adjacent to each other.

As the more preferred embodiment, Layer (a) and/or Layer (c) is/are disposed between Layer (b) and Layer (d). In this case, Layer (a) and/or Layer (c) may be disposed so as to adjacent to Layer (d), and other layer(s) than Layer (a) and/or Layer (c) may be disposed between Layer (b) and Layer (d) as long as at least one pair of Layer (a) and Layer (b) are adjacent to each other, Layer (b) and Layer (c) are adjacent to each other, and Layer (d) and Layer (e) are adjacent to each other.

As the further preferred embodiment, Layer (a) is disposed at the outermost layer of the multilayer tube. By disposing Layer (a) at the outermost layer, it is possible to obtain a multilayer tube having excellent chemical resistance and flexibility. Also, Layer (e) is disposed at the innermost layer of the multilayer tube. By disposing Layer (e) at the innermost layer, a multilayer tube excellent in deteriorated fuel resistant property can be obtained, and it is also possible to suppress elution of a low molecular weight component(s) such as the monomer and the oligomer, etc., due to contact with alcohol-containing gasoline. That is, a multilayer tube in which Layer (a) is disposed at the outermost layer, Layer (b) is disposed at the outer layer, Layer (a) is disposed at the intermediate layer, Layer (d) is disposed at the inner layer, and Layer (e) is disposed at the innermost layer, or a multilayer tube in which Layer (a) is disposed at the outermost layer, Layer (b) is disposed at the outer layer, Layer (c) is disposed at the intermediate layer, Layer (d) is disposed at the inner layer, and Layer (e) is disposed at the innermost layer is further preferable.

Also, in the multilayer tube of the fifth embodiment, when a conductive layer containing a fluorine-containing polymer composition to which a conductive filler is further contained is disposed at the innermost layer of the multilayer tube, it is excellent in chemical liquid-barrier property, deteriorated fuel resistant property, and elution resistance of the monomer and the oligomer, and when it is used as a fuel piping tube, it is possible to prevent sparks generated by internal friction of the fuel circulating in the pipe or friction with the pipe wall of the same from igniting the fuel. In such a case, the layer containing the fluorine-containing polymer having no conductivity is disposed outside the conductive layer, whereby it is possible to achieve both low temperature impact resistance and conductivity, and it is also economically advantageous. Further, the fluorine-containing polymer herein mentioned includes a fluorine-containing polymer (E) in which a functional group having reactivity to an amino group is introduced into the molecular chain, and also includes a fluorine-containing polymer having no functional group which has reactivity to an amino group mentioned above.

Details of conductivity and conductive filler are the same as those of the multilayer tube of the first embodiment.

A content of the conductive filler varies depending on the kind of the conductive filler to be used, so that it cannot be unconditionally specified, but from the viewpoints of a balance with conductivity, fluidity, mechanical strength, etc., it is generally preferably 3 parts by mass or more and 30 parts by mass or less based on 100 parts by mass of the fluorine-containing polymer.

Also, such a conductive filler preferably has a surface specific resistance value of the melt extrudate of $10^8$

Ω/square or less from the viewpoint of obtaining sufficient antistatic performance, and more preferably $10^6$ Ω/square or less. However, addition of the conductive filler tends to cause deterioration of strength and fluidity. Therefore, it is desirable that the content of the conductive filler be as small as possible if a target conductivity level is obtained.

In the multilayer tube of the fifth embodiment, a thickness of each layer is not particularly limited, and can be adjusted according to the kind of the polymer constituting each layer, the total number of whole layers in the multilayer tube, use, etc., and the thicknesses of the respective layers are determined in consideration of characteristics such as chemical liquid-barrier property, low temperature impact resistance, flexibility, etc., of the multilayer tube. In general, the thicknesses of Layer (a), Layer (b), Layer (d) and Layer (e) or Layer (a), Layer (b), Layer (c), Layer (d) and Layer (e) are each preferably 3% or more and 90% or less based on the whole thickness of the multilayer tube. In consideration of the balance between low temperature impact resistance and chemical liquid-barrier property, the thicknesses of Layer (b), Layer (d) and Layer (e) are each more preferably 5% or more and 50% or less based on the whole thickness of the multilayer tube, and further preferably 7% or more and 40% or less.

Also, the total number of layers in the multilayer tube of the fifth embodiment is not particularly limited as long as it is at least four layers (when Layer (c) is provided, then at least five layers) having Layer (a), Layer (b), Layer (d) and Layer (e) or Layer (a), Layer (b), Layer (c), Layer (d) and Layer (e). Further, the multilayer tube of the fifth embodiment may further comprise one layer or two or more layers of a layer(s) containing other thermoplastic resin(s) other than the four layers of Layer (a), Layer (b), Layer (d) and Layer (e), or the five layers of Layer (a), Layer (b), Layer (c), Layer (d) and Layer (e) in order to obtain a multilayer tube to which a further function(s) is/are provided or which is economically advantageous. The number of the layers of the multilayer tube of the fifth embodiment is four or more layers (when Layer (c) is provided, then five or more layers), and is preferably eight layers or less judging from the mechanism of the tube producing apparatus, and more preferably five layers or more and seven layers or less.

Examples of the additional thermoplastic resins in the multilayer tubes of the first aspect, the second aspect, the third aspect, the forth aspect and the fifth aspect include polyamide resins, except for the polyamides (A1), the polyamides (A2), the semi-aromatic polyamides (D1) and the semi-aromatic polyamides (D2), such as polymetaxylylene terephthalamide (polyamide MXDT), polymetaxylylene isophthalamide (polyamide MXDI), polymetaxylylene hexahydroterephthalamide (polyamide MXDT(H)), polymetaxylylene naphthalamide (polyamide MXDN), polyparaxylylene terephthalamide (polyamide PXDT), polyparaxylylene isophthalamide (polyamide PXDI), polyparaxylylene hexahydroterephthalamide (polyamide PXDT(H)), polyparaxylylene naphthalamide (polyamide PXDN), polyparaphenylene terephthalamide (PPTA), polyparaphenylene isophthalamide (PPIA), polymetaphenylene terephthalamide (PMTA), polymetaphenylene isophthalamide (PMIA), poly(2,6-naphthalenedimethylene terephthalamide) (polyamide 2,6-BANT), poly(2,6-naphthalenedimethylene isophthalamide) (polyamide 2,6-BANI), poly(2,6-naphthalenedimethylene hexahydroterephthalamide) (polyamide 2,6-BANT(H)), poly(2,6-naphthalenedimethylene naphthalamide) (polyamide 2,6-BANN), poly(1,3-cyclohexanedimethylene adipamide) (polyamide 1,3-BAC6), poly(1,3-cyclohexanedimethylene suberamide (polyamide 1,3-BAC8), poly(1,3-cyclohexanedimethylene azelamide) (polyamide 1,3-BAC9), poly(1,3-cyclohexanedimethylene sebacamide) (polyamide 1,3-BAC10), poly(1,3-cyclohexanedimethylene dodecamide) (polyamide 1,3-BAC12), poly(1,3-cyclohexanedimethylene terephthalamide) (polyamide 1,3-BACT), poly(1,3-cyclohexanedimethylene isophthalamide) (polyamide 1,3-BACI), poly(1,3-cyclohexanedimethylene hexahydroterephthalamide) (polyamide 1,3-BACT(H)), poly(1,3-cyclohexanedimethylene naphthalamide) (polyamide 1,3-BACN), poly(1,4-cyclohexanedimethylene adipamide) (polyamide 1,4-BAC6), poly(1,4-cyclohexanedimethylene suberamide) (polyamide 1,4-BAC8), poly(1,4-cyclohexanedimethylene azelamide) (polyamide 1,4-BAC9), poly(1,4-cyclohexanedimethylene sebacamide) (polyamide 1,4-BAC10), poly(1,4-cyclohexanedimethylene dodecamide) (polyamide 1,4-BAC12), poly(1,4-cyclohexanedimethylene terephthalamide) (polyamide 1,4-BACT), poly(1,4-cyclohexanedimethylene isophthalamide) (polyamide 1,4-BACI), poly(1,4-cyclohexanedimethylene hexahydroterephthalamide) (polyamide 1,4-BACT(H)), poly(1,4-cyclohexanedimethylene naphthalamide) (polyamide 1,4-BACN), poly(4,4'-methylenebiscyclohexylene adipamide) (polyamide PACM6), poly(4,4'-methylenebiscyclohexylene suberamide) (polyamide PACM8), poly(4,4'-methylenebiscyclohexylene azelamide) (polyamide PACM9), poly(4,4'-methylenebiscyclohexylene sebacamide) (polyamide PACM10), poly(4,4'-methylenebiscyclohexylene dodecamide) (polyamide PACM12), poly(4,4'-methylenebiscyclohexylene tetradecamide) (polyamide PACM14), poly(4,4'-methylenebiscyclohexylene hexadecamide) (polyamide PACM16), poly(4,4'-methylenebiscyclohexylene octadecamide) (polyamide PACM18), poly(4,4'-methylenebiscyclohexylene terephthalamide) (polyamide PACMT), poly(4,4'-methylenebiscyclohexylene isophthalamide) (polyamide PACMI), poly(4,4'-methylenebiscyclohexylene hexahydroterephthalamide) (polyamide PACMT(H)), poly(4,4'-methylenebiscyclohexylene naphthalamide) (polyamide PACMN), poly(4,4'-methylenebis(2-methyl-cyclohexylene) adipamide) (polyamide MACM6), poly(4,4'-methylenebis(2-methyl-cyclohexylene) suberamide) (polyamide MACM8), poly(4,4'-methylenebis(2-methyl-cyclohexylene) azelamide) (polyamide MACM9), poly(4,4'-methylenebis(2-methyl-cyclohexylene) sebacamide) (polyamide MACM10), poly(4,4'-methylenebis(2-methyl-cyclohexylene) dodecamide) (polyamide MACM12), poly(4,4'-methylenebis(2-methyl-cyclohexylene) tetradecamide) (polyamide MACM14), poly(4,4'-methylenebis(2-methyl-cyclohexylene) hexadecamide) (polyamide MACM 16), poly(4,4'-methylenebis(2-methyl-cyclohexylene) octadecamide) (polyamide MACM18), poly(4,4'-methylenebis(2-methyl-cyclohexylene) terephthalamide) (polyamide MACMT), poly(4,4'-methylenebis(2-methyl-cyclohexylene) isophthalamide) (polyamide MACMI), poly(4,4'-methylenebis(2-methyl-cyclohexylene) hexahydroterephthalamide) (polyamide MACMT(H)), poly(4,4'-methylenebis(2-methyl-cyclohexylene) naphthalamide) (polyamide MACMN), poly(4,4'-propylenebiscyclohexylene adipamide) (polyamide PACP6), poly(4,4'-propylenebiscyclohexylene suberamide) (polyamide PACP8), poly(4,4'-propylenebiscyclohexylene azelamide) (polyamide PACP9), poly(4,4'-propylenebiscyclohexylene sebacamide) (polyamide PACP10), poly(4,4'-propylenebiscyclohexylene dodecamide) (polyamide PACP12), poly(4,4'-propylenebiscyclohexylene tetradecamide) (polyamide PACP14), poly(4,4'-propylenebiscyclohexylene hexadecamide) (polyamide PACP16), poly(4,4'-propylenebiscyclohexylene octadecamide) (polyamide PACP18), poly(4,4'-propylenebiscyclohexylene terephthalamide) (polyamide PACPT), poly(4,4'-propylenebiscyclohexylene isophthalamide) (polyamide PACPI), poly(4,4'-propylenebiscyclohexylene hexahydroterephthalamide) (polyamide PACPT(H)), poly(4,4'-propylenebiscyclohexylene naphthalamide) (polyamide PACPN), polyisophorone adipamide (polyamide IPD6), polyisophorone suberamide (polyamide IPD8), polyisophorone azelamide (polyamide IPD9), polyisophorone sebacamide (polyamide IPD10), polyisophorone dodecamide (polyamide IPD12), polyisophorone terephthalamide (polyamide IPDT), polyisophorone isophthalamide (polyamide IPDI), polyisophorone hexahydroterephthalamide (polyamide IPDT(H)), polyisophorone naphthalamide (polyamide IPDN), polytetramethylene hexahydroterephthalamide (polyamide 4T(H)), polypentamethylene hexahydroterephthalamide (polyamide 5T(H)), polyhexamethylene hexahydroterephthalamide (polyamide 6T(H)), poly(2-methylpentamethylene hexahydroterephthalamide) (polyamide M5T(H)), polynonamethylene hexahydroterephthalamide (polyamide 9T(H)), poly(2-methyloctamethylene hexahydroterephthalamide) (polyamide M8T(H)), polytrimethylhexamethylene hexahydroterephthalamide (polyamide TMHT(H)), polydecamethylene hexahydroterephthalamide (polyamide 10T(H)), polyundecamethylene hexahydroterephthalamide (polyamide 1 1T(H)), polydodecamethylene hexahydroterephthalamide (polyamide 12T(H)), and copolymers constituted by a plurality of monomers selected from the monomers constituting the above polyamides and/or selected from the monomers constituting the polyamides (A1) and the polyamides (A2). These may be used singly, or two or more may be used in combination.

Examples further include fluorine-containing polymers which contain no functional groups reactive to amino groups, such as polyvinylidene fluoride (PVDF), polyvinyl fluoride (PVF), polytetrafluoroethylene (PTFE), polychlorotrifluoroethylene (PCTFE), tetrafluoroethylene/perfluoro(alkyl vinyl ether) copolymer (PFA), tetrafluoroethylene/hexafluoropropylene copolymer (FEP), tetrafluoroethylene/perfluoro(alkyl vinyl ether)/hexafluoropropylene copolymer, ethylene/tetrafluoroethylene copolymer (ETFE), ethylene/tetrafluoroethylene/hexafluoropropylene copolymer (EFEP), vinylidene fluoride/tetrafluoroethylene copolymer, vinylidene fluoride/hexafluoropropylene copolymer, vinylidene fluoride/perfluoro(alkyl vinyl ether) copolymer, tetrafluoroethylene/hexafluoropropylene/vinylidene fluoride copolymer (THV), vinylidene fluoride/perfluoro(alkyl vinyl ether)/tetrafluoroethylene copolymer, tetrafluoroethylene/hexafluoropropylene/vinylidene fluoride/perfluoro(alkyl vinyl ether) copolymer, ethylene/chlorotrifluoroethylene copolymer (ECTFE), chlorotrifluoroethylene/tetrafluoroethylene copolymer, vinylidene fluoride/chlorotrifluoro ethylene copolymer, chlorotrifluoroethylene/perfluoro(alkyl vinyl ether) copolymer, chlorotrifluoroethylene/hexafluoropropylene copolymer, chlorotrifluoroethylene/tetrafluoroethylene/hexafluoropropylene copolymer, chlorotrifluoroethylene/tetrafluoroethylene/vinylidene fluoride copolymer, chlorotrifluoroethylene/perfluoro(alkyl vinyl ether)/tetrafluoroethylene copolymer (CPT), chlorotrifluoroethylene/perfluoro(alkyl vinyl ether)/hexafluoropropylene copolymer, chlorotrifluoroethylene/tetrafluoroethylene/hexafluoropropylene/perfluoro(alkyl vinyl ether) copolymer, chlorotrifluoroethylene/tetrafluoroethylene/vinylidene fluoride/perfluoro(alkyl vinyl ether) copolymer, chlorotrifluoroethylene/tetrafluoroethylene/vinylidene fluoride/hexafluoropropylene copolymer, and chlorotrifluoroethylene/tetrafluoroethylene/vinylidene fluoride/perfluoro(alkyl vinyl ether)/hexafluoropropylene copolymer. These may be used singly, or two or more may be used in combination.

When the multilayer tube has the layer (e), low-temperature impact resistance, barrier properties to chemical medias and environmental stress crack resistance can be satisfied at the same time by arranging a layer which includes a fluoropolymer having no functional groups reactive to an amino group, inside the layer (e). This approach is also advantageous in economic efficiency.

Examples further include polyolefin resins such as high-density polyethylene (HDPE), medium-density polyethylene (MDPE), low-density polyethylene (LDPE), linear low-density polyethylene (LLDPE), ultrahigh-molecular weight polyethylene (UHMWPE), polypropylene (PP), polybutene (PB), polymethylpentene (TPX), ethylene/propylene copolymer (EPR), ethylenelbutene copolymer (EBR), ethylene/vinyl acetate copolymer (EVA), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); polystyrene resins such as polystyrene (PS), syndiotactic polystyrene (SPS), methyl methacrylate/styrene copolymer (MS), methyl methacrylate/styrene/butadiene copolymer (MBS), styrenelbutadiene copolymer (SBR), styrene/isoprene copolymer (SIR), styrene/isoprene/butadiene copolymer (SIBR), styrene/butadiene/styrene copolymer (SBS), styrene/isoprene/styrene copolymer (SIS), styrene/ethylene/butylene/styrene copolymer (SEBS) and styrene/ethylene/propylene/styrene copolymer (SEPS); the polyolefin resins and the polystyrene resins described above which further contain functional groups, for example, carboxyl groups such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid and endobicyclo-[2.2.1]-5-heptene-2,3-dicarboxylic acid, and metal salts thereof (Na, Zn, K, Ca and Mg) and acid anhydride groups thereof such as maleic anhydride, itaconic anhydride, citraconic anhydride and endobicyclo-[2.2.1]-5-heptene-2,3-dicarboxylic anhydride, and epoxy groups such as glycidyl acrylate, glycidyl methacrylate, glycidyl ethacrylate, glycidyl itaconate and glycidyl citraconate; polyester resins such as polybutylene terephthalate (PBT), polyethylene terephthalate (PET), polyethylene isophthalate (PEI), polyethylene terephthalate/ethylene isophthalate) copolymer (PET/PEI), polytrimethylene terephthalate (PTT), polycyclohexanedimethylene terephthalate (PCT), polyethylene naphthalate (PEN), polybutylene naphthalate (PEN), polyarylate (PAR), liquid crystal polyester (LCP), polylactic acid (PLA) and polyglycolic acid (PGA); polyether resins such as polyacetal (POM) and polyphenylene ether (PPO); polysulfone resins such as polysulfone (PSU), polyethersulfone (PESU) and polyphenylsulfone (PPSU); polythioether resins such as polyphenylenesulfide (PPS) and polythioethersulfone (PTES); polyketone resins such as polyketone (PK), polyether ketone (PEK), polyether ether ketone (PEEK), polyether ketone ketone (PEKK), polyether ether ether ketone (PEEEK), polyether ether ketone ketone (PEEKK), polyether ketone ketone ketone (PEKKK) and polyether ketone ether ketone ketone (PEKEKK); polynitrile resins such as polyacrylonitrile (PAN), polymethacrylonitrile, acrylonitrile/styrene copolymer (AS), methacrylonitrile/styrene copolymer, acrylonitrile/butadiene/styrene copolymer (ABS) and acrylonitrile/butadiene copolymer (NBR); polymethacrylate resins such as polymethyl methacrylate (PMMA) and polyethyl methacrylate (PEMA); polyvinyl ester resins such as polyvinyl acetate (PVAc); polyvinyl chloride resins such as polyvinylidene chloride (PVDC), polyvinyl chloride (PVC), vinyl chloride/vinylidene chloride copolymer and vinylidene chloride/methyl acrylate copolymer; cellulose resins such as cellulose acetate and cellulose butyrate; polycarbonate resins such as polycarbonate (PC); polyimide resins such as thermoplastic polyimide (TPI), polyether imide, polyester imide, polyamide imide (PAI) and polyester amide imide; thermoplastic polyurethane resins; polyamide elastomers, polyurethane elastomers and polyester elastomers. These may be used singly, or two or more may be used in combination.

Incidentally, in the multilayer tubes of the first embodiment, the second embodiment, the third embodiment, the fourth embodiment and the fifth embodiment, from the viewpoints of melt stability and molding stability, among the above-mentioned exemplified thermoplastic resins, it is preferable to use the polyester resin, polyamide resin, polythioether resin, polyolefin resin or fluorine-containing polymer having no functional group each having a melting point of 290°C or lower.

Substrates other than thermoplastic resins may be coated, with examples including paper, metallic materials, non-stretched, uniaxially stretched or biaxially stretched plastic films or sheets, woven fabrics, nonwoven fabrics, metallic fibers and wood. Examples of the metallic materials include metals such as aluminum, iron, copper, nickel, gold, silver, titanium, molybdenum, magnesium, manganese, lead, tin, chromium, beryllium, tungsten and cobalt, metal compounds, and alloys composed of two or more kinds of these metals, for example, alloyed steels such as stainless steel, aluminum alloys, copper alloys such as brass and bronze, and nickel alloys. These may be used singly, or two or more may be used in combination.

Some example methods for the production of the multilayer tubes are a method in which the materials are melt-extruded using as many extruders as the number of layers or the number of materials and are stacked simultaneously inside or outside the die (co-extrusion method), and a method in which a single-layer tube is produced beforehand or a multilayer tube is produced beforehand by the aforementioned method, and then resins are sequentially integrated or coated therewith, optionally via an adhesive, onto the outer surface (coating method). The multilayer tube is preferably produced by the co-extrusion method in which the materials are coextruded in a molten state and are thermally fused together (melt bonded) to form a stacked tube in a single step. That is, the method for the production of the multilayer tube preferably includes performing co-extrusion.

n the case where the multilayer tube to be obtained is of a complicated shape or, after its formation, is heated and bent into a final product, the target product may be obtained in such a manner that the multilayer tube that has been formed is heat treated at a temperature lower than the lowest melting point of the melting points of the resins that constitute the tube for 0.01 hour to 10 hours, thereby removing residual strain from the product.

The multilayer tube may have a wavy region. The wavy region is a region having a wave shape, a bellows shape, an accordion shape, a corrugated shape or the like. The wavy region may extend over the entire length of the multilayer tube or may be provided locally anywhere in an appropriate region. The wavy region may be easily formed by first forming a straight tube and then molding the tube to give it a predetermined wave shape or the like. The wavy region offers impact absorption and facilitates attachment. Further, the tube may be made into an L-shape, a U-shape or the like by, for example, fitting the tubes with necessary components such as connectors or by a bending process.

In consideration of flying stone damage, wear with other components and flame resistance, the outer periphery of the multilayer tube produced as described above may be entirely or partly provided with a solid or sponge-like protective member (protector) composed of, for example, natural rubber (NR), butadiene rubber (BR), isoprene rubber (IR), butyl rubber (IIR), chloroprene rubber (CR), carboxylated butadiene rubber (XBR), carboxylated chloroprene rubber (XCR), epichlorohydrin rubber (ECO), acrylonitrile butadiene rubber (NBR), hydrogenated acrylonitrile butadiene rubber (HNBR), carboxylated acrylonitrile butadiene rubber (XNBR), mixture of NBR and polyvinyl chloride, acrylonitrile isoprene rubber (NIR), chlorinated polyethylene rubber (CM), chlorosulfonated polyethylene rubber (CSM), ethylene propylene rubber (EPR), ethylene propylene diene rubber (EPDM), ethylene vinyl acetate rubber (EVM), NBR-EPDM mixed rubber, acrylic rubber (ACM), ethylene acrylic rubber (AEM), acrylate butadiene rubber (ABR), styrene butadiene rubber (SBR), carboxylated styrene butadiene rubber (XSBR), styrene isoprene rubber (SIR), styrene isoprene butadiene rubber (SIBR), urethane rubber, silicone rubber (MQ, VMQ), fluororubber (FKM, FFKM), fluorosilicone rubber (FVMQ) or a thermoplastic elastomer such as of vinyl chloride type, olefin type, ester type, urethane type or amide type. The protective member may be rendered porous like a sponge by a known technique. By being made porous, the protective member attains lightness in weight and superior thermal insulating properties, and further allows the material cost to be reduced. Glass fibers or the like may be added to improve the strength of the protective member. While the shape of the protective member is not particularly limited, the protective member is usually a tubular member or a block-like member having a recess for accommodating the multilayer tube. In the case of a tubular member, the multilayer tube may be inserted into a separately fabricated tubular member, or a tubular member may be extruded onto the multilayer tube so as to coat the multilayer tube intimately. The multilayer tube and the protective member may be formed into a single-piece structure by applying as required an adhesive onto the inner face or the recess of the protective member, inserting or fitting the multilayer tube thereinto, and bringing the two into tight contact. Reinforcement with metals or the like may be added.

The outer diameter of the multilayer tube is not limited and is designed in light of the flow rates of chemicals (for example, fuel such as alcohol-containing gasoline) or the like so that the tube is thick enough to avoid an increase in chemical permeation and to attain a burst pressure of usual tubes, and also enough to allow for such an extent of flexibility that the tube can be attached easily and exhibits good vibration resistance during use. Preferably, the outer diameter is 4 mm or more and 300 mm or less, the inner diameter is 3 mm or more and 250 mm or less, and the wall thickness is 0.5 mm or more and 25 mm or less.

The multilayer tubes of the present embodiments may be used in various applications, including mechanical components such as automobile parts, internal combustion engine applications and power tool housings, and further industrial materials, manufacturing industry materials, electric and electronic components, medical applications, food applications, home and office supplies, construction material-related components and furniture parts.

Also, the multilayer tube is excellent in chemical liquid-barrier property, so that it is suitable as a chemical liquid conveying tube. As the chemical liquid, there may be mentioned, for example, aromatic hydrocarbon solvents such as benzene, toluene, xylene, alkylbenzene, etc.; alcohols such as methanol, ethanol, propanol, butanol, pentanol, ethylene glycol, propylene glycol, diethylene glycol, phenol, cresol, polyethylene glycol, polypropylene glycol, polyalkylene glycol, etc.; phenol solvents; ether solvents such as dimethyl ether, dipropyl ether, methyl-t-butyl ether, ethyl-t-butyl ether, dioxane, tetrahydrofuran, polyol esters, polyvinyl ethers; etc.; halo-olefins such as HFC-23 (trifluoromethane), HFC-32 (difluoromethane), HFC-41 (fluoromethane), HFC-123 (2,2-dichloro-1,1,1-trifluoroethane), HFC-125 (1,1,1,2,2-pentafluoroethane), HFC-134 (1,1,2,2-tetrafluoroethane), HFC-134a (1,1,1,2-tetrafluoroethane), HFC-143 (1,1,2-trifluoroethane), HFC-143a(1,1,1-trifluoroethane), HFC-152(1,2-difluoroethane), HFC-152a (1,1-difluoroethane), HFC-161 (fluoroethane), HFC-227ea (1,1,1,2,3,3,3-heptafluoropropane), HFC-227ca (1,1,2,2,3,3,3-heptafluoropropane), HFC-236fa (1,1,1,3,3,3-hexafluoropropane), HFC-236ea (1,1,1,2,3,3-hexafluoropropane), HFC-236cb (1,1,1,2,2,3-hexafluoropropane), HFC-236ca (1,1,2,2,3,3-hexafluoropropane), HFC-245ca (1,1,2,2,3-pentafluoropropane), HFC-245ea (1,1,2,3,3-pentafluoropropane), HFC-245eb (1,1,1,2,3-pentafluoropropane), HFC-245fa (1,1,1,3,3-pentafluoropropane), HFC-245cb (1,1,1,2,2-pentafluoropropane), HFC-254eb (1,1,1,2-tetrafluoropropane), HFC-254cb (1,1,2,2-tetrafluoropropane), HFC-254ca (1,2,2,3-tetrafluoropropane), HFC-263fb (1,1,1-trifluoropropane), HFC-263ca (1,2,2-trifluoropropane), HFC-272fb (1,1-difluoropropane), HFC-272ea (1,2-difluoropropane), HFC-272fa (1,3-difluoropropane), HFC-272ca (2,2-difluoropropane), HFC-281fa (1-fluoropropane), HFC-281ea (2-fluoropropane), HFC-329p (1,1,1,2,2,3,3,4,4-nonafluorobutane), HFC-329mmz (1,1,1,3,3,3-hexafluoro-2-(trifluoro)propane), HFC-338mf (1,1,1,3,3,4,4,4-octafluorobutane), HFC-338mcc (1,1,1,2,2,3,4,4-octafluorobutane), HFC-338pcc (1,1,2,2,3,3,4,4-octafluorobutane), HFC-347s (1,1,1,2,2,3,3-heptafluorobutane), HFC-365mfc (1,1,1,3,3-pentafluorobutane), HFC-4310mee (1,1,1,2,3,4,4,5,5,5-decafluoropentane), HFC-1123 (trifluoroethylene), HFC-1132a (1,2-difluoroethylene), FC-1216(hexafluoro-1-propene), HFC-1223 (3,3,3-trifluoro-1-propene), HFC-1225zc (1,1,3,3,3-pentafluoro-1-propene), HFC-1225ye (1,2,3,3,3-pentafluoro-1-propene), HFC-1225yc (1,1,2,3,3-pentafluoro-1-propene), HFC-1232xf (3,3-difluoro-1-propene), HFC-1234ye (1,2,3,3-tetrafluoro-1-propene), HFC-1234ze (1,3,3,3-tetrafluoro-1-propene), HFC-1234yf (2,3,3,3-tetrafluoro-1-propene), HFC-1234yc (1,1,2,3-tetrafluoro-1-propene), HFC-1234zc (1,1,3,3-tetrafluoro-1-propene), HFC-1243yf (2,3,3-trifluoro-1-propene), HFC-1243zc (1,1,3-trifluoro-1-propene), HFC-1243ye (1,2,3-trifluoro-1-propene), HFC-1243ze (1,3,3-trifluoro-1-propene), HFC-1243zf (3,3,3-trifluoro-1-propene), HFC-1243yc (1,1,2-trifluoro-1-propene), HFC-1261yf (2-fluoropropene), FC-1318my (1,1,1,2,3,4,4,4-octafluoro-2-butene), FC-1318cy (1,1,2,3,3,4,4,4-octafluoro-1-butene), HFC-1327my (1,1,1,2,4,4,4-heptafluoro-2-butene), HFC-1327ye (1,2,3,3,4,4,4-heptafluoro-1-butene), HFC-1327py (1,1,1,2,3,4,4-heptafluoro-2-butene), HFC-1327et (1,3,3,3-tetrafluoro-2-(trifluoromethyl)-1-propene), HFC-1327cz (1,1,3,3,4,4,4-heptafluoro-1-butene), HFC-1327cye (1,1,2,3,4,4,4-heptafluoro-1-butene), HFC-1327cyc (1,1,2,3,3,4,4-heptafluoro-1-butene), HFC-1336yf (2,3,3,4,4,4-hexafluoro-1-butene), HFC-1336ze (1,3,3,4,4,4-hexafluoro-1-butene), HFC-1336eye (1,2,3,4,4,4-hexafluoro-1-butene), HFC-1336eyc (1,2,3,3,4,4-hexafluoro-1-butene), HFC-1336pyy (1,1,2,3,4,4-hexafluoro-2-butene), HFC-1336pz (1,1,1,2,4,4-hexafluoro-2-butene), HFC-1336mzy (1,1,1,3,4,4-hexafluoro-2-butene), HFC-1336mzz (1,1,1,4,4,4-hexafluoro-2-butene), HFC-1336qc (1,1,2,3,3,4-hexafluoro-1-butene), HFC-1336pe (1,1,2,3,4,4-hexafluoro-1-butene), HFC-1336ft (3,3,3-trifluoro-2-(trifluoromethyl)-1-propene), HFC-1345qz (1,1,1,2,4-pentafluoro-2-butene), HFC-1345mzy (1,1,1,3,4-pentafluoro-2-butene), HFC-1345fz (3,3,4,4,4-pentafluoro-1-butene), HFC-1345mzz (1,1,1,4,4-pentafluoro-2-butene), HFC-1345sy (1,1,1,2,3-pentafluoro-2-butene), HFC-1345fyc (2,3,3,4,4-pentafluoro-1-butene), HFC-1345pyz(1,1,2,4,4-pentafluoro-2-butene), HFC-1345cyc (1,1,2,3,3-pentafluoro-1-butene), HFC-1345pyy (1,1,2,3,4-pentafluoro-2-butene), HFC-1345eyc (1,2,3,3,4-pentafluoro-1-butene), HFC-1345ctm (1,1,3,3,3-pentafluoro-2-methyl-1-propene), HFC-1345ftp (2-(difluoromethyl)-3,3,3-trifluoro-1-propene), HFC1345fye (2,3,4,4,4-pentafluoro-1-butene), HFC-1345eyf (1,2,4,4,4-pentafluoro-1-butene), HFC-1345eze (1,3,4,4,4-pentafluoro-1-butene), HFC-1345ezc (1,3,3,4,4-pentafluoro-1-butene), HFC-1345eye (1,2,3,4,4-pentafluoro-1-butene), HFC-1354fzc (3,3,4,4-tetrafluoro-1-butene), HFC-1354ctp (1,1,3,3-tetrafluoro-2-methyl-1-propene), HFC-1354etm (1,3,3,3-tetrafluoro-2-methyl-1-propene), HFC-1354tfp (2-(difluoromethyl)-3,3-difluoro-1-propene), HFC-1354my (1,1,1,2-tetrafluoro-2-butene), HFC-1354mzy (1,1,1,3-tetrafluoro-2-butene), FC-141-10myy (1,1,1,2,3,4,4,5,5,5-decafluoro-2-pentene), FC-141-10cy (1,1,2,3,3,4,4,5,5,5-decafluoro-1-pentene) HFC-1429mzt (1,1,1,4,4,4-hexafluoro-2-(trifluoromethyl)-2-butene), HFC-1429myz (1,1,1,2,4,4,5,5,5-nonafluoro-2-pentene), HFC-1429mzy (1,1,1,3,4,4,5,5,5-nonafluoro-2-pentene), HFC-1429eyc (1,2,3,3,4,4,5,5,5-nonafluoro-1-pentene), HFC-1429czc (1,1,3,3,4,4,5,5,5-nonafluoro-1-pentene), HFC-1429cycc (1,1,2,3,3,4,4,5,5-nonafluoro-1-pentene), HFC-1429pyy (1, 1, 2,3,4,4,5,5,5 -nonafluoro-2-pentene), HFC-1429myyc (1,1,1,2,3,4,4,5,5-nonafluoro-2-pentene), HFC-1429myye (1,1,1,2,3,4,5,5,5-nonafluoro-2-pentene), HFC-1429eyym (1,2,3,4,4,4-hexafluoro-3-(trifluoromethyl)-1-butene), HFC-1429cyzm (1,1,2,4,4,4-hexafluoro-3-(trifluoromethyl)-1-butene), HFC-1429mzt (1,1,1,4,4,4-hexafluoro-2-(trifluoromethyl)-2-butene), HFC-1429czym (1,1,3,4,4,4-hexafluoro-3-(trifluoromethyl)-1-butene), HFC-1438fy (2,3,3,4,4,5,5,5-octafluoro-1-pentene), HFC-1438eycc (1,2,3,3,4,4,5,5-octafluoro-1-pentene), HFC-1438ftmc (3,3,4,4,4-pentafluoro-2-(trifluoromethyl)-1 -butene), HFC-1438czzm (1,1,4,4,4-pentafluoro-3-(trifluoromethyl)-1-butene), HFC-1438ezym (1,3,4,4,4-pentafluoro-3-(trifluoromethyl)-1-butene), HFC-1438ctmf (1,1,4,4,4-pentafluoro-2-(trifluoromethyl)-1-butene), HFC-1447fzy (3,4,4,4-tetrafluoro-3-(trifluoromethyl)-1 -butene), HFC-1447fz (3,3,4,4,5,5,5-heptafluoro-1-pentene), HFC-1447fycc (2,3,3,4,4,5,5-heptafluoro-1-pentene), HFC-1447cz (1,1,3,3,5,5,5-heptafluoro-1-pentene), HFC-1447mytm (1,1,1,2,4,4,4 -heptafluoro-3-methyl-2-butene), HFC-1447fyz (2,4,4,4-tetrafluoro-3-(trifluoromethyl)-1-butene), HFC-1447ezz (1,4,4,4-tetrafluoro-3 - (trifluoromethyl)-1 -butene), HFC-1447qzt (1,4,4,4-tetrafluoro-2-(trifluoromethyl)-2-butene), HFC-1447syt (2,4,4,4-tetrafluoro-2-(trifluoromethyl)-2-butene), HFC-1456szt (3-(trifluoromethyl)-4,4,4-trifluoro-2-butene), HFC-1456szy (3,4,4,5,5,5 -hexafluoro-2-pentene), HFC-1456mstz (1,1,1,4,4,4-hexafluoro-2-methyl-2-butene), HFC-1456fzce (3,3,4,5,5,5-hexafluoro-1-pentene), HFC-1456ftmf (4,4,4-trifluoro-2-(trifluoromethyl)-1 -butene), FC-151-12c (1,1,2,3,3,4,4,5,5,6,6,6-dodeca-1-hexene, perfluoro-1-hexene), FC-151-12mcy (1,1,1,2,2,3,4,5,5,6,6,6-dodeca-3-hexene, perfluoro-3-hexene), FC-151-12mmtt (1,1,1,4,4,4-hexafluoro-2,3-bis(trifluoromethyl)-2-butene), FC-151-12mmzz (1,1,1,2,3,4,5,5,5-nonafluoro-4-(trifluoromethyl)-2-pentene), HFC-152-11mmtz (1,1,1,4,4,5,5,5-octafluoro 2-(trifluoromethyl)-2-pentene), HFC-152-11 mmyyz (1, 1, 1,3,4,5,5,5-octafluoro-4-(trifluoromethyl)-2-pentene), HFC-152-11mmyyz (1, 1, 1,3,4,5,5,5-octafluoro-4-(trifluoromethyl)-2-pentene), HFC-1549fz(PFBE) (3,3,4,4,5,5,6,6,6-nonafluoro-1-hexene, perfluorobutyl), HFC-1549fztmm (4,4,4-trifluoro-3,3-bis(trifluoromethyl)-1-butene), HFC-1549mmtts (1,1,1,4,4,4-hexafluoro-3-methyl-2-(trifluoromethyl)-2-butene), HFC-1549fycz (2,3,3,5,5,5-hexafluoro-4-(trifluoromethyl)-1-pentene), HFC-1549myts (1,1,1,2,4,4,5,5,5-nonafluoro-3-methyl-2-pentene), HFC-1549rnzzz (1,1,1,5,5,5-hexafluoro-4-(trifluoromethyl)-2-pentene), HFC-1558szy (3,4,4,5,5,6,6,6-octafluoro-2-hexene), HFC-1558fzccc (3,3,4,4,5,5,6,6-octafluoro-2-hexene), HFC-1558mmtzc (1,1,1,4,4-pentafluoro-2-(trifluoromethyl)-2-pentene), HFC-1558ftmf (4,4,5,5,5-pentafluoro-2-(trifluoromethyl)-1-pentene), HFC-1567fts (3,3,4,4,5,5,5-heptafluoro-2-methyl-1-pentene), HFC-1567szz (4,4,5,5,6,6,6-heptafluoro-2-hexene), HFC-1567fzfc (4,4,5,5,6,6,6-heptafluoro-1-hexene), HFC-1567sfyy (1,1,1,2,2,3,4-heptafluoro-3-hexene), HFC-1567fzfy (4,5,5,5-tetrafluoro-4-(trifluoromethyl)-1-pentene), HFC-1567myzzm (1,1,1,2,5,5,5-heptafluoro-4-methyl-2-pentene), HFC-1567mmtyf (1,1,1,3-tetrafluoro-2-(trifluoromethyl)-2-pentene), FC-161-14myy (1, 1, 1,2,3,4,4,5,5,6,6,7,7,7-tetradecafluoro-2-heptene), FC-161-14mcyy (1,1,1,2,2,3,4,5,5,6,6,7,7,7-tetradecafluoro-2-heptene), HFC-162-13mzy (1,1,1,3,4,4,5,5,6,6,7,7,7-tridecafluoro-2-heptene), HFC162-13myz (1,1,1,2,4,4,5,5,6,6,7,7,7-tridecafluoro-2-heptene), HFC-162-13mczy (1,1,1,2,2,4,5,5,6,6,7,7,7-tridecafluoro-3-heptene), HFC-162-13mcyz (1,1,1,2,2,3,5,5,6,6,7,7,7-tridecafluoro-3-heptene), CFC-11 (fluorotrichloromethane), CFC-12 (dichlorodifluoromethane), CFC-114 (1,1,2,2-tetrafluoro-1,2-dichloroethane), CFC-114a (1,1,1,2-tetrafluoro-2,2-dichloroethane), CFC-115 (1,1,1,2,2-pentafluoro-2-dichloroethane), HCFC-21 (dichlorofluoromethane), HCFC-22 (chlorodifluoromethane), HCFC-122 (1,1,2-trichloro-2,2-difluoroethane), HCFC-123 (1,1,1-trifluoro-2,2-dichloroethane), HCFC-124 (1,1,1,2-tetrafluoro-2-chloroethane), HCFC-124a (1,1,2,2-tetrafluoro-2-chloroethane), HCFC-132 (dichlorodifluoroethane), HCFC-133a (1,1,1-trifluoro-2-chloroethane), HCFC-141b (1,1-dichloro-1-fluoroethane), HCFC-142 (1,1-difluoro-2-chloroethane), HCFC-142b (1,1-difluoro-1-chloroethane), HCFC-225ca (3,3-dichloro-1,1,2,2,2-pentafluoropropane), HCFC-225cb (1,3-dichloro-1,1,2,2,3-pentafluoropropane), HCFC-240db (1,1,1,2,3-pentachloropropane), HCFC-243db (1,1,1-trifluoro-2,3-dichloropropane), HCFC-243ab (1,1,1-trifluoro-2,2-dichloropropane), HCFC-244eb (1,1,1,2-tetrafluoro-3-chloropropane), HCFC-244bb (1,1,1,2-tetrafluoro-2-chloropropane), HCFC-244db (1, 1, 1,3-tetrafluoro-2-chloropropane), HCFC-I111 (1,1,2-trichloro-2-fluoroethylene), HCFC-1113 (1,1,2-trifluoro-2-chloroethylene), HCFC-1223xd (3,3,3-trifluoro-1,2-dichloropropene), HCFC-1224xe (1,3,3,3-tetrafluoro-2-chloropropene), HCFC-1232xf (3,3-difluoro-1,3-dichloropropene), HCFC-1233xf (3,3,3-trifluoro-2-chloropropene), HCFC-1233zd (3,3,3-trifluoro-1-chloropropene),

and a mixture of these, etc.; ketone solvents such as acetone, methyl ethyl ketone, diethyl ketone, acetophenone, etc.; mineral oils, silicone oils, natural paraffins, naphthenes, synthetic paraffins, polyalfaolefins, etc., gasoline, kerosene, diesel gasoline, rapeseed oil methyl ester, soybean oil methyl ester, palm oil methyl ester, coconuts oil methyl ester, gas liquefied oil (Gas To Liquid: GTL), coal liquefied oil (Coal To Liquid: CTL), biomass liquefied oil (Biomass To Liquid: BTL), alcohol-containing gasoline, ethyl-t-butyl ether blend oxygen-containing gasoline, amine-containing gasoline, sour gasoline, compressed natural gas (CNG), liquefied petroleum gas (LPG), liquefied hydrocarbon gas (LHG), liquefied natural gas (LNG), dimethyl ether for fuel (DME), castor oil-based brake fluid, glycol ether-based brake fluid, boric acid ester-based brake fluid, brake fluid for an extremely cold region, silicone oil-based brake fluid, mineral oil-based brake fluid, power steering oil, hydrogen sulfide-containing oil, windshield washer liquid, engine coolant, urea solution, medicines, inks, paints, etc. The multilayer tube is suitable as a tube for conveying the chemical liquid,
and specifically mentioned fuel tubes such as feed tubes, return tubes, evaporator tubes, fuel filler tubes, ORVR tubes, reserve tubes, bent tubes, etc., hydrogen conveying tubes for fuel cells, oil tubes, oil drilling tubes, pneumatic tubes, hydraulic tubes, clutch tubes, brake tubes, brake negative pressure tubes, suspension tubes, air tubes, turbo air tubes, air duct tubes, blow-by tubes, EGR valve control tubes, tubes for windshield washer liquid, engine coolant (LLC) tubes, reservoir tank tubes, urea solution conveying tubes, cooler tubes for cooling water, refrigerant, etc., tubes for air conditioner refrigerant, heater tubes, radiator tubes, road heating tubes, floor heating tubes, tubes for infrastructure supply, tubes for fire extinguishers and fire extinguishing equipments, tubes for cooling equipments for medical use, tubes for spreading inks and paints, and other chemical liquid tubes. In particular, it is suitable for fuel tubes. That is, the present invention includes use of the multilayer tube as a fuel tube.

EXAMPLES

In the following, the present invention is specifically explained by showing Examples and Comparative Examples, but the present invention is not limited by these.
Incidentally, analyses and measurement methods of properties in Examples and Comparative Examples, and materials used in Examples and Comparative Examples are shown.
Properties of the polyamide were measured by the following methods.

[Relative viscosity]

It was measured in accordance with JIS K-6920 in 96% sulfuric acid with a polyamide concentration of 1% under the condition of a temperature of 25°C.

[Concentration of terminal amino groups of polyamide (A1) and polyamide (A2)]

In an Erlenmeyer flask equipped with a stop cock was charged a predetermined amount of a polyamide sample, 40 mL of a previously prepared solvent phenol/- methanol (volume ratio: 9/1) was added thereto, and then, the mixture was stirred and dissolved with a magnetic stirrer, then, titration was carried out with 0.05N hydrochloric acid using thymol blue as an indicator to obtain the terminal amino group concentration.

[Concentration of terminal carboxyl groups of polyamide (A1) and polyamide (A2)]

In a three-necked pear-shaped flask is charged a predetermined amount of a polyamide sample, 40 mL of benzyl alcohol is added thereto, and then, the flask is immersed in an oil bath set at 180°C under a nitrogen stream. The mixture was stirred and dissolved by a stirring motor attached to the upper portion, titration was carried out with a 0.05N sodium hydroxide solution using phenolphthalein as an indicator to obtain the terminal carboxyl group concentration.

[Total concentration of carboxyl group and acid anhydride group of elastomer polymer (A3)]

In a three-necked pear-shaped flask was charged a predetermined amount of an elastomer polymer sample, dissolved in 170 mL of toluene, and further 30 mL of ethanol was added thereto, and using the prepared sample solution, titration was carried out with a 0.1N KOH ethanol solution using phenolphthalein as an indicator to obtain the total concentration of the carboxyl group and the acid anhydride group.

Also, the characteristics of the fluorine-containing polymer were measured by the following methods.

[Content of each constitutional unit of fluorine-containing polymer]

A ratio (mol%) of each constitutional unit was obtained by melt NMR (nuclear magnetic resonance) analysis and fluorine content analysis.

[Content of constitutional unit based on itaconic anhydride (IAH)]

The fluorine-containing polymer was subjected to press-molding to obtain a film having 200 $\mu$m. In the infrared absorption spectrum, an absorption peak derived from a constitutional unit based on IAH in the fluorine-containing polymer appears at 1870 cm$^{-1}$. The absorbance of the absorption peak was measured, and the ratio (mol%) of the constitutional unit based on IAH was determined using the molar absorption coefficient of IAH of 237 L/(mol·cm) obtained from the model compound.

[Content of constitutional unit based on 5-norbornene-2,3-dicarboxylic acid anhydride (NAH)]

The fluorine-containing polymer was subjected to press-molding to obtain a film having 200 $\mu$m. In the infrared absorption spectrum, an absorption peak derived from a constitutional unit based on NAH in the fluorine-containing polymer appears at 1778 cm$^{-1}$. The absorbance of the absorption peak was measured, and the ratio (mol%) of the constitutional unit based on NAH was determined using the molar absorption coefficient of NAH of 20,810 L/(mol·cm) obtained from the model compound.

[Number of terminal carbonate groups in fluorine-containing polymer]

With regard to the number of the terminal carbonate groups in the fluorine-containing polymer, by infrared absorption spectrum analysis, the peak to which the carbonyl group of the carbonate group (-OC(=O)O-) belongs appears at an absorption wavelength of 1810 to 1815 cm$^{-1}$, the absorbance of the absorption peak was measured, and the number of the carbonate groups per $10^6$ main chain carbon atoms in the fluorine-containing polymer was calculated by the following equation.

[Number of carbonate groups per $10^6$ main chain carbon atoms in fluorine-containing polymer] = 500 AW/$\varepsilon$df

A: Absorbance of peak of carbonate group (-OC(=O)O-)
$\varepsilon$: Mole absorbance coefficient [cm$^{-1}$·mol$^{-1}$] of carbonate group (-OC(=O)O-). From the model compound, $\varepsilon$ was made 170.
W: Composition average molecular weight calculated from monomer composition
d: Density of film [g/cm$^3$]
f: Thickness of film [mm]

In addition, the melting points of the polyamide and the fluorine-containing polymer were measured by the following method.

[Melting point]

In accordance with ISO 11357-3, using a differential scanning calorimeter, the sample is heated to a temperature equal to or higher than the expected melting point and then, the sample is cooled at a rate of 10°C per a minute, and after cooling to 30°C, it is allowing to stand as such for about 1 minutes and raising the temperature at a rate of 20°C per a minute whereby the temperature at the peak value of the measured melting curve is defined to be the melting point.

The respective properties of the multilayer tube were measured by the following methods.

[Chemical resistance (zinc chloride resistance)]

A joint made of a metal was press-fitted into the end of the tube, and immersed in zinc chloride by the method described in SAE J-2260 7.12. Thereafter, the sample was taken out and the presence or absence of cracks was confirmed. Using the sample subjected to immersion treatment, an impact test was carried out at -40°C by the method described in SAE J-2260 7.5.

[Interlayer adhesiveness (initial peel strength)]

The tube cut to 200 mm was further cut in half in the longitudinal direction to prepare a test piece. Using a universal material testing machine (manufactured by Orientec Co., Ltd., Tensilon UTMIII-200), a 90° peeling test was carried out at a tensile speed of 50 mm/min. The peeling strength was red from the maximum point of the S-S curve, interlayer adhesiveness was evaluated.

[Durability of interlayer adhesiveness (peeling strength after heat treatment)]

The tube cut to 200 mm was placed in an oven at 160°C, and treated for 30 minutes. Interlayer adhesiveness of the taken out tube was evaluated according to the above-mentioned method. When the peeling strength after heat treatment was 3.0 N/mm or more, it was judged to be excellent in durability of interlayer adhesiveness.

[Materials used in Examples and Comparative Examples]

Polyamide (A1)

Production of polyamide 12 (A1-1)

In a pressure-resistant reaction vessel equipped with a stirrer and having an inner volume of 70 liters were charged 19.73 kg (100.0 mol) of dodecane lactam, 45.0 g (0.264 mol) of 5-amino-1,3,3-trimethylcyclohexanemethylamine and 0.5 L of distilled water, and after replacing inside of the polymerization tank with nitrogen, the mixture was heated to 180°C and stirred so that the inside of the reaction system became a uniform state at this temperature. Then, the temperature in the polymerization tank was raised to 270°C, and polymerization was carried out for 2 hours under stirring while adjusting the pressure in the tank to 3.5 MPa. Thereafter, the pressure was released to normal pressure over about 2 hours, then, the pressure was reduced to 53 kPa and polymerization was carried out under reduced pressure for 5 hours. Then, nitrogen was introduced into the autoclave, and after the pressure was restored to normal pressure, the product was drawn out from the nozzle at the lower portion of the reaction vessel and cut to obtain pellets. The pellets were dried under reduced pressure to obtain a polyamide 12 having a relative viscosity of 2.10, a terminal amino group concentration of 48 $\mu$eq/g, and a terminal carboxyl group concentration of 24 $\mu$eq/g (hereinafter the polyamide 12 is referred to as (A1-1).). The ratio of the number of the methylene groups to the number of the amide groups $[CH_2]/[NHCO]$ of the polyamide 12 (A1-1) is 11.0, which satisfies 8.0 or more. The melting point of the polyamide 12 (A1-1) measured in accordance with ISO 11357-3 is 178°C, which satisfies 210°C or lower. The solubility parameter SP value of the polyamide 12 (A1-1) is 22.5 $(MPa)^{1/2}$.

Production of polyamide 1010 (A1-2)

In a pressure-resistant reaction vessel equipped with a stirrer and having an inner volume of 70 liters were charged 17.82 kg (50.0 mol) of equimolar salt of 1,10-decanediamine and sebacic acid, 29.3 g (0.17 mol) of 1,10-decanediamine and 5.0 L of distilled water, and after replacing inside of the polymerization tank with nitrogen, the mixture was heated to 220°C and stirred so that the inside of the reaction system became a uniform state at this temperature. Then, the temperature in the polymerization tank was raised to 270°C, and polymerization was carried out for 2 hours under stirring while adjusting the pressure in the tank to 1.7 MPa. Thereafter, the pressure was released to normal pressure over about 2 hours, then, the pressure was reduced to 53 kPa and polymerization was carried out under reduced pressure for 4 hours. Then, nitrogen was introduced into the autoclave, and after the pressure was restored to normal pressure, the product was drawn out from the nozzle at the lower portion of the reaction vessel and cut to obtain pellets. The pellets were dried under reduced pressure to obtain a polyamide 1010 having a relative viscosity of 2.22, a terminal amino group concentration of 45 $\mu$eq/g and a terminal carboxyl group concentration of 28 $\mu$eq/g (hereinafter the polyamide 1010 is referred to as (A1-2).). The ratio of the number of the methylene groups to the number of the amide groups $[CH_2]/[NHCO]$ of the polyamide 1010 (A1-2) is 9.0, which satisfies 8.0 or more. The melting point of the polyamide 1010 (A1-2) measured in accordance with ISO 11357-3 is 203°C, which satisfies 210°C or lower. The solubility parameter SP value of the polyamide 1010 (A1-2) is 23.5 $(MPa)^{1/2}$.

Polyamide (A2)

Production of polyamide 6/12 (A2-1)

In a pressure-resistant reaction vessel equipped with a stirrer and having an inner volume of 70 liters were charged 9.90 kg (87.5 mol) of caprolactam, 2.69 kg (12.5 mol) of 12-aminododecanoic acid, 20.0 g (0.12 mol) of 5-amino-1,3,3-trimethylcyclohexanemethylamine and 2.0 L of distilled water, and the mixture was heated to 100°C and stirred so that the inside of the reaction system became a uniform state at this temperature. Subsequently, the temperature was further raised to 260°C, and the mixture was stirred under a pressure of 2.5 MPa for 1 hour. Thereafter, polymerization reaction was carried out at 260°C for 2 hours while releasing the pressure to evaporate the water from the reaction vessel, and polymerization reaction was further carried out at 260°C under a reduced pressure of 53 kPa for 4 hours. After the completion of the reaction, the reaction product drawn out from the nozzle at the lower portion of the reaction vessel was introduced into a water tank and cooled, and subjected to cutting to obtain pellets. The pellets were dipped in hot water, and after removing the unreacted monomer by extraction, dried under reduced pressure to obtain a polyamide 6/12 (caproamide unit/dodecanamide unit = 87.5112.5 mol%) having a relative viscosity of 2.63, a terminal amino group concentration of 54 $\mu$eq/g and a terminal carboxyl group concentration of 40 $\mu$eq/g (hereinafter the polyamide 6/12 is referred to as (A2-1).). In addition, the melting point of the polyamide 6/12 (A2-1) measured in accordance with ISO 11357-3 is 200°C, which exceeds 210°C. The ratio of the number of the methylene groups to the number of the amide groups [$CH_2$]/[NHCO] of the polyamide 6/12 (A2-1) is 5.75, which is less than 8.0. The solubility parameter SP value of the polyamide 6/12 (A2-1) is 26.4 $(MPa)^{1/2}$.

Production of polyamide 6 (A2-2)

In the production of the polyamide 6/12 (A2-1), the same method as in the production of the polyamide 6/12 (A2-1) was carried out except for changing 9.90 kg (87.5 mol) of caprolactam and 2.69 kg (12.5 mol) of 12-aminododecanoic acid to 11.32 kg (100.0 mol) of caprolactam, and changing 20.0 g (0.12 mol) of 5-amino-1,3,3-trimethylcyclohexanemethylamine to 80.0 g (0.47 mol) to obtain a polyamide 6 having a relative viscosity of 2.50, a terminal amino group concentration of 112 $\mu$eq/g and a terminal carboxyl group concentration of 33 $\mu$eq/g (hereinafter the polyamide 6 is referred to as (A2-2).). The ratio of the number of the methylene groups to the number of the amide groups [$CH_2$]/[NHCO] of the polyamide 6 (A2-2) is 5.0, which is less than 8.0. In addition, the melting point of the polyamide 6 (A2-2) measured in accordance with ISO 11357-3 is 220°C. The solubility parameter SP value of the polyamide 6 (A2-2) is 26.9 $(MPa)^{1/2}$.

Production of polyamide 6 (A2-3)

In the production of the polyamide 6 (A2-2), the same method as in the production of the polyamide 6 (A2-2) was carried out except for not using 80.0 g (0.47 mol) of 5-amino-1,3,3-trimethylcyclohexanemethylamine to obtain a polyamide 6 having a relative viscosity of 3.50, a terminal amino group concentration of 38 $\mu$eq/g and a terminal carboxyl group concentration of 40 $\mu$eq/g (hereinafter the polyamide 6 is referred to as (A2-3).). The ratio of the number of the methylene groups to the number of the amide groups [$CH_2$]/[NHCO] of the polyamide 6 (A2-3) is 5.0, which is less than 8.0. In addition, the melting point of the polyamide 6 (A2-3) measured in accordance with ISO 11357-3 is 220°C. The solubility parameter SP value of the polyamide 6 (A2-3) is 26.9 $(MPa)^{1/2}$.

Production of polyamide 610 (A2-4)

In the production of the polyamide 1010 (A1-2), the same method as in the production of the polyamide 1010 (A1-2) was carried out except for changing 17.82 kg (50.0 mol) of the equimolar salt of 1,10-decanediamine and sebacic acid to 15.02 kg (50.0 mol) of the equimolar salt of 1,6-hexanediamine and sebacic acid, and 29.3 g (0.17 mol) of 1,10-decanediamine to 15.1 g (0.13 mol) of 1,6-hexanediamine to obtain a polyamide 610 having a relative viscosity of 2.58, a terminal amino group concentration of 53 $\mu$eq/g and a terminal carboxyl group concentration of 33 $\mu$eq/g (hereinafter the polyamide 610 is referred to as (A2-4).). The ratio of the number of the methylene groups to the number of the amide groups [$CH_2$]/[NHCO] of the polyamide 610 (A2-4) is 7.0, which is less than 8.0. In addition, the melting point of the polyamide 610 (A2-4) measured in accordance with ISO 11357-3 is 220°C. The solubility parameter SP value of the polyamide 610 (A2-4) is 24.9 $(MPa)^{1/2}$.

Production of polyamide 612 (A2-5)

In the production of the polyamide 1010 (A1-2), the same method as in the production of the polyamide 1010 (A1-2) was carried out except for changing 17.82 kg (50.0 mol) of the equimolar salt of 1,10-decanediamine and sebacic acid to 16.42 kg (50.0 mol) of the equimolar salt of 1,6-hexanediamine and dodecanedioic acid, and 29.3 g (0.17 mol) of 1,10-decanediamine to 16.3 g (0.14 mol) of 1,6-hexanediamine to obtain a polyamide 612 having a relative viscosity of 2.48, a terminal amino group concentration of 50 $\mu$eq/g and a terminal carboxyl group concentration of 35 $\mu$eq/g (hereinafter this polyamide 612 is referred to as (A2-5).). The ratio of the number of the methylene groups to the number of the amide groups $[CH_2]/[NHCO]$ of the polyamide 612 (A1-3) is 8.0, which satisfies 8.0 or more. However, the melting point of the polyamide 612 (A2-5) measured in accordance with ISO 11357-3 is 218°C, which does not satisfy 210°C or lower. The solubility parameter SP value of the polyamide 612 (A2-5) is 24.1 $(MPa)^{1/2}$.

Elastomer polymer (A3)

Maleic anhydride-modified ethylene/1-butene copolymer (A3-1) (available from Mitsui Chemicals, Inc., TAFMER MH5010, acid anhydride group concentration: 50 $\mu$eq/g)

Maleic anhydride-modified ethylene/1-butene copolymer (A3-2) (available from Mitsui Chemicals, Inc., TAFMER MH5020, acid anhydride group concentration: 100 $\mu$eq/g)

Aliphatic polyamide composition (A)

Production of polyamide 12 composition (A-1)

With the polyamide 12 (A1-1) were previously mixed the polyamide 6/12 (A2-1), the maleic anhydride-modified ethylene/1-butene copolymer (A3-1), triethylene glycol-bis[3-(3-t-butyl-5-methyl-4-hydroxyphenyl)propionate] (available from BASF Japan, IRGANOX245) as an antioxidant and tris(2,4-di-t-butylphenyl)phosphite (available from BASF Japan, IRGAFOS168) as a phosphorus-based processing stabilizer, and the mixture was supplied to a twin-screw melt!kneader (manufactured by The Japan Steel Works, Ltd., Model type: TEX44), melt-kneaded at a cylinder temperature of from 180°C to 270°C, after a molten resin was extruded into a strand-state, the material was introduced into a water tank, cooled, cut and vacuum-dried to obtain pellets of a polyamide 12 composition (hereinafter the polyamide 12 composition is referred to as (A-1).) comprising 0.8 part by mass of the antioxidant and 0.2 part by mass of the phosphorus-based processing stabilizer based on the total of the polyamide 12 (A1-1)/polyamide 6/12 (A2-1)/elastomer polymer (A3-1) = 60.0/20.0/20.0 (% by mass) as 100 parts by mass. The absolute value [|(SP value of polyamide 12 (A1-1)) - (SP value of polyamide 6/12 (A2-1))|] of the difference in the solubility parameter SP values of the polyamide (A1) and the polyamide (A2) is |22.5 - 26.4| = 3.9 $(MPa)^{1/2}$, which satisfies 1.8 $(MPa)^{1/2}$ or more and 4.5 $(MPa)^{1/2}$ or less. In addition, the terminal amino group concentration of [A] ($\mu$eq/g) and the terminal carboxyl group concentration of [B] ($\mu$eq/g) of the polyamide 12 composition (A-1) (the terminal amino group concentrations which are values summing the respective terminal amino group concentrations ($\mu$eq/g) of the polyamide (A1) and the polyamide (A2) per 1 g of the aliphatic polyamide composition (A) and the value calculated from the respective mixing mass ratio are made [A] ($\mu$eq/g) and the terminal carboxyl group concentrations which are values summing the respective terminal carboxyl group concentrations ($\mu$eq/g) of the polyamide (A1) and the polyamide (A2) per 1 g of the aliphatic polyamide composition (A) and the value calculated from the respective mixing mass ratio are made [B] ($\mu$eq/g), hereinafter the same) satisfies [A] > [B] + 10.

Production of polyamide 12 composition (A-2)

In the production of the polyamide 12 composition (A-1), the same method as in the production of the polyamide 12 composition (A-1) was carried out except for changing the addition amounts of the polyamide 12 (A1-1) and the polyamide 6/12 (A2-1) to obtain pellets of a polyamide 12 composition (hereinafter the polyamide 12 composition is referred to as (A-2).) comprising 0.8 part by mass of the antioxidant and 0.2 part by mass of the phosphorus-based processing stabilizer based on the total of the polyamide 12 (A1-1)/polyamide 6/12 (A2-1)/elastomer polymer (A3-1) = 65.0/15.0/20.0 (% by mass) as 100 parts by mass. The absolute value [|(SP value of polyamide 12 (A1-1)) - (SP value of polyamide 6/12 (A2-1))|] of the difference in the solubility parameter SP values of the polyamide (A1) and the polyamide (A2) is |22.5 - 26.4| = 3.9 $(MPa)^{1/2}$, which satisfies 1.8 $(MPa)^{1/2}$ or more and 4.5 $(MPa)^{1/2}$ or less. Also, the terminal amino group concentration of [A] ($\mu$eq/g) and the terminal carboxyl group concentration of [B] ($\mu$eq/g) of the polyamide 12 composition (A-2) satisfies [A] > [B] + 10.

Production of polyamide 12 composition (A-3)

In the production of the polyamide 12 composition (A-1), the same method as in the production of the polyamide 12 composition (A-1) was carried out except for changing the addition amounts of the polyamide 12 (A1-1) and the polyamide 6/12 (A2-1) to obtain pellets of a polyamide 12 composition (hereinafter the polyamide 12 composition is referred to as (A-3).) comprising 0.8 part by mass of the antioxidant and 0.2 part by mass of the phosphorus-based processing stabilizer based on the total of the polyamide 12 (A1-1)/polyamide 6/12 (A2-1)lelastomer polymer (A3-1) = 55.0/25.0/20.0 (% by mass) as 100 parts by mass. The absolute value [|(SP value of polyamide 12 (A1-1)) - (SP value of polyamide 6/12 (A2-1))|] of the difference in the solubility parameter SP values of the polyamide (A1) and the polyamide (A2) is $|22.5 - 26.4| = 3.9$ $(MPa)^{1/2}$, which satisfies 1.8 $(MPa)^{1/2}$ or more and 4.5 $(MPa)^{1/2}$ or less. In addition, the terminal amino group concentration of [A] ($\mu$eq/g) and the terminal carboxyl group concentration of [B] ($\mu$eq/g) of the polyamide 12 composition (A-3) satisfies [A] > [B] + 10.

Production of polyamide 12 composition (A-4)

In the production of the polyamide 12 composition (A-1), the same method as in the production of the polyamide 12 composition (A-1) was carried out except for changing polyamide 6/12 (A2-1) to polyamide 6 (A2-2) to obtain pellets of a polyamide 12 composition (hereinafter the polyamide 12 composition is referred to as (A-4).) comprising 0.8 part by mass of the antioxidant and 0.2 part by mass of the phosphorus-based processing stabilizer based on the total of the polyamide 12 (A1-1)/polyamide 6 (A2-2)/elastomer polymer (A3-1) = 60.0/20.0/20.0 (% by mass) as 100 parts by mass. The absolute value [|(SP value of polyamide 12 (A1-1)) - (SP value of polyamide 6 (A2-2))|] of the difference in the solubility parameter SP values of the polyamide (A1) and the polyamide (A2) is $|22.5 - 26.9| = 4.4$ $(MPa)^{1/2}$, which satisfies 1.8 $(MPa)^{1/2}$ or more and 4.5 $(MPa)^{1/2}$ or less. In addition, the terminal amino group concentration of [A] ($\mu$eq/g) and the terminal carboxyl group concentration of [B] ($\mu$eq/g) of the polyamide 12 composition (A-4) satisfies [A] > [B] + 10.

Production of polyamide 12 composition (A-5)

In the production of the polyamide 12 composition (A-1), the same method as in the production of the polyamide 12 composition (A-1) was carried out except for changing the polyamide 6/12 (A2-1) to the polyamide 610 (A2-4) to obtain pellets of a polyamide 12 composition (hereinafter the polyamide 12 composition is referred to as (A-5).) comprising 0.8 part by mass of the antioxidant and 0.2 part by mass of the phosphorus-based processing stabilizer based on the total of the polyamide 12 (A1-1)/polyamide 610 (A2-4)/elastomer polymer (A3-1) = 55.0/25.0/20.0 (% by mass) as 100 parts by mass. The absolute value [|(SP value of polyamide 12 (A1-1)) - (SP value of polyamide 610 (A2-4))|] of the difference in the solubility parameter SP values of the polyamide (A1) and the polyamide (A2) is $|22.5 - 24.9| = 2.4$ $(MPa)^{1/2}$, which satisfies 1.8 $(MPa)^{1/2}$ or more and 4.5 $(MPa)^{1/2}$ or less. Also, the terminal amino group concentration of [A] ($\mu$eq/g) and the terminal carboxyl group concentration of [B] ($\mu$eq/g) of the polyamide 12 composition (A-5) satisfies [A] > [B] + 10.

Production of polyamide 12 composition (A-6)

In the production of the polyamide 12 composition (A-1), the same method as in the production of the polyamide 12 composition (A-1) was carried out except for changing the maleic anhydride-modified ethylene/1-butene copolymer (A3-1) to (A3-2) to obtain pellets of a polyamide 12 composition (hereinafter the polyamide 12 composition is referred to as (A-6).) comprising 0.8 part by mass of the antioxidant and 0.2 part by mass of the phosphorus-based processing stabilizer based on the total of the polyamide 12 (A1-1)/polyamide 6/12 (A2-1)/elastomer polymer (A3-2) = 60.0/20.0/20.0 (% by mass) as 100 parts by mass. The absolute value [|(SP value of polyamide 12 (A1-1)) - (SP value of polyamide 6/12 (A2-1))|] of the difference in the solubility parameter SP values of the polyamide (A1) and the polyamide (A2) is $|22.5 - 26.4| = 3.9$ $(MPa)^{1/2}$, which satisfies 1.8 $(MPa)^{1/2}$ or more and 4.5 $(MPa)^{1/2}$ or less. Also, the terminal amino group concentration of [A] ($\mu$eq/g) and the terminal carboxyl group concentration of [B] ($\mu$eq/g) of the polyamide 12 composition (A-6) satisfies [A] > [B] + 10.

Production of polyamide 1010 composition (A-7)

In the production of the polyamide 12 composition (A-1), the same method as in the production of the polyamide 12 composition (A-1) was carried out except for changing the polyamide 12 (A1-1) to the polyamide 1010 (A1-2) to obtain pellets of a polyamide 1010 composition (hereinafter the polyamide 1010 composition is referred to as (A-7).) comprising 0.8 part by mass of the antioxidant and 0.2 part by mass of the phosphorus-based processing stabilizer based on the total of the polyamide 1010 (A1-2)/polyamide 6/12 (A2-1)/elastomer polymer (A3-1) = 65.0/15.0/20.0 (% by mass) as 100 parts by mass. The absolute value [|(SP value of polyamide 1010 (A1-2)) - (SP value of polyamide 6/12 (A2-1))|] of the difference in the solubility parameter SP values of the polyamide (A1) and the polyamide (A2) is 123.5 - 26.41 = 2.9 $(MPa)^{1/2}$, which satisfies 1.8 $(MPa)^{1/2}$ or more and 4.5 $(MPa)^{1/2}$ or less. Also, the terminal amino group concentration of [A] ($\mu$eq/g) and the terminal carboxyl group concentration of [B] ($\mu$eq/g) of the polyamide 1010 composition (A-7) satisfies [A] > [B] + 10.

Production of conductive polyamide 12 composition (A-8)

In the production of the polyamide 12 composition (A-1), the same method as in the production of the polyamide 12 composition (A-1) was carried out except for using carbon black (available from CABOT Corporation, VULCAN XC-72) as a conductive filler, and changing the cylinder temperature from 270°C to 290°C to obtain pellets of a conductive polyamide 12 composition (hereinafter the conductive polyamide 12 composition is referred to as (A-8).) which comprises 25 parts by mass of the conductive filler, 0.8 part by mass of the antioxidant and 0.2 part by mass of the phosphorus-based processing stabilizer based on the total of the polyamide 12 (A1-1)/polyamide 6/12 (A2-1)/elastomer polymer (A3-1) = 50.0/25.0/25.0 (% by mass) as 100 parts by mass. The absolute value [|(SP value of polyamide 12 (A1-1)) - (SP value of polyamide 6/12 (A2-1))|] of the difference in the solubility parameter SP values of the polyamide (A1) and the polyamide (A2) is |22.5 - 26.4| = 3.9 (MPa)$^{1/2}$, which satisfies 1.8 (MPa)$^{1/2}$ or more and 4.5 (MPa)$^{1/2}$ or less. Also, the terminal amino group concentration of [A] ($\mu$eq/g) and the terminal carboxyl group concentration of [B] ($\mu$eq/g) of the conductive polyamide 12 composition (A-8) satisfies [A] > [B] + 10.

Production of polyamide 12 composition (A-9)

In the production of the polyamide 12 composition (A-1), the same method as in the production of the polyamide 12 composition (A-1) was carried out except for not using the polyamide 6/12 (A2-1), and injecting benzenesulfonic acid butyramide as a plasticizer from the middle of the cylinder of the twin-screw meltlkneader by a quantitative pump to obtain pellets of a polyamide 12 composition (hereinafter the polyamide 12 composition is referred to as (A-9).) comprising 0.8 part by mass of the antioxidant and 0.2 part by mass of the phosphorus-based processing stabilizer based on the total of the polyamide 12 (A1-1)/elastomer polymer (A3-1)/plasticizer = 87.5/10.0/2.5 (% by mass) as 100 parts by mass. Since this is not using the polyamide 6/12 (A2-1), so that the absolute value of the difference in the solubility parameter SP values of the polyamide (A1) and the polyamide (A2) is conveniently [|(SP value of polyamide 12 (A1-1)) - 0|] = |22.5 - 0| = 22.5 (MPa)$^{1/2}$, which does not satisfy 1.8 (MPa)$^{1/2}$ or more and 4.5 (MPa)$^{1/2}$ or less. In addition, the terminal amino group concentration of [A] ($\mu$eq/g) and the terminal carboxyl group concentration of [B] ($\mu$eq/g) of the polyamide 12 composition (A-9) satisfies [A] > [B] + 10.

Production of polyamide 12 composition (A-10)

In the production of the polyamide 12 composition (A-1), the same method as in the production of the polyamide 12 composition (A-1) was carried out except for not using the polyamide 6/12 (A2-1) to obtain pellets of a polyamide 12 composition (hereinafter the polyamide 12 composition is referred to as (A-10).) comprising 0.8 part by mass of the antioxidant and 0.2 part by mass of the phosphorus-based processing stabilizer based on the total of the polyamide 12 (A1-1)/elastomer polymer (A3-1) = 80.0/20.0 (% by mass) as 100 parts by mass. Since this is not using the polyamide 6/12 (A2-1), so that the absolute value of the difference in the solubility parameter SP values of the polyamide (A1) and the polyamide (A2) is conveniently [|(SP value of polyamide 12 (A1-1)) - 0|] = |22.5 - 0| = 22.5 (MPa)$^{1/2}$, which does not satisfy 1.8 (MPa)$^{1/2}$ or more and 4.5 (MPa)$^{1/2}$ or less. In addition, the terminal amino group concentration of [A] ($\mu$eq/g) and the terminal carboxyl group concentration of [B] ($\mu$eq/g) of the polyamide 12 composition (A-10) satisfies [A] > [B] + 10.

Production of polyamide 12 composition (A-11)

In the production of the polyamide 12 composition (A-1), the same method as in the production of the polyamide 12 composition (A-1) was carried out except for changing the polyamide 6/12 (A2-1) to the polyamide 1010 (A1-2) to obtain pellets of a polyamide 12 composition (hereinafter the polyamide 12 composition is referred to as (A-11).) comprising 0.8 part by mass of the antioxidant and 0.2 part by mass of the phosphorus-based processing stabilizer based on the total of the polyamide 12 (A1-1)/polyamide 1010 (A1-2)/elastomer polymer (A3-1) = 60.0/20.0/20.0 (% by mass) as 100 parts by mass. The absolute value [|(SP value of polyamide 12 (A1-1)) - (SP value of polyamide 1010 (A1-2))|] of the difference in the solubility parameter SP values of the polyamide (A1) and the polyamide (A2) is |22.5 - 23.5| = 1.0 (MPa)$^{1/2}$, which does not satisfy 1.8 (MPa)$^{1/2}$ or more and 4.5 (MPa)$^{1/2}$ or less. In addition, the terminal amino group concentration of [A] ($\mu$eq/g) and the terminal carboxyl group concentration of [B] ($\mu$eq/g) of the polyamide 12 composition (A-11) satisfies [A] > [B] + 10.

Production of polyamide 12 composition (A-12)

In the production of the polyamide 12 composition (A-1), the same method as in the production of the polyamide 12 composition (A-1) was carried out except for changing the polyamide 6/12 (A2-1) to the polyamide 6 (A2-2), and changing the added amounts of the polyamide 12 (Al-1) and the polyamide 6 (A2-2) to obtain pellets of a polyamide 12 composition (hereinafter the polyamide 12 composition is referred to as (A-12).) comprising 0.8 part by mass of the antioxidant and 0.2 part by mass of the phosphorus-based processing stabilizer based on the total of the polyamide 12 (A1-1)/polyamide 6 (A2-2)/elastomer polymer (A3-1) = 40.0/40.0/20.0 (% by mass) as 100 parts by mass. The absolute value [|(SP value of polyamide 12 (A1-1)) - (SP value of polyamide 6 (A2-2))|] of the difference in the solubility parameter SP values of the polyamide (A1) and the polyamide (A2) is 122.5 - 26.91 = 4.4 (MPa)$^{1/2}$, which satisfies 1.8 (MPa)$^{1/2}$ or more and 4.5 (MPa)$^{1/2}$ or less. Also, the terminal amino group concentration of [A] ($\mu$eq/g) and the terminal carboxyl group concentration of [B] ($\mu$eq/g) of the polyamide 12 composition (A-12) satisfies [A] > [B] + 10.

Ethylene/vinyl acetate copolymer saponified product composition (B)

ethylene/vinyl acetate copolymer saponified product composition (B-1): available from Kuraray Co., Ltd., EVAL LA170B (ethylene content: 27 mol%, saponification degree: 99 mol% or more, melting point: 191°C, MFR (210°C, under a load of 2,160 g): 2.3 g/10 minutes)

Polyamide composition (C)

Production of polyamide 610 composition (C-1)

In the production of the polyamide 12 composition (A-1), the same method as in the production of the polyamide 12 composition (A-1) was carried out except for changing the polyamide 12 (A1-1) to the polyamide 610 (A2-4), and not using the polyamide 6/12 (A2-1) to obtain pellets of a polyamide 610 composition (hereinafter the polyamide 610 composition is referred to as (C-1).) comprising 0.8 part by mass of the antioxidant and 0.2 part by mass of the phosphorus-based processing stabilizer based on the total of the polyamide 610 (A2-4)/elastomer polymer (A3-1) = 80.0/20.0 (% by mass) as 100 parts by mass.

Production of conductive polyamide 610 composition (C-2)

In the production of the conductive polyamide 12 composition (A-8), the same method as in the production of the conductive polyamide 12 composition (A-8) was carried out except for changing the polyamide 12 (A1-1) to the polyamide 610 (A2-4), not using the polyamide 6/12 (A2-1), and changing the cylinder temperature from 290°C to 300°C to obtain pellets of a conductive polyamide 610 composition (hereinafter the conductive polyamide 610 composition is referred to as (C-2).) which comprises 25 parts by mass of the conductive filler, 0.8 part by mass of the antioxidant and 0.2 part by mass of the phosphorus-based processing stabilizer based on the total of the polyamide 610 (A2-4)/elastomer polymer (A3-1) = 75.0/25.0 (% by mass) as 100 parts by mass.

Production of polyamide 6/12 composition (C-3)

In the production of the polyamide 610 composition (C-1), the same method as in the production of the polyamide 610 composition (C-1) was carried out except for changing the polyamide 610 (A2-4) to the polyamide 6/12 (A2-1) to obtain pellets of a polyamide 6/12 composition (hereinafter the polyamide 6/12 composition is referred to as (C-3).) comprising 0.8 part by mass of the antioxidant and 0.2 part by mass of the phosphorus-based processing stabilizer based on the total of the polyamide 6/12 (A2-1)/elastomer polymer (A3-1) = 80.0/20.0 (% by mass) as 100 parts by mass.

Production of polyamide 6 composition (C-4)

In the production of the polyamide 610 composition (C-1), the same method as in the production of the polyamide 610 composition (C-1) was carried out except for changing the polyamide 610 (A2-4) to the polyamide 6 (A2-3) to obtain pellets of a polyamide 6 composition (hereinafter the polyamide 6 composition is referred to as (C-4).) comprising 0.8 part by mass of the antioxidant and 0.2 part by mass of the phosphorus-based processing stabilizer based on the total of the polyamide 6 (A2-3)/elastomer polymer (A3-1) = 80.0/20.0 (% by mass) as 100 parts by mass.

Production of polyamide 612 composition (C-5)

In the production of the polyamide 12 composition (A-1), the same method as in the production of the polyamide 12 composition (A-1) was carried out except for changing the polyamide 12 (A1-1) to the polyamide 612 (A2-5) to obtain pellets of a polyamide 612 composition (hereinafter the polyamide 612 composition is referred to as (C-5).) comprising 0.8 part by mass of the antioxidant and 0.2 part by mass of the phosphorus-based processing stabilizer based on the total of the polyamide 612 (A2-5)/polyamide 6/12 (A2-1)lelastomer polymer (A3-1) = 65.0115.0120.0 (% by mass) as 100 parts by mass.

Production of conductive polyamide 612 composition (C-6)

In the production of the conductive polyamide 12 composition (A-8), the same method as in the production of the conductive polyamide 12 composition (A-8) was carried out except for changing the polyamide 12 (A1-1) to the polyamide 612 (A2-5), and changing the cylinder temperature from 290°C to 300°C to obtain pellets of a conductive polyamide 612 composition (hereinafter the conductive polyamide 612 composition is referred to as (C-6).) which comprises 25 parts by mass of the conductive filler, 0.8 part by mass of the antioxidant and 0.2 part by mass of the phosphorus-based processing stabilizer based on the total of the polyamide 612 (A2-5)/polyamide 6/12 (A2-1)/elastomer polymer (A3-1) = 56.25/18.75/25.0 (% by mass) as 100 parts by mass.

Semi-aromatic polyamide (D1)

Production of semi-aromatic polyamide (D1-1)

In an autoclave were charged 2.374 kg (15.0 mol) of 1,9-nonanediamine, 2.374 kg (15.0 mol) of 2-methyl-1,8-octanediamine, 4.939 kg (29.7 mol) of terephthalic acid, 65.9 g (0.54 mol) of benzoic acid, 9.8 g (0.1% by mass based on the raw material) of sodium hypophosphite monohydrate and 6.0 L of distilled water, and inside thereof was purged with nitrogen. The mixture was stirred at 100°C for 30 minutes, and the internal temperature was raised to 190°C over 2 hours. At this time, the pressure in the autoclave was increased to 2.0 MPa. After continuing the reaction for 1 hour as such, the temperature was raised to 230°C, and thereafter, the temperature was maintained at 230°C for 2 hours and polymerization was carried out while gradually removing water vapor and maintaining the pressure at 2.0 MPa. Next, the pressure was reduced to 1.0 MPa over 30 minutes, and further reacted for 1 hour to obtain a prepolymer. This was dried at 100°C under reduced pressure for 12 hours, pulverized to a size of 2 mm or less, and subjected to solid-phase polymerization at 210°C under 0.013 kPa for 8 hours to obtain a semi-aromatic polyamide (polyamide 9T/M8T = 50.0/50.0 mol%) (hereinafter the semi-aromatic polyamide is referred to as (D1-1).) having a melting point of 265°C and a relative viscosity of 2.38.

Production of semi-aromatic polyamide (D1-2)

In the production of the semi-aromatic polyamide (D1-1), the same method as in the production of the semi-aromatic polyamide (D1-1) was carried out except for changing 2.374 kg (15.0 mol) of 1,9-nonanediamine and 2.374 kg (15.0 mol) of 2-methyl-1,8-octanediamine to 4.036 kg (25.5 mol) of 1,9-nonanediamine and 0.712 kg (4.5 mol) of 2-methyl-1,8-octanediamine, and changing the solid phase polymerization temperature from 210°C to 240°C to obtain a semi-aromatic polyamide (polyamide 9T/M8T = 85.0/15.0 mol%) (hereinafter the semi-aromatic polyamide is referred to as (D1-2).) having a melting point of 305°C and a relative viscosity of 2.34.

Production of semi-aromatic polyamide (D1-3)

In the production of the semi-aromatic polyamide (D1-1), the same method as in the production of the semi-aromatic polyamide (D1-1) was carried out except for changing 4.939 kg (29.7 mol) of terephthalic acid to 6.427 kg (29.7 mol) of 2,6-naphthalenedicarboxylic acid to obtain a semi-aromatic polyamide (polyamide 9N/M8N = 50.0/50.0 mol%) (hereinafter the semi-aromatic polyamide is referred to as (D1-3).) having a melting point 275°C and a relative viscosity of 2.37.

Production of semi-aromatic polyamide (D1-4)

In the production of the semi-aromatic polyamide (D1-1), the same method as in the production of the semi-aromatic polyamide (DI-1) was carried out except for changing 2.374 kg (15.0 mol) of 1,9-nonanediamine and 2.374 kg (15.0 mol) of 2-methyl-1,8-octanediamine to 5.169 kg (30.0 mol) of 1,10-decanediamine, and changing the polymerization temperature from 230°C to 270°C and the solid phase polymerization temperature from 210°C to 260°C to obtain a semi-aromatic polyamide (polyamide 10T = 100.0 mol%) (hereinafter the semi-aromatic polyamide is referred to as (D1-4).) having a melting point of 315°C and a relative viscosity of 2.33.

Production of semi-aromatic polyamide (D1-5)

In the production of the semi-aromatic polyamide (D1-4), the same method as in the production of the semi-aromatic polyamide (D1-4) was carried out except for changing 5.169 kg (30.0 mol) of 1,10-decanediamine and 4.984 kg (30.0 mol) of terephthalic acid to 3.101 kg (18.0 mol) of 1,10-decanediamine, 2.990 kg (18.0 mol) of terephthalic acid and 2.416 kg (12.0 mol) of 11-aminoundecanoic acid, and changing the polymerization temperature from 270°C to 220°C and the solid phase polymerization temperature from 260°C to 200°C to obtain a semi-aromatic polyamide (polyamide 10T/11 = 60.0/40.0 mol%) (hereinafter the semi-aromatic polyamide is referred to as (D1-5).) having a melting point of 255°C and a relative viscosity of 2.34.

Production of semi-aromatic polyamide (D1 -6)

In the production of the semi-aromatic polyamide (D1-4), the same method as in the production of the semi-aromatic polyamide (D1-1) was carried out except for changing 4.984 kg (30.0 mol) of terephthalic acid to 3.324 kg (20.0 mol) of terephthalic acid and 2.020 kg (9.99 mol) of sebacic acid, and changing the polymerization temperature from 270°C to 240°C and the solid phase polymerization temperature from 260°C to 220°C to obtain a semi-aromatic polyamide (polyamide 10T/1010 = 67.0/33.0 mol%) (hereinafter the semi-aromatic polyamide is referred to as (D1-6).) having a melting point of 279°C and a relative viscosity of 2.37.

Production of semi-aromatic polyamide (D1-7)

In the production of the semi-aromatic polyamide (D1-1), the same method as in the production of the semi-aromatic polyamide (D1-1) was carried out except for changing 2.374 kg (15.0 mol) of 1,9-nonanediamine, 2.374 kg (15.0 mol) of 2-methyl-1,8-octanediamine and 4.939 kg (29.7 mol) of terephthalic acid to 3.602 kg (31.0 mol) of 1,6-hexanediamine, 2.741 kg (16.5 mol) of terephthalic acid, 0.997 kg (6.0 mol) of isophthalic acid and 1.096 kg (7.5 mol) of adipic acid, and changing the polymerization temperature from 230°C to 260°C and the solid phase polymerization temperature from 210°C to 240°C to obtain a semi-aromatic polyamide (polyamide 6T/6I/66 = 55.0/20.0/25.0 mol%) (hereinafter the semi-aromatic polyamide is referred to as (D1-7).) having a melting point of 302°C and a relative viscosity of 2.28.

Production of semi-aromatic polyamide (D1-8)

In the production of the semi-aromatic polyamide (D1-1), the same method as in the production of the semi-aromatic polyamide (D1-1) was carried out except for changing 2.374 kg (15.0 mol) of 1,9-nonanediamine, 2.374 kg (15.0 mol) of 2-methyl-1,8-octanediamine and 4.939 kg (29.7 mol) of terephthalic acid to 3.66 kg (31.5 mol) of 1,6-hexanediamine, 3.45 kg (15.0 mol) of dodecanedioic acid and 2.49 kg (15.0 mol) of terephthalic acid, and changing the polymerization temperature from 230°C to 250°C and the solid phase polymerization temperature from 210°C to 230°C to obtain a semi-aromatic polyamide (polyamide 6T/612 = 55.0/45.0 mol%) (hereinafter the semi-aromatic polyamide is referred to as (D1-8).) having a melting point of 292°C and a relative viscosity of 2.20.

Production of semi-aromatic polyamide (D1-9)

In the production of the semi-aromatic polyamide (D1-1), the same method as in the production of the semi-aromatic polyamide (D1-1) was carried out except for changing the solid-phase polymerization time from 8 hours to 4 hours to obtain a semi-aromatic polyamide (polyamide 9T/M8T = 50.0/50.0 mol%) (hereinafter the semi-aromatic polyamide is referred to as (D1-9).) having a melting point of 265°C and a relative viscosity of 2.08.

Semi-aromatic polyamide (D2)

Production of semi-aromatic polyamide (D2-1)

To a pressure vessel having an inner volume of 70 liters equipped with a stirrer, a thermometer, a torque meter, a pressure gauge, a raw material inlet to which a diaphragm pump was directly connected, a nitrogen gas inlet, a pressure outlet, a pressure regulating device and a polymer outlet were charged 6.068 kg (30.0 mol) of sebacic acid, 8.50 g (0.049 mol) of calcium hypophosphite and 2.19 g (0.025 mol) of sodium acetate, and after an operation of pressurizing inside the pressure vessel with a nitrogen gas having a purity of 99.9999% to 0.3 MPa, and then, releasing the nitrogen gas to normal pressure was repeated five times to carry out nitrogen substitution, the temperature inside the system was increased while stirring under a sealing pressure. Further, after the temperature was raised to 190°C under a small amount of nitrogen stream, 4.086 kg (30.0 mol) of m-xylylenediamine was added dropwise to the mixture under stirring over 160 minutes. During this time, the internal pressure of the reaction system was controlled at 0.5 MPa, and the internal temperature was continuously raised to 295°C. In addition, water distilled off along with dropwise addition of m-xylylenediamine was removed from the system through a partial condenser and a cooler. After completion of the dropwise addition of m-xylylenediamine, the pressure was reduced to normal pressure over 60 minutes, and during this time, the temperature in the vessel was maintained at 250°C and the reaction was continued for 10 minutes. Next, the internal pressure of the reaction system was reduced to 79 kPa, and melt polymerization reaction was continued for 40 minutes. Thereafter, stirring was stopped and the inside of the system was pressurized to 0.2 MPa with nitrogen to draw out the polycondensate in a string form from the lower outlet of the pressure vessel. The string-like polycondensate was immediately cooled, the water-cooled string-like resin was pelletized by a pelletizer, and thereafter, dried under reduced pressure to obtain a semi-aromatic polyamide (polyamide MXD10 = 100.0 mol%) (hereinafter the semi-aromatic polyamide is referred to as (D2-1).) having a melting point of 191°C and a relative viscosity of 2.46.

Production of semi-aromatic polyamide (D2-2)

In the production of the semi-aromatic polyamide (D2-1), the same method as in the production of the semi-aromatic polyamide (D2-1) was carried out except for changing 4.086 kg (30.0 mol) of m-xylylenediamine to 4.086 kg (30.0 mol) of a mixed diamine of m-xylylenediamine and p-xylylenediamine with 7 : 3 (molar ratio), and changing the polymerization temperature from 250°C to 260°C to obtain a semi-aromatic polyamide (polyamide MXD10/PXD10 = 70.0/30.0 mol%) (hereinafter the semi-aromatic polyamide is referred to as (D2-2).) having a melting point of 213°C and a relative viscosity of 2.40.

Production of semi-aromatic polyamide (D2-3)

In the production of the semi-aromatic polyamide (D2-1), the same method as in the production of the semi-aromatic polyamide (D2-1) was carried out except for changing 4.086 kg (30.0 mol) of m-xylylenediamine to 4.086 kg (30.0 mol) of a mixed diamine of m-xylylenediamine and p-xylylenediamine with 6 : 4 (molar ratio), and changing the polymerization temperature from 250°C to 270°C to obtain a semi-aromatic polyamide (polyamide MXD10/PXD10 = 60.0/40.0 mol%) (hereinafter the semi-aromatic polyamide is referred to as (D2-3).) having a melting point of 224°C and a relative viscosity of 2.42.

Production of semi-aromatic polyamide (D2-4)

In the production of the semi-aromatic polyamide (D2-1), the same method as in the production of the semi-aromatic polyamide (D2-1) was carried out except for changing 4.086 kg (30.0 mol) of m-xylylenediamine to 4.086 kg (30.0 mol) of p-xylylenediamine, and changing the polymerization temperature from 250°C to 300°C to obtain a semi-aromatic polyamide (polyamide PXD10 = 100.0 mol%) (hereinafter the semi-aromatic polyamide is referred to as (D2-4).) having a melting point of 281 and 291°C (having two melting points) and a relative viscosity of 2.42.

Production of semi-aromatic polyamide (D2-5)

In the production of the semi-aromatic polyamide (D2-1), the same method as in the production of the semi-aromatic polyamide (D2-1) was carried out except for changing 6.068 kg (30.0 mol) of sebacic acid to 4.384 kg (30.0 mol) of adipic acid, and changing the polymerization temperature from 250°C to 275°C to obtain a semi-aromatic polyamide (polyamide MXD6 = 100.0 mol%) (hereinafter the semi-aromatic polyamide is referred to as (D2-5).) having a melting point of 243°C and a relative viscosity of 2.42.

Production of semi-aromatic polyamide (D2-6)

In the production of the semi-aromatic polyamide (D2-2), the same method as in the production of the semi-aromatic polyamide (D2-2) was carried out except for changing 6.068 kg (30.0 mol) of sebacic acid to 4.384 kg (30.0 mol) of adipic acid, and changing the polymerization temperature from 250°C to 290°C to obtain a semi-aromatic polyamide (polyamide MXD6/PXD6 = 70.0/30.0 mol%) (hereinafter the semi-aromatic polyamide is referred to as (D2-6).) having a melting point of 264°C and a relative viscosity of 2.32.

Production of semi-aromatic polyamide (D2-7)

In the production of the semi-aromatic polyamide (D2-1), the same method as in the production of the semi-aromatic polyamide (D2-1) was carried out except for changing 4.086 kg (30.0 mol) of m-xylylenediamine to 5.588 kg (30.0 mol) of 2,6-bis(aminomethyl)naphthalene, and changing the polymerization temperature from 250°C to 300°C to obtain a semi-aromatic polyamide (polyamide 2,6-BAN10 = 100.0 mol%) (hereinafter the semi-aromatic polyamide is referred to as (D2-7).) having a melting point of 286°C and a relative viscosity of 2.25.

Production of semi-aromatic polyamide (D2-8)

In the production of the semi-aromatic polyamide (D2-1), the same method as in the production of the semi-aromatic polyamide (D2-1) was carried out except for changing the melt polymerization time from 40 minutes to 20 minutes to obtain a semi-aromatic polyamide (polyamide MXD10 = 100.0 mol%) (hereinafter the semi-aromatic polyamide is referred to as (D2-8).) having a melting point of 191°C and a relative viscosity of 2.15.

Production of semi-aromatic polyamide (D2-9)

In the production of the semi-aromatic polyamide (D2-5), the same method as in the production of the semi-aromatic polyamide (D2-5) was carried out except for changing the melt polymerization time from 40 minutes to 20 minutes to obtain a semi-aromatic polyamide (polyamide MXD6 = 100.0 mol%) (hereinafter the semi-aromatic polyamide is referred to as (D2-9).) having a melting point of 243°C and a relative viscosity of 2.10.

Semi-aromatic polyamide composition (D)

Production of semi-aromatic polyamide composition (D-1)

With the semi-aromatic polyamide (D1-1) were previously mixed the maleic anhydride-modified ethylene/1-butene copolymer (A3-1) as a shock improving material, triethylene glycol-bis[3-(3-t-butyl-5-methyl-4-hydroxyphenyl)propionate] (available from BASF Japan, IRGANOX245) as an antioxidant, and tris(2,4-di-t-butylphenyl)-phosphite (available from BASF Japan, IRGAFOS168) as a phosphorus-based processing stabilizer, and the mixture was supplied to a twin-screw melt/kneader (manufactured by The Japan Steel Works, Ltd., Model type: TEX44), melt-kneaded at a cylinder temperature of from 220°C to 300°C, after a molten resin was extruded into a strand-state, the material was introduced into a water tank, cooled, cut and vacuum-dried to obtain pellets of a semi-aromatic polyamide composition (hereinafter the semi-aromatic polyamide composition is referred to as (D-1).) comprising 0.8 part by mass of the antioxidant and 0.2 part by mass of the phosphorus-based processing stabilizer based on the semi-aromatic polyamide (D1-1)/elastomer polymer (A3-1) = 90.0/10.0 (% by mass) as 100 parts by mass.

Production of semi-aromatic polyamide composition (D-2)

In the production of the semi-aromatic polyamide composition (D-1), the same method as in the production of the semi-aromatic polyamide composition (D-1) was carried out except for changing the semi-aromatic polyamide (D1-1) to (D1-2), and changing the cylinder temperature from 300°C to 340°C to obtain pellets of a semi-aromatic polyamide composition (hereinafter the semi-aromatic polyamide composition is referred to as (D-2).) comprising 0.8 part by mass of the antioxidant and 0.2 part by mass of the phosphorus-based processing stabilizer based on the total of the semi-aromatic polyamide (D1-2)/elastomer polymer (A3-1) = 90.0/10.0 (% by mass) as 100 parts by mass.

Production of semi-aromatic polyamide composition (D-3)

In the production of the semi-aromatic polyamide composition (D-1), the same method as in the production of the semi-aromatic polyamide composition (D-1) was carried out except for changing the semi-aromatic polyamide (D1-1) to (D1-3), and changing the cylinder temperature from 300°C to 310°C to obtain pellets of a semi-aromatic polyamide composition (hereinafter the semi-aromatic polyamide composition is referred to as (D-3).) comprising 0.8 part by mass of the antioxidant and 0.2 part by mass of the phosphorus-based processing stabilizer based on the total of the semi-aromatic polyamide (D1-3)/elastomer polymer (A3-1) = 90.0/10.0 (% by mass) as 100 parts by mass.

Production of semi-aromatic polyamide composition (D-4)

In the production of the semi-aromatic polyamide composition (D-1), the same method as in the production of the semi-aromatic polyamide composition (D-1) was carried out except for changing the semi-aromatic polyamide (D1-1) to (D1-4), and changing the cylinder temperature from 300°C to 340°C to obtain pellets of a semi-aromatic polyamide composition (hereinafter the semi-aromatic polyamide composition is referred to as (D-4).) comprising 0.8 part by mass of the antioxidant and 0.2 part by mass of the phosphorus-based processing stabilizer based on the total of the semi-aromatic polyamide (D1-4)/elastomer polymer (A3-1) = 90.0/10.0 (% by mass) as 100 parts by mass.

Production of semi-aromatic polyamide composition (D-5)

In the production of the semi-aromatic polyamide composition (D-1), the same method as in the production of the semi-aromatic polyamide composition (D-1) was carried out except for changing the semi-aromatic polyamide (D1-1) to (D1-5), and changing the cylinder temperature from 300°C to 290°C to obtain pellets of a semi-aromatic polyamide composition (hereinafter the semi-aromatic polyamide composition is referred to as (D-5).) comprising 0.8 part by mass of the antioxidant and 0.2 part by mass of the phosphorus-based processing stabilizer based on the total of the semi-aromatic polyamide (D 1-5)/elastomer polymer (A3-1) = 90.0/10.0 (% by mass) as 100 parts by mass.

Production of semi-aromatic polyamide composition (D-6)

In the production of the semi-aromatic polyamide composition (D-1), the same method as in the production of the semi-aromatic polyamide composition (D-1) was carried out except for changing semi-aromatic polyamide (D1-1) to (D1-6), and changing the cylinder temperature from 300°C to 310°C to obtain pellets of a semi-aromatic polyamide composition (hereinafter the semi-aromatic polyamide composition is referred to as (D-6).) comprising 0.8 part by mass of the antioxidant and 0.2 part by mass of the phosphorus-based processing stabilizer based on the total of the semi-aromatic polyamide (D 1-6)/elastomer polymer (A3-1) = 90.0/10.0 (% by mass) 10% by mass as 100 parts by mass.

Production of semi-aromatic polyamide composition (D-7)

In the production of the semi-aromatic polyamide composition (D-1), the same method as in the production of the semi-aromatic polyamide composition (D-1) was carried out except for changing semi-aromatic polyamide (D1-1) to (D1-7), and changing the cylinder temperature from 300°C to 340°C to obtain pellets of a semi-aromatic polyamide composition (hereinafter the semi-aromatic polyamide composition is referred to as (D-7).) comprising 0.8 part by mass of the antioxidant and 0.2 part by mass of the phosphorus-based processing stabilizer based on the total of the semi-aromatic polyamide (D1-7)/elastomer polymer (A3-1) = 85.0/15.0 (% by mass) as 100 parts by mass.

Production of semi-aromatic polyamide composition (D-8)

In the production of the semi-aromatic polyamide composition (D-1), the same method as in the production of the semi-aromatic polyamide composition (D-1) was carried out except for changing semi-aromatic polyamide (D1-1) to (D1-8), and changing the cylinder temperature from 300°C to 320°C to obtain pellets of a semi-aromatic polyamide composition (hereinafter the semi-aromatic polyamide composition is referred to as (D-8).) comprising 0.8 part by mass of the antioxidant and 0.2 part by mass of the phosphorus-based processing stabilizer based on the total of the semi-aromatic polyamide (D1-8)/elastomer polymer (A3-1) = 85.0/15.0 (% by mass) as 100 parts by mass.

Production of semi-aromatic polyamide composition (D-9)

In the production of the semi-aromatic polyamide composition (D-1), the same method as in the production of the semi-aromatic polyamide composition (D-1) was carried out except for changing semi-aromatic polyamide (D1-1) to (D2-1), and changing the cylinder temperature from 300°C to 240°C to obtain pellets of a semi-aromatic polyamide composition (hereinafter the semi-aromatic polyamide composition is referred to as (D-9).) comprising 0.8 part by mass of the antioxidant and 0.2 part by mass of the phosphorus-based processing stabilizer based on the total of the semi-aromatic polyamide (D2-1)/elastomer polymer (A3-1) = 90.0/10.0 (% by mass) as 100 parts by mass.

Production of semi-aromatic polyamide composition (D-10)

In the production of the semi-aromatic polyamide composition (D-9), the same method as in the production of the semi-aromatic polyamide composition (D-9) was carried out except for changing semi-aromatic polyamide (D2-1) to (D2-2), and changing the cylinder temperature from 240°C to 250°C to obtain pellets of a semi-aromatic polyamide composition (hereinafter the semi-aromatic polyamide composition is referred to as (D-10).) comprising 0.8 part by mass of the antioxidant and 0.2 part by mass of the phosphorus-based processing stabilizer based on the total of the semi-aromatic polyamide (D2-2)/elastomer polymer (A3-1) = 90.0/10.0 (% by mass) as 100 parts by mass.

Production of semi-aromatic polyamide composition (D-11)

In the production of the semi-aromatic polyamide composition (D-9), the same method as in the production of the semi-aromatic polyamide composition (D-9) was carried out except for changing semi-aromatic polyamide (D2-1) to (D2-3), and changing the cylinder temperature from 240°C to 260°C to obtain pellets of a semi-aromatic polyamide composition (hereinafter the semi-aromatic polyamide composition is referred to as (D-11).) comprising 0.8 part by mass of the antioxidant and 0.2 part by mass of the phosphorus-based processing stabilizer based on the total of the semi-aromatic polyamide (D2-3)/elastomer polymer (A3-1) = 90.0/10.0 (% by mass) as 100 parts by mass.

Production of semi-aromatic polyamide composition (D-12)

In the production of the semi-aromatic polyamide composition (D-9), the same method as in the production of the semi-aromatic polyamide composition (D-9) was carried out except for changing semi-aromatic polyamide (D2-1) to (D2-4), and changing the cylinder temperature from 240°C to 320°C to obtain pellets of a semi-aromatic polyamide composition (hereinafter the semi-aromatic polyamide composition is referred to as (D-12).) comprising 0.8 part by mass of the antioxidant and 0.2 part by mass of the phosphorus-based processing stabilizer based on the total of the semi-aromatic polyamide (D2-4)/elastomer polymer (A3-1) = 90.0/10.0 (% by mass) as 100 parts by mass.

Production of semi-aromatic polyamide composition (D-13)

In the production of the semi-aromatic polyamide composition (D-9), the same method as in the production of the semi-aromatic polyamide composition (D-9) was carried out except for changing semi-aromatic polyamide (D2-1) to (D2-5), and changing the cylinder temperature from 240°C to 280°C to obtain pellets of a semi-aromatic polyamide composition (hereinafter the semi-aromatic polyamide composition is referred to as (D-13).) comprising 0.8 part by mass of the antioxidant and 0.2 part by mass of the phosphorus-based processing stabilizer based on the total of the semi-aromatic polyamide (D2-5)/elastomer polymer (A3-1) = 85.0/15.0 (% by mass) as 100 parts by mass.

semi-aromatic polyamide composition (D-14)

In the production of the semi-aromatic polyamide composition (D-9), the same method as in the production of the semi-aromatic polyamide composition (D-9) was carried out except for changing the semi-aromatic polyamide (D2-1) used singly to use (D2-1), (D2-5) and (A2-1) in combination, and changing the cylinder temperature from 240°C to 280°C to obtain pellets of a semi-aromatic polyamide composition (hereinafter the semi-aromatic polyamide composition is referred to as (D-14).) comprising 0.8 part by mass of the antioxidant and 0.2 part by mass of the phosphorus-based processing stabilizer based on the total of the semi-aromatic polyamide (D2-5)/semi-aromatic polyamide (D2-1)/polyamide 6/12 (A2-1)/elastomer polymer (A3-1) = 52.5/22.5/10.0/15.0 (% by mass) as 100 parts by mass.

Production of semi-aromatic polyamide composition (D-15)

In the production of the semi-aromatic polyamide composition (D-9), the same method as in the production of the semi-aromatic polyamide composition (D-9) was carried out except for changing the semi-aromatic polyamide (D2-1) to (D2-6), and changing the cylinder temperature from 240°C to 300°C to obtain pellets of a semi-aromatic polyamide composition (hereinafter the semi-aromatic polyamide composition is referred to as (D-15).) comprising 0.8 part by mass of the antioxidant and 0.2 part by mass of the phosphorus-based processing stabilizer based on the total of the semi-aromatic polyamide (D2-6)/elastomer polymer (A3-1) = 85.0/15.0 (% by mass) as 100 parts by mass.

Production of semi-aromatic polyamide composition (D-16)

In the production of the semi-aromatic polyamide composition (D-9), the same method as in the production of the semi-aromatic polyamide composition (D-9) was carried out except for changing semi-aromatic polyamide (D2-1) to (D2-7), and changing the cylinder temperature from 240°C to 320°C to obtain pellets of a semi-aromatic polyamide composition (hereinafter the semi-aromatic polyamide composition is referred to as (D-16).) comprising 0.8 part by mass of the antioxidant and 0.2 part by mass of the phosphorus-based processing stabilizer based on the total of the semi-aromatic polyamide (D2-7)/elastomer polymer (A3-1) = 90.0/10.0 (% by mass) as 100 parts by mass.

Production of conductive semi-aromatic polyamide composition (D-17)

With the semi-aromatic polyamide (D1-9) were previously mixed a maleic anhydride-modified ethylene/1-butene copolymer (A3-1) and an ethylene/1-butene copolymer (available from Mitsui Chemicals, Inc., TAFMER A-0550) as impact improvers, carbon nanotube (available from Nanocyl S.A, NC7000) as a conductive filler, triethylene glycol-bis[3-(3-t-butyl-5-methyl-4-hydroxyphenyl)propionate] (available from BASF Japan, IRGANOX245) as an antioxidant and tris(2,4-di-t-butylphenyl)phosphite (available from BASF Japan, IRGAFOS168) as a phosphorus-based processing stabilizer, and the mixture was supplied to a twin-screw melt/kneader (manufactured by The Japan Steel Works, Ltd., Model type: TEX44), melt-kneaded at a cylinder temperature of from 240°C to 320°C, after a molten resin was extruded into a strand-state, the material was introduced into a water tank, cooled, cut and vacuum-dried to obtain pellets of a conductive semi-aromatic polyamide composition (hereinafter the conductive semi-aromatic polyamide composition is referred to as (D-17).) comprising 5.3 parts by mass of the conductive filler, 0.8 part by mass of the antioxidant and 0.2 part by mass of the phosphorus-based processing stabilizer based on the total of the semi-aromatic polyamide (D1-9)/elastomer polymer (A3-1) = 84.2/15.8 (% by mass) as 100 parts by mass.

Production of conductive semi-aromatic polyamide composition (D-18)

In the production of the conductive semi-aromatic polyamide composition (D-17), the same method as in the production of the conductive semi-aromatic polyamide composition (D-17) was carried out except for changing the semi-aromatic polyamide (D1-9) to (D2-8), and changing the cylinder temperature from 320°C to 270°C to obtain pellets of a conductive semi-aromatic polyamide composition (hereinafter the conductive semi-aromatic polyamide composition is referred to as (D-18).) comprising 5.3 parts by mass of the conductive filler, 0.8 part by mass of the antioxidant and 0.2 part by mass of the phosphorus-based processing stabilizer based on the total of the semi-aromatic polyamide (D2-8)/elastomer polymer (A3-1) = 84.2/15.8 (% by mass) as 100 parts by mass.

Production of conductive semi-aromatic polyamide composition (D-19)

In the production of the conductive semi-aromatic polyamide composition (D-17), the same method as in the production of the conductive semi-aromatic polyamide composition (D-17) was carried out except for changing the semi-aromatic polyamide (D1-9) to (D2-8), (D2-9) and polyamide 6/12 (A2-1), and changing the cylinder temperature from 320°C to 300°C to obtain pellets of a conductive semi-aromatic polyamide composition (hereinafter the conductive semi-aromatic polyamide composition is referred to as (D-19).) comprising 5.3 parts by mass of the conductive filler, 0.8 part by mass of the antioxidant and 0.2 part by mass of the phosphorus-based processing stabilizer based on the total of the semi-aromatic polyamide (D2-9)/semi-aromatic polyamide (D2-8)/polyamide 6/12 (A2-1)/elastomer polymer (A3-1) = 51.6122.1110.5115.8 (% by mass) as 100 parts by mass.

Fluorine-containing polymer (E)

Production of fluorine-containing polymer (E-1)

A polymerization tank having an inner volume of 100 L equipped with a stirrer was degassed, 92.1 kg of 1-hydrotridecafluorohexane, 16.3 kg of 1,3-dichloro-1,1,2,2,3-pentafluoropropane, 73 g of (perfluoroethyl)ethylene $CH_2=CH(CF_2)_2F$ and 10.1 g of itaconic anhydride (IAH) were charged therein, and 9.6 kg of tetrafluoroethylene (TFE) and 0.7 kg of ethylene (E) were charged by pressure, the temperature of the mixture in the polymerization tank was elevated to 66°C, and 433 cm$^3$ of a 1,3-dichloro-1,1,2,2,3-pentafluoropropane solution containing 1% by mass of t-butylperoxypivalate was charged as a polymerization initiator to start polymerization. A monomer mixed gas of TFE/E : 60/40 (molar ratio) was continuously charged so that the pressure became constant during the polymerization. Further, (perfluoroethyl)ethylene in an amount corresponding to 2.0 mol% and IAH in an amount corresponding to 0.5 mol% based on the total molar number of TFE and E to be charged during the polymerization were continuously charged. After 5.5 hours from starting the polymerization, at the time of charging 8.0 kg of the monomer mixed gas and 63 g of IAH, the temperature in the polymerization tank was lowered to room temperature, and the pressure was reduced to normal pressure by purging. The obtained slurry-state fluorine-containing polymer was thrown into 200 L of a granulation tank into which 75.0 kg of water had been charged, and then, heated to 105°C while stirring and granulated while distilling off and removing the solvent. The obtained granules were dried at 150°C for 5 hours to obtain 8.3 kg of a fluorine-containing polymer.

The composition of the fluorine-containing polymer was polymerization units based on TFE/polymerization units based on E/polymerization units based on $CH_2=CH(CF_2)_2F$/polymerization units based on IAH = 58.5/39.0/2.0/0.5 (mol%), and the melting point was 240°C. The granulated product was melted using an extruder at 280°C and a residence time of 2 minutes to obtain pellets of a fluorine-containing polymer (hereinafter the fluorine-containing polymer is referred to as (E-1).).

Production of conductive fluorine-containing polymer composition (E-2)

100 parts by mass of the fluorine-containing polymer (E-1) and 13 parts by mass of carbon black (available from Denka Company Limited) were previously mixed, and the mixture was supplied to a twin-screw meltlkneader (manufactured by Toshiba Machine Co., Ltd., Model type: TEM-48S), melt-kneaded at a cylinder temperature of from 240°C to 300°C, after a molten resin was extruded into a strand-state, the material was introduced into a water tank, discharged strand was cooled by water, and the strand was cut by a pelletizer and dried for the purpose of removing water content in a drier at 120°C for 10 hours to obtain pellets of a conductive fluorine-containing polymer composition (hereinafter the conductive fluorine-containing polymer composition is referred to as (E-2).).

Production of fluorine-containing polymer (E-3)

In the production of the fluorine-containing polymer (E-1), the same method as in the production of the fluorine-containing polymer (E-1) was carried out except for not charging the itaconic anhydride (IAH) to obtain 7.6 kg of a fluorine-containing polymer.

The composition of the fluorine-containing polymer was polymerization units based on TFE/polymerization units based on E/polymerization units based on $CH_2=CH(CF_2)_2F$ = 58.8/39.2/2.0 (mol%), and the melting point was 242°C. The granulated product was melted using an extruder at 280°C and a residence time of 2 minutes to obtain pellets of a fluorine-containing polymer (hereinafter the fluorine-containing polymer is referred to as (E-3).).

Production of conductive fluorine-containing polymer composition (E-4)

In the production of the conductive fluorine-containing polymer composition (E-2), the same method as in the production of the conductive fluorine-containing polymer composition (E-2) was carried out except for changing the fluorine-containing polymer (E-1) to (E-3) to obtain pellets of a conductive fluorine-containing polymer composition (hereinafter the conductive fluorine-containing polymer composition is referred to as (E-4).).

Production of fluorine-containing polymer (E-5)

A polymerization tank having an inner volume of 100 L equipped with a stirrer was degassed, 42.5 kg of 1,3-dichloro-1,1,2,2,3-pentafluoropropane, 2.13 kg of $CF_2=CFOCF_2CF_2CF_3$ (perfluoro(propyl vinyl ether): PPVE, 1,1,2,4,4,5,5,6,6,6-decafluoro-3-oxahex-1-ene) and 51.0 kg of hexafluoropropylene(HFP) were charged therein. Then, the temperature of the mixture in the polymerization tank was elevated to 50°C, 4.25 kg of tetrafluoroethylene (TFE) was charged and the pressure was raised to 1.0 MPa/G. As the polymerization initiator solution, 340 cm$^3$ of a 1,3-dichloro-1,1,2,2,3-pentafluoropropane solution containing 0.3% by mass of (perfluorobutyryl)peroxide was charged therein to start polymerization, and thereafter, 340 cm$^3$ of the polymerization initiator solution was charged with each 10 minutes. TFE was continuously charged so that the pressure retained 1.0 MPa/G during the polymerization. Further, a 1,3-dichloro-1,1,2,2,3-pentafluoropropane solution containing 0.3% by mass of 5-norbomene-2,3-dicarboxylic acid anhydride (NAH) corresponding to an amount of 0.1 mol% based on the molar number of TFE to be charged during the polymerization was continuously charged. After 5 hours from starting the polymerization, at the time of charging 8.5 kg of TFE, the temperature in the polymerization tank was lowered to room temperature, and the pressure was reduced to normal pressure by purging. The obtained slurry-state fluorine-containing polymer was thrown into 200 L of a granulation tank into which 75.0 kg of water had been charged, and then, heated to 105°C while stirring and granulated while distilling off and removing the solvent. The obtained granules were dried at 150°C for 5 hours to obtain 7.5 kg of a granulated product of a fluorine-containing polymer.

The composition of the fluorine-containing polymer was polymerization units based on TFE/polymerization units based on PPVE/polymerization units based on HFP/polymerization units based on NAH = 91.2/1.5/7.2/0.1 (mol%), and the melting point was 262°C. The granulated product was melted using an extruder at 300°C and a residence time of 2 minutes to obtain pellets of a fluorine-containing polymer (hereinafter the fluorine-containing polymer is referred to as (E-5).).

Production of fluorine-containing polymer (E-6)

In the production of the fluorine-containing polymer (E-5), the same method as in the production of the fluorine-containing polymer (E-5) was carried out except for changing not charging the 1,3-dichloro-1,1,2,2,3-pentafluoropropane solution containing 0.3% by mass of 5-norbomene-2,3-dicarboxylic acid anhydride (NAH) to obtain 7.6 kg of a fluorine-containing polymer.

The composition of the fluorine-containing polymer was polymerization units based on TFE/polymerization units based on PPVE/polymerization units based on HFP = 91.5/1.5/7.0 (mol%), and the melting point was 257°C. The granulated product was melted using an extruder at 300°C and a residence time of 2 minutes to obtain pellets of a fluorine-containing polymer (hereinafter the fluorine-containing polymer is referred to as (E-6).).

Production of conductive fluorine-containing polymer composition (E-7)

In the production of the conductive fluorine-containing polymer composition (E-2), the same method as in the production of the conductive fluorine-containing polymer composition (E-2) was carried out except for changing the fluorine-containing polymer (E-1) to (E-6), changing 13 parts by mass of carbon black to 11 parts by mass, and changing the cylinder temperature from 300°C to 320°C to obtain pellets of a conductive fluorine-containing polymer composition (hereinafter the conductive fluorine-containing polymer composition is referred to as (E-7).).

Production of fluorine-containing polymer (E-8)

In a stirring type polymerization tank attached with a jacket capable of containing 174 kg of water was charged 51.5 kg of pure water subjected to demineralization, and after sufficiently purging the internal space with a pure nitrogen gas, the nitrogen gas was removed by vacuum. Then, 40.6 kg of octafluorocyclobutane, 1.6 kg of chlorotrifluoroethylene (CTFE), 4.5 kg of tetrafluoroethylene (TFE) and 2.8 kg of perfluoro(propyl vinyl ether) (PPVE) were charged therein by pressure. 0.090 kg of n-propyl alcohol was added thereto as a chain transfer agent, and the temperature was adjusted to 35°C and stirring was started. To the mixture was added 0.44 kg of a methanol solution containing 50% by mass of di-n-propylperoxy dicarbonate as a polymerization initiator to start polymerization. During the polymerization, a mixed monomer prepared to have the same composition as the desired copolymer composition was additionally charged so as to maintain the pressure in the tank to 0.66 MPa and polymerized, then, the remaining gas in the tank was evacuated and the formed polymer was taken out and washed with pure water subjected to demineralization, and dried to obtain 30.5 kg of a granular powdery fluorine-containing polymer.

The composition of the fluorine-containing polymer was polymerization units based on CTFE/polymerization units based on TFE/polymerization units based on PPVE in a molar ratio of 24.4/73.1/2.5, and the number of the carbonate terminal group based on $1 \times 10^6$ of main chain carbon atoms in the fluorine-containing polymer was 170. In addition, the melting point was 241°C. The granulated product was melted using an extruder at 290°C and a residence time of 2 minutes to obtain pellets of a fluorine-containing polymer (hereinafter the fluorine-containing polymer is referred to as (E-8).).

Production of fluorine-containing polymer (E-9)

In the production of the fluorine-containing polymer (E-8), the same method as in the production of the fluorine-containing polymer (E-8) was carried out except for changing not charging the methanol solution containing 50% by mass of di-n-propylperoxy dicarbonate to obtain 29.8 kg of a fluorine-containing polymer.

The composition of the fluorine-containing polymer was polymerization units based on CTFE/polymerization units based on TFE/polymerization units based on PPVE in a molar ratio of 24.4/73.1/2.5, and the melting point was 241°C. The granulated product was melted using an extruder at 290°C and a residence time of 2 minutes to obtain pellets of a fluorine-containing polymer (hereinafter the fluorine-containing polymer is referred to as (E-9).).

Production of conductive fluorine-containing polymer composition (E-10)

In the production of the conductive fluorine-containing polymer composition (E-7), the same method as in the production of the conductive fluorine-containing polymer composition (E-7) was carried out except for changing the fluorine-containing polymer (E-6) to (E-9), and changing the cylinder temperature from 320°C to 300°C to obtain pellets of a conductive fluorine-containing polymer composition (hereinafter the conductive fluorine-containing polymer composition is referred to as (E-10).).

Example 1

By using the polyamide 12 composition (A-1) and the ethylene/vinyl acetate copolymer saponified product composition (B-1) as mentioned above, (A-1) was melted at the extrusion temperature of 270°C and (B-1) was melted at the extrusion temperature of 220°C separately in a three-layer tube molding machine Plabor (manufactured by Plastics Technology Co., Ltd.), and the discharged molten resins were combined by an adaptor to mold a multilayered tubular body. Subsequently, it was cooled by a sizing die for controlling the dimensions, and subjecting to take off, to obtain a multilayer tube having the layer constitution of (a)/(b)/(a) = 0.45/0.15/0.40 mm when it was made Layer (a) (outermost layer, innermost layer) comprising (A-1) and Layer (b) (intermediate layer) comprising (B-1), and having an inner diameter of 6.0 mm and an outer diameter of 8.0 mm. The measurement results of the properties of the multilayer tube are shown in Table 1.

Example 2

In Example 1, the same method was carried out as in Example 1 except for changing the polyamide 12 composition (A-1) to (A-2) to obtain a multilayer tube having the layer constitution shown in Table 1. The measurement results of the properties of the multilayer tube are shown in Table 1.

Example 3

In Example 1, the same method was carried out as in Example 1 except for changing the polyamide 12 composition (A-1) to (A-3) to obtain a multilayer tube having the layer constitution shown in Table 1. The measurement results of the properties of the multilayer tube are shown in Table 1.

Example 4

In Example 1, the same method was carried out as in Example 1 except for changing the polyamide 12 composition (A-1) to (A-4) to obtain a multilayer tube having the layer constitution shown in Table 1. The measurement results of the properties of the multilayer tube are shown in Table 1.

Example 5

In Example 1, the same method was carried out as in Example 1 except for changing the polyamide 12 composition (A-1) to (A-5) to obtain a multilayer tube having the layer constitution shown in Table 1. The measurement results of the properties of the multilayer tube are shown in Table 1.

Example 6

In Example 1, the same method was carried out as in Example 1 except for changing the polyamide 12 composition (A-1) to (A-6) to obtain a multilayer tube having the layer constitution shown in Table 1. The measurement results of the properties of the multilayer tube are shown in Table 1.

Example 7

In Example 1, the same method was carried out as in Example 1 except for changing the polyamide 12 composition (A-1) to the polyamide 1010 composition (A-7) to obtain a multilayer tube having the layer constitution shown in Table 1. The measurement results of the properties of the multilayer tube are shown in Table 1.

Example 8

In Example 1, the same method was carried out as in Example 1 except for changing the polyamide 12 composition (A-1) used in the innermost layer to the conductive polyamide 12 composition (A-8), changing the extrusion temperature of (A-8) to 290°C, and changing the layer constitution when it is made Layer (a) (outermost layer) comprising (A-1), Layer (b) (intermediate layer) comprising (B-1) and Layer (a') (innermost layer) comprising (A-8), then, to (a)/(b)/(a') = 0.65/0.15/0.20 mm to obtain a multilayer tube having the layer constitution shown in Table 1. The measurement results of the properties of the multilayer tube are shown in Table 1. Also, when the conductivity of the multilayer tube was measured in accordance with SAE J-2260, it was $10^6$ Ω/square or less so that it was confirmed to be excellent in electrostatic removing property.

Example 9

In Example 1, the same method was carried out as in Example 1 except for changing the polyamide 12 composition (A-1) used in the innermost layer to the polyamide 610 composition (C-1) to obtain a multilayer tube having the layer constitution shown in Table 1. The measurement results of the properties of the multilayer tube are shown in Table 1.

Example 10

In Example 1, the same method was carried out as in Example 1 except for changing the polyamide 12 composition (A-1) used in the innermost layer to the conductive polyamide 610 composition (C-2), changing the extrusion temperature of (C-2) to 300°C, and changing the layer constitution when it is made Layer (a) (outermost layer) comprising (A-1), Layer (b) (intermediate layer) comprising (B-1) and Layer (c) (innermost layer) comprising (C-2), then, to (a)/(b)/(c) = 0.65/0.15/0.20 mm to obtain a multilayer tube having the layer constitution shown in Table 1. The measurement results of the properties of the multilayer tube are shown in Table 1. Also, when the conductivity of the multilayer tube was measured in accordance with SAE J-2260, it was $10^6$ Ω/square or less so that it was confirmed to be excellent in electrostatic removing property.

Example 11

In Example 1, the same method was carried out as in Example 1 except for changing the polyamide 12 composition (A-1) used in the innermost layer to the polyamide 612 composition (C-5) to obtain a multilayer tube having the layer constitution shown in Table 1. The measurement results of the properties of the multilayer tube are shown in Table 1.

Example 12

In Example 1, the same method was carried out as in Example 1 except for changing the polyamide 12 composition (A-1) used in the innermost layer to the conductive polyamide 612 composition (C-6), changing the extrusion temperature of (C-6) to 300°C, and changing the layer constitution when it is made Layer (a) (outermost layer) comprising (A-1), Layer (b) (intermediate layer) comprising (B-1) and Layer (c) (innermost layer) comprising (C-6), then, to (a)/(b)/(c) = 0.65/0.15/0.20 mm to obtain a multilayer tube having the layer constitution shown in Table 1. The measurement results of the properties of the multilayer tube are shown in Table 1. Also, when the conductivity of the multilayer tube was measured in accordance with SAE J-2260, it was $10^6$ Ω/square or less so that it was confirmed to be excellent in electrostatic removing property.

Example 13

By using the polyamide 12 composition (A-1), the ethylene/vinyl acetate copolymer saponified product composition (B-1) and the semi-aromatic polyamide composition (D-1) as mentioned above, (A-1) was melted at the extrusion temperature of 270°C, (B-1) was melted at the extrusion temperature of 220°C and (D-1) was melted at the extrusion temperature of 300°C separately in a four-layer tube molding machine Plabor (manufactured by Plastics Technology Co., Ltd.), and the discharged molten resins were combined by an adaptor to mold a multilayered tubular body. Subsequently, it was cooled by a sizing die for controlling the dimensions, and subjecting to take off, to obtain a multilayer tube having the layer constitution of (a)/(b)/(a)/(d) = 0.45/0.10/0.30/0.15 mm when it was made Layer (a) (outermost layer, inner layer) comprising (A-1), Layer (b) (intermediate layer) comprising (B-1) and Layer (d) (innermost layer) comprising (D-1), and having an inner diameter of 6.0 mm and an outer diameter of 8.0 mm. The measurement results of properties of the multilayer tube are shown in Table 2.

Example 14

In Example 13, the same method was carried out as in Example 13 except for changing the semi-aromatic polyamide composition (D-1) to (D-2), and changing the extrusion temperature of (D-2) to 340°C to obtain a multilayer tube having the layer constitution shown in Table 2. The measurement results of properties of the multilayer tube are shown in Table 2.

Example 15

In Example 13, the same method was carried out as in Example 13 except for changing the semi-aromatic polyamide composition (D-1) to (D-3), and changing the extrusion temperature of (D-3) to 310°C to obtain a multilayer tube having the layer constitution shown in Table 2. The measurement results of properties of the multilayer tube are shown in Table 2.

Example 16

In Example 13, the same method was carried out as in Example 13 except for changing the semi-aromatic polyamide composition (D-1) to (D-4), and changing the extrusion temperature of (D-4) to 340°C to obtain a multilayer tube having the layer constitution shown in Table 2. The measurement results of properties of the multilayer tube are shown in Table 2.

Example 17

In Example 13, the same method was carried out as in Example 13 except for changing the semi-aromatic polyamide composition (D-1) to (D-5), and changing the extrusion temperature of (D-5) to 290°C to obtain a multilayer tube having the layer constitution shown in Table 2. The measurement results of properties of the multilayer tube are shown in Table 2.

Example 18

In Example 13, the same method was carried out as in Example 13 except for changing the semi-aromatic polyamide composition (D-1) to (D-6), and changing the extrusion temperature of (D-6) to 310°C to obtain a multilayer tube having the layer constitution shown in Table 2. The measurement results of properties of the multilayer tube are shown in Table 2.

Example 19

In Example 13, the same method was carried out as in Example 13 except for changing the semi-aromatic polyamide composition (D-1) to (D-7), and changing the extrusion temperature of (D-7) to 340°C to obtain a multilayer tube having the layer constitution shown in Table 2. The measurement results of properties of the multilayer tube are shown in Table 2.

Example 20

In Example 13, the same method was carried out as in Example 13 except for changing the semi-aromatic polyamide composition (D-1) to (D-8), and changing the extrusion temperature of (D-8) to 320°C to obtain a multilayer tube having the layer constitution shown in Table 2. The measurement results of properties of the multilayer tube are shown in Table 2.

Example 21

In Example 13, the same method was carried out as in Example 13 except for changing the semi-aromatic polyamide composition (D-1) to (D-9), and changing the extrusion temperature of (D-9) to 240°C to obtain a multilayer tube having the layer constitution shown in Table 2. The measurement results of properties of the multilayer tube are shown in Table 2.

Example 22

In Example 13, the same method was carried out as in Example 13 except for changing the semi-aromatic polyamide composition (D-1) to (D-10), and changing the extrusion temperature of (D-10) to 250°C to obtain a multilayer tube having the layer constitution shown in Table 2. The measurement results of properties of the multilayer tube are shown in Table 2.

Example 23

In Example 13, the same method was carried out as in Example 13 except for changing the semi-aromatic polyamide composition (D-1) to (D-11), and changing the extrusion temperature of (D-1 1) to 260°C to obtain a multilayer tube having the layer constitution shown in Table 2. The measurement results of properties of the multilayer tube are shown in Table 2.

Example 24

In Example 13, the same method was carried out as in Example 13 except for changing the semi-aromatic polyamide composition (D-1) to (D-12), and changing the extrusion temperature of (D-12) to 320°C to obtain a multilayer tube having the layer constitution shown in Table 2. The measurement results of properties of the multilayer tube are shown in Table 2.

Example 25

In Example 13, the same method was carried out as in Example 13 except for changing the semi-aromatic polyamide composition (D-1) to (D-13), and changing the extrusion temperature of (D-13) to 280°C to obtain a multilayer tube having the layer constitution shown in Table 2. The measurement results of properties of the multilayer tube are shown in Table 2.

Example 26

In Example 13, the same method was carried out as in Example 13 except for changing the semi-aromatic polyamide composition (D-1) to (D-14), and changing the extrusion temperature of (D-14) to 280°C to obtain a multilayer tube having the layer constitution shown in Table 2. The measurement results of properties of the multilayer tube are shown in Table 2.

Example 27

In Example 13, the same method was carried out as in Example 13 except for changing the semi-aromatic polyamide composition (D-1) to (D-15), and changing the extrusion temperature of (D-15) to 300°C to obtain a multilayer tube having the layer constitution shown in Table 2. The measurement results of properties of the multilayer tube are shown in Table 2.

Example 28

In Example 13, the same method was carried out as in Example 13 except for changing the semi-aromatic polyamide composition (D-1) to (D-16), and changing the extrusion temperature of (D-16) to 320°C to obtain a multilayer tube having the layer constitution shown in Table 2. The measurement results of properties of the multilayer tube are shown in Table 2.

Example 29

In Example 13, the same method was carried out as in Example 13 except for changing the semi-aromatic polyamide composition (D-1) to the conductive semi-aromatic polyamide composition (D-17), and changing the extrusion temperature of (D-17) to 320°C to obtain a multilayer tube having the layer constitution shown in Table 2. The measurement results of properties of the multilayer tube are shown in Table 2. Also, when the conductivity of the multilayer tube was measured in accordance with SAE J-2260, it was $10^6$ Ω/square or less so that it was confirmed to be excellent in electrostatic removing property.

Example 30

In Example 13, the same method was carried out as in Example 13 except for changing the semi-aromatic polyamide composition (D-1) to the conductive semi-aromatic polyamide composition (D-18), and changing the extrusion temperature of (D-18) to 270°C to obtain a multilayer tube having the layer constitution shown in Table 2. The measurement results of properties of the multilayer tube are shown in Table 2. Also, when the conductivity of the multilayer tube was measured in accordance with SAE J-2260, it was $10^6$ Ω/square or less so that it was confirmed to be excellent in electrostatic removing property.

Example 31

In Example 13, the same method was carried out as in Example 13 except for changing the semi-aromatic polyamide composition (D-1) to the conductive semi-aromatic polyamide composition (D-19), and changing the extrusion temperature of (D-19) to 300°C to obtain a multilayer tube having the layer constitution shown in Table 2. The measurement results of properties of the multilayer tube are shown in Table 2. Also, when the conductivity of the multilayer tube was measured in accordance with SAE J-2260, it was $10^6$ Ω/square or less so that it was confirmed to be excellent in electrostatic removing property.

Example 32

In Example 13, the same method was carried out as in Example 13 except for changing the polyamide 12 composition (A-1) used in the inner layer to the polyamide 6/12 composition (C-3), and changing the extrusion temperature of (C-3) to 240°C to obtain a multilayer tube having the layer constitution shown in Table 2. The measurement results of properties of the multilayer tube are shown in Table 2.

Example 33

In Example 13, the same method was carried out as in Example 13 except for changing the polyamide 12 composition (A-1) used in the inner layer to the polyamide 6 composition (C-4) to obtain a multilayer tube having the layer constitution shown in Table 2. The measurement results of properties of the multilayer tube are shown in Table 2.

Example 34

By using the polyamide 12 composition (A-1), the ethylene/vinyl acetate copolymer saponified product composition (B-1), the semi-aromatic polyamide composition (D-1) and the conductive semi-aromatic polyamide composition (D-17) as mentioned above, (A-1) was melted at the extrusion temperature of 270°C, (B-1) was melted at the extrusion temperature of 220°C, (D-1) was melted at the extrusion temperature of 300°C and (D-17) was melted at the extrusion temperature of 320°C separately in a five-layer tube molding machine Plabor (manufactured by Plastics Technology Co., Ltd.), and the discharged molten resins were combined by an adaptor to mold a multilayered tubular body. Subsequently, it was cooled by a sizing die for controlling the dimensions, and subjecting to take off, to obtain a multilayer tube having the layer constitution of (a)/(b)/(a)/(d)/(d') = 0.40/0.10/0.30/0.10/0.10 mm when it was made Layer (a) (outermost layer, intermediate layer) comprising (A-1), Layer (b) (outer layer) comprising (B-1), Layer (d) (inner layer) comprising (D-1) and Layer (d') (innermost layer) comprising (D-17), and having an inner diameter of 6.0 mm and an outer diameter of 8.0 mm. The measurement results of properties of the multilayer tube are shown in Table 3. Also, when the conductivity of the multilayer tube was measured in accordance with SAE J-2260, it was $10^6$ $\Omega$/square or less so that it was confirmed to be excellent in electrostatic removing property.

Example 35

In Example 34, the same method was carried out as in Example 34 except for changing the semi-aromatic polyamide composition (D-1) to (D-9), changing the conductive semi-aromatic polyamide composition (D-17) to (D-18), changing the extrusion temperature of (D-9) to 240°C, and changing the extrusion temperature of (D-18) to 270°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ $\Omega$/square or less so that it was confirmed to be excellent in electrostatic removing property.

Example 36

In Example 34, the same method was carried out as in Example 34 except for changing the semi-aromatic polyamide composition (D-1) to (D-14), changing the conductive semi-aromatic polyamide composition (D-17) to (D-19), changing the extrusion temperature of (D-14) to 280°C, and changing the extrusion temperature of (D-19) to 300°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ $\Omega$/square or less so that it was confirmed to be excellent in electrostatic removing property.

Example 37

In Example 34, the same method was carried out as in Example 34 except for changing the polyamide 12 composition (A-1) used in the intermediate layer to the polyamide 6/12 composition (C-3), and changing the extrusion temperature of (C-3) to 240°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ $\Omega$/square or less so that it was confirmed to be excellent in electrostatic removing property.

Example 38

In Example 34, the same method was carried out as in Example 34 except for changing the polyamide 12 composition (A-1) used in the intermediate layer to the polyamide 6 composition (C-4) to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less so that it was confirmed to be excellent in electrostatic removing property.

Example 39

In Example 13, the same method was carried out as in Example 13 except for changing the semi-aromatic polyamide composition (D-1) to the fluorine-containing polymer (E-1), changing the extrusion temperature of (E-1) to 290°C, and changing the layer constitution to (a)/(b)/(a)/(e) = 0.5010.1010.3010.10 mm when it was made Layer (a) (outermost layer, inner layer) comprising (A-1), Layer (b) (intermediate layer) comprising (B-1) and Layer (e) (innermost layer) comprising (E-1), to obtain a multilayer tube having the layer constitution shown in Table 2. The measurement results of properties of the multilayer tube are shown in Table 2.

Example 40

In Example 39, the same method was carried out as in Example 39 except for changing the fluorine-containing polymer (E-1) to the conductive fluorine-containing polymer (E-2), and changing the extrusion temperature of (E-2) to 310°C to obtain a multilayer tube having the layer constitution shown in Table 2. The measurement results of properties of the multilayer tube are shown in Table 2. Also, when the conductivity of the multilayer tube was measured in accordance with SAE J-2260, it was $10^6$ Ω/square or less so that it was confirmed to be excellent in electrostatic removing property.

Example 41

In Example 39, the same method was carried out as in Example 39 except for changing the fluorine-containing polymer (E-1) to (E-5), and changing the extrusion temperature of (E-5) to 310°C to obtain a multilayer tube having the layer constitution shown in Table 2. The measurement results of properties of the multilayer tube are shown in Table 2.

Example 42

In Example 39, the same method was carried out as in Example 39 except for changing the fluorine-containing polymer (E-1) to (E-8), and changing the extrusion temperature of (E-8) to 300°C to obtain a multilayer tube having the layer constitution shown in Table 2. The measurement results of properties of the multilayer tube are shown in Table 2.

Example 43

In Example 39, the same method was carried out as in Example 39 except for changing the polyamide 12 composition (A-1) used in the inner layer to the polyamide 6/12 composition (C-3), and changing the extrusion temperature of (C-3) to 240°C to obtain a multilayer tube having the layer constitution shown in Table 2. The measurement results of properties of the multilayer tube are shown in Table 2.

Example 44

In Example 39, the same method was carried out as in Example 39 except for changing the polyamide 12 composition (A-1) used in the inner layer to the polyamide 6 composition (C-4) to obtain a multilayer tube having the layer constitution shown in Table 2. The measurement results of properties of the multilayer tube are shown in Table 2.

Example 45

In Example 34, the same method was carried out as in Example 34 except for changing the semi-aromatic polyamide composition (D-1) to the fluorine-containing polymer (E-1), changing the conductive semi-aromatic polyamide composition (D-17) to the conductive fluorine-containing polymer (E-2), changing the extrusion temperature of (E-1) to 290°C, and changing the extrusion temperature of (E-2) to 310°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less and confirmed to be excellent in removal property of static electricity.

Example 46

In Example 45, the same method was carried out as in Example 45 except for changing the conductive fluorine-containing polymer (E-2) to the fluorine-containing polymer (E-3), and changing the extrusion temperature of (E-3) to 290°C to obtain a multilayer tube having the layer constitution shown in Table 3. The measurement results of properties of the multilayer tube are shown in Table 3.

Example 47

In Example 45, the same method was carried out as in Example 45 except for changing the conductive fluorine-containing polymer (E-2) to (E-4) to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less and confirmed to be excellent in removal property of static electricity.

Example 48

In Example 45, the same method was carried out as in Example 45 except for changing the fluorine-containing polymer (E-1) to (E-5), changing the conductive fluorine-containing polymer (E-2) to the fluorine-containing polymer (E-6), and changing the extrusion temperature of (E-5) to 310°C to obtain a multilayer tube having the layer constitution shown in Table 3. The measurement results of properties of the multilayer tube are shown in Table 3.

Example 49

In Example 45, the same method was carried out as in Example 45 except for changing the fluorine-containing polymer (E-1) to (E-5), changing the conductive fluorine-containing polymer (E-2) to (E-7), changing the extrusion temperature of (E-5) to 310°C, and changing the extrusion temperature of (E-7) to 330°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less and confirmed to be excellent in removal property of static electricity.

Example 50

In Example 45, the same method was carried out as in Example 45 except for changing the fluorine-containing polymer (E-1)to (E-8), and changing the conductive fluorine-containing polymer (E-2) to the fluorine-containing polymer (E-9) to obtain a multilayer tube having the layer constitution shown in Table 3. The measurement results of properties of the multilayer tube are shown in Table 3.

Example 51

In Example 45, the same method was carried out as in Example 45 except for changing the fluorine-containing polymer (E-1) to (E-8), and changing the conductive fluorine-containing polymer (E-2) to (E-10) to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less and confirmed to be excellent in removal property of static electricity.

Example 52

In Example 45, the same method was carried out as in Example 45 except for changing the polyamide 12 composition (A-1) used in the intermediate layer to the polyamide 6/12 composition (C-3), and changing the extrusion temperature of (C-3) to 240°C to obtain a multilayer tube having the layer constitution shown in Table 3. The measurement results of properties of the multilayer tube are shown in Table 3.

Example 53

In Example 45, the same method was carried out as in Example 45 except for changing the polyamide 12 composition (A-1) used in the intermediate layer to the polyamide 6 composition (C-4) to obtain a multilayer tube having the layer constitution shown in Table 3. The measurement results of properties of the multilayer tube are shown in Table 3.

Example 54

In Example 34, the same method was carried out as in Example 34 except for changing the conductive semi-aromatic polyamide composition (D-17) to the fluorine-containing polymer (E-1), and changing the extrusion temperature of (E-1) to 290°C to obtain a multilayer tube having the layer constitution shown in Table 3. The measurement results of properties of the multilayer tube are shown in Table 3.

Example 55

In Example 54, the same method was carried out as in Example 54 except for changing the fluorine-containing polymer (E-1) to the conductive fluorine-containing polymer (E-2), and changing the extrusion temperature of (E-2) to 310°C to obtain a multilayer tube having the layer constitution shown in Table 3. The measurement results of properties of the multilayer tube are shown in Table 3. Also, when the conductivity of the multilayer tube was measured in accordance with SAE J-2260, it was $10^6$ Ω/square or less and confirmed to be excellent in removal property of static electricity.

Example 56

In Example 54, the same method was carried out as in Example 54 except for changing the fluorine-containing polymer (E-1) to (E-5), and changing the extrusion temperature of (E-5) to 310°C to obtain a multilayer tube having the layer constitution shown in Table 3. The measurement results of properties of the multilayer tube are shown in Table 3.

Example 57

In Example 54, the same method was carried out as in Example 54 except for changing the fluorine-containing polymer (E-1) to (E-8), and changing the extrusion temperature of (E-8) to 300°C to obtain a multilayer tube having the layer constitution shown in Table 3. The measurement results of properties of the multilayer tube are shown in Table 3.

Example 58

In Example 54, the same method was carried out as in Example 54 except for changing the polyamide 12 composition (A-1) used in the intermediate layer to the polyamide 6112 composition (C-3), and changing the extrusion temperature of (C-3) to 240°C to obtain a multilayer tube having the layer constitution shown in Table 3. The measurement results of properties of the multilayer tube are shown in Table 3.

Example 59

In Example 54, the same method was carried out as in Example 54 except for changing the polyamide 12 composition (A-1) used in the intermediate layer to the polyamide 6 composition (C-4) to obtain a multilayer tube having the layer constitution shown in Table 3. The measurement results of properties of the multilayer tube are shown in Table 3.

Comparative Example 1

In Example 1, the same method was carried out as in Example 1 except for changing the polyamide 12 composition (A-1) to (A-9) to obtain a multilayer tube having the layer constitution shown in Table 1. The measurement results of the properties of the multilayer tube are shown in Table 1.

Comparative Example 2

In Example 1, the same method was carried out as in Example 1 except for changing the polyamide 12 composition (A-1) to (A-10) to obtain a multilayer tube having the layer constitution shown in Table 1. The measurement results of the properties of the multilayer tube are shown in Table 1.

Comparative Example 3

In Example 1, the same method was carried out as in Example 1 except for changing the polyamide 12 composition (A-1) to (A-11) to obtain a multilayer tube having the layer constitution shown in Table 1. The measurement results of the properties of the multilayer tube are shown in Table 1.

Comparative Example 4

In Example 1, the same method was carried out as in Example 1 except for changing the polyamide 12 composition (A-1) to (A-12) to obtain a multilayer tube having the layer constitution shown in Table 1. The measurement results of the properties of the multilayer tube are shown in Table 1.

Comparative Example 5

In Example 9, the same method was carried out as in Example 9 except for changing the polyamide 12 composition (A-1) used in the outermost layer to (A-9) to obtain a multilayer tube having the layer constitution shown in Table 1. The measurement results of the properties of the multilayer tube are shown in Table 1.

Comparative Example 6

In Example 9, the same method was carried out as in Example 9 except for changing the polyamide 12 composition (A-1) used in the outermost layer to (A-10) to obtain a multilayer tube having the layer constitution shown in Table 1. The measurement results of the properties of the multilayer tube are shown in Table 1.

Comparative Example 7

In Example 9, the same method was carried out as in Example 9 except for changing the polyamide 12 composition (A-1) used in the outermost layer to (A-11) to obtain a multilayer tube having the layer constitution shown in Table 1. The measurement results of the properties of the multilayer tube are shown in Table 1.

Comparative Example 8

In Example 9, the same method was carried out as in Example 9 except for changing the polyamide 12 composition (A-1) used in the outermost layer to (A-12) to obtain a multilayer tube having the layer constitution shown in Table 1. The measurement results of the properties of the multilayer tube are shown in Table 1.

Comparative Example 9

In Example 13, the same method was carried out as in Example 13 except for changing the polyamide 12 composition (A-1) to (A-9) to obtain a multilayer tube having the layer constitution shown in Table 2. The measurement results of properties of the multilayer tube are shown in Table 2.

Comparative Example 10

In Example 13, the same method was carried out as in Example 13 except for changing the polyamide 12 composition (A-1) to (A-10) to obtain a multilayer tube having the layer constitution shown in Table 2. The measurement results of properties of the multilayer tube are shown in Table 2.

Comparative Example 11

In Example 13, the same method was carried out as in Example 13 except for changing the polyamide 12 composition (A-1) to (A-11) to obtain a multilayer tube having the layer constitution shown in Table 2. The measurement results of properties of the multilayer tube are shown in Table 2.

Comparative Example 12

In Example 13, the same method was carried out as in Example 13 except for changing the polyamide 12 composition (A-1) to (A-12) to obtain a multilayer tube having the layer constitution shown in Table 2. The measurement results of properties of the multilayer tube are shown in Table 2.

Comparative Example 13

In Example 34, the same method was carried out as in Example 34 except for changing the polyamide 12 composition (A-1) to (A-9) to obtain a multilayer tube having the layer constitution shown in Table 3. The measurement results of properties of the multilayer tube are shown in Table 3.

Comparative Example 14

In Example 34, the same method was carried out as in Example 34 except for changing the polyamide 12 composition (A-1) to (A-10) to obtain a multilayer tube having the layer constitution shown in Table 3. The measurement results of properties of the multilayer tube are shown in Table 3.

Comparative Example 15

In Example 34, the same method was carried out as in Example 34 except for changing the polyamide 12 composition (A-1) to (A-11) to obtain a multilayer tube having the layer constitution shown in Table 3. The measurement results of properties of the multilayer tube are shown in Table 3.

Comparative Example 16

In Example 34, the same method was carried out as in Example 34 except for changing the polyamide 12 composition (A-1) to (A-12) to obtain a multilayer tube having the layer constitution shown in Table 3. The measurement results of properties of the multilayer tube are shown in Table 3.

Comparative Example 17

In Example 39, the same method was carried out as in Example 39 except for changing the polyamide 12 composition (A-1) to (A-9) to obtain a multilayer tube having the layer constitution shown in Table 2. The measurement results of properties of the multilayer tube are shown in Table 2.

Comparative Example 18

In Example 39, the same method was carried out as in Example 39 except for changing the polyamide 12 composition (A-1) to (A-10) to obtain a multilayer tube having the layer constitution shown in Table 2. The measurement results of properties of the multilayer tube are shown in Table 2.

Comparative Example 19

In Example 39, the same method was carried out as in Example 39 except for changing the polyamide 12 composition (A-1) to (A-11) to obtain a multilayer tube having the layer constitution shown in Table 2. The measurement results of properties of the multilayer tube are shown in Table 2.

Comparative Example 20

In Example 39, the same method was carried out as in Example 39 except for changing the polyamide 12 composition (A-1) to (A-12) to obtain a multilayer tube having the layer constitution shown in Table 2. The measurement results of properties of the multilayer tube are shown in Table 2.

Comparative Example 21

In Example 45, the same method was carried out as in Example 45 except for changing the polyamide 12 composition (A-1) to (A-9) to obtain a multilayer tube having the layer constitution shown in Table 3. The measurement results of properties of the multilayer tube are shown in Table 3.

Comparative Example 22

In Example 45, the same method was carried out as in Example 45 except for changing the polyamide 12 composition (A-1) to (A-10) to obtain a multilayer tube having the layer constitution shown in Table 3. The measurement results of properties of the multilayer tube are shown in Table 3.

Comparative Example 23

In Example 45, the same method was carried out as in Example 45 except for changing the polyamide 12 composition (A-1) to (A-11) to obtain a multilayer tube having the layer constitution shown in Table 3. The measurement results of properties of the multilayer tube are shown in Table 3.

Comparative Example 24

In Example 45, the same method was carried out as in Example 45 except for changing the polyamide 12 composition (A-1) to (A-12) to obtain a multilayer tube having the layer constitution shown in Table 3. The measurement results of properties of the multilayer tube are shown in Table 3.

Comparative Example 25

In Example 54, the same method was carried out as in Example 54 except for changing the polyamide 12 composition (A-1) to (A-9) to obtain a multilayer tube having the layer constitution shown in Table 3. The measurement results of properties of the multilayer tube are shown in Table 3.

Comparative Example 26

In Example 54, the same method was carried out as in Example 54 except for changing the polyamide 12 composition (A-1) to (A-10) to obtain a multilayer tube having the layer constitution shown in Table 3. The measurement results of properties of the multilayer tube are shown in Table 3.

Comparative Example 27

In Example 54, the same method was carried out as in Example 54 except for changing the polyamide 12 composition (A-1) to (A-11) to obtain a multilayer tube having the layer constitution shown in Table 3. The measurement results of properties of the multilayer tube are shown in Table 3.

Comparative Example 28

In Example 54, the same method was carried out as in Example 54 except for changing the polyamide 12 composition (A-1) to (A-12) to obtain a multilayer tube having the layer constitution shown in Table 3. The measurement results of properties of the multilayer tube are shown in Table 3.

[Table 1]

| | Outermost layer | | Intermediate layer | | Innermost layer | | Chemical resistance | | Peeling strength [N/mm] | |
|---|---|---|---|---|---|---|---|---|---|---|
| | Kind | Thickness [mm] | Kind | Thickness [mm] | Kind | Thickness [mm] | Appearance | Low temperature impact (number of broken/ number of tested) | Initial | After heat treatment |
| Example 1 | A-1 | 0.45 | B-1 | 0.15 | A-1 | 0.40 | No crack | 0/5 | Peeling Impossible | Peeling Impossible |
| Example 2 | A-2 | 0.45 | B-1 | 0.15 | A-2 | 0.40 | No crack | 0/5 | Peeling Impossible | 6.8 |
| Example 3 | A-3 | 0.45 | B-1 | 0.15 | A-3 | 0.40 | No crack | 0/5 | Peeling Impossible | Peeling impossible |
| Example 4 | A-4 | 0.45 | B-1 | 0.15 | A-4 | 0.40 | No crack | 0/5 | Peeling Impossible | Peeling Impossible |
| Example 5 | A-5 | 0.45 | B-1 | 0.15 | A-5 | 0.40 | No crack | 0/5 | Peeling Impossible | Peeling Impossible |
| Example 6 | A-6 | 0.45 | B-1 | 0.15 | A-6 | 0.40 | No crack | 0/5 | Peeling Impossible | Peeling impossible |
| Example 7 | A-7 | 0.45 | B-1 | 0.15 | A-7 | 0.40 | No crack | 0/5 | Peeling impossible | Peeling impossible |
| Example 8 | A-1 | 0.65 | B-1 | 0.15 | A-8 | 0.20 | No crack | 015 | Peeling impossible | Peeling impossible |
| Examples | A-1 | 0.45 | B-1 | 0.15 | C-1 | 0.40 | No crack | 0/5 | 4.1 | 3.2 |
| Example10 | A-1 | 0.65 | B-1 | 0.15 | C-2 | 0.20 | No crack | 0/5 | 3.9 | 3.0 |
| Example11 | A-1 | 0.45 | B-1 | 0.15 | C-5 | 0.40 | No crack | 0/5 | Peeling Impossible | Peeling Impossible |
| Example12 | A-1 | 0.65 | B-1 | 0.15 | C-6 | 0.20 | No crack | 0/5 | Peeling Impossible | Peeling Impossible |
| Comparative Example 1 | A-9 | 0.45 | B-1 | 0.15 | A-9 | 0.40 | No crack | 0/5 | 0.3 | 0 |
| Comparative Example 2 | A-10 | 0.45 | B-1 | 0.15 | A-10 | 0.40 | No crack | 0/5 | 0.5 | 0 |

80

EP 3 689 590 B1

| | Outermost layer | | Intermediate layer | | Innermost layer | | Chemical resistance | | Peeling strength [N/mm] | |
|---|---|---|---|---|---|---|---|---|---|---|
| | Kind | Thickness [mm] | Kind | Thickness [mm] | Kind | Thickness [mm] | Appearance | Low temperature impact (number of broken/ number of tested) | Initial | After heat treatment |
| Comparative Example 3 | A-11 | 0.45 | B-1 | 0.15 | A-11 | 0.40 | No crack | 0/5 | 1.1 | 0.2 |
| Comparative Example 4 | A-12 | 0.45 | B-1 | 0.15 | A-12 | 0.40 | With crack | 5/5 | Peeling impossible | Peeling Impossible |
| Comparative Example 5 | A-9 | 0.45 | B-1 | 0.15 | C-1 | 0.40 | No crack | 0/5 | 0.4 | 0 |
| Comparative Example 6 | A-10 | 0.45 | B-1 | 0.15 | C-1 | 0.40 | No crack | 0/5 | 0.4 | 0 |
| Comparative Example 7 | A-11 | 0.45 | B-1 | 0.15 | C-1 | 0.40 | No crack | 0/5 | 1.2 | 0.4 |
| Comparative Example 8 | A-12 | 0.45 | B-1 | 0.15 | C-1 | 0.40 | With crack | 5/5 | Peeling impossible | Peeling Impossible |

EP 3 689 590 B1

[Table 2]

| | Outermost layer | | Intermediate layer | | Inner layer | | Innermost layer | | Chemical resistance | | Peeling strength [N/mm] | |
|---|---|---|---|---|---|---|---|---|---|---|---|---|
| | Kind | Thickness [mm] | Kind | Thickness [mm] | Kind | Thickness [mm] | Kind | Thickness [mm] | Appearance | Low temperature Impact (number of broken/ number of tested) | Initial | After heat treatment |
| Example 13 | A-1 | 0.45 | B-1 | 0.10 | A-1 | 0.30 | D-1 | 0.15 | No crack | 0/5 | Peeling Impossible | Peeling Impossible |
| Example14 | A-1 | 0.45 | B-1 | 0.10 | A-1 | 0.30 | D-2 | 0.15 | No crack | 0/5 | Peeling Impossible | Peeling Impossible |
| Example15 | A-1 | 0.45 | B-1 | 0.10 | A-1 | 0.30 | 0.3 | 0.15 | No crack | 0/5 | Peeling Impossible | Peeling Impossible |
| Example16 | A-7, | 0.45 | B-1 | 0.10 | A-1 | 0.30 | D-4 | 0.15 | No crack | 0/5 | Peeling Impossible | Peeling Impossible |
| Example 17 | A-1 | 0.45 | B-1 | 0.10 | A-1 | 0.30 | D-5 | 0.15 | No crack | 0/5 | Peeling Impossible | Peeling Impossible |
| Example18 | A-1 | 0.45 | B-1 | 0.10 | A-1 | 0.30 | D-6 | 0.15 | No crack | 0/5 | Peeling Impossible | Peeling Impossible |
| Example 19 | A-1 | 0.45 | B-1 | 0.10 | A-1 | 0.30 | D-7 | 0.15 | No crack | 0/5 | Peeling Impossible | Peeling Impossible |
| Example 20 | A-1 | 0.45 | B-1 | 0.10 | A-1 | 0.30 | D-8 | 0.15 | No crack | 0/5 | Peeling Impossible | Peeling Impossible |
| Example21 | A-1 | 0.45 | B-1 | 0.10 | A-1 | 0.30 | D-9 | 0.15 | No crack | 0/5 | Peeling Impossible | Peeling Impossible |
| Example 22 | A-1 | 0.45 | B-1 | 0.10 | A-1 | 0.30 | D-10 | 0.15 | No crack | 015 | Peeling Impossible | Peeling Impossible |
| Example23 | A-1 | 0.45 | B-1 | 0.10 | A-1 | 0.30 | 0.11 | 0.15 | No crack | 0/5 | Peeling Impossible | Peeling Impossible |
| Example 24 | A-1 | 0.45 | B-1 | 0.10 | A-1 | 0.30 | D-12 | 0.15 | No crack | 0/5 | Peeling Impossible | Peeling Impossible |

| | Outermost layer | | Intermediate layer | | Inner layer | | Innermost layer | | Chemical resistance | | Peeling strength [N/mm] | |
|---|---|---|---|---|---|---|---|---|---|---|---|---|
| | Kind | Thickness [mm] | Kind | Thickness [mm] | Kind | Thickness [mm] | Kind | Thickness [mm] | Appearance | Low temperature Impact (number of broken/ number of tested) | Initial | After heat treatment |
| Example25 | A-1 | 0.45 | B-1 | 0.10 | A-1 | 0.30 | D-13 | 0.15 | No crack | 0/5 | Peeling Impossible | Peeling Impossible |
| Example26 | A-1 | 0.45 | B-1 | 0.10 | A-1 | 0.30 | D-14 | 0.15 | No crack | 0/5 | Peeling Impossible | Peeling Impossible |
| Example 27 | A-1 | 0.45 | B-1 | 0.10 | A-1 | 0.30 | D-15 | 0.15 | No crack | 0/5 | Peeling impossible | Peeling impossible |
| Example28 | A-1 | 0.45 | B-1 | 0.10 | A-1 | 0.30 | D-16 | 0.15 | No crack | 0/5 | Peeling impossible | Peeling impossible |
| Example29 | A-1 | 0.45 | B-1 | 0.10 | A-1 | 0.30 | D-17 | 0.15 | No crack | 0/5 | Peeling impossible | Peeling Impossible |
| Example30 | A-1 | 0.45 | B-1 | 0.10 | A-1 | 0.30 | D-18 | 0.15 | No crack | 0/5 | Peeling Impossible | Peeling Impossible |
| Example31 | A-1 | 0.45 | B-1 | 0.10 | A-1 | 0.30 | D-19 | 0.15 | No crack | 0/5 | Peeling Impossible | Peeling Impossible |
| Example 32. | A-1 | 0.45 | B-1 | 0.10 | C-3 | 0.30 | D-1 | 0.15 | No crack | 0/5 | Peeling Impossible | Peeling Impossible |
| Example 33. | A-1 | 0.45 | B-1 | 0.10 | C-4 | 0.30 | D-1 | 0.15 | No crack | 0/5 | Peeling Impossible | Peeling Impossible |
| Example39 | A-1 | 0.50 | B-1 | 0.10 | A-1 | 0.30 | E-1 | 0.10 | No crack | 0/5 | Peeling Impossible | Peeling Impossible |
| Example40 | A-1 | 0.50 | B-1 | 0.10 | A-1 | 0.30 | E-2 | 0.10 | No crack | 0/5 | Peeling Impossible | Peeling impossible |
| Example41 | A-1 | 0.50 | B-1 | 0.10 | A-1 | 0.30 | E-5 | 0.10 | No crack | 0/5 | Peeling impossible | Peeling Impossible |

| | Outermost layer | | Intermediate layer | | Inner layer | | Innermost layer | | Chemical resistance | | Peeling strength [N/mm] | |
|---|---|---|---|---|---|---|---|---|---|---|---|---|
| | Kind | Thickness [mm] | Kind | Thickness [mm] | Kind | Thickness [mm] | Kind | Thickness [mm] | Appearance | Low temperature Impact (number of broken/ number of tested) | Initial | After heat treatment |
| Example42 | A-1 | 0.50 | B-1 | 0.10 | A-1 | 0.30 | E-8 | 0.10 | No crack | 0/5 | Peeling Impossible | Peeling Impossible |
| Example 43. | A-1 | 0.50 | B-1 | 0.10 | C-3 | 0.30 | E-1 | 0.10 | No crack | 0/5 | Peeling Impossible | Peeling Impossible |
| Example44 | A-1 | 0.50 | B-1 | 0.10 | C-4 | 0.30 | E-1 | 0.10 | No crack | 0/5 | Peeling Impossible | Peeling Impossible |
| Comparative Example 9 | A-9 | 0.45 | B-1 | 0.10 | A-9 | 0.30 | D-1 | 0.15 | No crack | 0/5 | 0.3 | 0 |
| Comparative Example 10 | A-10 | 0.45 | B-1 | 0.10 | A-10 | 0.30 | D-1 | 0.15 | No crack | 0/5 | 0.4 | 0 |
| Comparative Example 11 | A-11 | 0.45 | B-1 | 0.10 | A-11 | 0.30 | D-1 | 0.15 | No crack | 0/5 | 1.0 | 0.2 |
| Comparative Example 12 | A-12 | 0.45 | B-1 | 0.10 | A-12 | 0.30 | D-1 | 0.15 | With crack | 5/5 | Peeling Impossible | Peeling Impossible |
| Comparative Example 17 | A-9 | 0.50 | B-1 | 0.10 | A-9 | 0.30 | E-1 | 0.10 | No crack | 0/5 | 0.4 | 0 |
| Comparative Example 18 | A-10 | 0.50 | B-1 | 0.10 | A-10 | 0.30 | E-1 | 0.10 | No crack | 0/5 | 0.5 | 0 |
| Comparative Example 19 | A-11 | 0.50 | B-1 | 0.10 | A-11 | 0.30 | E-1 | 0.10 | No crack | 0/5 | 0.9 | 0.3 |
| Comparative Example 20 | A-12 | 0.50 | B-1 | 0.10 | A-12 | 0.30 | E-1 | 0.10 | With crack | 5/5 | Peeling Impossible | Peeling Impossible |

[Table 3]

| | Outermost layer | | Outer layer | | Intermediate layer | | Inner layer | | Innermost layer | | Chemical resistance | | Peeling strength [N/mm] | |
|---|---|---|---|---|---|---|---|---|---|---|---|---|---|---|
| | Kind | Thickness [mm] | Kind | Thickness [mm] | Kind | Thickness [mm] | Kind | Thickness [mm] | Kind | Thickness [mm] | Appearance | Low temperature Impact (number of broken/ number of tested) | Initial | After heat treatment |
| Example 34 | A-1 | 0.40 | B-1 | 0.10 | A-1 | 0.30 | D-1 | 0.10 | D-17 | 0.10 | No crack | 0/5 | Peeling Impossible | Peeling impossible |
| Example 35 | A-1 | 0.40 | B-1 | 0.10 | A-1 | 0.30 | D-9 | 0.10 | D-18 | 0.10 | No crack | 0/5 | Peeling Impossible | Peeling Impossible |
| Example 36 | A-1 | 0.40 | B-1 | 0.10 | A-1 | 0.30 | D-14 | 0.10 | D-19 | 0.10 | No crack | 0/5 | Peeling Impossible | Peeling Impossible |
| Example 37 | A-1 | 0.40 | B-1 | 0.10 | C-3 | 0.30 | D-1 | 0.10 | D-17 | 0.10 | No crack | 0/5 | Peeling Impossible | Peeling Impossible |
| Example 38 | A-1 | 0.40 | B-1 | 0.10 | C-4 | 0.30 | D-1 | 0.10 | D-17 | 0.10 | No crack | 0/5 | Peeling Impossible | Peeling Impossible |
| Example 45 | A-1 | 0.40 | B-1 | 0.10 | A-1 | 0.30 | E-1 | 0.10 | E-2 | 0.10 | No crack | 0/5 | Peeling Impossible | Peeling Impossible |
| Example 46 | A-1 | 0.40 | B-1 | 0.10 | A-1 | 0.30 | E-1 | 0.10 | E-3 | 0.10 | No crack | 0/5 | Peeling Impossible | Peeling Impossible |
| Example 47 | A-1 | 0.40 | B-1 | 0.10 | A-1 | 0.30 | E-1 | 0.10 | E-4 | 0.10 | No crack | 0/5 | Peeling Impossible | Peeling impossible |
| Example 48 | A-1 | 0.40 | B-1 | 0.10 | A-1 | 0.30 | E-5 | 0.10 | E-6 | 0.10 | No crack | 0/5 | Peeling Impossible | Peeling Impossible |
| Example 49 | A-1 | 0.40 | B-1 | 0.10 | A-1 | 0.30 | E-5 | 0.10 | E-7 | 0.10 | No crack | 0/5 | Peeling impossible | Peeling Impossible |
| Example50 | A-1 | 0.40 | B-1 | 0.10 | A-1 | 0.30 | E-8 | 0.10 | E-9 | 0.10 | No crack | 0/5 | Peeling Impossible | Peeling Impossible |

| | Outermost layer | | Outer layer | | Intermediate layer | | Inner layer | | Innermost layer | | Chemical resistance | | Peeling strength [N/mm] | |
|---|---|---|---|---|---|---|---|---|---|---|---|---|---|---|
| | Kind | Thickness [mm] | Kind | Thickness [mm] | Kind | Thickness [mm] | Kind | Thickness [mm] | Kind | Thickness [mm] | Appearance | Low temperature Impact (number of broken/ number of tested) | Initial | After heat treatment |
| Example 51 | A-1 | 0.40 | B-1 | 0.10 | A-1 | 0.30 | E-8 | 0.10 | E-10 | 0.10 | No crack | 0/5 | Peeling impossible | Peeling Impossible |
| Example 52 | A-1 | 0.40 | B-1 | 0.10 | C-3 | 0.30 | E-1 | 0.10 | E-2 | 0.10 | No crack | 0/5 | Peeling Impossible | Peeling Impossible |
| Example 53 | A-1 | 0.40 | B-1 | 0.10 | C-4 | 0.30 | E-1 | 0.10 | E-2 | 0.10 | No crack | 0/5 | Peeling Impossible | Peeling Impossible |
| Example 54 | A-1 | 0.40 | B-1 | 0.10 | A-1 | 0.30 | D-1 | 0.10 | E-1 | 0.10 | No crack | 0/5 | Peeling Impossible | Peeling Impossible |
| Example 55 | A-1 | 0.40 | B-1 | 0.10 | A-1 | 0.30 | D-1 | 0.10 | E-2 | 0.10 | No crack | 0/5 | Peeling Impossible | Peeling Impossible |
| Example 56 | A-1 | 0.40 | B-1 | 0.10 | A-1 | 0.30 | D-1 | 0.10 | E-5 | 0.10 | No crack | 0/5 | Peeling Impossible | Peeling Impossible |
| Example 57 | A-1 | 0.40 | B-1 | 0.10 | A-1 | 0.30 | D-1 | 0.10 | E-8 | 0.10 | No crack | 0/5 | Peeling Impossible | Peeling Impossible |
| Example 58 | A-1 | 0.40 | B-1 | 0.10 | C-3 | 0.30 | D-1 | 0.10 | E-1 | 0.10 | No crack | 0/5 | Peeling Impossible | Peeling Impossible |
| Example 59 | A-1 | 0.40 | B-1 | 0.10 | C-4 | 0.30 | D-1 | 0.10 | E-1 | 0.10 | No crack | 0/5 | Peeling Impossible | Peeling Impossible |
| Comparative Example 13 | A-9 | 0.40 | B-1 | 0.10 | A-9 | 0.30 | D-1 | 0.10 | D-17 | 0.10 | No crack | 0/5 | 0.2 | 0 |
| Comparative Example 14 | A-10 | 0.40 | B-1 | 0.10 | A-10 | 0.30 | D-1 | 0.10 | D-17 | 0.10 | No crack | 0/5 | 0.3 | 0 |

(continued)

| | Outermost layer | | Outer layer | | Intermediate layer | | Inner layer | | Innermost layer | | Chemical resistance | | Peeling strength [N/mm] | |
|---|---|---|---|---|---|---|---|---|---|---|---|---|---|---|
| | Kind | Thickness [mm] | Kind | Thickness [mm] | Kind | Thickness [mm] | Kind | Thickness [mm] | Kind | Thickness [mm] | Appearance | Low temperature Impact (number of broken/number of tested) | Initial | After heat treatment |
| Comparative Example 15 | A-11 | 0.40 | B-1 | 0.10 | A-11 | 0.30 | D-1 | 0.10 | D-17 | 0.10 | No crack | 0/5 | 0.8 | 0.2 |
| Comparative Example 16 | A-11 | 0.40 | B-1 | 0.10 | A-12 | 0.10 | D-1 | 0.10 | D-17 | 0.10 | With crack | 5/5 | Peeling impossible | Peeling Impossible |
| Comparative Example 21 | A-9 | 0.40 | B-1 | 0.10 | A-9 | 0.30 | E-1 | 0.10 | E-2 | 0.10 | No crack | 0/5 | 0.3 | 0 |
| Comparative Example 22 | A-10 | 0.40 | B-1 | 0.10 | A-10 | 0.30 | E-1 | 0.10 | E-2 | 0.10 | No crack | 0/5 | 0.3 | 0 |
| Comparative Example 23 | A-11 | 0.40 | B-1 | 0.10 | A-11 | 0.30 | E-1 | 0.10 | E-2 | 0.10 | No crack | 0/5 | 0.9 | 0.3 |
| Comparative Example 24 | A-12 | 0.40 | B-1 | 0.10 | A-12 | 0.30 | D-1 | 0.10 | E-2 | 0.10 | With crack | 5/5 | Peeling Impossible | Peeling Impossible |
| Comparative Example 25 | A-9 | 0.40 | B-1 | 0.10 | A-9 | 0.30 | D-1 | 0.10 | E-1 | 0.10 | No crack | 0/5 | 0.3 | 0 |
| Comparative Example 26 | A-10 | 0.40 | B-1 | 0.10 | A-10 | 0.30 | D-1 | 0.10 | E-1 | 0.10 | No crack | 0/5 | 0.4 | 0 |
| Comparative Example 27 | A-11 | 0.40 | B-1 | 0.10 | A-11 | 0.30 | D-1 | 0.10 | E-1 | 0.10 | No crack | 0/5 | 1.1 | 0.3 |
| Comparative Example 28 | A-12 | 0.40 | B-1 | 0.10 | A-12 | 0.30 | D-1 | 0.10 | E-1 | 0.10 | With crack | 5/5 | Peeling Impossible | Peeling Impossible |

As clearly seen from Tables 1, 2 and 3, the multilayer tubes of Comparative Examples 1 to 2, 5 to 6, 9 to 10, 13 to 14, 17 to 18, 21 to 22 and 25 to 26 having a layer which did not use the polyamide (A2) regulated in the present invention, and containing an aliphatic polyamide composition in which the absolute value in difference of the solubility parameter SP values of the polyamide (A1) and the polyamide (A2) was out of the regulated range of the present invention were inferior in durability of interlayer adhesiveness. The multilayer tubes of Comparative Examples 3, 7, 11, 15, 19, 23 and 27 having a layer which contains the aliphatic polyamide composition in which the polyamide (A2) out of the regulation of the present invention is used, and the absolute values in the difference of the solubility parameter SP values of the polyamide (A1) and the polyamide (A2) are outside the regulated range of the present invention were poor in durability of the interlayer adhesiveness. The multilayer tubes of Comparative Examples 4, 8, 12, 16, 20, 24 and 28 having a layer which contains the aliphatic polyamide composition in which the added amount of the polyamide (A2) outside the regulated range of the present invention were poor in chemical resistance.

On the other hand, it is clear that the multilayer tubes of Examples 1 to 59 regulated in the present invention are good in various characteristics such as chemical resistance, interlayer adhesiveness and durability thereof, etc.

## Claims

1. A multilayer tube which comprises two or more layers containing Layer (a) and Layer (b),

wherein at least one pair of the Layer (a) and the Layer (b) are disposed adjacent to each other,
the Layer (a) contains an aliphatic polyamide composition (A),
the Layer (b) contains an ethylene/vinyl acetate copolymer saponified product composition (B),
the aliphatic polyamide composition (A) contains a polyamide (A1), a polyamide (A2) and an elastomer polymer (A3),
the polyamide (A1) is an aliphatic polyamide having a melting point measured in accordance with ISO 11357-3 of 210°C or lower, and a ratio of a number of methylene groups to a number of amide groups of 8.0 or more, is at least one kind of a homopolymer selected from the group consisting of polynonamethylene dodecamide (polyamide 912), polydecamethylene sebacamide (polyamide 1010), polydecamethylene dodecamide (polyamide 1012), polydodecamethylene dodecamide (polyamide 1212), polyundecanamide (polyamide 11) and polydodecanamide (polyamide 12), and/or at least one kind of a copolymer using several kinds of raw material monomers forming these, and is contained in the aliphatic polyamide composition (A) in an amount of 40% by mass or more and 85% by mass or less,
the polyamide (A2) is a polyamide other than the polyamide (A1), is selected from the group consisting of polycaproamide (polyamide 6), polyhexamethylene adipamide (polyamide 66), polyhexamethylene azelamide (polyamide 69), polyhexamethylene sebacamide (polyamide 610), polyhexamethylene dodecamide (polyamide 612), a poly(caproamide/hexamethylene adipamide) copolymer (polyamide 6/66), a poly(caproamide/hexamethylene azelamide) copolymer (polyamide 6/69), a poly(caproamide/hexamethylene sebacamide) copolymer (polyamide 6/610), a poly(caproamide/hexamethylene dodecamide) copolymer (polyamide 6/612), a poly(caproamide/dodecanamide) copolymer (polyamide 6/12), a poly(caproamide/- hexamethylene adipamide/hexamethylene sebacamide) copolymer (polyamide 6/66/610), a poly(caproamide/hexamethylene adipamide/hexamethylene dodecamide) copolymer (polyamide 6/66/612), a poly(caproamide/hexamethylene adipamide/dodecanamide) copolymer (polyamide 6/66/12), a poly(caproamide/hexamethylene sebacamide/dodecanamide) copolymer (polyamide 6/610/12), a poly(caproamide/- hexamethylene dodecamide/dodecanamide) copolymer (polyamide 6/612/12) and mixtures thereof, and is contained in the aliphatic polyamide composition (A) in an amount of 10% by mass or more and 30% by mass or less,
the elastomer polymer (A3) contains a constitutional unit derived from an unsaturated compound having a carboxyl group and/or an acid anhydride group, and is contained in the aliphatic polyamide composition (A) in an amount of 5% by mass or more and 30% by mass or less, and
an absolute value of a difference in solubility parameter SP values of the polyamide (A1) and the polyamide (A2) [|(SP value of polyamide (A1)) - (SP value of polyamide (A2))|] is 1.8 $(MPa)^{1/2}$ or more and 4.5 $(MPa)^{1/2}$ or less, the solubility parameter SP value being a value obtained by the formula of Fedors shown below, which is a value expressed as square root of molecular cohesion energy density measured at 25°C:

$$\delta = [\Delta Ev/\Delta V]^{1/2} = [\Sigma \Delta e_i / \Sigma \Delta v_i]^{1/2}$$

wherein

$\delta$: solubility parameter SP value,
$\Delta Ev$: cohesion energy,
$\Delta V$: mol molecular volume,
$\Delta e_i$: mol cohesion energy of atom or atomic group of i component,
$\Delta v_i$: mol molecular volume of atom or atomic group of i component,
wherein $\Delta Ev$ and $\Delta V$ are each represented by $\Delta Ev=\Sigma \Delta e_i$ and $\Delta V=\Sigma \Delta v_i$, and $e_i$ and $v_i$ are values obtained from Polymer Engineering and Science published in 1974, vol. 14, no. 2, pp. 147 to 154.

**2.** The multilayer tube according to Claim 1, wherein when the terminal amino group concentration which is summed values of the respective terminal amino group concentrations ($\mu$eq/g) of the polyamide (A1) and the polyamide (A2) per 1 g of the aliphatic polyamide composition (A) multiplying a mixing mass ratio is made [A] ($\mu$eq/g), and when the terminal carboxyl group concentration which is summed values of the respective terminal carboxyl group concentrations ($\mu$eq/g) of the polyamide (A1) and the polyamide (A2) per 1 g of the aliphatic polyamide composition (A) multiplying a mixing mass ratio is made [B] ($\mu$eq/g), then [A] > [B] + 10.

**3.** The multilayer tube according to Claim 1 or 2, wherein the Layer (b) is disposed inside the Layer (a) in at least a pair of the adjacent Layer (a) and Layer (b).

**4.** The multilayer tube according to any one of Claims 1 to 3, which further comprises Layer (c),

at least a pair of the Layer (b) and the Layer (c) are disposed adjacent to each other,
the Layer (c) contains a polyamide composition (C),
the polyamide composition (C) contains a polyamide (C1) and an elastomer polymer (C2),
the polyamide (C1) is a polyamide other than the "aliphatic polyamide having a melting point measured in accordance with ISO 11357-3 of 210°C or lower, and the ratio of the number of the methylene groups to the number of the amide groups of 8.0 or more", and is contained in an amount of 70% by mass or more and 95% by mass or less based on a total of the polyamide (C1) and the elastomer polymer (C2) as 100% by mass, and the elastomer polymer (C2) contains a constitutional unit derived from an unsaturated compound having a carboxyl group and/or an acid anhydride group, and is contained in an amount of 5% by mass or more and 30% by mass or less based on the total of the polyamide (C1) and the elastomer polymer (C2) as 100% by mass.

**5.** The multilayer tube according to Claim 4, wherein the Layer (c) is disposed inside the Layer (b).

**6.** The multilayer tube according to any one of Claims 1 to 5, which further comprises Layer (d),

the Layer (d) contains a semi-aromatic polyamide composition (D),
the semi-aromatic polyamide composition (D) contains a semi-aromatic polyamide (D1) and/or a semi-aromatic polyamide (D2),
the semi-aromatic polyamide (D1) and/or the semi-aromatic polyamide (D2) are contained in an amount of 60% by mass or more in the semi-aromatic polyamide composition (D),
the semi-aromatic polyamide (D1) contains 50 mol% or more of an aliphatic diamine unit having 4 or more and 12 or less carbon atoms based on whole diamine units of the semi-aromatic polyamide (D1), and contains 50 mol% or more of a dicarboxylic acid unit which contains at least one kind selected from the group consisting of a terephthalic acid unit, an isophthalic acid unit and a naphthalene dicarboxylic acid unit based on whole dicarboxylic acid units of the semi-aromatic polyamide (D1), and the semi-aromatic polyamide (D2) contains 50 mol% or more of a xylylene diamine unit and/or a bis(aminomethyl)naphthalene unit based on the whole diamine units of the semi-aromatic polyamide (D2), and contains 50 mol% or more of an aliphatic dicarboxylic acid unit having 4 or more and 12 or less carbon atoms based on the whole dicarboxylic acid units of the semi-aromatic polyamide (D2).

**7.** The multilayer tube according to Claim 6, wherein the semi-aromatic polyamide composition (D) contains an elastomer polymer (D3), and the elastomer polymer (D3) contains a constitutional unit derived from an unsaturated compound having a carboxyl group and/or an acid anhydride group.

**8.** The multilayer tube according to Claim 6 or 7, wherein the Layer (d) is disposed inside the Layer (a).

**9.** The multilayer tube according to any one of Claims 1 to 5, which further comprises Layer (e), and the Layer (e) contains a fluorine-containing polymer (E) into which a functional group having reactivity to an amino group is introduced in a molecular chain.

**10.** The multilayer tube according to Claim 9, wherein the Layer (e) is disposed inside the Layer (a).

**11.** The multilayer tube according to any one of Claims 6 to 8, which further comprises Layer (e),

at least a pair of the Layer (d) and the Layer (e) are disposed adjacent to each other, and
the Layer (e) contains a fluorine-containing polymer (E) into which a functional group having reactivity to an amino group is introduced in a molecular chain.

**12.** The multilayer tube according to Claim 11, wherein the Layer (e) is disposed inside the Layer (d).

**13.** The multilayer tube according to any one of Claims 1 to 12, wherein the innermost layer is a conductive layer containing a thermoplastic resin composition in which a conductive filler is contained.

**14.** The multilayer tube according to any one of Claims 1 to 13, wherein it is produced by co-extrusion molding.

**15.** The multilayer tube according to Claim 1, wherein the polyamide (A2) is an aliphatic polyamide having the ratio of the number of the methylene groups to the number of the amide groups $[CH_2]/[NHCO]$ of less than 8.0, and is selected from the group consisting of polycaproamide (polyamide 6), polyhexamethylene sebacamide (polyamide 610), a poly(caproamide/hexamethylene adipamide) copolymer (polyamide 6/66), a poly(caproamide/hexamethylene sebacamide) copolymer (polyamide 6/610), a poly(caproamide/hexamethylene dodecamide) copolymer (polyamide 6/612), a poly(caproamide/dodecanamide) copolymer (polyamide 6/12), a poly(caproamide/hexamethylene adipamide/hexamethylene sebacamide) copolymer (polyamide 6/66/610), a poly(caproamide/hexamethylene adipamide/hexamethylene dodecamide) copolymer (polyamide 6/66/612), a poly(caproamide/hexamethylene adipamide/dodecanamide) copolymer (polyamide 6/66/12) and mixtures thereof.

**16.** Use of the multilayer tube according to any one of Claims 1 to 15 as a fuel tube.

**Patentansprüche**

**1.** Mehrschichtiges Rohr, das zwei oder mehr Schichten, enthaltend Schicht (a) und Schicht (b), umfasst,

wobei mindestens ein Paar aus der Schicht (a) und der Schicht (b) nebeneinander angeordnet ist,
die Schicht (a) eine aliphatische Polyamidzusammensetzung (A) enthält,
die Schicht (b) eine Ethylen/Vinylacetat-Copolymer-Verseifungsproduktzusammensetzung (B) enthält,
die aliphatische Polyamidzusammensetzung (A) ein Polyamid (A1), ein Polyamid (A2) und ein Elastomerpolymer (A3) enthält,
das Polyamid (A1) ein aliphatisches Polyamid mit einem Schmelzpunkt, gemessen gemäß ISO 11357-3, von 210°C oder niedriger und einem Verhältnis einer Anzahl an Methylengruppen zu einer Anzahl an Amidgruppen von 8,0 oder mehr ist, mindestens eine Art eines Homopolymers, ausgewählt aus der Gruppe, bestehend aus Polynonamethylendodecamid (Polyamid 912), Polydecamethylensebacamid (Polyamid 1010), Polydecamethylendodecamid (Polyamid 1012), Polydodecamethylendodecamid (Polyamid 1212), Polyundecanamid (Polyamid 11) und Polydodecanamid (Polyamid 12) und/oder mindestens eine Art eines Copolymers unter Verwendung mehrerer Ausgangsmaterialmonomerarten, die diese bilden, ist und
in der aliphatischen Polyamidzusammensetzung (A) in einer Menge von 40 Masse-% oder mehr und 85 Masse-% oder weniger enthalten ist,
das Polyamid (A2) ein anderes Polyamid als das Polyamid (A1) ist, aus der Gruppe, bestehend aus Polycaproamid (Polyamid 6), Polyhexamethylenadipamid (Polyamid 66), Polyhexamethylenazelamid (Polyamid 69), Polyhexamethylensebacamid (Polyamid 610), Polyhexamethylendodecamid (Polyamid 612), einem Poly(caproamid/hexamethylenadipamid)-Copolymer (Polyamid 6/66), einem Poly(caproamid/hexamethylenazelamid)-Copolymer (Polyamid 6/69), einem Poly(caproamid/hexamethylensebacamid)-Copolymer (Polyamid 6/610), einem Poly(caproamid/hexamethylendodecamid)-Copolymer (Polyamid 6/612), einem Poly(caproamid/dodecanamid)-Copolymer (Polyamid 6/12), einem Poly(caproamid/hexamethylenadipamid/- hexamethylensebacamid)-Copolymer (Polyamid 6/66/610), einem Poly(caproamid/hexamethylenadipamid/hexamethylendo-decamid)-Copolymer (Polyamid 6/66/612), einem Poly(caproamid/hexamethylenadipamid/dodecanamid)-Copolymer (Polyamid 6/66/12), einem Poly(caproamid/hexamethylensebacamid/dodecanamid)-Copolymer (Polyamid 6/610/12), einem Poly(caproamid/hexamethylendodecamid/dodecanamid)-Copolymer (Polyamid 6/612/12) und Mischungen davon, ausgewählt ist und in der aliphatischen Polyamidzusammensetzung (A) in einer Menge von 10 Masse-% oder mehr und 30 Masse-% oder weniger enthalten ist,

das Elastomerpolymer (A3) eine konstitutionelle Einheit enthält, die von einer ungesättigten Verbindung mit einer Carboxylgruppe und/oder einer Säureanhydridgruppe abgeleitet ist, und in der aliphatischen Polyamidzusammensetzung (A) in einer Menge von 5 Masse-% oder mehr und 30 Masse-% oder weniger enthalten ist, und

ein absoluter Wert eines Unterschieds in den Löslichkeitsparameter SP-Werten des Polyamids (A1) und des Polyamids (A2) [|(SP-Wert von Polyamid (A1))-(SP-Wert von Polyamid (A2))|] 1,8 (MPa)$^{1/2}$ oder mehr und 4,5 (MPa)$^{1/2}$ oder weniger beträgt, wobei der Löslichkeitsparameter SP-Wert durch die nachstehend dargestellte Formel von Fedors erhalten wird, welcher ein Wert ist, der als Quadratwurzel der molekularen Kohäsionsenergiedichte, gemessen bei 25°C, ausgedrückt wird:

$$\delta = [\Delta Ev / \Delta V]^{1/2} = [\Sigma \Delta e_i / \Sigma \Delta v_i]^{1/2}$$

worin

$\delta$: Löslichkeitsparameter SP-Wert
$\Delta Ev$: Kohäsionsenergie,
$\Delta V$: mol Molekülvolumen,
$\Delta e_i$: mol Kohäsionsenergie von Atom oder Atomgruppe der i-Komponente
$\Delta v_i$: mol Molekülvolumen von Atom oder Atomgruppe der i-Komponente

worin $\Delta Ev$ und $\Delta V$ jeweils durch $\Delta Ev = \Sigma \Delta e_i$ und $\Delta V = \Sigma \Delta v_i$ dargestellt sind und $e_i$ und $v_i$ Werte sind, die aus Polymer Engineering and Science, veröffentlicht 1974, Bd. 14, Nr. 2, S. 147 bis 154 erhalten werden.

2. Mehrschichtiges Rohr gemäß Anspruch 1, wobei, wenn die Konzentration der terminalen Aminogruppe, die die summierten Werte der jeweiligen Konzentrationen terminalen Aminogruppen (pÄq/g) des Polyamids (A1) und des Polyamids (A2) pro 1 g der aliphatischen Polyamidzusammensetzung (A) bei Multiplikation mit einem Mischmassenverhältnis ist, [A] (pÄq/g) ist, und wenn die Konzentration der terminalen Carboxylgruppen, die die summierten Werte der jeweiligen Konzentrationen der terminalen Carboxylgruppen (pÄq/g) des Polyamids (A1) und des Polyamids (A2) pro 1 g der aliphatischen Polyamidzusammensetzung (A) bei Multiplikation mit einem Mischmassenverhältnis ist, [B] (pÄq/g) ist, dann ist [A] > [B] + 10.

3. Mehrschichtiges Rohr gemäß Anspruch 1 oder 2, wobei die Schicht (b) an der Innenseite der Schicht (a) in mindestens einem Paar aus der nebeneinanderliegenden Schicht (a) und Schicht (b) angeordnet ist.

4. Mehrschichtiges Rohr gemäß einem der Ansprüche 1 bis 3, das ferner Schicht (c) umfasst,

mindestens ein Paar aus der Schicht (b) und der Schicht (c) sind nebeneinander angeordnet,
die Schicht (c) enthält eine Polyamidzusammensetzung (C),
die Polyamidzusammensetzung (C) enthält ein Polyamid (C1) und ein Elastomerpolymer (C2),
das Polyamid (C1) ist ein anderes Polyamid als das "aliphatische Polyamid mit einem Schmelzpunkt, gemessen gemäß ISO 11357-3, von 210°C oder niedriger und dem Verhältnis einer Anzahl an Methylengruppen zu der Anzahl an Amidgruppen von 8,0 oder mehr" und ist in einer Menge von 70 Masse-% oder mehr und 95 Masse-% oder weniger, bezogen auf insgesamt 100 Masse-% des Polyamids (C1) und des Elastomerpolymers (C2), enthalten, und
das Elastomerpolymer (C2) enthält eine konstitutionelle Einheit, die von einer ungesättigten Verbindung mit einer Carboxylgruppe und/oder einer Säureanhydridgruppe abgeleitet ist, und ist in einer Menge von 5 Masse-% oder mehr und 30 Masse-% oder weniger, bezogen auf insgesamt 100 Masse-% des Polyamids (C1) und des Elastomerpolymers (C2), enthalten.

5. Mehrschichtiges Rohr gemäß Anspruch 4, wobei die Schicht (c) an der Innenseite der Schicht (b) angeordnet ist.

6. Mehrschichtiges Rohr gemäß einem der Ansprüche 1 bis 5, das ferner Schicht (d) umfasst,

die Schicht (d) umfasst eine semiaromatische Polyamidzusammensetzung (D),
die semiaromatische Polyamidzusammensetzung (D) enthält ein semiaromatisches Polyamid (D1) und/oder ein semiaromatisches Polyamid (D2),
das semiaromatische Polyamid (D1) und/oder das semiaromatische Polyamid (D2) sind in einer Menge von 60 Masse-% oder mehr in der semiaromatischen Polyamidzusammensetzung (D) enthalten,
das semiaromatische Polyamid (D1) enthält 50 mol-% oder mehr einer aliphatischen Diamineinheit mit 4 oder mehr und 12 oder weniger Kohlenstoffatomen, bezogen auf die gesamten Diamineinheiten des semiaromatischen Polyamids (D1), und enthält 50 mol-% oder mehr einer Dicarbonsäureeinheit, die mindestens eine Art, ausgewählt aus der Gruppe, bestehend aus einer Terephthalsäureeinheit, einer Isophthalsäureeinheit und einer Naphthalindicarbonsäureeinheit enthält, bezogen auf die gesamten Dicarbonsäureeinheiten des semiaromatischen Polyamids (D1), und
das semiaromatische Polyamid (D2) enthält 50 mol-% oder mehr einer Xylylendiamineinheit und/oder einer Bis(aminomethyl)naphthalineinheit, bezogen auf die gesamten Diamineinheiten des semiaromatischen Polyamids (D2), und enthält 50 mol-% oder mehr einer aliphatischen Dicarbonsäureeinheit mit 4 oder mehr und 12 oder weniger Kohlenstoffatomen, bezogen auf die gesamten Dicarbonsäureeinheiten des semiaromatischen Polyamids (D2).

7. Mehrschichtiges Rohr gemäß Anspruch 6, wobei die semiaromatische Polyamidzusammensetzung (D) ein Elastomerpolymer (D3) enthält und das Elastomerpolymer (D3) eine konstitutionelle Einheit enthält, die von einer ungesättigten Verbindung mit einer Carboxylgruppe und/oder einer Säureanhydridgruppe abgeleitet ist.

8. Mehrschichtiges Rohr gemäß Anspruch 6 oder 7, wobei die Schicht (d) an der Innenseite der Schicht (a) angeordnet ist.

9. Mehrschichtiges Rohr gemäß einem der Ansprüche 1 bis 5, das ferner eine Schicht (e) umfasst und die Schicht (e) enthält ein fluorhaltiges Polymer (E), in dem eine funktionelle Gruppe mit einer Reaktivität gegenüber einer Aminogruppe in einer Molekülkette eingefügt ist.

10. Mehrschichtiges Rohr gemäß Anspruch 9, wobei die Schicht (e) an der Innenseite der Schicht (a) angeordnet ist.

11. Mehrschichtiges Rohr gemäß einem der Ansprüche 6 bis 8, das ferner eine Schicht (e) umfasst,

mindestens ein Paar aus der Schicht (d) und der Schicht (e) sind nebeneinander angeordnet und
die Schicht (e) enthält ein fluorhaltiges Polymer (E), in dem eine funktionelle Gruppe mit einer Reaktivität gegenüber einer Aminogruppe in einer Molekülkette eingefügt ist.

12. Mehrschichtiges Rohr gemäß Anspruch 11, wobei die Schicht (e) an der Innenseite der Schicht (d) angeordnet ist.

13. Mehrschichtiges Rohr gemäß einem der Ansprüche 1 bis 12, wobei die innerste Schicht eine leitfähige Schicht ist, die eine thermoplastische Harzzusammensetzung enthält, in der ein leitfähiger Füllstoff enthalten ist.

14. Mehrschichtiges Rohr gemäß einem der Ansprüche 1 bis 13, wobei dieses durch Co-Extrusionsformen hergestellt ist.

15. Mehrschichtiges Rohr gemäß Anspruch 1, wobei das Polyamid (A2) ein aliphatisches Polyamid mit einem Verhältnis der Anzahl der Methylengruppen zu der Anzahl der Amidgruppen $[CH_2]/[NHCO]$ von weniger als 8,0 ist und aus der Gruppe, bestehend aus Polycaproamid (Polyamid 6), Polyhexamethylensebacamid (Polyamid 610), Polyhexamethylendodecamid (Polyamid 612), einem Poly(caproamid/hexamethylenadipamid)-Copolymer (Polyamid 6/66), einem Poly(caproamid/hexamethylensebacamid)-Copolymer (Polyamid 6/610), einem Poly(caproamid/hexamethylendodecamid)-Copolymer (Polyamid 6/612), einem Poly(caproamid/dodecanamid)-Copolymer (Polyamid 6/12), einem Poly(caproamid/hexamethylenadipamid/- hexamethylensebacamid)-Copolymer ((Polyamid 6/66/610), einem Poly(caproamid/hexamethylenadipamid/hexamethylendo-decamid)-Copolymer (Polyamid 6/66/612), einem Poly(caproamid/hexamethylenadipamid/dodecanamid)-Copolymer (Polyamid 6/66/12) und Mischungen davon, ausgewählt ist.

16. Verwendung des mehrschichtigen Rohrs gemäß einem der Ansprüche 1 bis 15 als ein Kraftstoffrohr.

**Revendications**

1. Tube multicouche qui comprend deux couches ou plus contenant une Couche (a) et une Couche (b),

dans lequel au moins une paire de la Couche (a) et de la Couche (b) sont disposées de façon adjacente l'une à l'autre,

la Couche (a) contient une composition de polyamide aliphatique (A),

la Couche (b) contient une composition de produit saponifié de copolymère d'éthylène/acétate de vinyle (B),

la composition de polyamide aliphatique (A) contient un polyamide (A1), un polyamide (A2) et un polymère élastomère (A3),

le polyamide (A1) est un polyamide aliphatique présentant un point de fusion mesuré conformément à la norme ISO 11357-3 de 210 °C ou moins, et un rapport d'un nombre de groupes méthylène sur un nombre de groupes amide de 8,0 ou plus, est au moins un type d'un homopolymère sélectionné à partir du groupe consistant en polynonaméthylène dodécamide (polyamide 912), polydécaméthylène sébacamide (polyamide 1010), polydécaméthylène dodécamide (polyamide 1012), polydodécaméthylène dodécamide (polyamide 1212), polyundécanamide (polyamide 11) et polydodécanamide (polyamide 12), et/ou au moins un type d'un copolymère utilisant plusieurs types de monomères de matière première formant ceux-ci, et est contenu dans la composition de polyamide aliphatique (A) en une quantité de 40 % en masse ou plus et 85 % en masse ou moins,

le polyamide (A2) est un polyamide autre que le polyamide (A1), est sélectionné à partir du groupe consistant en polycaproamide (polyamide 6), polyhexaméthylène adipamide (polyamide 66), polyhexaméthylène azélamide (polyamide 69), polyhexaméthylène sébacamide (polyamide 610), polyhexaméthylène dodécamide (polyamide 612), a copolymère de poly(caproamide/hexaméthylène adipamide) (polyamide 6/66), un copolymère de poly(caproamide/hexaméthylène azélamide) (polyamide 6/69), un copolymère de poly(caproamide/hexaméthylène sébacamide) (polyamide 6/610), un copolymère de poly(caproamide/hexaméthylène dodécamide) (polyamide 6/612), un copolymère de poly(caproamide/dodécanamide) (polyamide 6/12), un copolymère de poly(caproamide/-hexaméthylène adipamide/hexaméthylène sébacamide) (polyamide 6/66/610), un copolymère de poly(caproamide/hexaméthylène adipamide/hexaméthylène dodécamide) (polyamide 6/66/612), un copolymère de poly(caproamide/hexaméthylène adipamide/dodécanamide) (polyamide 6/66/12), un copolymère de poly(caproamide/hexaméthylène sébacamide/dodécanamide) (polyamide 6/610/12), un copolymère de poly(caproamide/- hexaméthylène dodécamide/dodécanamide) (polyamide 6/612/12) et des mélanges de ceux-ci, et est contenu dans la composition de polyamide aliphatique (A) en une quantité de 10 % en masse ou plus et 30 % en masse ou moins,

le polymère élastomère (A3) contient un motif constitutionnel dérivé d'un composé insaturé présentant un groupe carboxyle et/ou un groupe anhydride acide, et est contenu dans la composition de polyamide aliphatique (A) en une quantité de 5 % en masse ou plus et 30 % en masse ou moins, et

une valeur absolue d'une différence de valeurs de paramètre de solubilité SP du polyamide (A1) et du polyamide (A2) [l(valeur SP de polyamide (A1)) - (valeur SP de polyamide (A2))|] est de 1,8 $(MPa)^{1/2}$ ou plus et 4,5 $(MPa)^{1/2}$ ou moins, la valeur de paramètre de solubilité SP étant une valeur obtenue par la formule de Fedors illustrée ci-dessous, qui est une valeur exprimée en tant que racine carrée de la densité d'énergie de cohésion moléculaire mesurée à 25 °C :

$$\delta = [\Delta E_V/\Delta V]^{1/2} = [\Sigma\Delta e_i/\Sigma\Delta v_i]^{1/2}$$

dans lequel

$\delta$ : valeur de paramètre de solubilité SP,

$\Delta E_V$ : énergie de cohésion,

$\Delta V$ : volume moléculaire en mole,

$\Delta e_i$ : énergie de cohésion en mole d'atome ou de groupe atomique de composant i,

$\Delta v_i$ : volume moléculaire en mole d'atome ou de groupe atomique de composant i,

dans lequel $\Delta E_V$ et $\Delta V$ sont chacun représentés par $\Delta E_V = \Sigma\Delta e_i$, et $\Delta V = \Sigma\Delta v_i$, et $e_i$ et $v_i$ sont des valeurs obtenues à partir de Polymer Engineering and Science publié en 1974, vol. 14, no. 2, pp. 147 à 154.

2.  Tube multicouche selon la revendication 1, dans lequel, lorsque la concentration en groupe amino terminal qui est des valeurs totalisées des concentrations en groupe amino terminal respectives ($\mu$eq/g) du polyamide (A1) et du polyamide (A2) par 1 g de la composition de polyamide aliphatique (A) multipliant un rapport massique de mélange est [A] ($\mu$eq/g), et lorsque la concentration en groupe carboxyle terminal qui est des valeurs totalisées des concentrations en groupe carboxyle terminal respectives ($\mu$eq/g) du polyamide (A1) et du polyamide (A2) par 1 g de la composition de polyamide aliphatique (A) multipliant un rapport massique de mélange est [B] ($\mu$eq/g), alors [A] > [B] + 10.

3. Tube multicouche selon la revendication 1 ou revendication 2, dans lequel la Couche (b) est disposée à l'intérieur de la Couche (a) dans au moins une paire des Couche (a) et Couche (b) adjacentes.

4. Tube multicouche selon l'une quelconque des revendications 1 à 3, qui comprend en outre une Couche (c),

au moins une paire de la Couche (b) et de la Couche (c) sont disposées adjacentes l'une à l'autre,
la Couche (c) contient une composition de polyamide (C),
la composition de polyamide (C) contient un polyamide (C1) et un polymère élastomère (C2),
le polyamide (C1) est un polyamide autre que le "polyamide aliphatique présentant un point de fusion mesuré conformément à la norme ISO 11357-3 de 210 °C ou moins, et le rapport du nombre des groupes méthylène sur le nombre des groupes amide de 8,0 ou plus", et est contenu en une quantité de 70 % en masse ou plus et 95 % en masse ou moins sur la base d'un total du polyamide (C1) et du polymère élastomère (C2) en tant que 100 % en masse, et
le polymère élastomère (C2) contient un motif constitutionnel dérivé d'un composé insaturé présentant un groupe carboxyle et/ou un groupe anhydride acide, et est contenu en une quantité de 5 % en masse ou plus et 30 % en masse ou moins sur la base du total du polyamide (C1) et du polymère élastomère (C2) en tant que 100 % en masse.

5. Tube multicouche selon la revendication 4, dans lequel la Couche (c) est disposée à l'intérieur de la Couche (b).

6. Tube multicouche selon l'une quelconque des revendications 1 à 5, qui comprend en outre une Couche (d),

la Couche (d) contient une composition de polyamide semi-aromatique (D),
la composition de polyamide semi-aromatique (D) contient un polyamide semi-aromatique (D1) et/ou un polyamide semi-aromatique (D2),
le polyamide semi-aromatique (D1) et/ou le polyamide semi-aromatique (D2) sont contenus en une quantité de 60 % en masse ou plus dans la composition de polyamide semi-aromatique (D),
le polyamide semi-aromatique (D1) contient 50 % en mole ou plus d'un motif de diamine aliphatique présentant 4 ou plus et 12 ou moins atomes de carbone sur la base de motifs de diamine entiers du polyamide semi-aromatique (D1),
et contient 50 % en mole ou plus d'un motif d'acide dicarboxylique qui contient au moins un type sélectionné à partir du groupe consistant en un motif d'acide téréphtalique, un motif d'acide isophtalique et un motif d'acide dicarboxylique de naphtalène sur la base de motifs d'acide dicarboxylique entiers du polyamide semi-aromatique (D1), et
le polyamide semi-aromatique (D2) contient 50 % en mole ou plus d'un motif de diamine de xylène et/ou d'un motif de bis(aminométhyl)naphtalène sur la base des motifs de diamine entiers du polyamide semi-aromatique (D2), et contient 50 % en mole ou plus d'un motif d'acide dicarboxylique aliphatique présentant 4 ou plus et 12 ou moins atomes de carbone sur la base des motifs d'acide dicarboxylique entiers du polyamide semi-aromatique (D2).

7. Tube multicouche selon la revendication 6, dans lequel la composition de polyamide semi-aromatique (D) contient un polymère élastomère (D3), et le polymère élastomère (D3) contient un motif constitutionnel dérivé d'un composé insaturé présentant un groupe carboxyle et/ou un groupe anhydride acide.

8. Tube multicouche selon la revendication 6 ou revendication 7, dans lequel la Couche (d) est disposée à l'intérieur de la Couche (a).

9. Tube multicouche selon l'une quelconque des revendications 1 à 5, qui comprend en outre une Couche (e), et la Couche (e) contient un polymère contenant du fluor (E) dans lequel un groupe fonctionnel présentant une réactivité vis-à-vis d'un groupe amino est introduit dans une chaîne moléculaire.

10. Tube multicouche selon la revendication 9, dans lequel la Couche (e) est disposée à l'intérieur de la Couche (a).

11. Tube multicouche selon l'une quelconque des revendications 6 à 8, qui comprend en outre une Couche (e),

au moins une paire de la Couche (d) et de la Couche (e) sont disposées adjacentes l'une à l'autre, et
la Couche (e) contient un polymère contenant du fluor (E) dans lequel un groupe fonctionnel présentant une réactivité vis-à-vis d'un groupe amino est introduit dans une chaîne moléculaire.

**12.** Tube multicouche selon la revendication 11, dans lequel la Couche (e) est disposée à l'intérieur de la Couche (d).

**13.** Tube multicouche selon l'une quelconque des revendications 1 à 12, dans lequel la couche la plus intérieure est une couche conductrice contenant une composition de résine thermoplastique dans laquelle est contenue une charge conductrice.

**14.** Tube multicouche selon l'une quelconque des revendications 1 à 13, dans lequel il est produit par moulage par co-extrusion.

**15.** Tube multicouche selon la revendication 1, dans lequel le polyamide (A2) est un polyamide aliphatique présentant le rapport du nombre des groupes méthylène sur le nombre des groupes amide $[CH_2]$/[NHCO] de moins de 8,0, et est sélectionné à partir du groupe consistant en polycaproamide (polyamide 6), polyhexaméthylène sébacamide (polyamide 610), un copolymère de poly(caproamide/hexaméthylène adipamide) (polyamide 6/66), un copolymère de poly(caproamide/hexaméthylène sébacamide) (polyamide 6/610), un copolymère de poly(caproamide/hexaméthylène dodécamide) (polyamide 6/612), un copolymère de poly(caproamide/dodécanamide) (polyamide 6/12), un copolymère de poly(caproamide/hexaméthylène adipamide/hexaméthylène sébacamide) (polyamide 6/66/610), un copolymère de poly(caproamide/hexaméthylène adipamide/hexaméthylène dodécamide) (polyamide 6/66/612), un copolymère de poly(caproamide/hexaméthylène adipamide/dodécanamide) (polyamide 6/66/12) et des mélanges de ceux-ci.

**16.** Utilisation du tube multicouche selon l'une quelconque des revendications 1 à 15 en tant que tube à carburant.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5554425 A
- JP HEI3177683 A
- JP 2003535717 A
- JP 2003021276 A
- JP 2002210904 A
- JP 2004262244 A
- JP 2008030483 A
- JP 2013514212 A
- JP 2016172447 A
- JP 2012061851 A
- JP 2015104830 A
- EP 3042758 A1

- JP 2009234259 A
- JP 2009235394 A
- JP 2014240147 A
- US 2015353792 A1
- WO 2017170985 A1
- JP H718035 A
- JP H725952 A
- JP H725954 A
- JP H7173230 A
- JP H7173446 A
- JP H7173447 A
- JP H10503236 B

**Non-patent literature cited in the description**

- *POLYMER ENGINEERING AND SCIENCE,* 1974, vol. 14 (2), 147-154